# EUROPÄISCHE PATENTSCHRIFT

(11) **EP 3 268 450 B1**
(45) Veröffentlichungstag und Bekanntmachung des Hinweises auf die Patenterteilung: **11.12.2019**
(21) Anmeldenummer: 16709277.4
(22) Anmeldetag: 10.03.2016
(51) Int. Cl.: C09K 19/32, C09K 19/44, G02F 1/1362, C09K 19/34, C09K 19/30, C09K 19/12, C09K 19/04

(54) **FLÜSSIGKRISTALLINES MEDIUM**
LIQUID-CRYSTAL MEDIUM
MILIEU CRISTAL LIQUIDE

(30) Priorität: 13.03.2015 EP 15000742
(43) Veröffentlichungstag der Anmeldung: 17.01.2018
(73) Patentinhaber: Merck Patent GmbH, 64293 Darmstadt (DE)
(72) Erfinder: HIRSCHMANN, Harald, 64291 Darmstadt (DE); SCHOEN, Sabine, 45701 Herten (DE)
(86) Internationale Anmeldenummer: PCT/EP2016/000425
(87) Internationale Veröffentlichungsnummer: WO 2016/146245

(56) Entgegenhaltungen:
- EP-A1- 1 752 510
- EP-A1- 2 937 401
- WO-A1-2007/017180
- WO-A1-2015/139827

## Beschreibung

Die Erfindung betrifft ein flüssigkristallines Medium, wie in Anspruch 1 und nachfolgend genannt, welches mindestens eine Verbindung der Formeln I-1 bis I-20, mindestens eine Verbindung der Formeln ST-1 bis ST-17 und mindestens eine Verbindung der Formeln L-1 bis L-11 enthält.

Verbindungen der Formel I werden nachfolgend genannt, 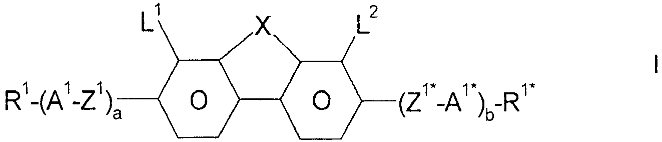 worin
- R¹ und R^{1*}: jeweils unabhängig voneinander H, einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -OCF₂-, -CH=CH-, 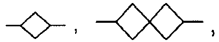 -O-, -CO-O-, -O-CO- so ersetzt sein können, dass O-Atome nicht direkt miteinander verknüpft sind, und worin auch ein oder mehrere H-Atome durch Halogen ersetzt sein können,
- A¹ und A^{1*}: jeweils unabhängig voneinander
a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, Naphthalin-2,6-diyl, Decahydronaphthalin-2,6-diyl, 1,2,3,4-Tetrahydronaphthalin-2,6-diyl, Phenanthren-2,7-diyl, Fluoren-2,7-diyl,
wobei die Reste a), b) und c) ein oder mehrfach durch Halogen-atome substituiert sein können,
- Z¹ und Z^{1*}: jeweils anabhängig voneinander -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- oder eine Einfachbindung,
- X: -S- oder -O-, und
- L¹ und L²: jeweils unabhängig voneinander F, Cl, CF₃ oder CHF₂,
bedeuten,
und Verbindungen der Formeln ST-1 bis ST-17 werden nachfolgend genannt, 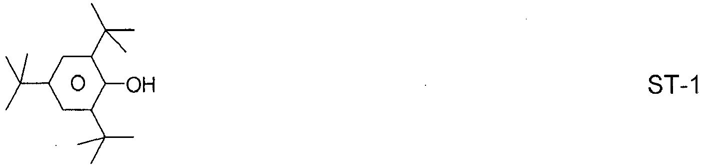 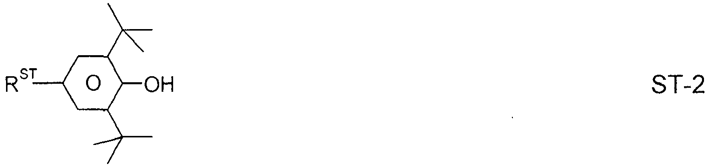 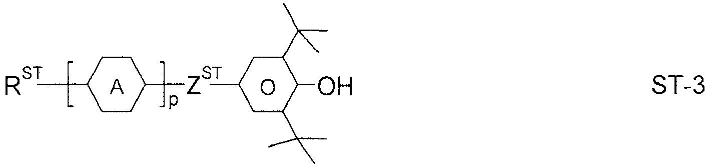 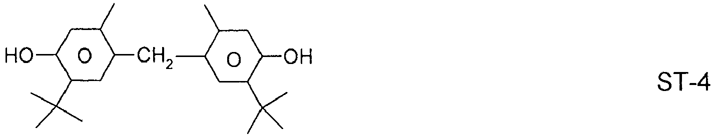 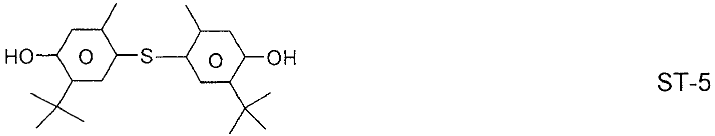 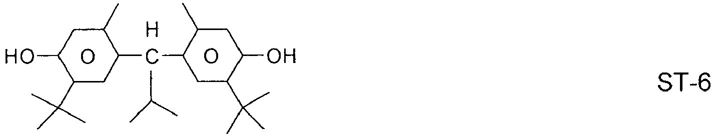 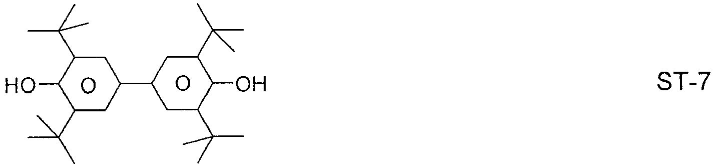 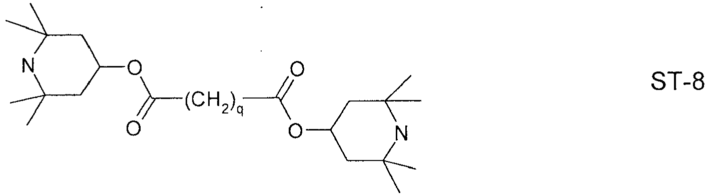 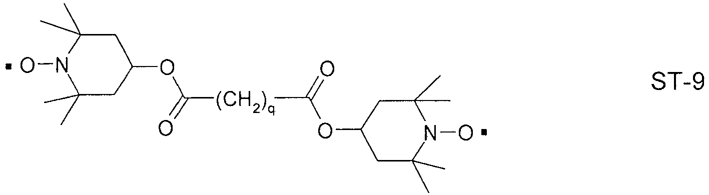 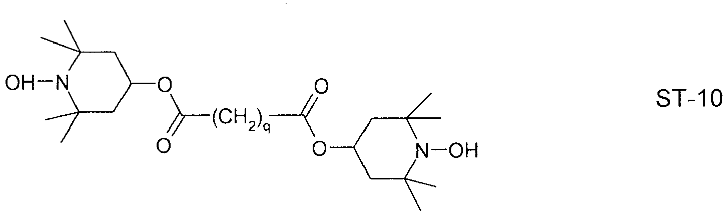 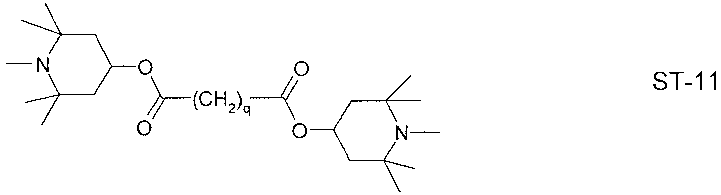 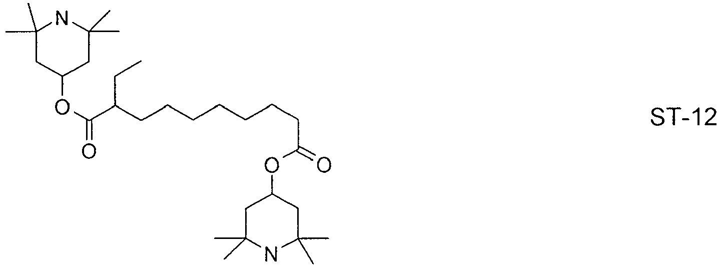 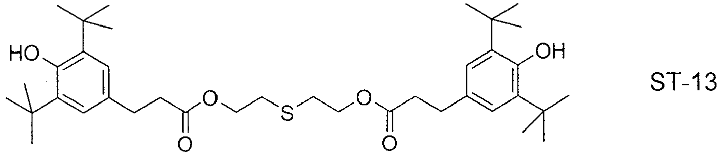 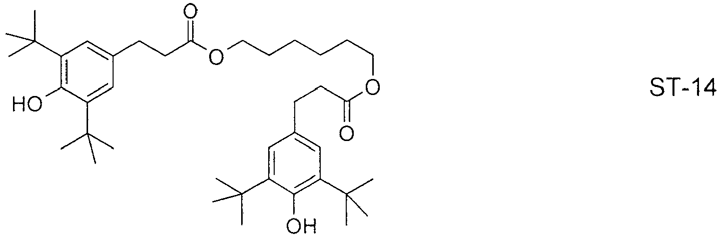 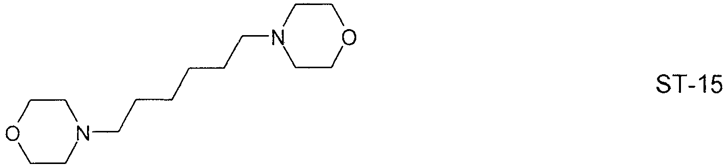 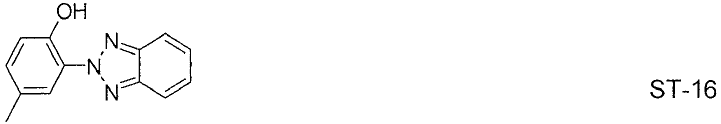 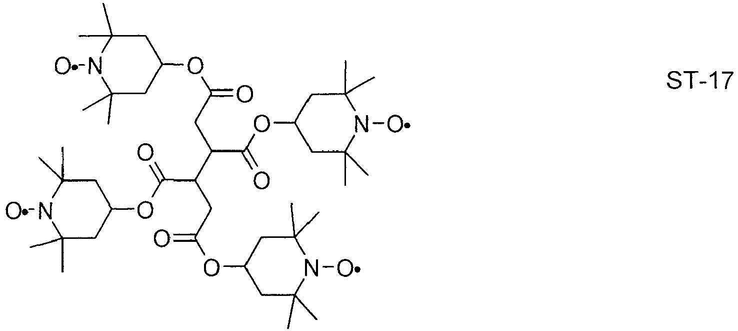 worin
- R^{ST}: H, einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-,-OCF₂-, -CH=CH-, 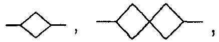 -O-, -CO-O-, -O-CO- so ersetzt sein können, dass O-Atome nicht direkt miteinander verknüpft sind, und worin auch ein oder mehrere H-Atome durch Halogen ersetzt sein können, 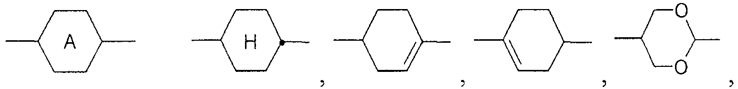 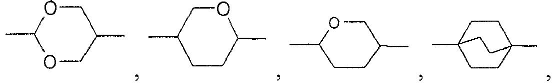 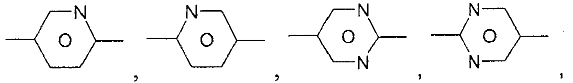 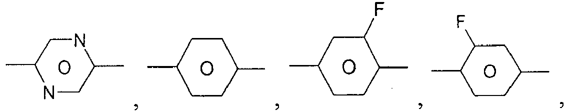 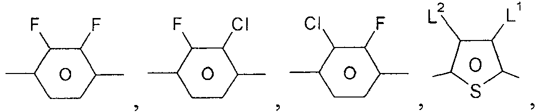 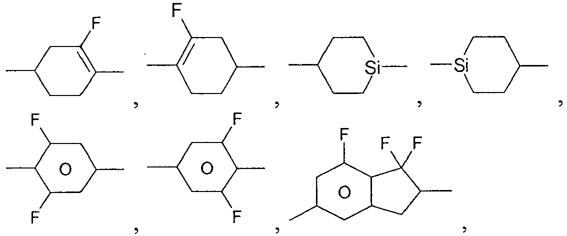 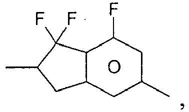 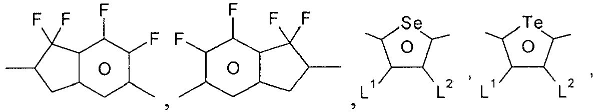 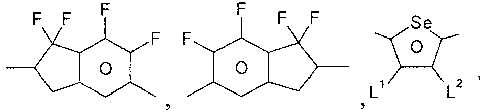 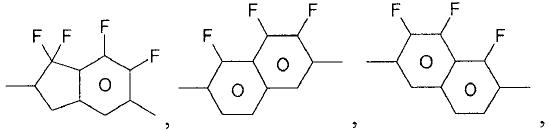 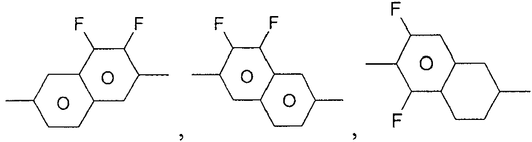 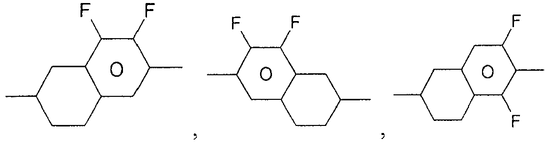 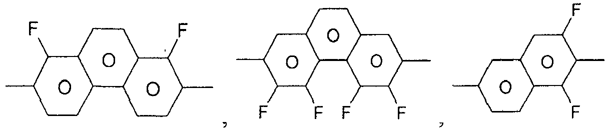 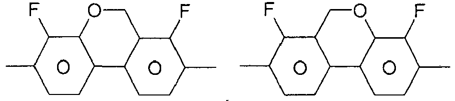 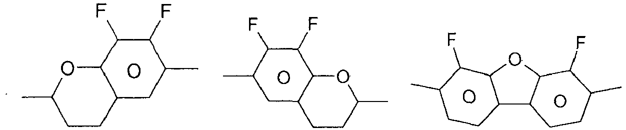
- Z^{ST}: jeweils unabhängig voneinander -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- oder eine Einfachbindung,
- L¹ und L²: jeweils unabhängig voneinander F, Cl, CF₃ oder CHF₂,
- p: 1 oder 2,
- q: 1, 2, 3, 4, 5, 6, 7, 8, 9 oder 10 bedeuten.

Derartige Medien sind insbesondere für elektrooptische Anzeigen mit einer Aktivmatrix-Adressierung basierend auf dem ECB-Effekt sowie für IPS-Anzeigen (In plane switching) oder FFS-Anzeigen (Fringe Field Switching) zu verwenden
Ähnliche flüssigkristalline Medien, sowie deren Verwendung in elektrooptischen Anzeigen mit einer Aktivmatrix-Adressierung basierend auf dem ECB-Effekt sowie für IPS-Anzeigen werden beispielsweise in EP 1 752 510 A1 und WO 2015/139827 A1 gelehrt.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden.

Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.
Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssig-kristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzep-table Widerstandswerte über eine lange Betriebsdauer aufweisen müssen. Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Nachteil der häufig verwendeten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Der Markt für VA-, PS-VA-, IPS-, FFS- und UB-FFS-Anwendungen verlangt nach LC-Mischungen mit schnellen Schaltzeiten und sehr hoher Reliability. Ein Ansatz zur Erzielung schneller Schaltzeiten ist die Identifikation von hochpolaren LC Materialien mit geringen Rotationsviskositäten, deren Einsatz in LC-Mischungen den gewünschten Effekt ermöglicht. Allerdings hat der Einsatz derartiger hochpolarer LC-Materialien einen negativen Einfluß auf die Reliabilityparamerter, insbesondere nach Lichtbelastung.

Der Erfindung liegt die Aufgabe zugrunde Flüssigkristall-Mischungen, insbesondere für Monitor- und TV-Anwendungen, welche auf dem ECB-, UB-FFS, IPS- oder FFS-Effekt beruhen, bereitzustellen, die die oben angegebenen Nachteile nicht oder nur in geringerem Maße aufweisen. Insbesondere muss für Monitore und Fernseher gewährleistet sein, dass diese auch bei extrem hohen und extrem niedrigen Temperaturen arbeiten und gleichzeitig sehr niedrige Schaltzeiten aufweisen und gleichzeitig ein verbessertes Reliability-Verhalten, insbesondere kein oder ein deutlich verringertes Image-Sticking, nach langen Laufzeiten aufweisen.

Überraschenderweise ist es möglich schnelle Schaltzeiten von LC-Mischungen bei gleichzeitig guter Reliability durch den Einsatz der Verbindungen der Formel I zu erhalten, wenn geeignete Stabilisatoren zugesetzt werden. Ein Reliability-Parameter, der hierbei gezielt beeinflusst werden kann, ist die Voltage Holding Ratio nach Lichtbelastung, wie z.B. einer Belastung mit UV-Licht (Suntest) oder einer Belastung durch die Hintegrundbeleichtung eines LCDs. Durch den Einsatz derartiger Stabilisatoren wird die Voltage Holding Ratio nach Lichtbelastung erhöht.

Gegenstand der Erfindung ist somit ein flüssigkristallines Medium, welches mindestens eine Verbindung der Formel I und mindestens eine Verbindung aus der Gruppe der Verbindungen der Formeln ST-1 bis ST-16 enthält.

Die erfindungsgemäßen Mischungen zeigen vorzugsweise sehr breite nematische Phasenbereiche mit Klärpunkten ≥ 70 °C, vorzugsweise ≥ 75 °C, insbesondere ≥ 80 °C, sehr günstige Werte für die kapazitive Schwelle, relativ hohe Werte für die Holding Ratio und gleichzeitig sehr gute Tieftemperaturstabilitäten bei -20 °C und -30 °C sowie sehr geringe Rotationsviskositäten und niedrige Schaltzeiten. Die erfindungsgemäßen Mischungen zeichnen sich weiterhin dadurch aus, dass zusätzlich zur Verbesserung der Rotationsviskosität γ₁, relativ hohe Werte der elastischen Konstanten K₃₃ zur Verbesserung der Schaltzeiten zu beobachten sind. Durch den Einsatz der Verbindungen der Formel I in LC-Mischungen, vorzugsweise mit negativer dielektrischer Anisotropie wird das Verhältnis von Rotationsviskosität γ₁ und elastischen Konstanten Kᵢ verringert.

Einige bevorzugte Ausführungsformen der erfindungsgemäßen Mischungen werden im Folgenden genannt.

In den Verbindungen der Formel I bedeuten R¹ und R^{1*} jeweils unabhängig voneinander vorzugsweise geradkettiges Alkoxy, insbesondere OCH₃, n-C₂H₅O, n-OC₃H₇, n-OC₄H₉, n-OC₅H₁₁, n-OC₆H₁₃, weiterhin Alkenyl, insbesondere CH₂=CH₂, CH₂CH=CH₂, CH₂CH=CHCH₃, CH₂CH=CHC₂H₅, verzweigtes Alkoxy, insbesondere OC₃H₆CH(CH₃)₂, sowie Alkenyloxy, insbesondere OCH=CH₂, OCH₂CH=CH₂, OCH₂CH=CHCH₃, OCH₂CH=CHC₂H₅.

Besonders bevorzugt bedeuten R¹ und R^{1*} jeweils unabhängig voneinander geradkettiges Alkoxy mit 1-6 C-Atomen, insbesondere Methoxy, Ethoxy, Propoxy, Butoxy, Pentoxy, Hexoxy.

L¹ und L² bedeuten in Formel I vorzugsweise beide F.

Erfindungsgemäße Verbindungen der Formel I sind die Verbindungen der Formeln I-1 bis I-20, 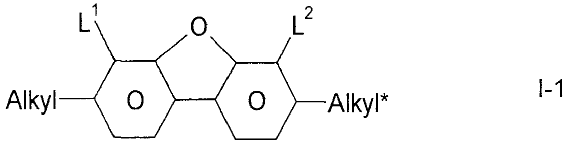 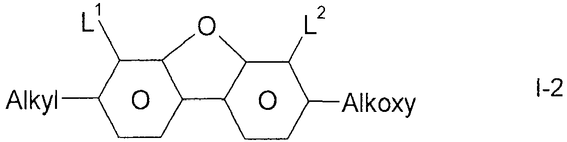 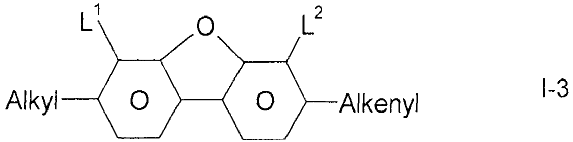 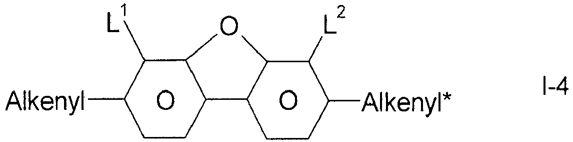 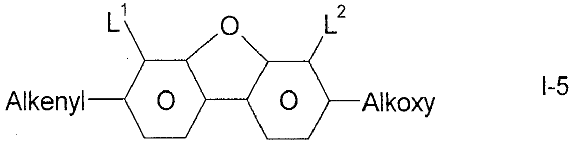 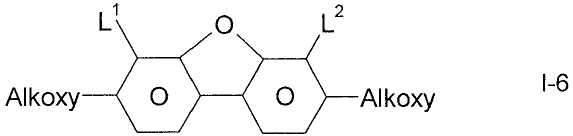 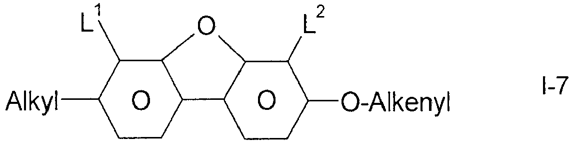 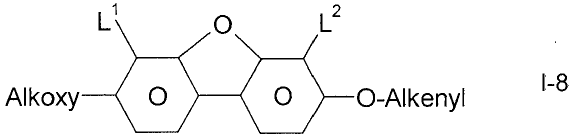 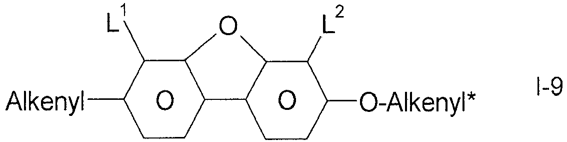 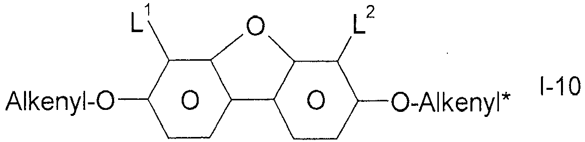 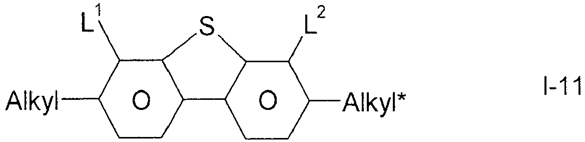 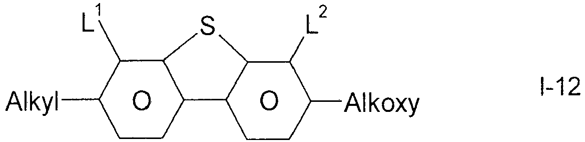 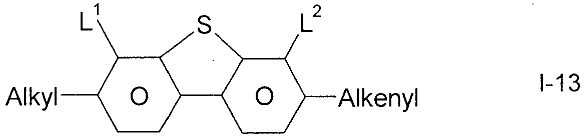 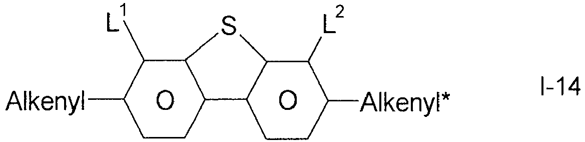 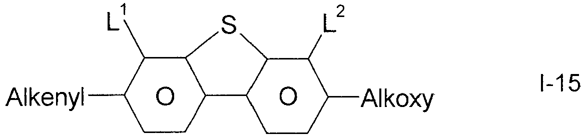 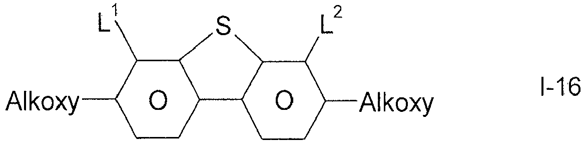 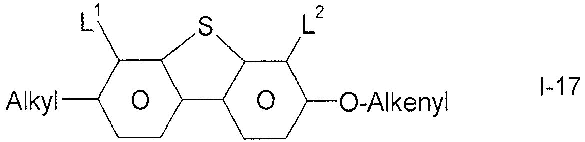 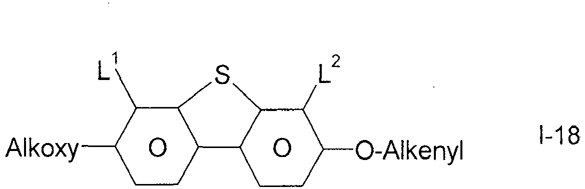 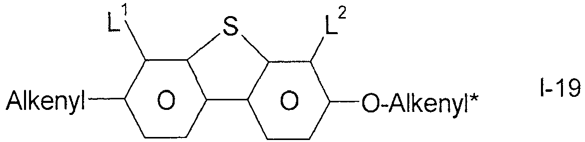 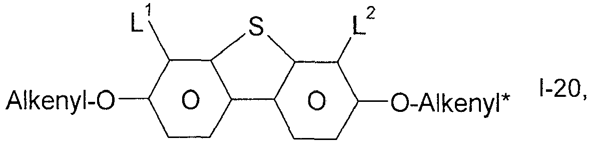 worin
Alkyl und Alkyl* jeweils unabhängig voneinander einen geradkettigen Alkylrest mit 1-6 C-Atomen, Alkenyl und Alkenyl* jeweils unabhängig voneinander einen geradkettigen Alkenylrest mit 2-6 C-Atomen, Alkoxy und Alkoxy* jeweils unabhängig voneinander einen geradkettigen Alkoxyrest mit 1-6 C-Atomen, und L¹ und L² jeweils unabhängig voneinander F oder Cl bedeuten.

In den Verbindungen der Formeln I-1 bis I-20 bedeuten L¹ und L² jeweils unabhängig voneinander vorzugsweise F oder Cl, insbesondere L¹ = L² = F. Besonders bevorzugt sind die Verbindungen der Formeln I-2 und I-6. Vorzugsweise bedeutet in den Verbindungen der Formeln I-2 und I-6 L¹ = L² = F.

Ganz besonders bevorzugt enthält die erfindungsgemäße Mischung mindestens eine Verbindung ausgewählt aus der Gruppe der nachfolgend genannten Verbindungen der Formeln Formeln I-1A, I-2A, I-4A, I-6A, I-6B, I-11A, I-12-A, I-14A und I-16A.

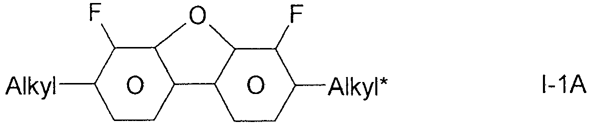

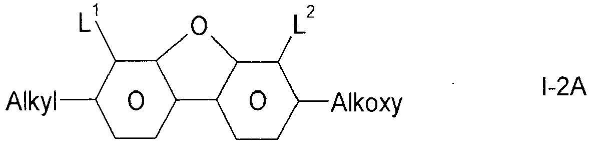

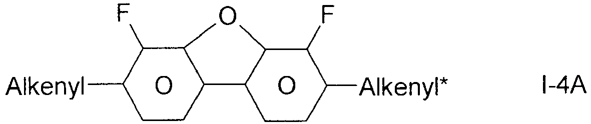

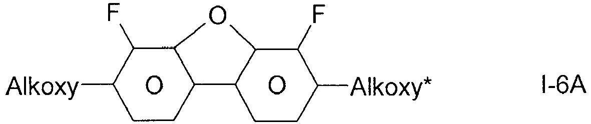

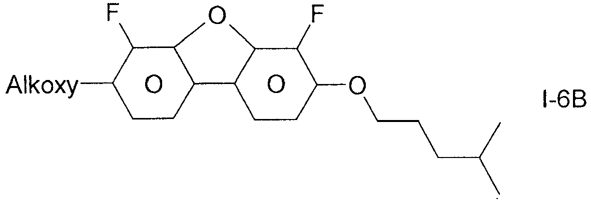

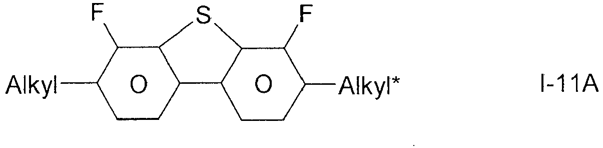

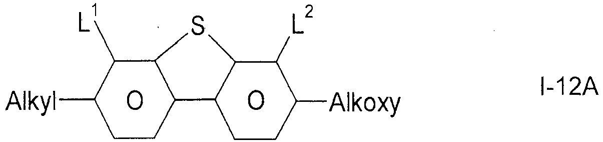

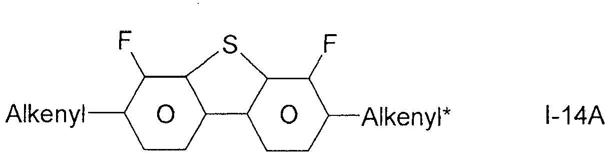

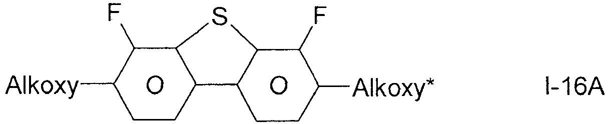

Ganz besonders bevorzugte Mischungen enthalten mindestens eine Verbindung ausgewählt aus der Gruppe der Verbindungen der Formeln I-2.1 bis I-2.49, I-6.1 bis I-6.28, I-12.1 bis I-12.49 und 1-16.1 bis I-16.28:

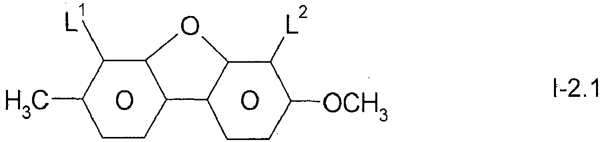

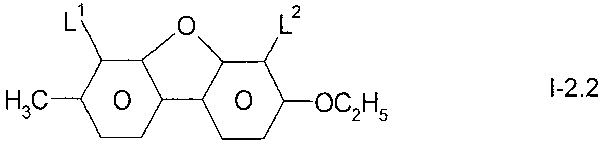

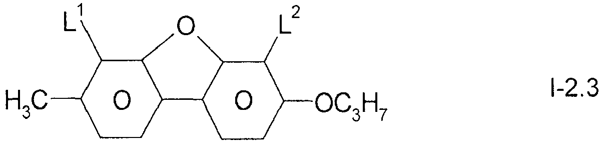

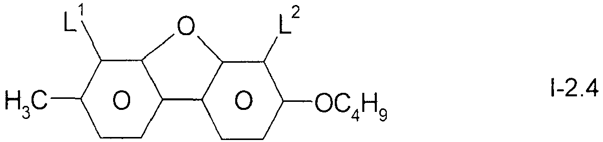

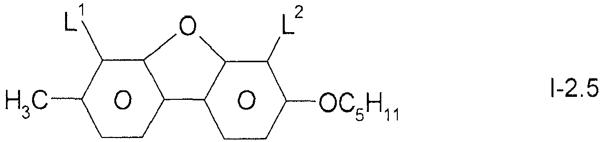

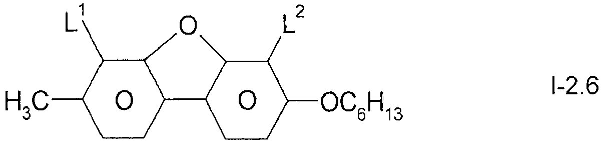

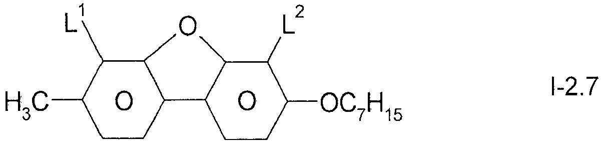

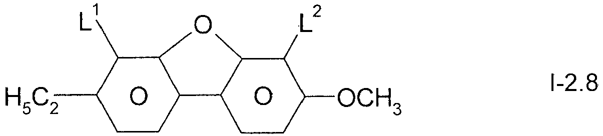

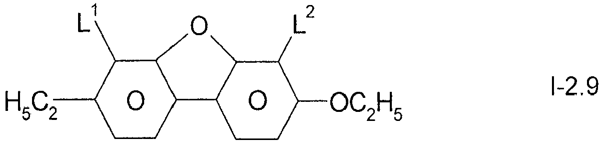

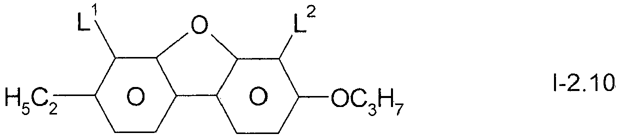

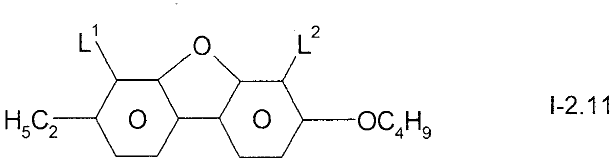

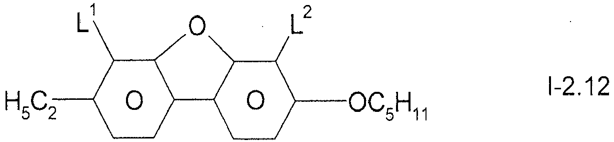

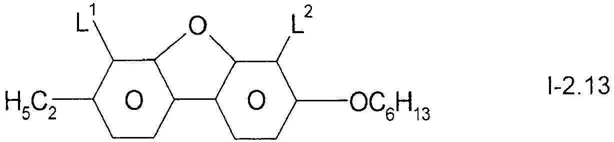

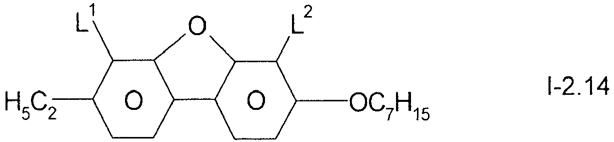

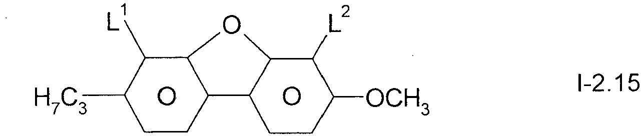

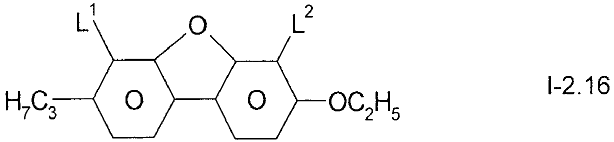

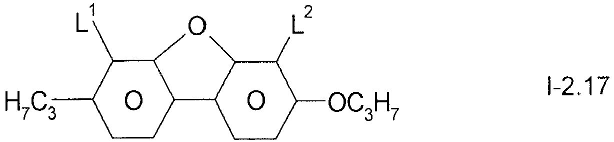

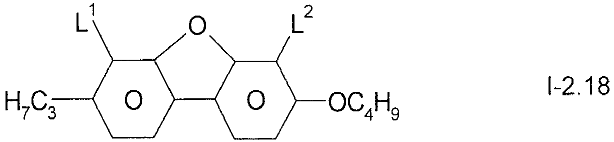

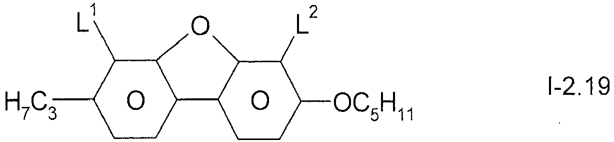

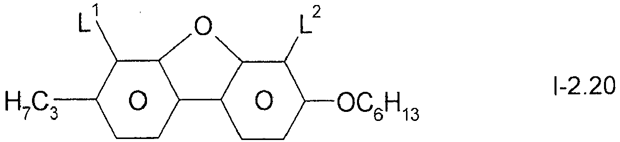

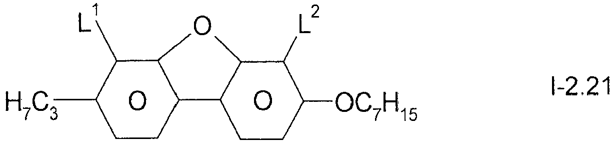

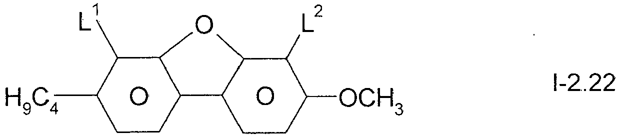

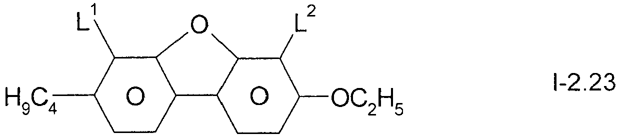

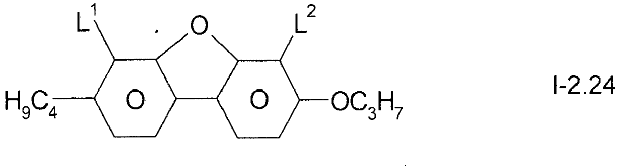

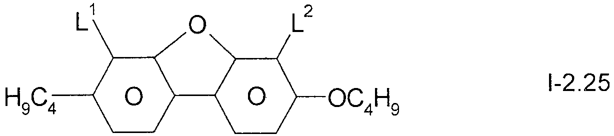

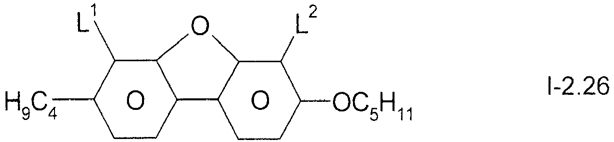

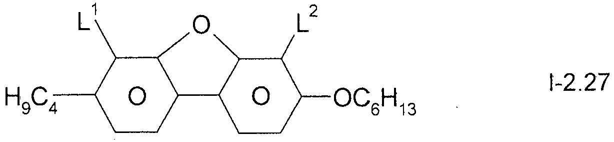

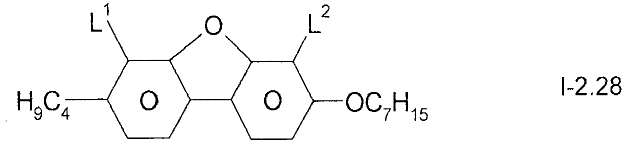

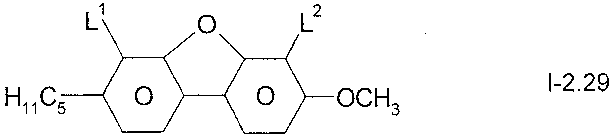

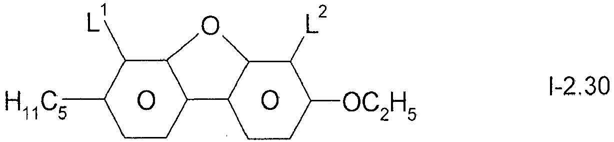

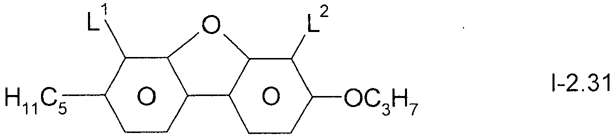

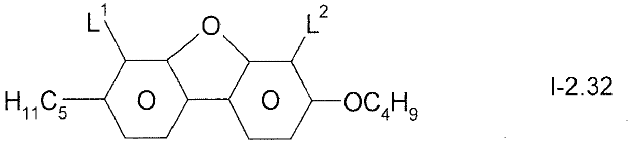

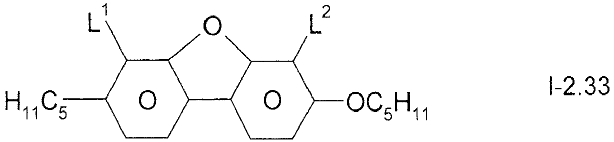

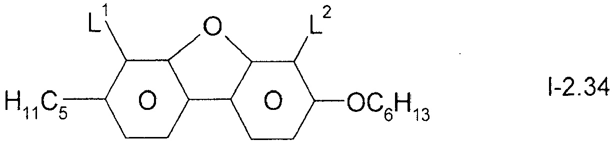

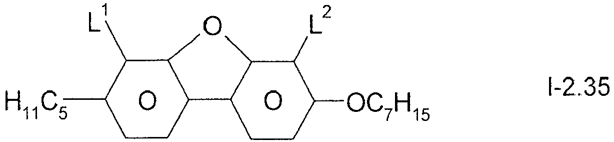

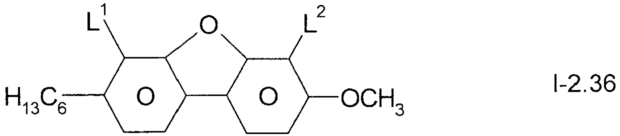

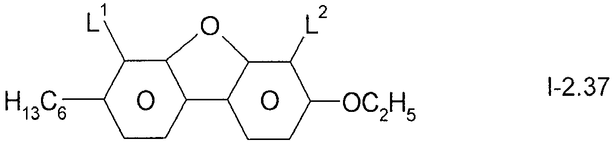

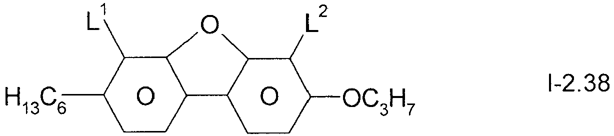

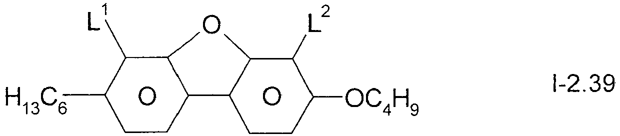

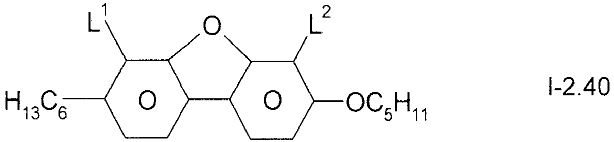

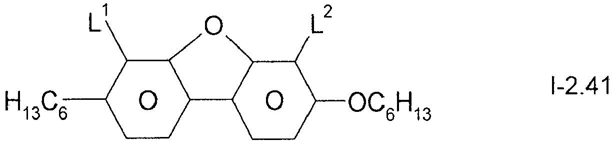

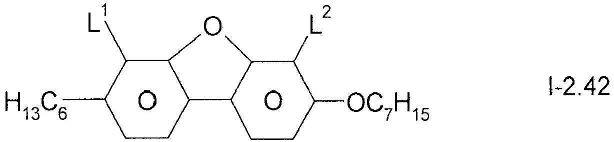

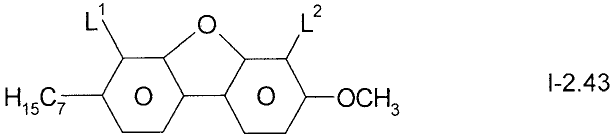

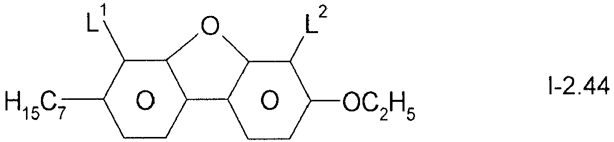

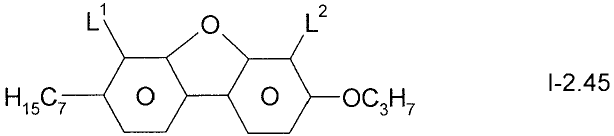

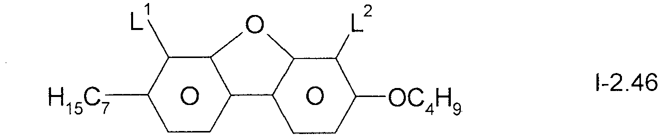

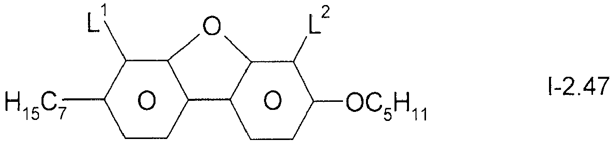

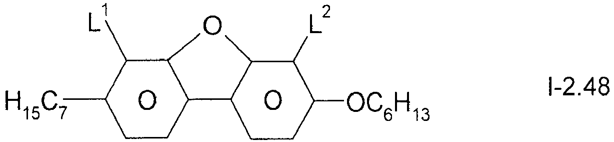

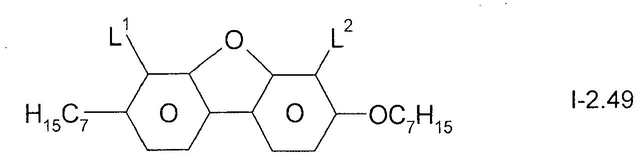

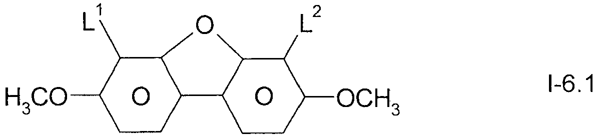

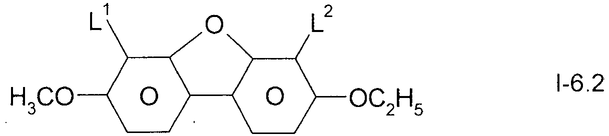

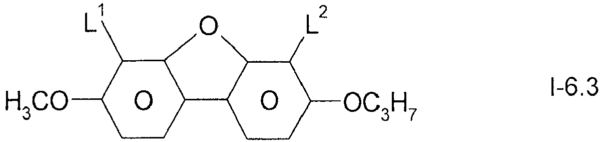

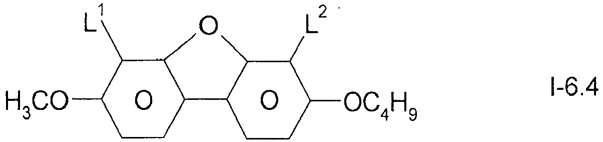

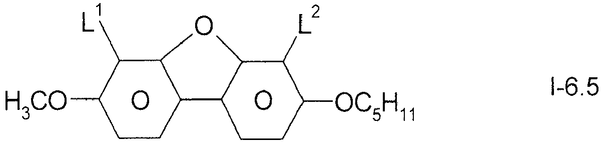

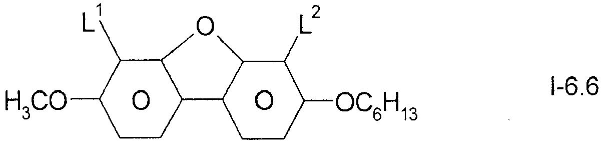

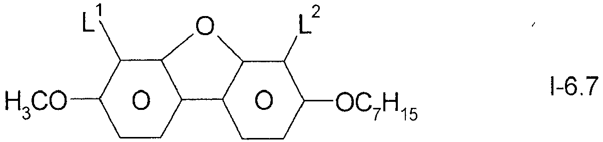

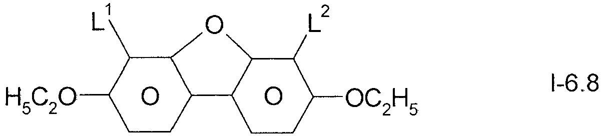

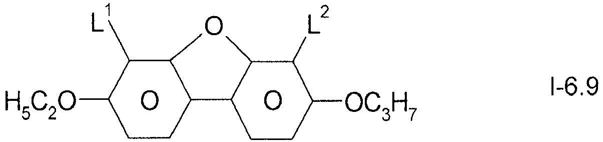

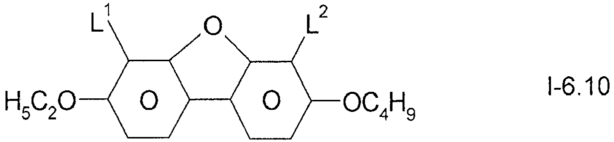

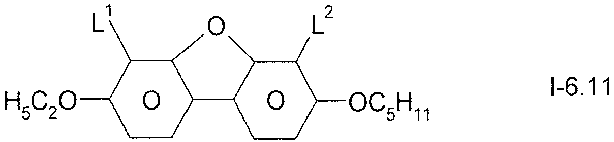

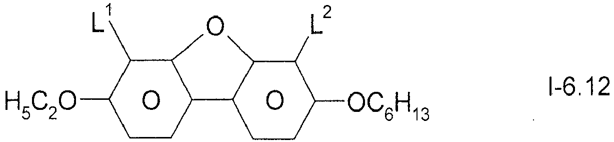

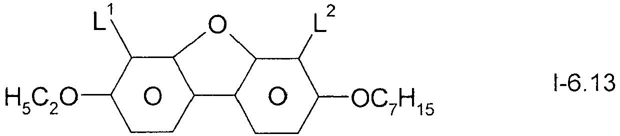

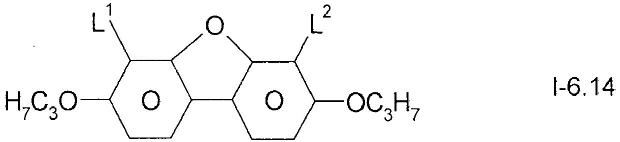

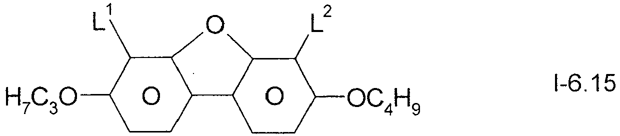

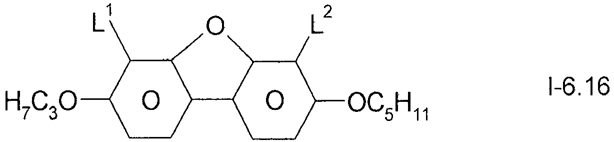

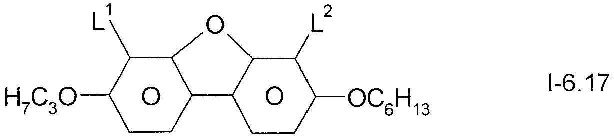

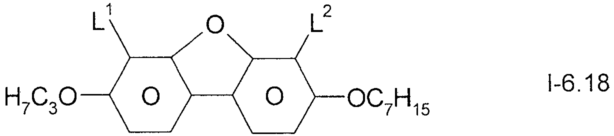

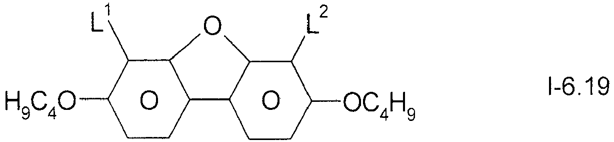

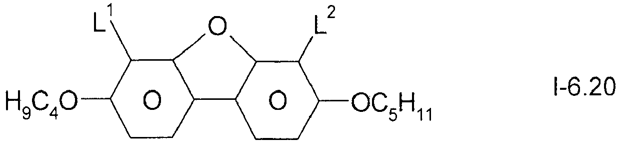

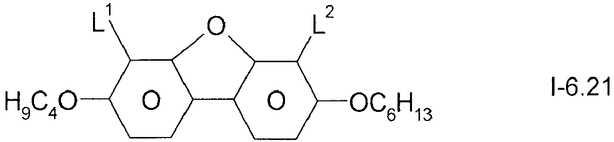

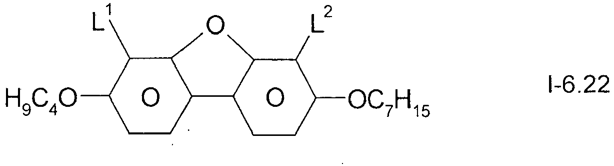

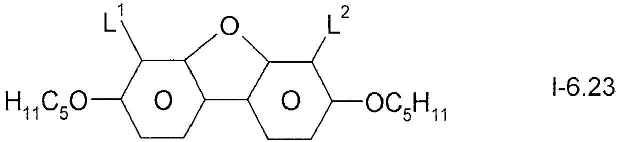

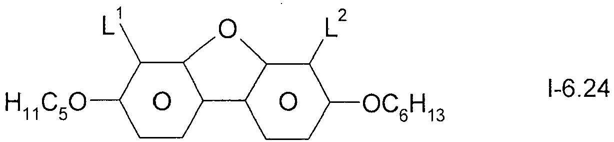

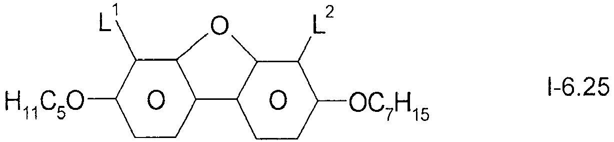

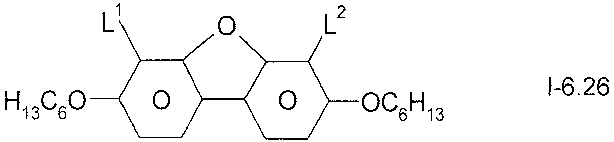

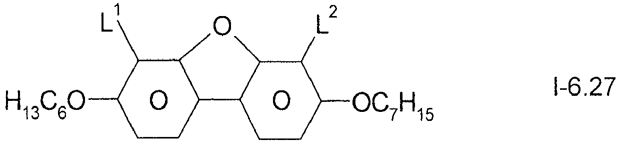

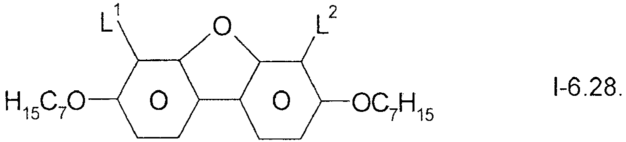

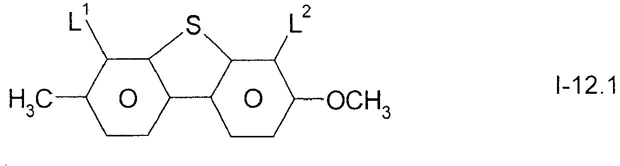

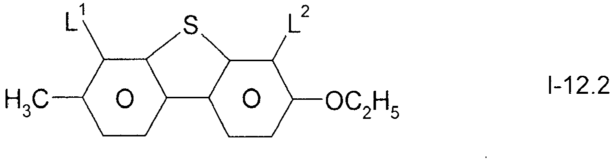

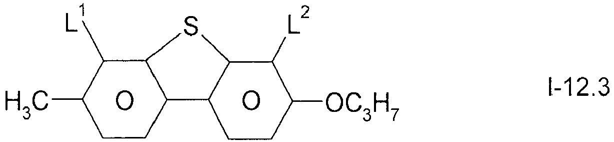

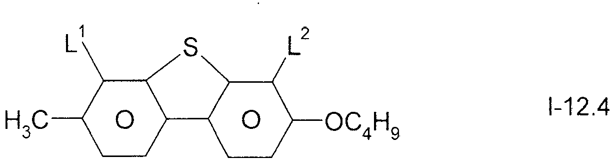

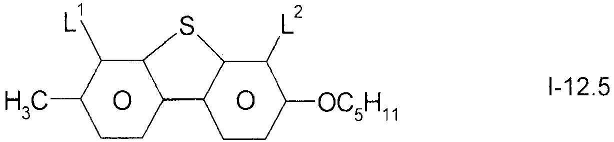

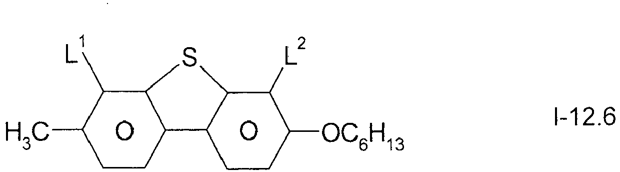

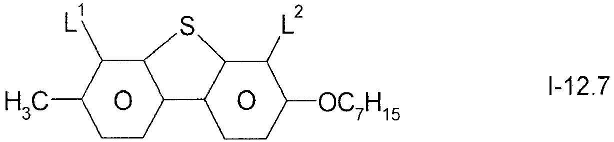

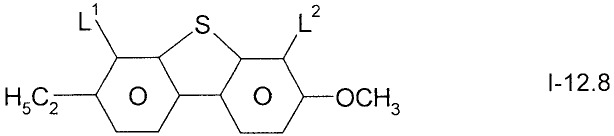

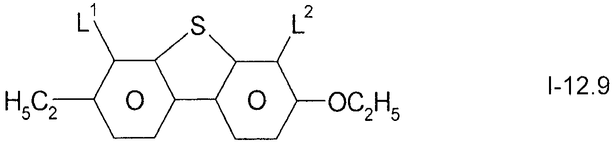

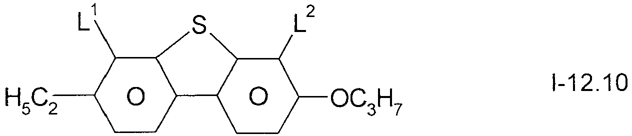

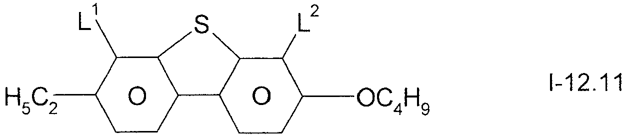

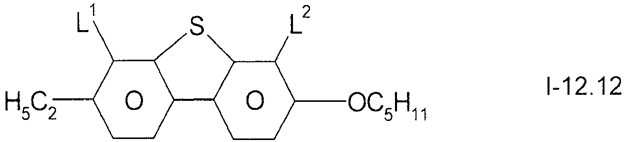

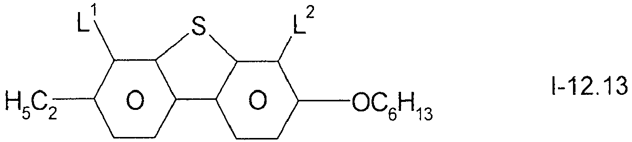

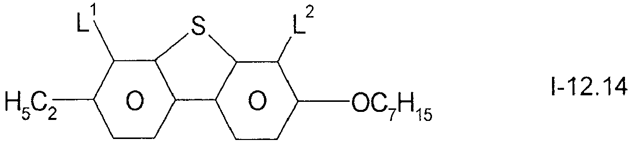

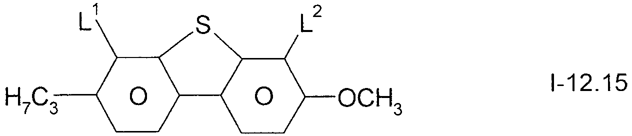

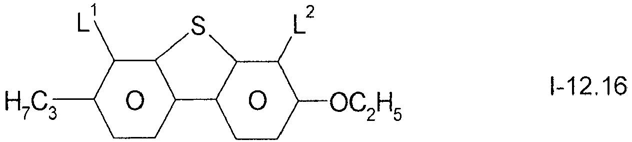

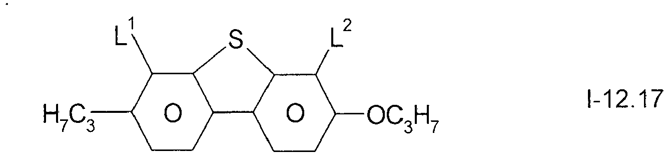

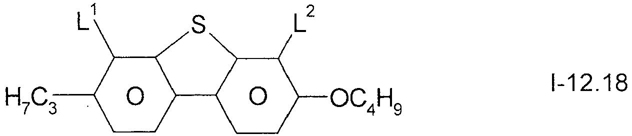

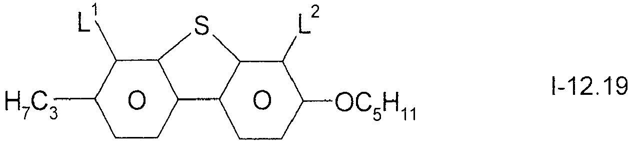

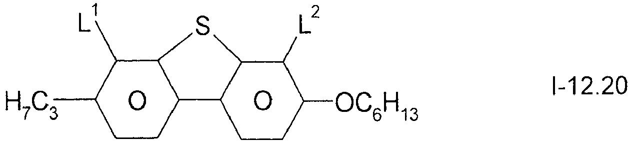

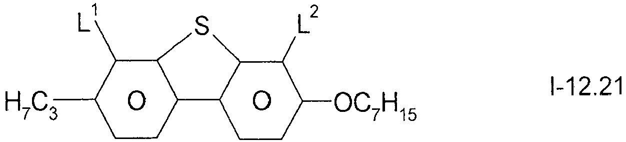

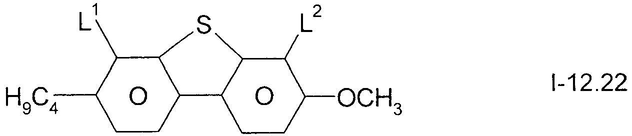

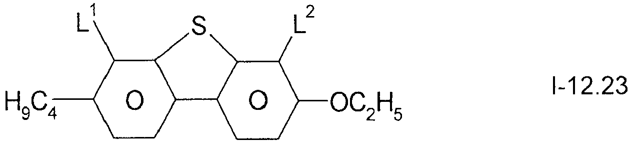

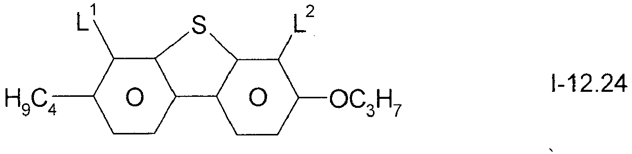

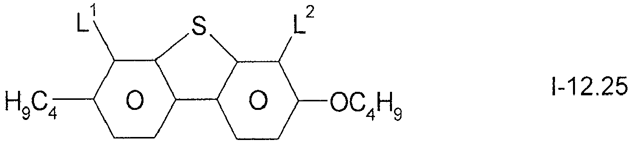

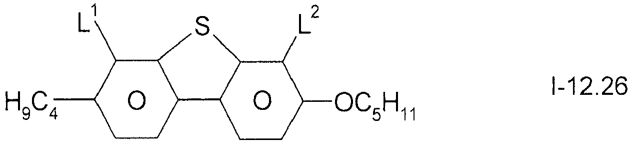

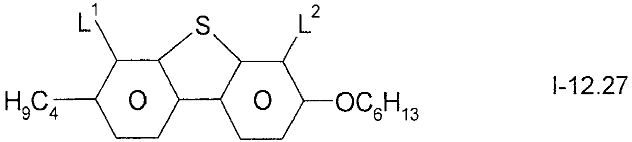

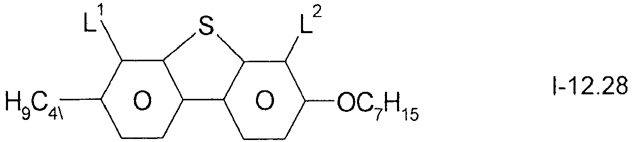

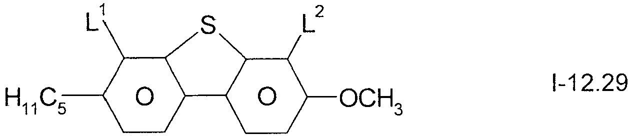

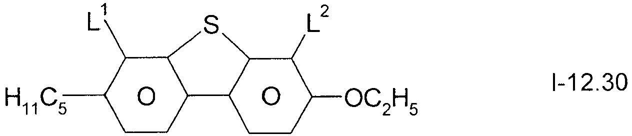

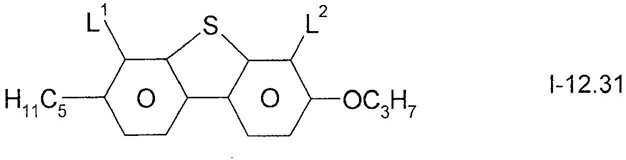

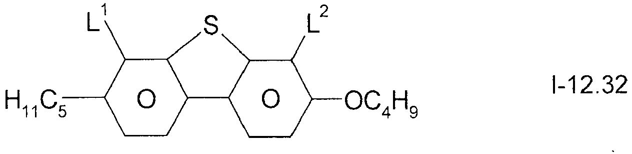

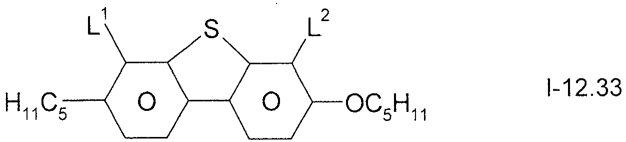

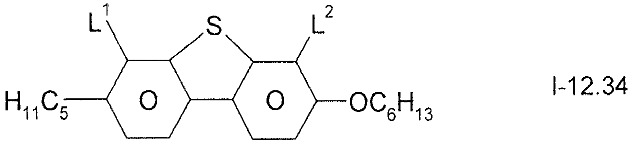

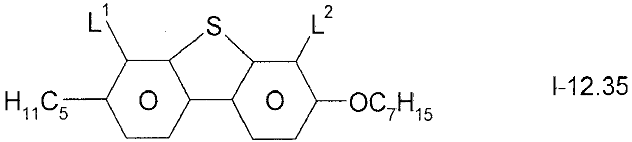

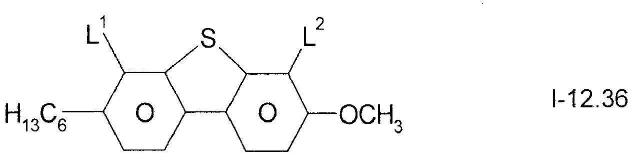

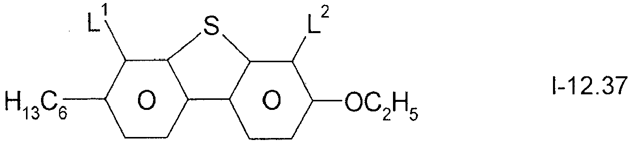

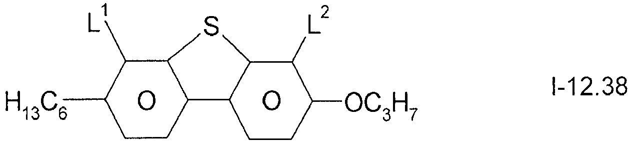

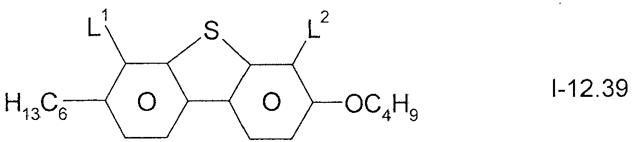

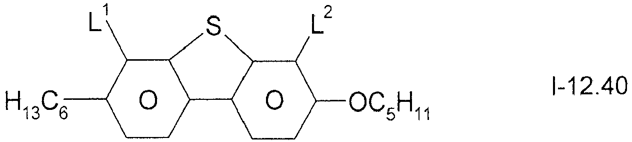

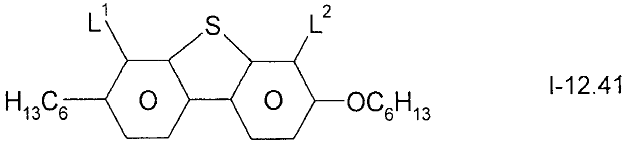

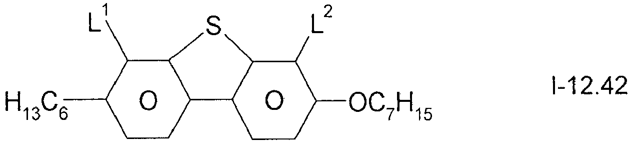

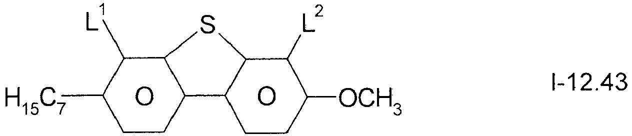

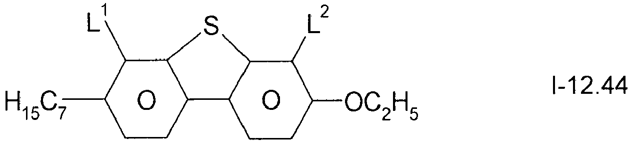

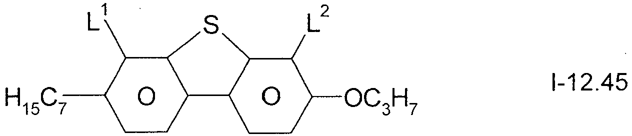

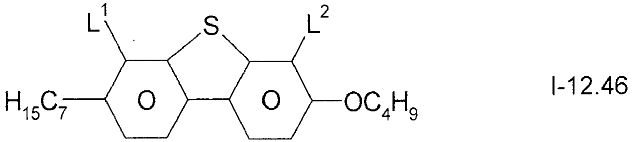

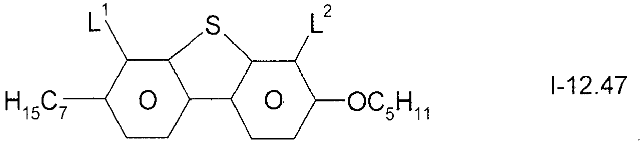

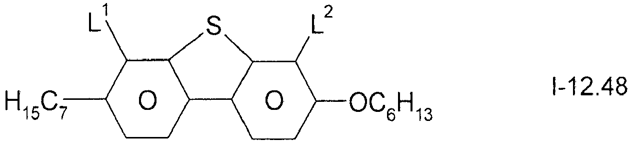

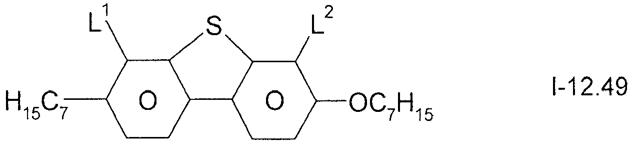

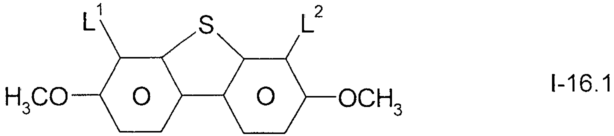

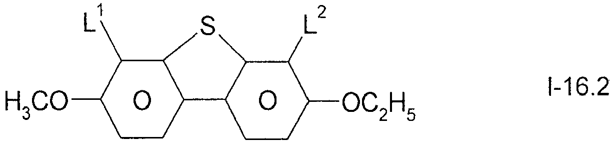

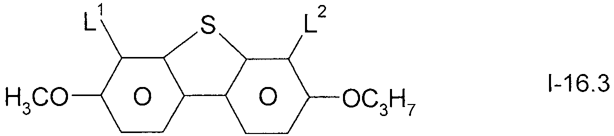

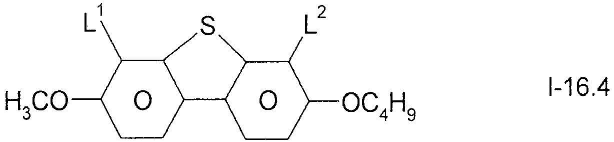

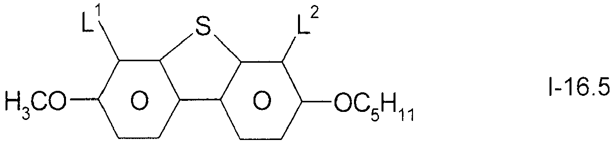

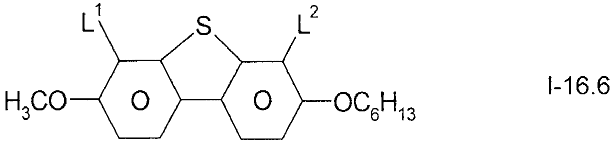

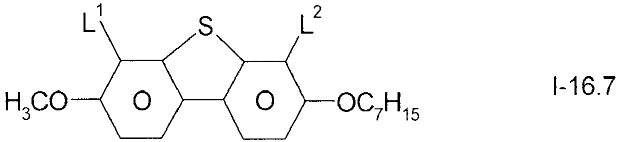

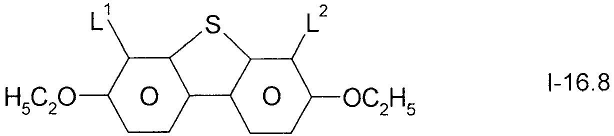

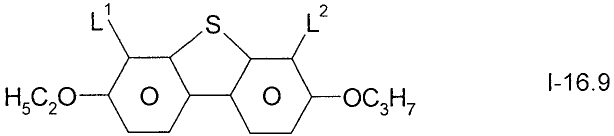

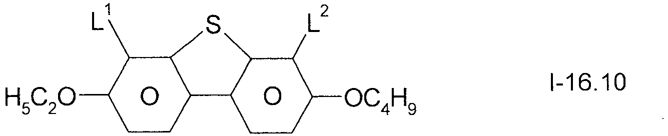

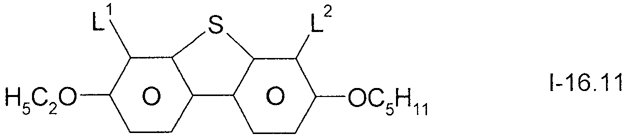

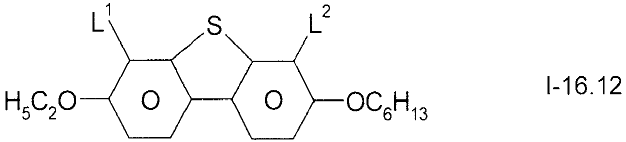

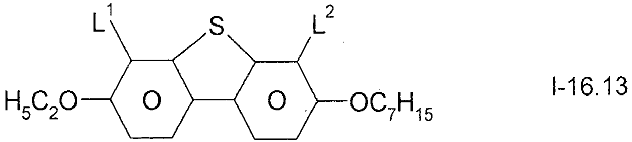

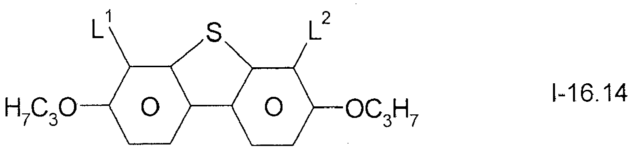

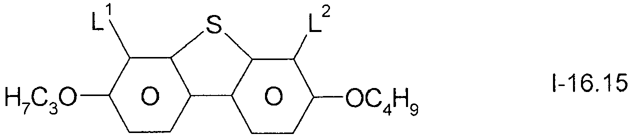

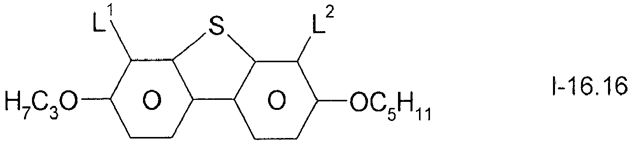

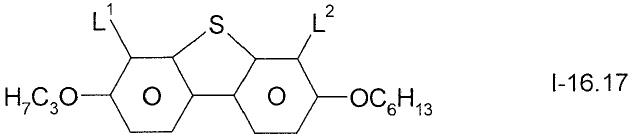

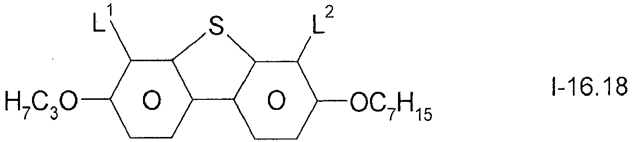

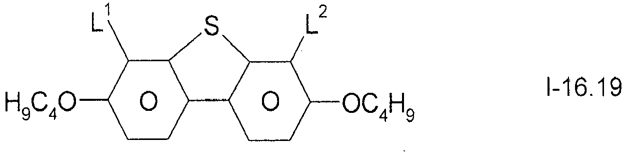

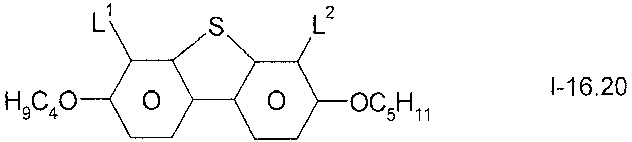

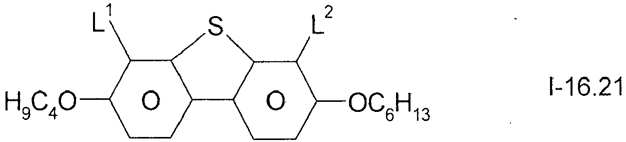

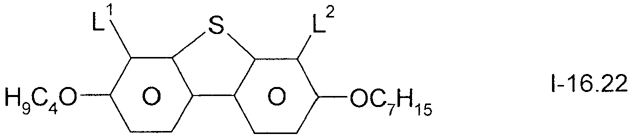

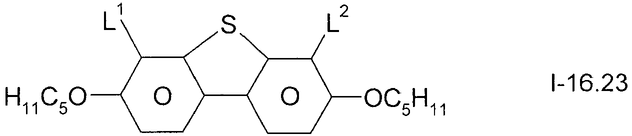

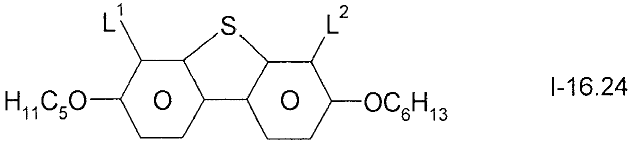

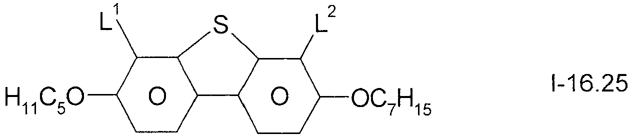

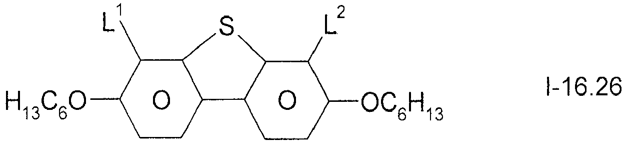

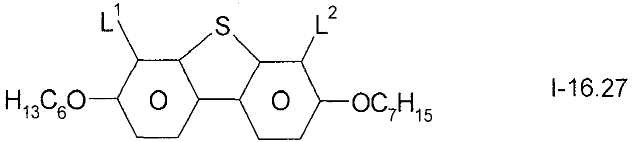

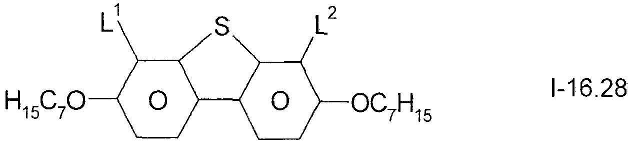

In den Verbindungen der Formeln I-2.1 bis I-2.49, I-6-1 bis I-6-28, I-12.1 bis I-12.49 und I-16-1 bis I-16-28 bedeuten L¹ und L² vorzugsweise beide Fluor.

Ferner bevorzugt sind flüssigkristalline Mischungen, die mindestens eine Vebindung ausgewählt aus der Gruppe der Verbindungen der Formeln I-1.1 bis I-1.28, I-6B.1 bis I-6B.3 und I-11.1 bis I-11.28 enthalten: 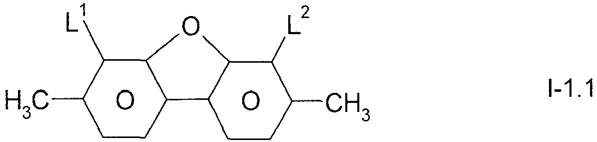 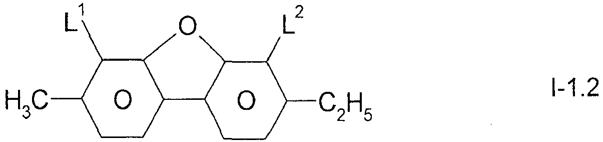 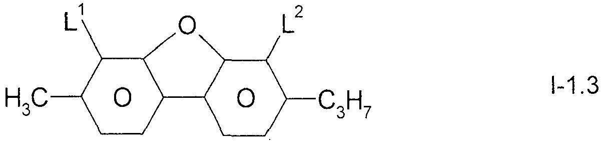 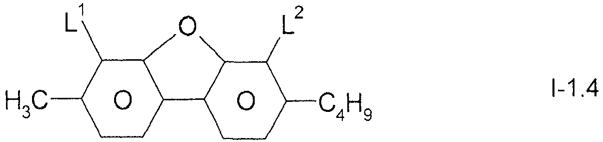 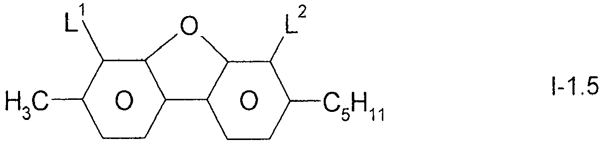 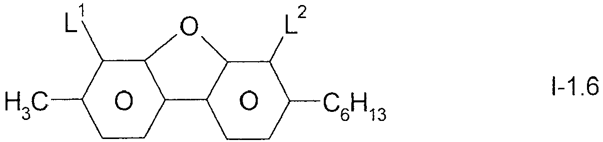 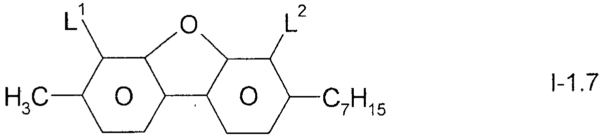 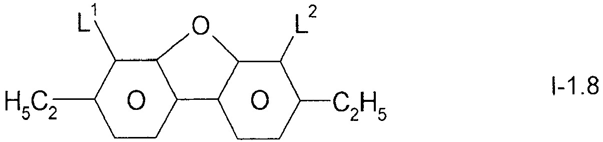 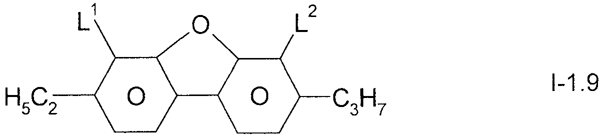 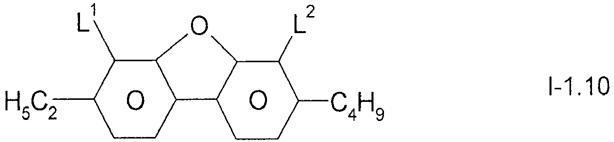 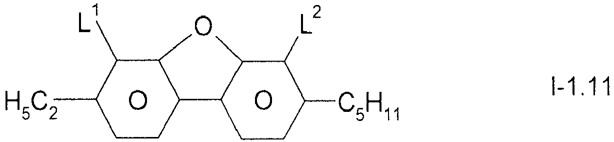 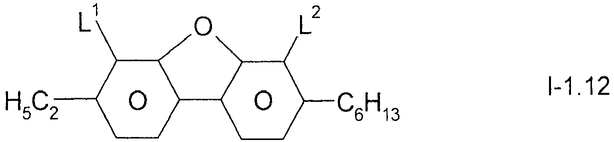 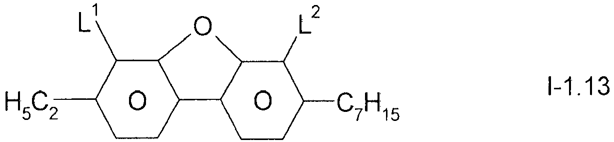 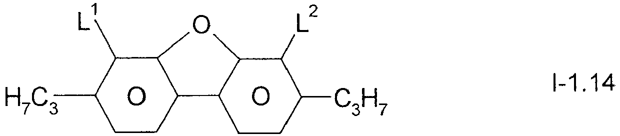 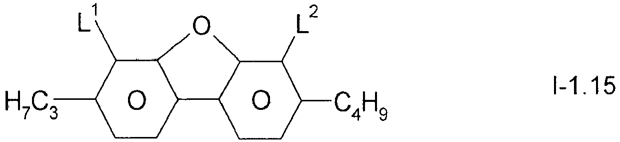 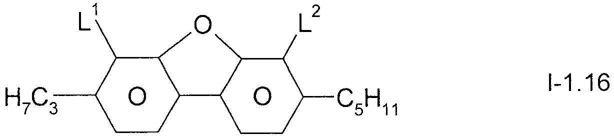 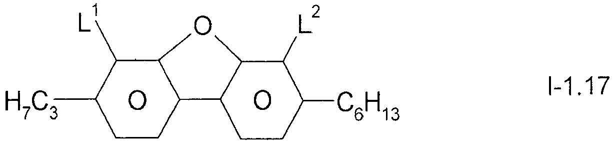 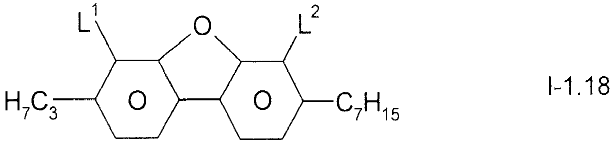 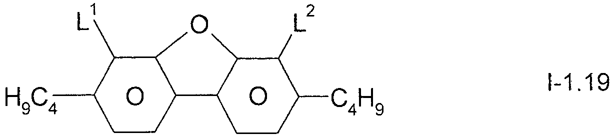 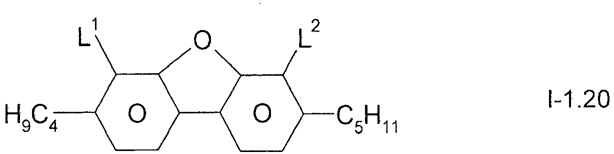 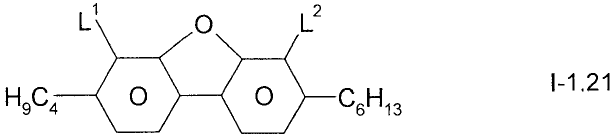 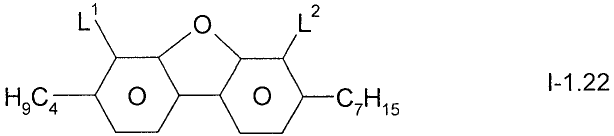 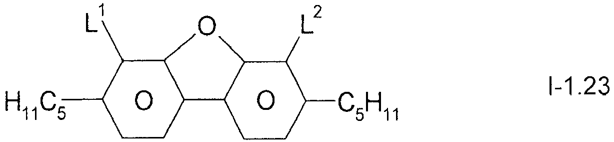 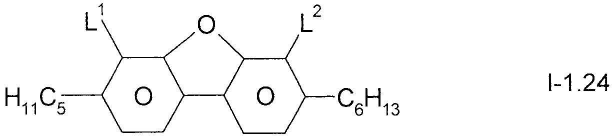 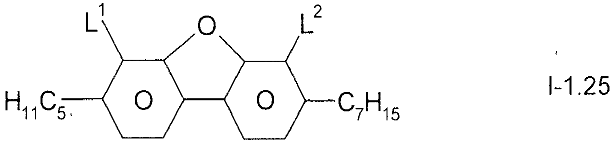 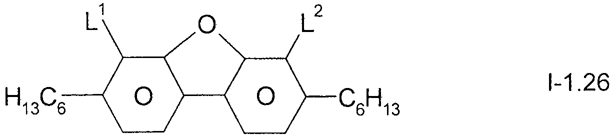 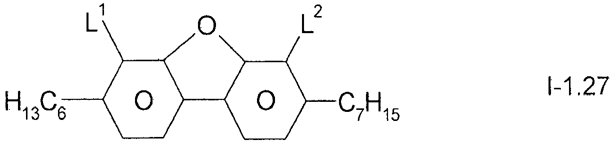 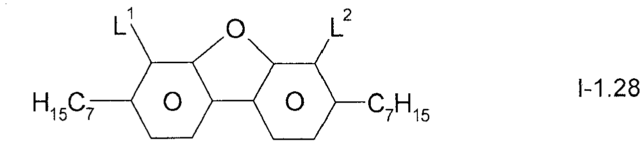 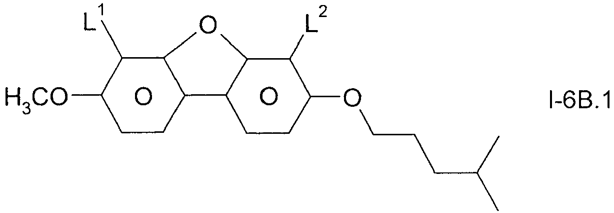 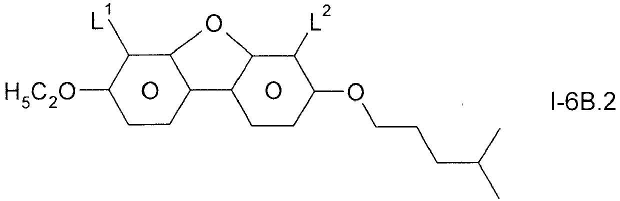 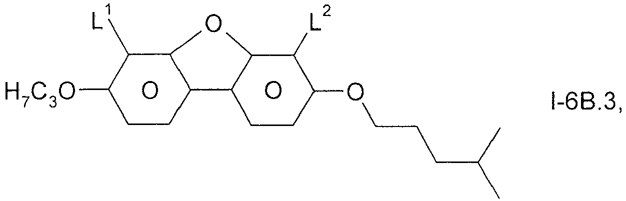 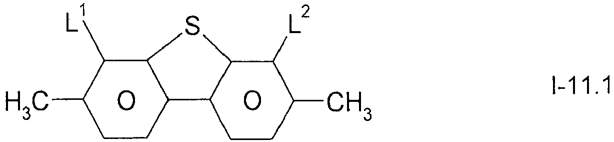 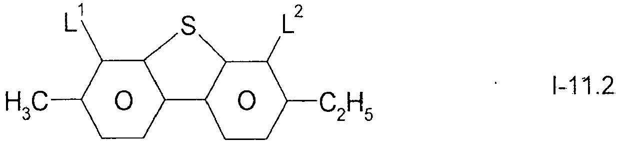 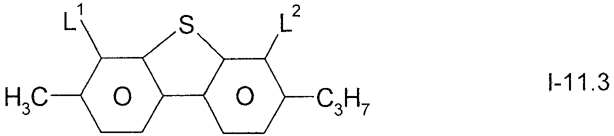 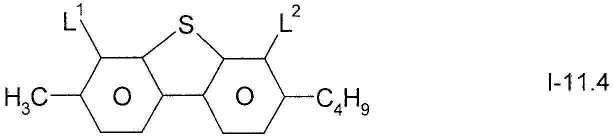 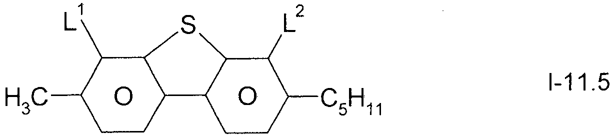 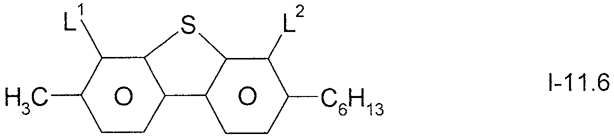 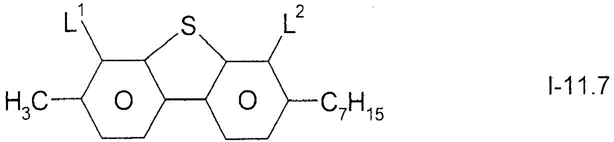 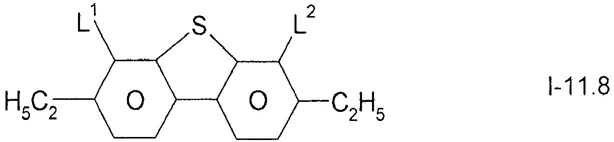 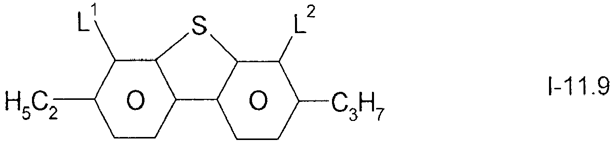 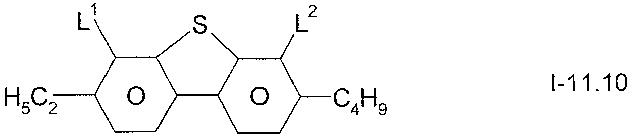 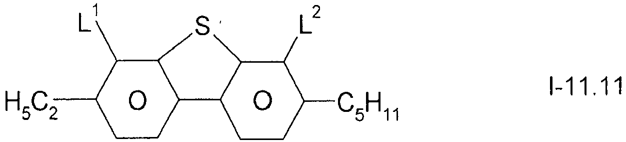 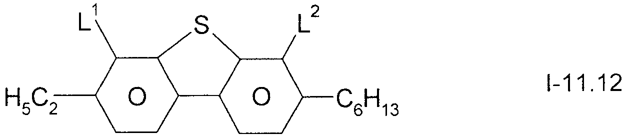 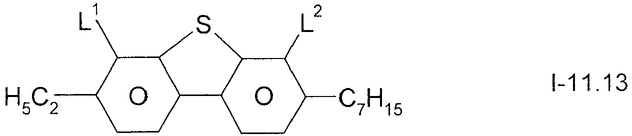 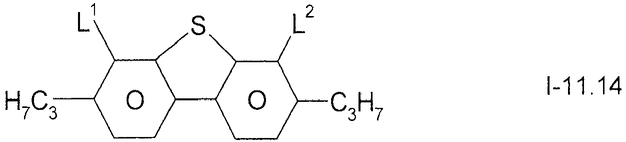 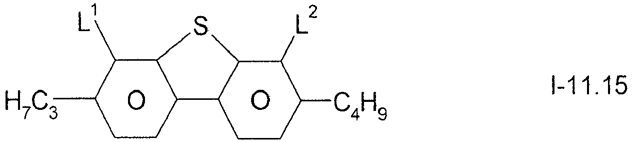 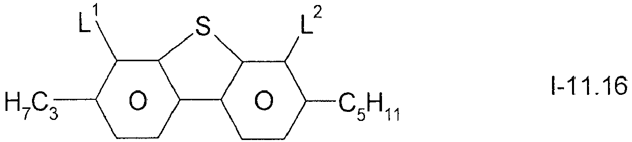 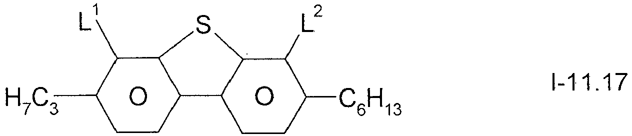 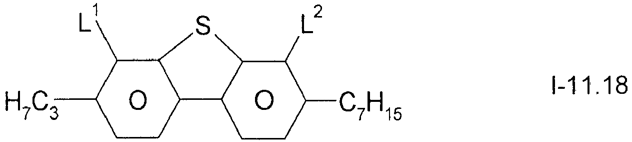 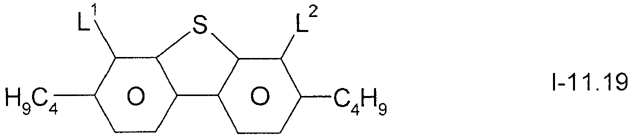 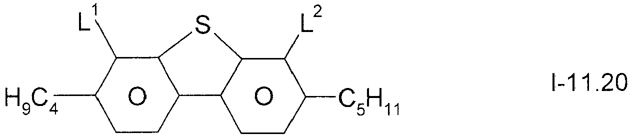 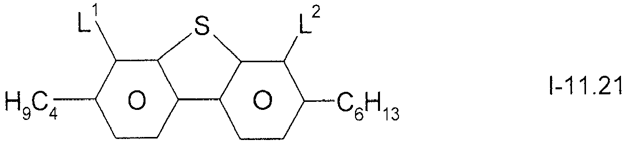 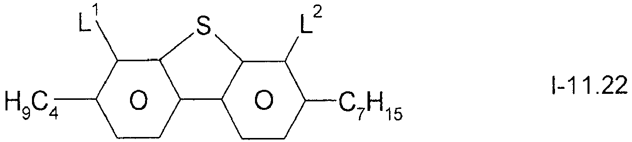 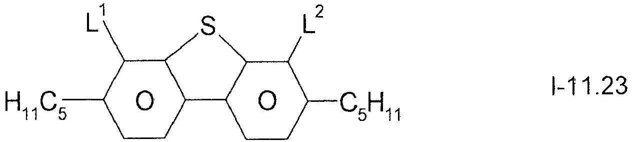 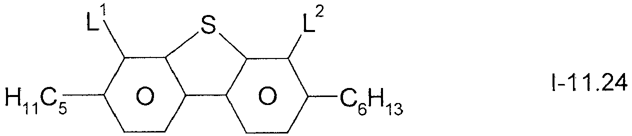 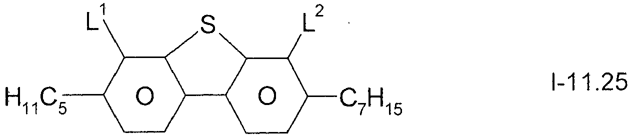 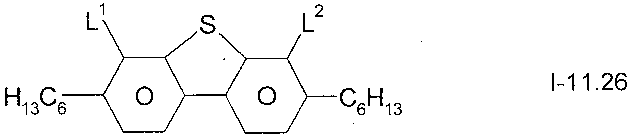 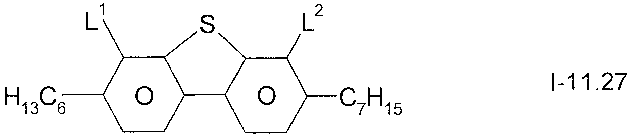 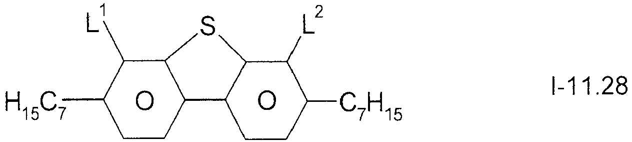 worin L¹ und L² jeweils unabhängig voneinander die in Anspruch 1 genannten Bedeutungen haben. Vorzugsweise bedeutet in den Verbindungen der Formeln I-1.1 bis I-1.28, I-6B.1 bis I-6B.3 und I-11.1 bis I-11.28 L¹ = L² = F.

Ganz besonders bevorzugte Mischungen enthalten mindestens eine der nachfolgend genannten Verbindungen:

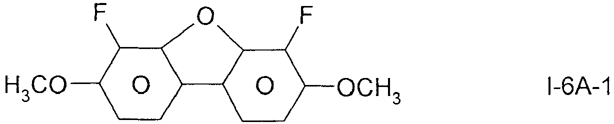

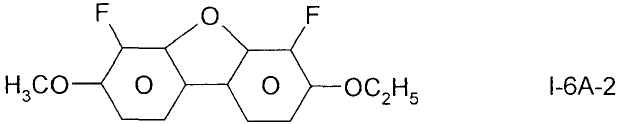

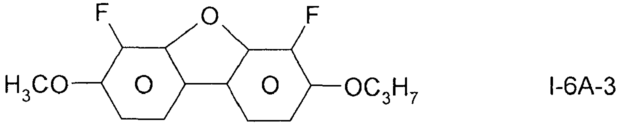

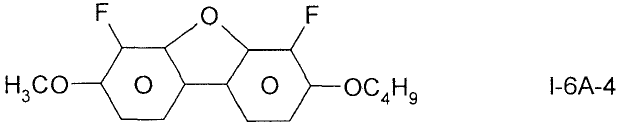

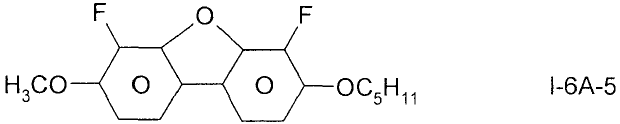

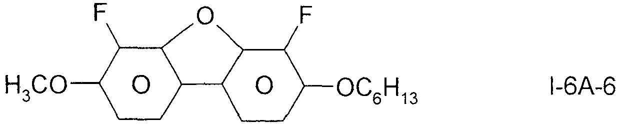

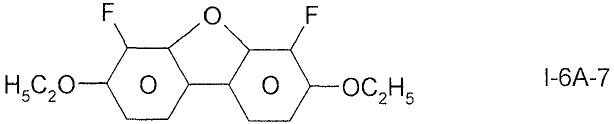

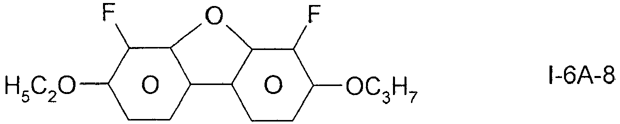

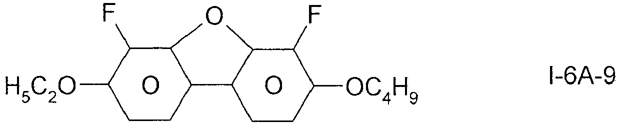

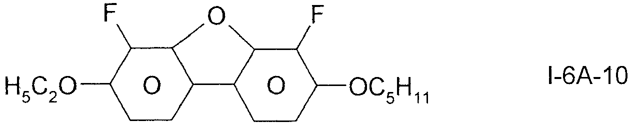

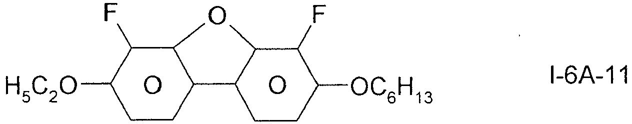

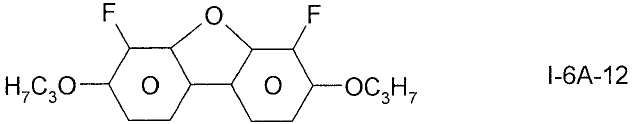

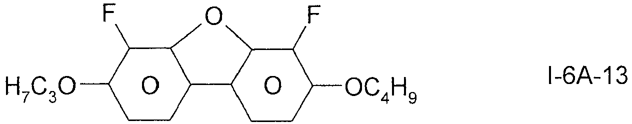

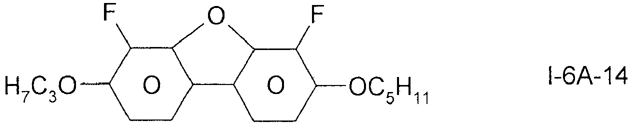

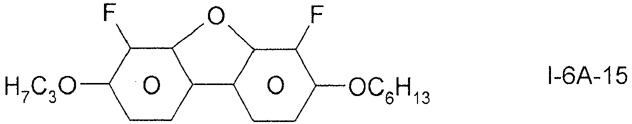

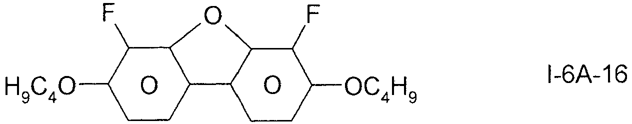

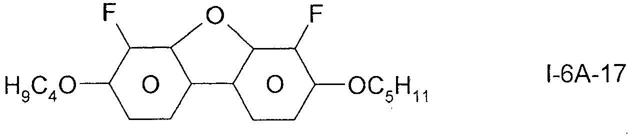

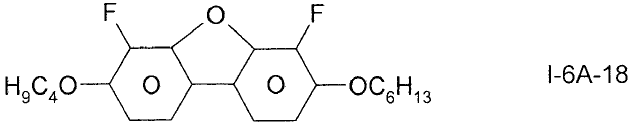

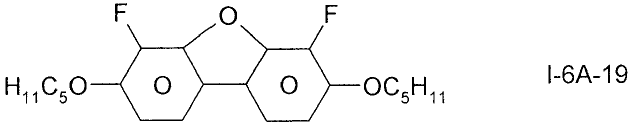

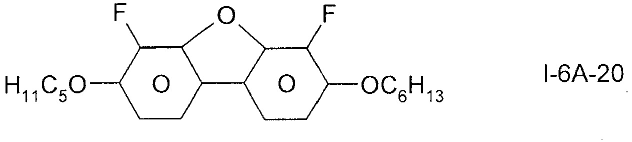

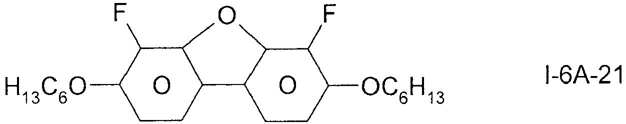

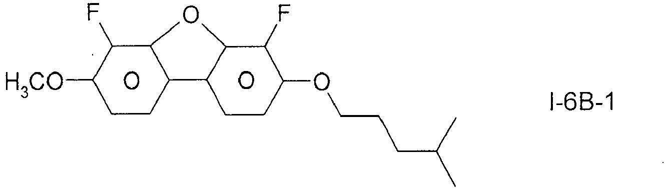

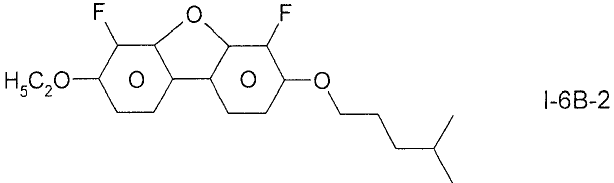

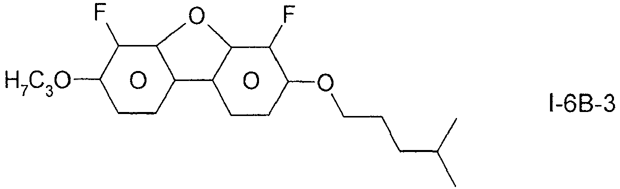

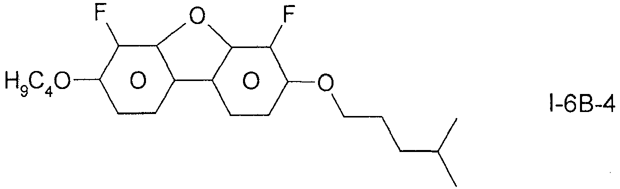

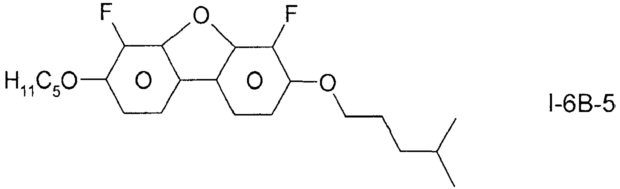

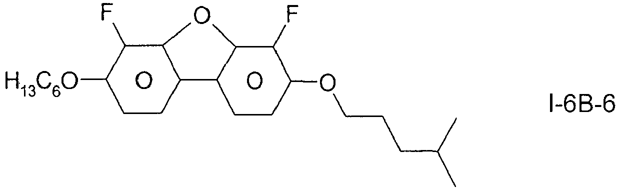

Die Verbindungen der Formel I können beispielsweise wie in der US 2005/0258399 oder WO 02/055463 A1 beschrieben hergestellt werden.

Die erfindungsgemäßen Medien enthalten vorzugsweise ein, zwei, drei, vier oder mehr, vorzugsweise ein, zwei oder drei, Verbindungen der Formeln I-1 bis I-20.

Die Verbindungen der Formeln I-1 bis I-20 werden vorzugsweise im flüssigkristallinen Medium in Mengen von ≥ 1, vorzugsweise ≥ 3 Gew.%, bezogen auf das Gesamtgemisch, eingesetzt. Insbesondere bevorzugt sind flüssigkristalline Medien, die 1 - 40 Gew.%, ganz besonders bevorzugt 2 - 30 Gew%. einer oder mehrerer Verbindungen der Formeln I-1 bis I-20 enthalten.

Von den Verbindungen der Formel ST sind insbesondere die Verbindungen der Formeln 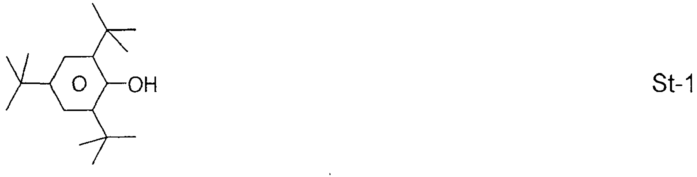 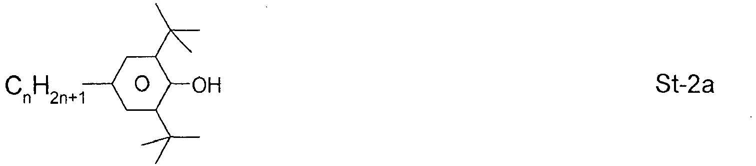 wobei n = 1, 2, 3, 4, 5, 6, oder 7, vorzugsweise n = 1 oder 7, bedeutet 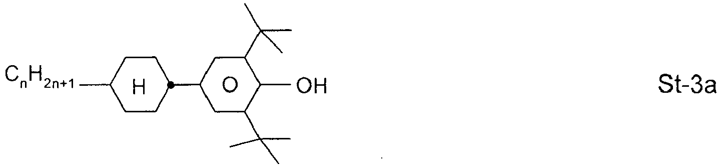 wobei n = 1, 2, 3, 4, 5, 6, oder 7, vorzugsweise n = 3, bedeutet 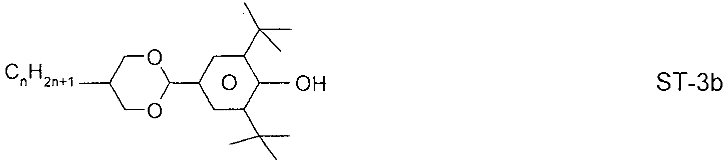 wobei n = 1, 2, 3, 4, 5, 6, oder 7, vorzugsweise n = 3, bedeutet 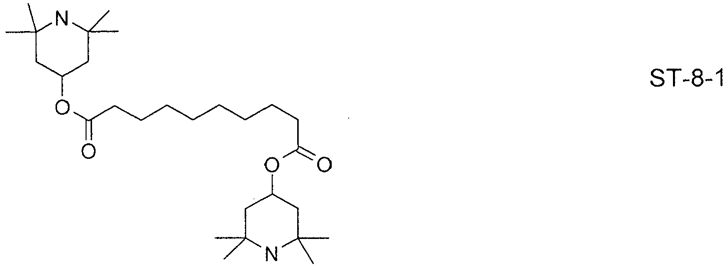 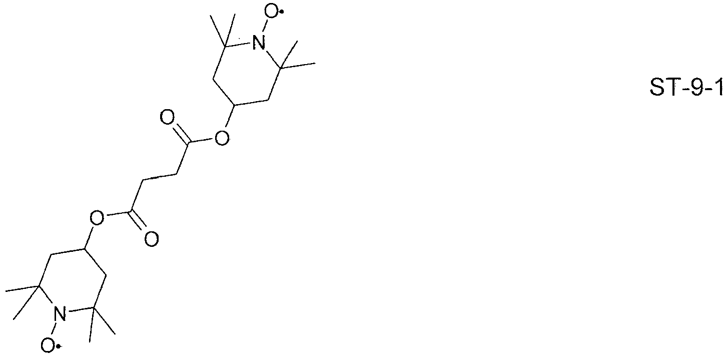 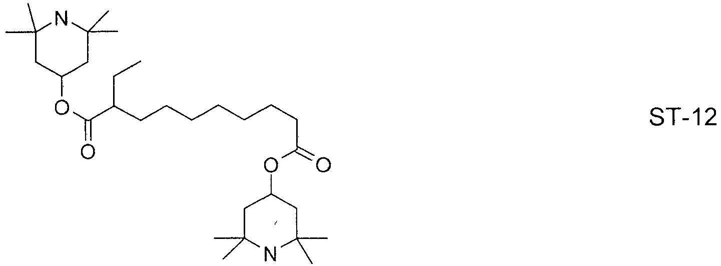 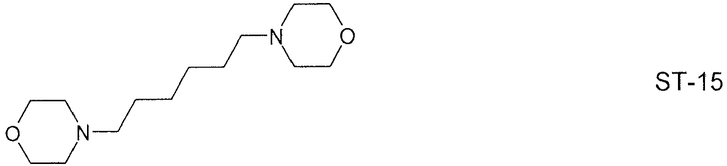 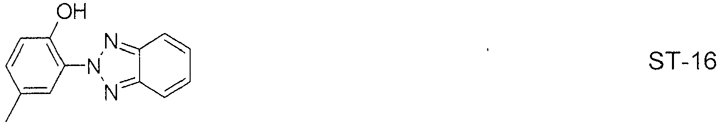 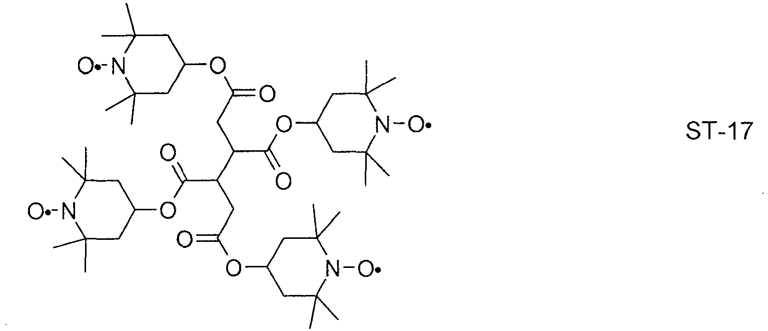 bevorzugt.

In den Verbindungen der Formeln ST-3a und ST-3b bedeutet n vorzugsweise 3. In den Verbindungen der Formel ST-2a bedeutet n vorzugsweise 7.

Ganz besonders bevorzugte erfindungsgemäße Mischungen enthalten ein oder mehrere Stabilisatoren aus der Gruppe der Verbindungen der Formeln ST-2a-1, ST-3a-1, ST-3b-1, ST-8-1, ST-9-1 und ST-12:

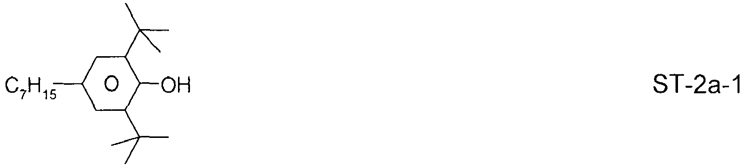

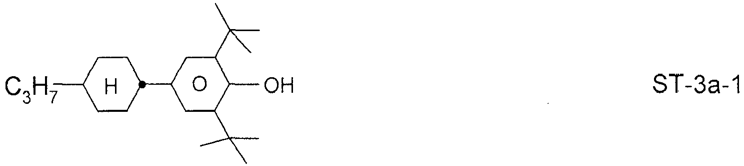

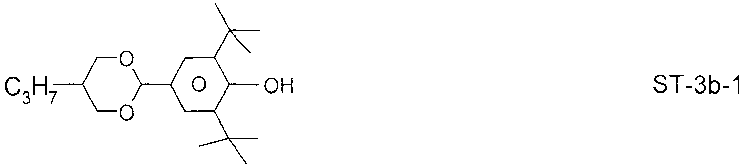

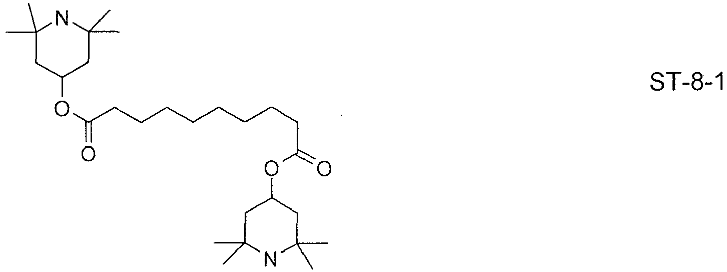

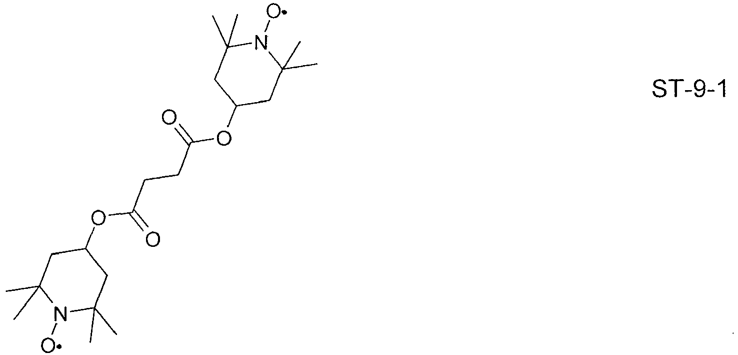

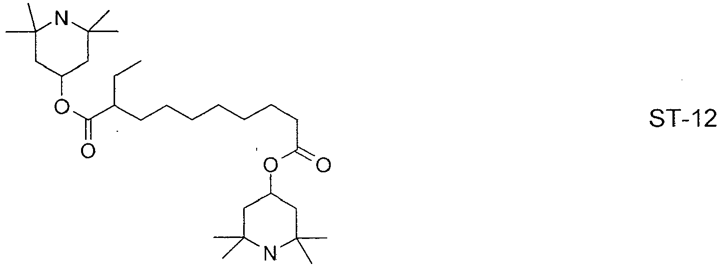

Die Verbindungen der Formeln ST-1 bis ST-17 sind vorzugsweise jeweils in den erfindungsgemäßen Flüssigkristallmischungen in Mengen von 0,005 - 0,5 % bezogen auf die Mischung enthalten.

Sofern die erfindungsgemäßen Mischungen zwei oder mehr Verbindungen aus der Gruppe der Verbindungen der Formeln ST-1 bis ST-17 enthalten, erhöht sich entsprechend die Konzentration auf 0,01 - 1 % bei zwei Verbindungen, bezogen auf die Mischungen.

Der Gesamtanteil der Verbindungen der Formeln ST-1 bis ST-17 bezogen auf die erfindungsgemäße Mischung sollte aber 2 % nicht übersteigen.

Im Folgenden werden die erfindungsgemäßen Verbindungen der Formeln L-1 bis L-11 sowie bevorzugte Ausführungsformen für das erfindungsgemäße flüssigkristalline Medium angeführt:
a) Flüssigkristallines Medium, welches zusätzlich eine oder mehrere Verbindungen ausgewählt aus der Gruppe der Verbindungen der Formeln IIA, IIB und IIG enthält, 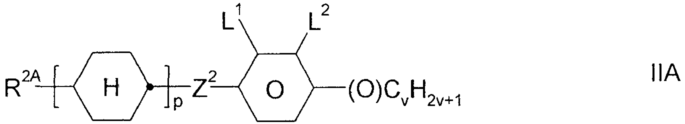 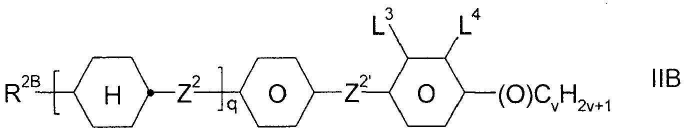 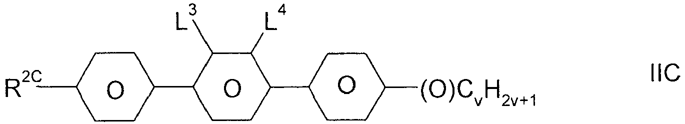 worin
   - R^{2A}, R^{2B} und R^{2C}: jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 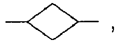 -C≡C-, -CF₂O-, -OCF₂-, -OC-O- oder -O-CO- so ersetzt sein können, dass O-Atome nicht direkt miteinander verknüpft sind,
   - L¹⁻⁴: jeweils unabhängig voneinander F, Cl, CF₃ oder CHF₂,
   - Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
   - p: 0, 1 oder 2,
   - q: 0 oder 1, und
   - v: 1 bis 6
   bedeuten.
   In den Verbindungen der Formeln IIA und IIB können Z² gleiche oder unterschiedliche Bedeutungen haben. In den Verbindungen der Formel IIB können Z² und Z^{2'} gleiche oder verschiedene Bedeutungen aufweisen.
   In den Verbindungen der Formeln IIA, IIB und IIC bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.
   In den Verbindungen der Formeln IIA und IIB bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln IIA und IIB vorzugsweise jeweils unabhängig voneinander eine Einfachbindung, ferner eine -C₂H₄-Brücke.
   Sofern in der Formel IIB Z² = -C₂H₄- oder -CH₂O- ist, ist Z^{2'} vorzugsweise eine Einfachbindung bzw. falls Z^{2'} = -C₂H₄- oder -CH₂O- bedeutet, ist Z² vorzugsweise eine Einfachbindung. In den Verbindungen der Formeln IIA und IIB bedeutet (O)CᵥH₂ᵥ₊₁ vorzugsweise OCᵥH₂ᵥ₊₁, ferner CᵥH₂ᵥ₊₁. In den Verbindungen der Formel IIC bedeutet (O)CᵥH₂ᵥ₊₁ vorzugsweise C_{y}H₂ᵥ₊₁. In den Verbindungen der Formel IIC bedeuten L³ und L⁴ vorzugsweise jeweils F.
   Bevorzugte Verbindungen der Formeln IIA, IIB und IIC werden nachfolgend genannt: 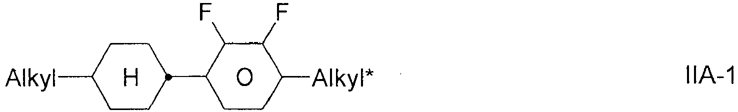 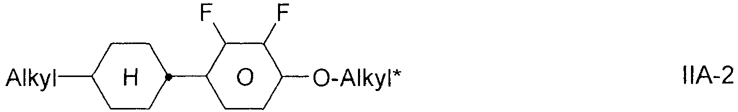 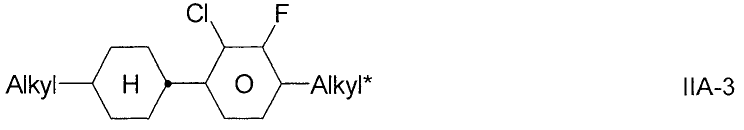 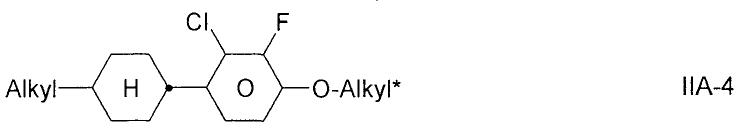 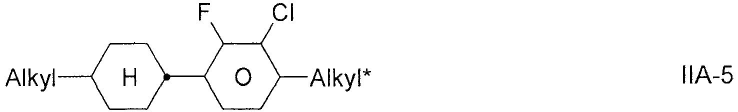 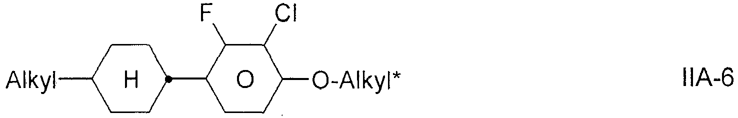 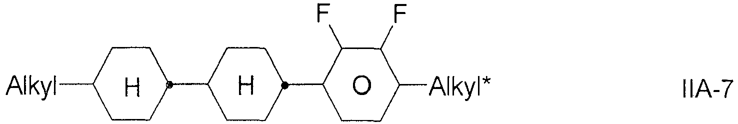 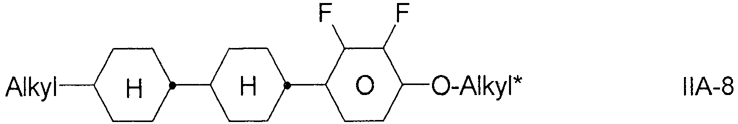 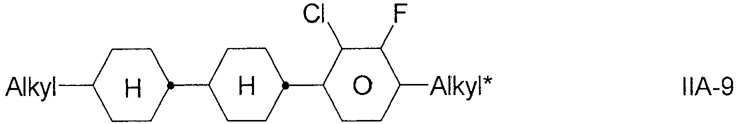 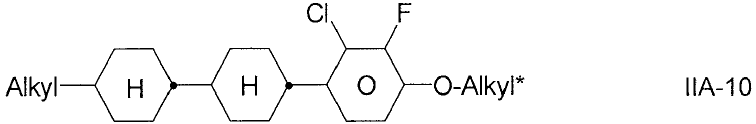 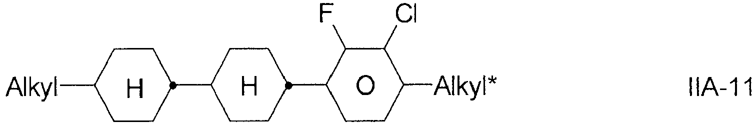 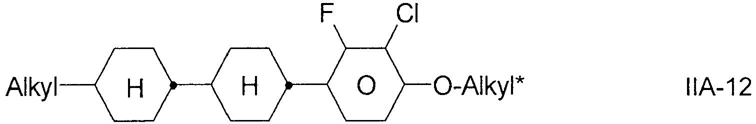 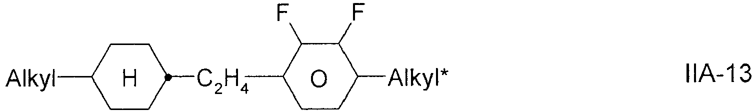 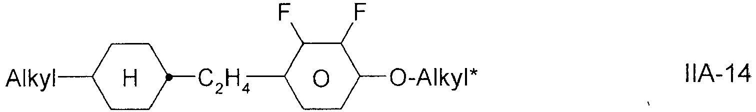 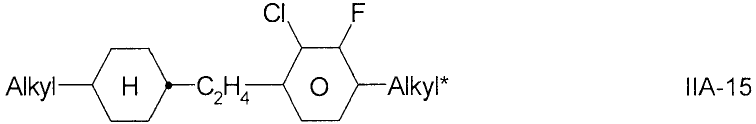 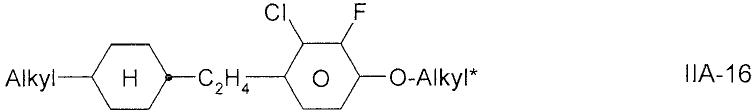 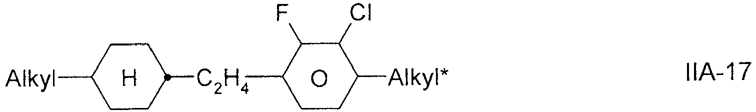 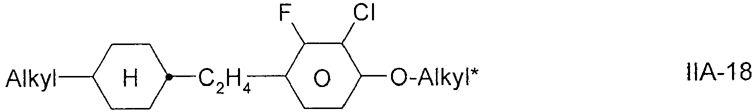 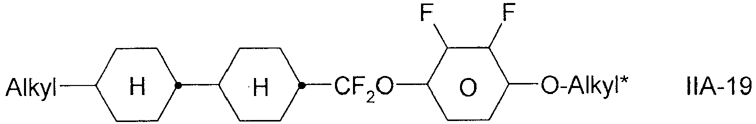 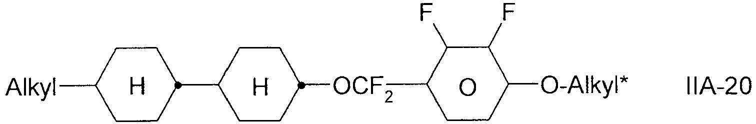 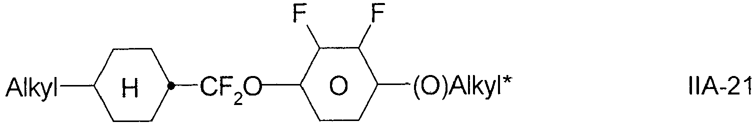 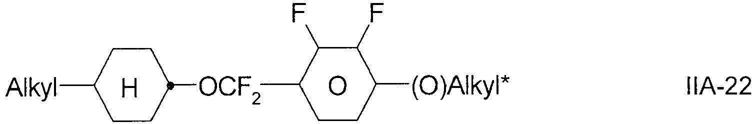 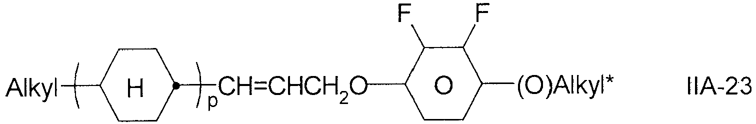 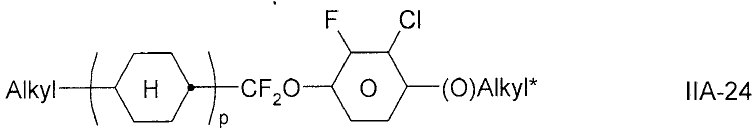 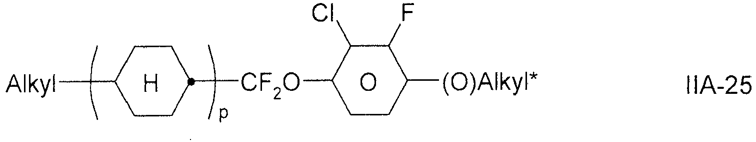 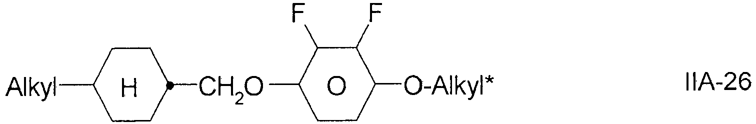 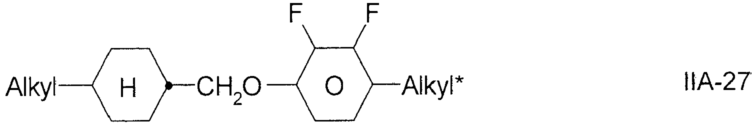 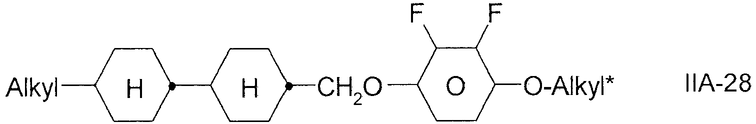 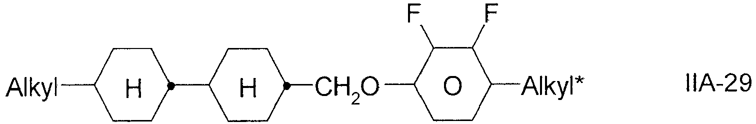 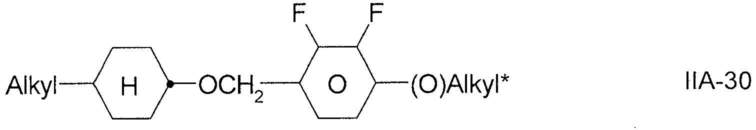 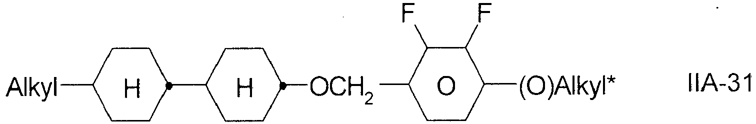 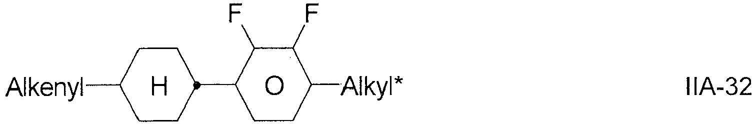 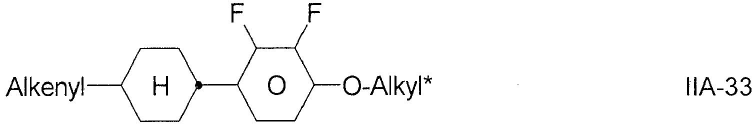 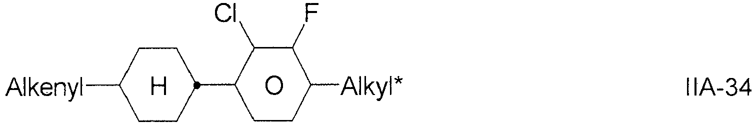 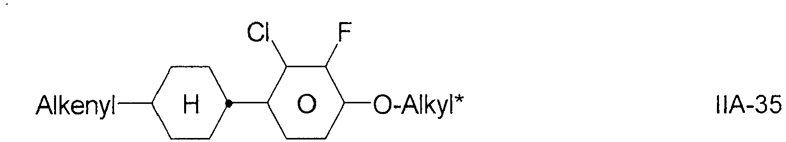 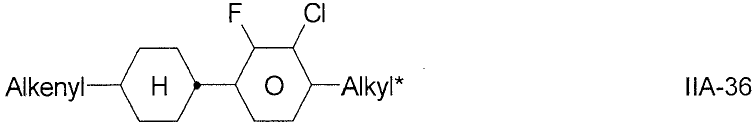 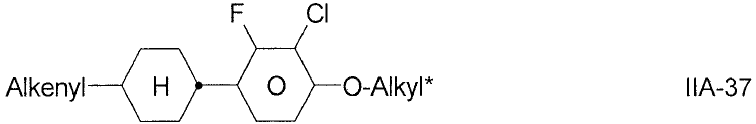 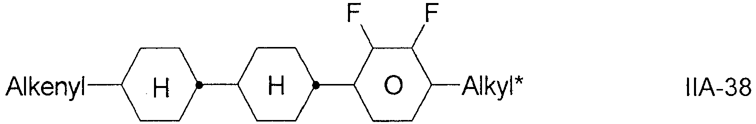 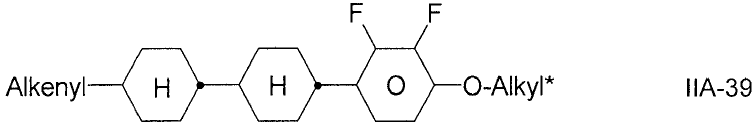 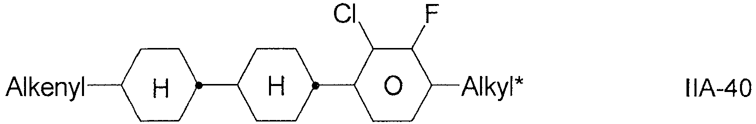 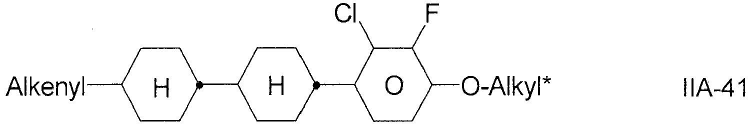 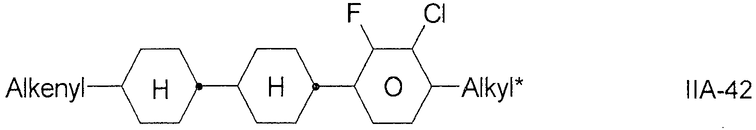 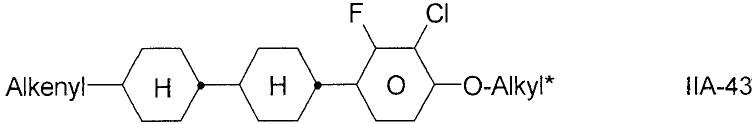 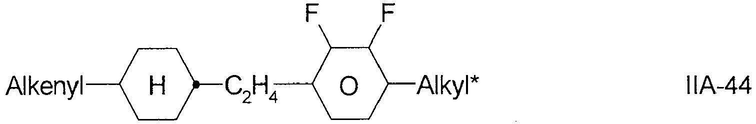 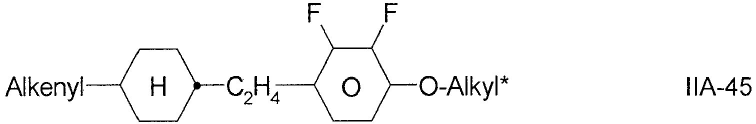 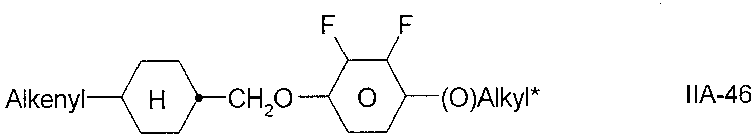 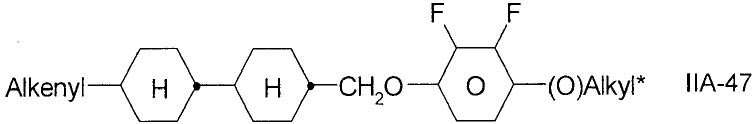 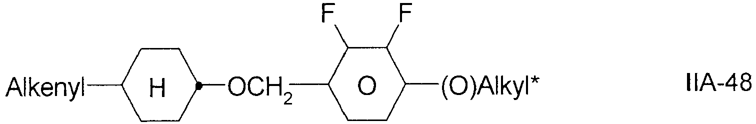 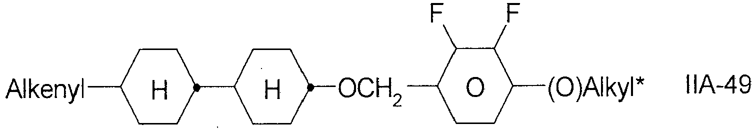 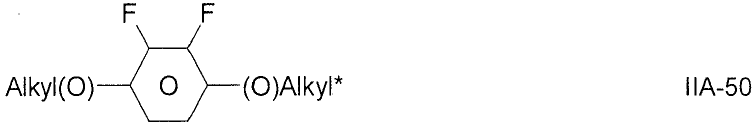 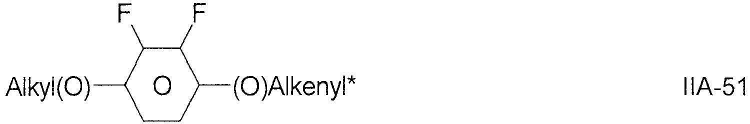 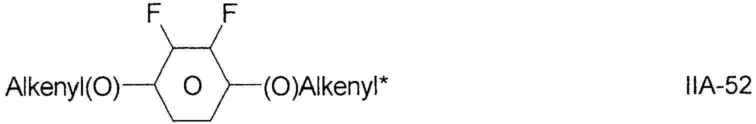 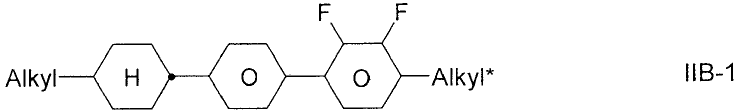 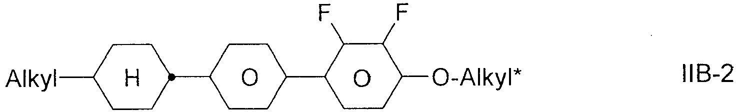 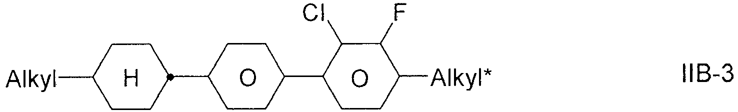 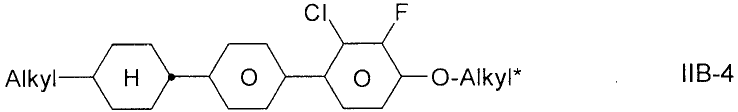 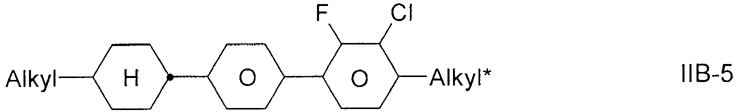 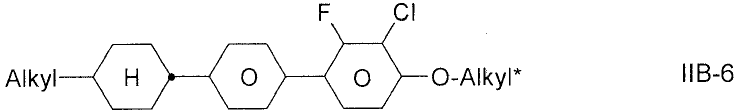 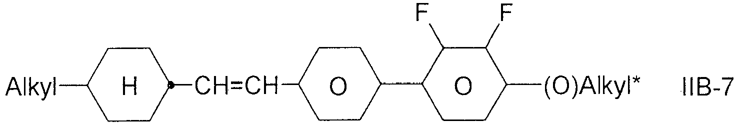 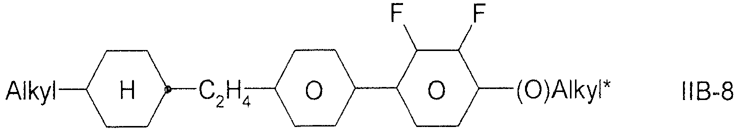 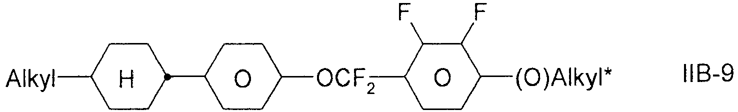 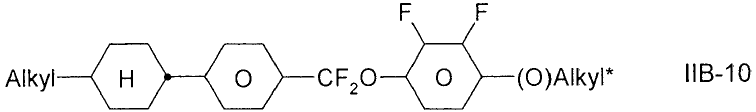 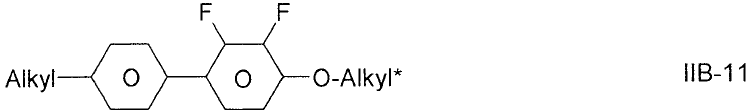 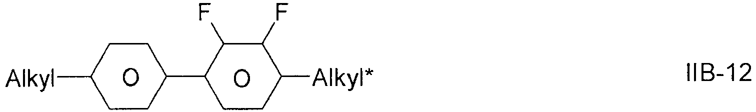 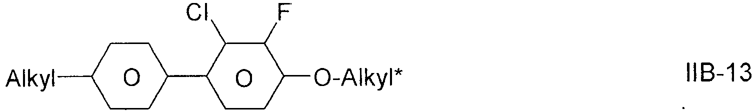 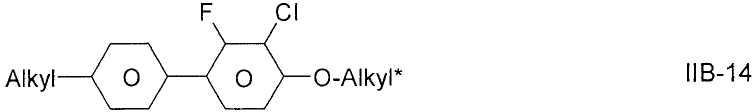 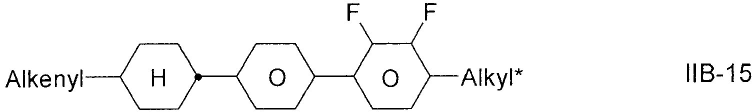 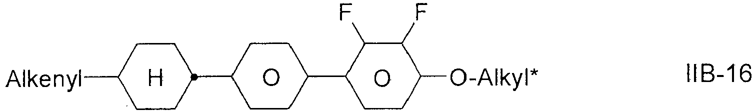 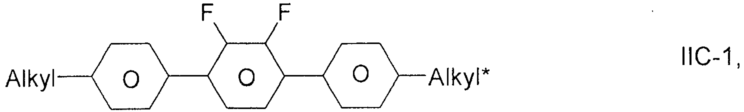 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen
   bedeuten.
   Besonders bevorzugte erfindungsgemäße Mischungen enthalten eine oder mehrere Verbindungen der Formeln IIA-2, IIA-8, IIA-14, IIA-26, II-28, IIA-33, IIA-39, IIA-45, IIA-46, IIA-47, IIA-50, IIB-2, IIB-11, IIB-16 und IIC-1.
   Vorzugsweise beträgt der Anteil an Verbindungen der Formeln IIA und/oder IIB im Gesamtgemisch mindestens 20 Gew.%. Besonders bevorzugte erfindungsgemäße Medien enthalten mindestens eine Verbindung der Formel IIC-1, 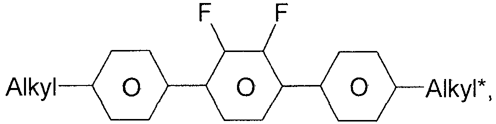 worin Alkyl und Alkyl*' die oben angegebenen Bedeutungen haben, vorzugsweise in Mengen von > 3 Gew.%, insbesondere > 5 Gew.% und besonders bevorzugt von 5-25 Gew.%.
b) Flüssigkristallines Medium, welches zusätzlich eine oder mehrere Verbindungen der Formel III 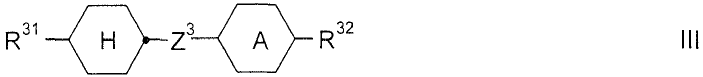 enthält,
   worin
   - R³¹ und R³²: jeweils unabhängig voneinander einen geradkettigen Alkyl-, Alkoxy, Alkenly-, Alkoxyalkyl- oder Alkoxyrest mit bis zu 12 C-Atomen, und 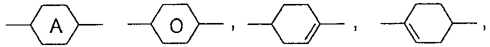 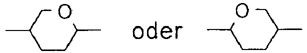
   - Z³: Einfachbindung, -CH₂CH₂-, -CH=CH-, -CF₂O-, -OCF₂-, -CH₂O-, -OCH₂-, -COO-, -OCO-, -C₂F₄-, -C₄H₈-, -CF=CF-
   bedeuten.
   Bevorzugte Verbindungen der Formel III werden nachfolgend genannt, 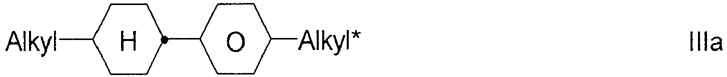 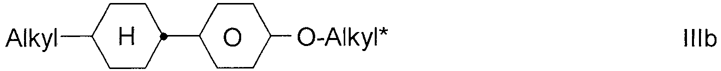 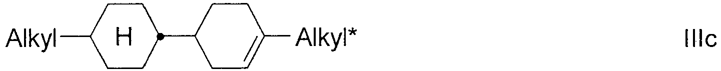 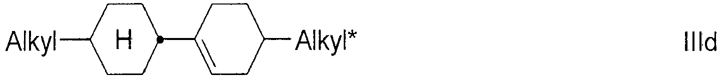 worin
   - Alkyl und Alkyl*: jeweils unabhängig voneinander einen geradkettigen Alkylrest mit 1-6 C-Atomen
   bedeuten.
   Vorzugsweise enthält das erfindungsgemäße Medium mindestens eine Verbindung der Formel IIIa und/oder Formel IIIb.
   Der Anteil an Verbindungen der Formel III im Gesamtgemisch beträgt vorzugsweise mindestens 5 Gew.%.
c) Flüssigkristallines Medium enthaltend zusätzlich eine Verbindung der Formel 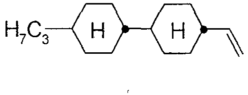 und / oder 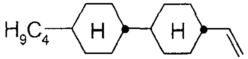 und / oder 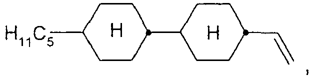 vorzugsweise in Gesamtmengen von ≥ 5 Gew.%, insbesondere von ≥ 10 Gew.%.
   Weiterhin bevorzugt sind erfindungsgemäße Mischungen enthaltend die Verbindung (Acronym: CC-3-V1) 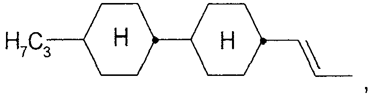 vorzugsweise in Mengen von 2-15 %.
   Bevorzugte Mischungen enthalten 5-60 %, vorzugsweise 10-55 %, insbesondere 20-50 Gew.% der Verbindung der Formel (Acronym: CC-3-V) 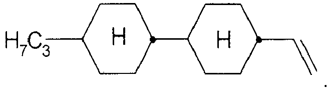 Weiterhin bevorzugt sind Mischungen, die eine Verbindung der Formel (Acronym: CC-3-V) 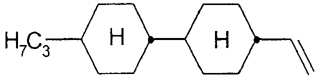 und eine Verbindung der Formel (Acronym: CC-3-V1) 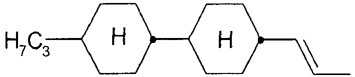 enthalten, vorzugsweise in Mengen von 10 - 60 %.
d) Flüssigkristallines Medium, welches zusätzlich eine oder mehrere Vierkernverbindungen der Formeln, 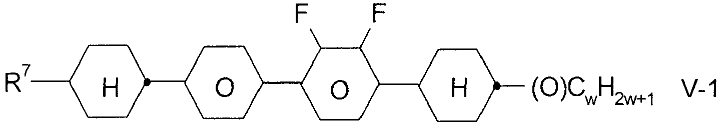 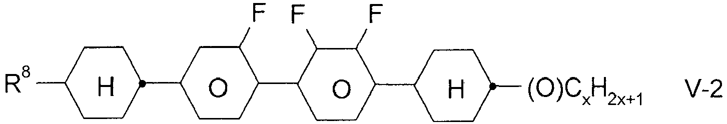 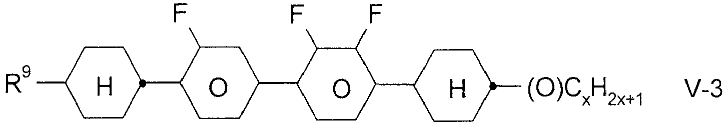 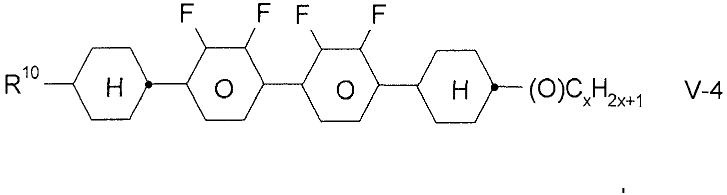 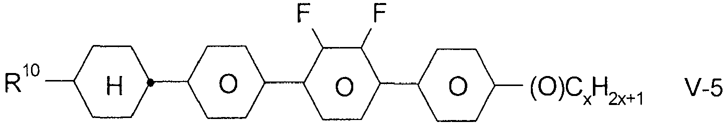 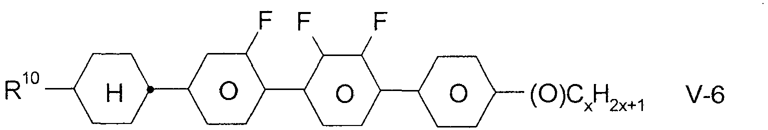 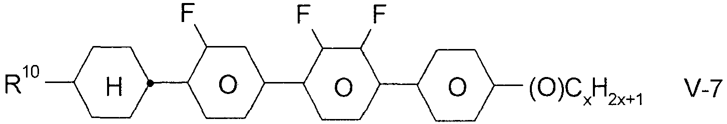 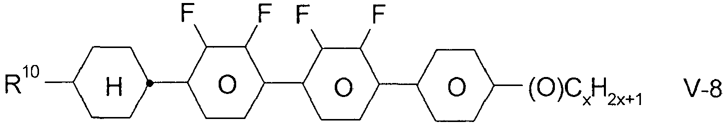 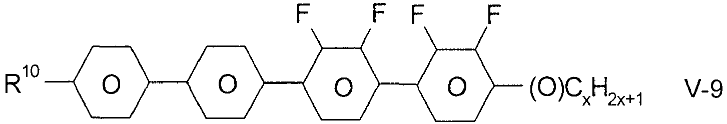 worin
   - R⁷⁻¹⁰: jeweils unabhängig voneinander eine der in Anspruch 5 für R^{2A} angegebenen Bedeutung haben, und
   - w und x: jeweils unabhängig voneinander 1 bis 6,
   bedeuten,
   enthält.
   Insbesondere bevorzugt sind Mischungen enthaltend mindestens eine Verbindung der Formel V-9.
e) Flüssigkristallines Medium, welches zusätzlich eine oder mehrere Verbindungen der Formeln Y-1 bis Y-6, 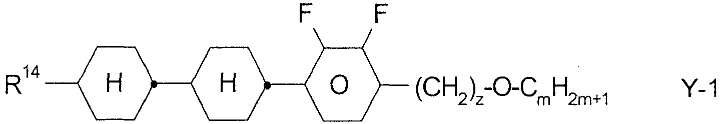 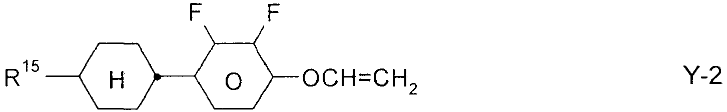 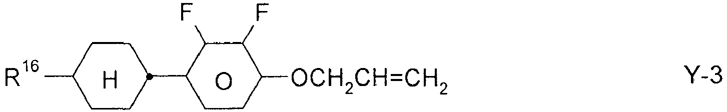 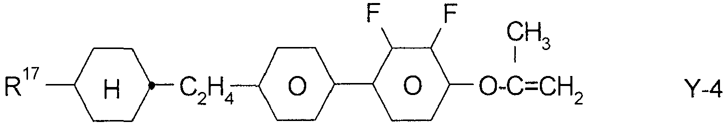 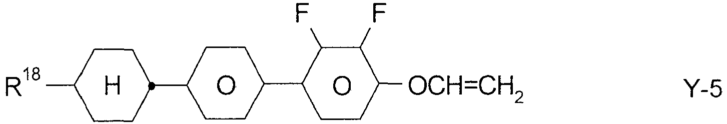 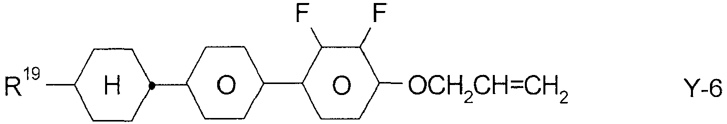 enthält,
   worin R¹⁴-R¹⁹ jeweils unabhängig voneinander einen Alkyl- oder Alkoxyrest mit 1-6 C-Atomen bedeuten; z und m bedeuten jeweils unabhängig voneinander 1-6; x bedeutet 0, 1, 2 oder 3.
   Insbesondere bevorzugt enthält das erfindungsgemäße Medium eine oder mehrere Verbindungen der Formel Y-1 bis Y-6, vorzugsweise in Mengen von ≥ 5 Gew.%.
f) Flüssigkristallines Medium enthaltend zusätzlich ein oder mehrere fluorierte Terphenyle der Formeln T-1 bis T-21, 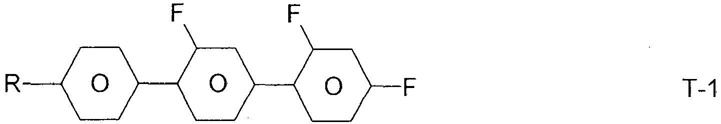 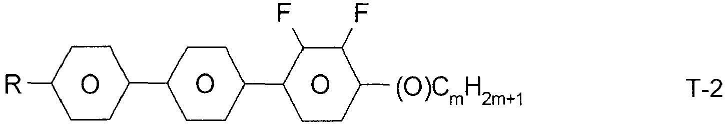 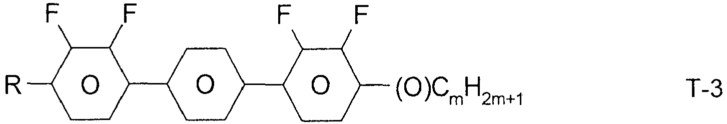 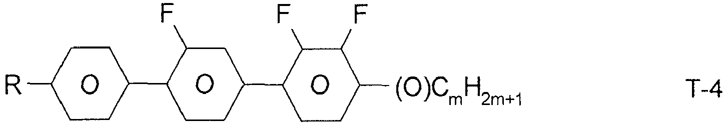 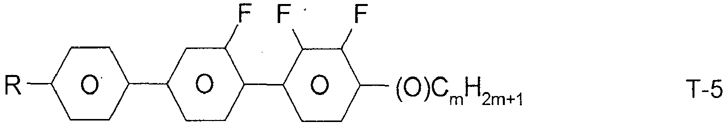 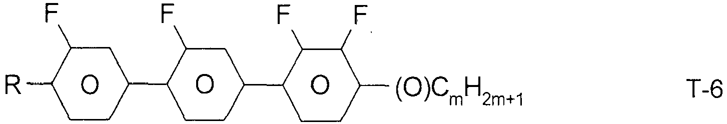 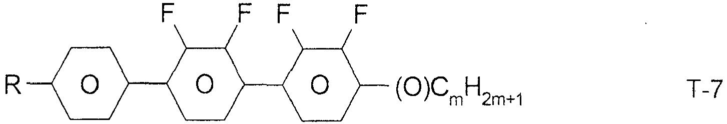 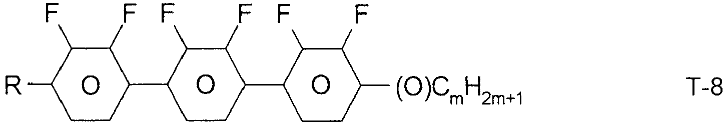 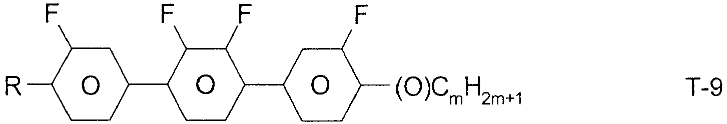 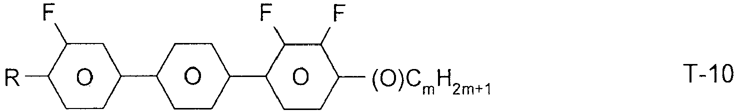 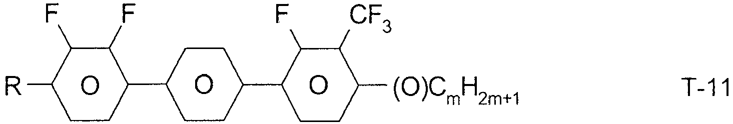 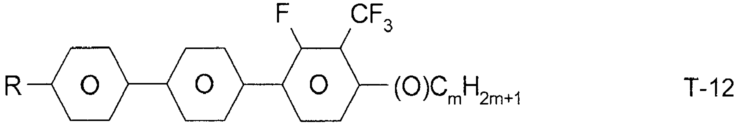 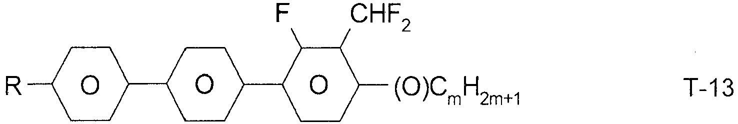 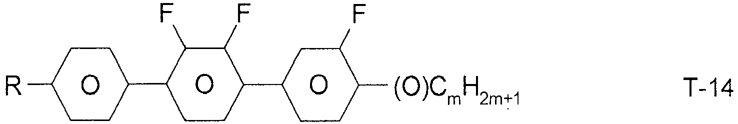 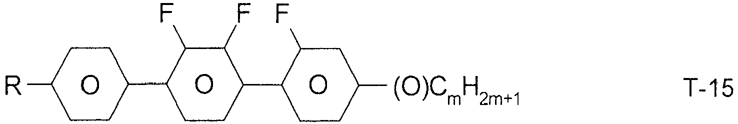 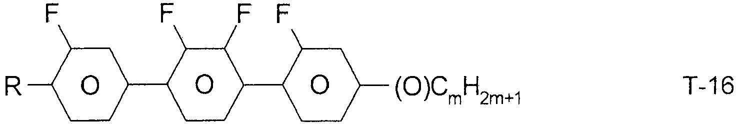 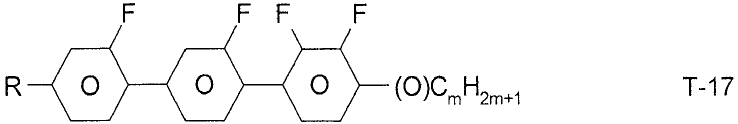 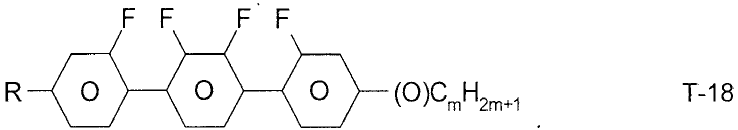 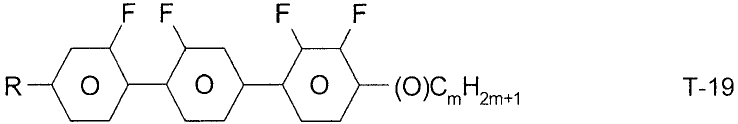 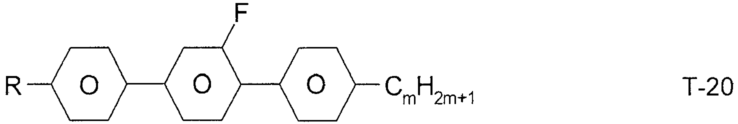 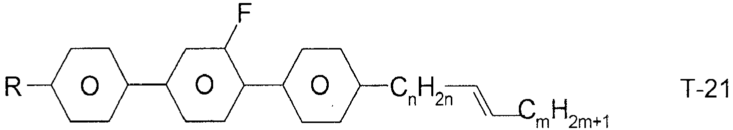 worin
   R geradkettiger Alkyl- oder Alkoxyrest mit 1-6 C-Atomen bedeutet, und m = 0, 1, 2, 3, 4, 5 oder 6 und n 0, 1, 2, 3 oder 4 bedeuten,
   enthält.
   Vorzugsweise bedeutet R Methyl, Ethyl, Propyl, Butyl, Pentyl, Hexyl Methoxy, Ethoxy, Propoxy, Butoxy, Pentoxy.
   Das erfindungsgemäße Medium enthält die Terphenyle der Formeln T-1 bis T-21 vorzugsweise in Mengen von 2-30 Gew.%, insbesondere von 5-20 Gew.%.
   Besonders bevorzugt sind Verbindungen der Formeln T-1, T-2, T-4, T-20 und T-21. In diesen Verbindungen bedeutet R vorzugsweise Alkyl, ferner Alkoxy jeweils mit 1-5 C-Atomen. In den Verbindungen der Formel T-20 bedeutet R vorzugsweise Alkyl oder Alkenyl, insbesondere Alkyl. In der Verbindung der Formel T-21 bedeutet R vorzugsweise Alkyl.
   Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-21.
g) Flüssigkristallines Medium enthaltend zusätzlich ein oder mehrere Biphenyle der Formeln B-1 bis B-3, 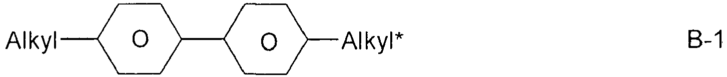 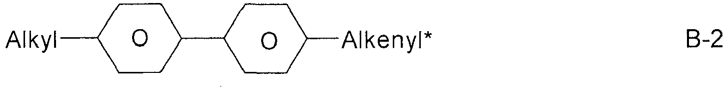 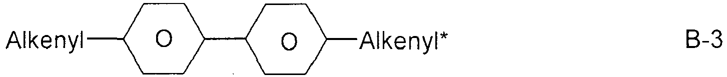 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen
   bedeuten.
   Der Anteil der Biphenyle der Formeln B-1 bis B-3 in der Gesamtmischung beträgt vorzugsweise mindestens 3 Gew.%, insbesondere ≥ 5 Gew.%.
   Von den Verbindungen der Formeln B-1 bis B-3 sind die Verbindungen der Formel B-2 insbesondere bevorzugt. Besonders bevorzugte Biphenyle sind 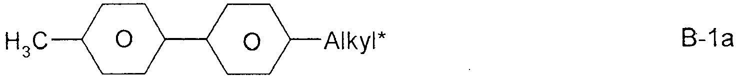 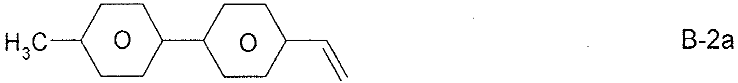 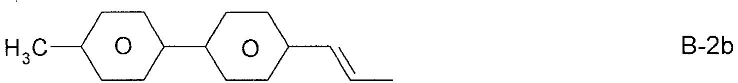 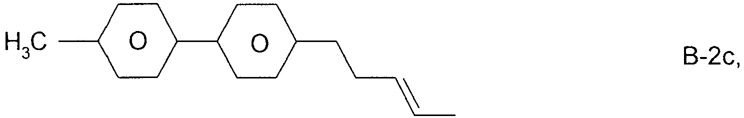 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
h) Flüssigkristallines Medium enthaltend mindestens eine Verbindung der Formeln Z-1 bis Z-7, 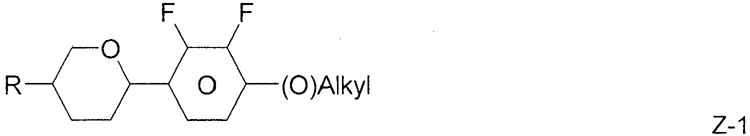 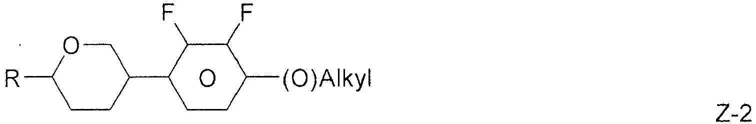 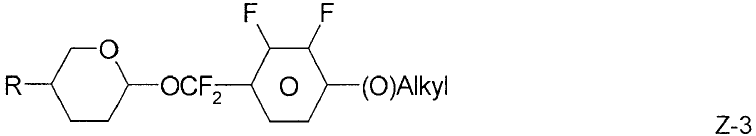 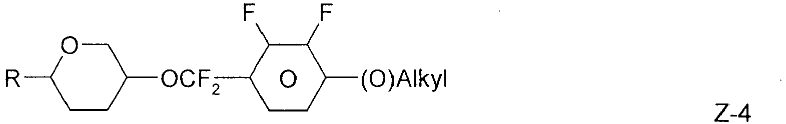 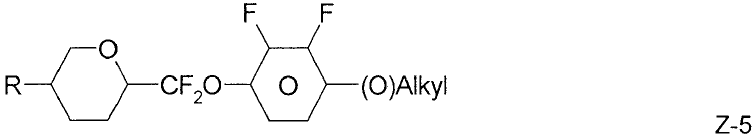 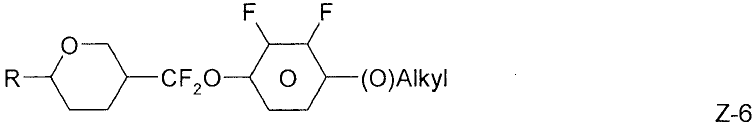 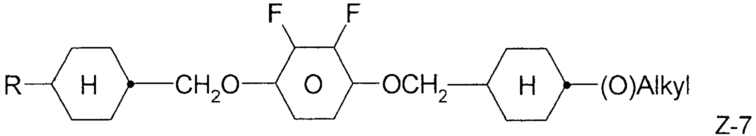 worin R und Alkyl die oben angegebenen Bedeutungen haben.
i) Flüssigkristallines Medium enthaltend mindestens eine Verbindung der Formeln O-1 bis O-18, 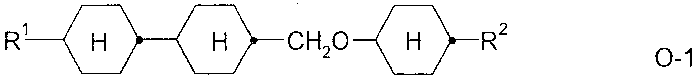 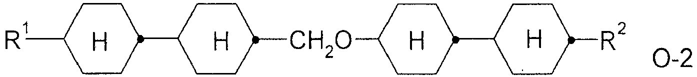 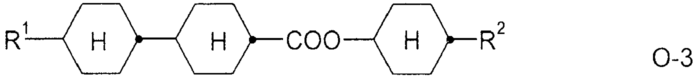 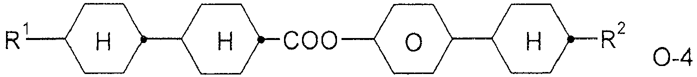 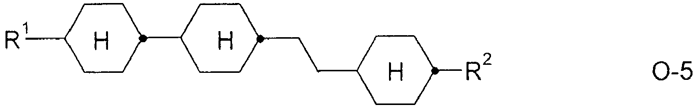 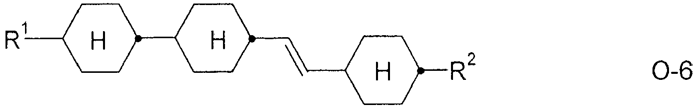 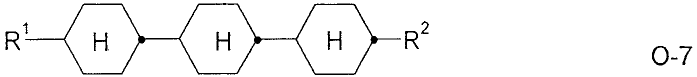 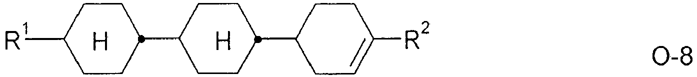 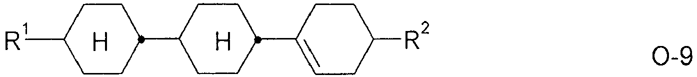 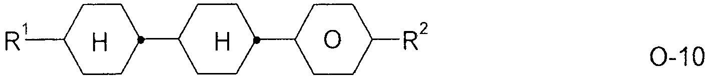 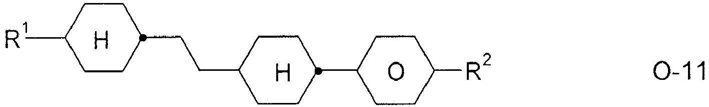 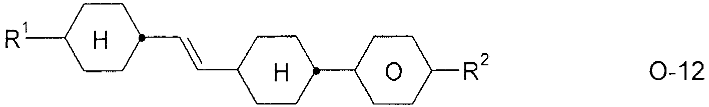 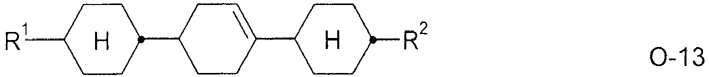 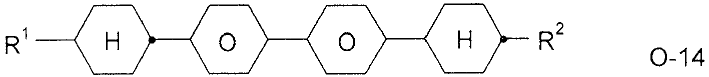 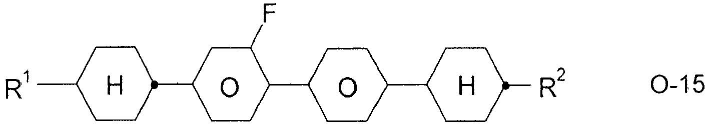 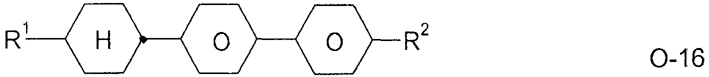 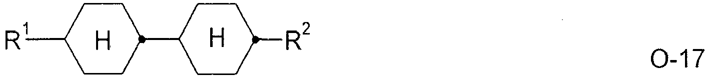 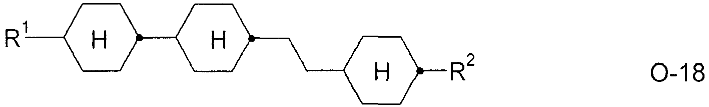 worin R¹ und R² die für R^{2A} angegebenen Bedeutungen haben. Vorzugsweise bedeuten R¹ und R² jeweils unabhängig voneinander geradkettiges Alkyl oder Alkenyl.
   Bevorzugte Medien enthalten eine oder mehrere Verbindungen der Formeln O-1, O-3, O-4, O-6, O-7, O-10, O-11, O-12, O-14, O-15, O-16 und/oder O-17.
   Erfindungsgemäße Mischungen enthalten ganz besonders bevorzugt die Verbindungen der Formel O-10, O-12, O-16 und/oder O-17, inbesondere in Mengen von 5-30 %. Bevorzugte Verbindungen der Formeln O-10 und O-17 werden nachfolgend genannt: 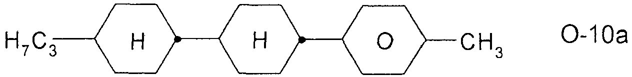 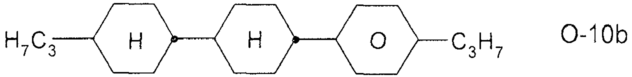 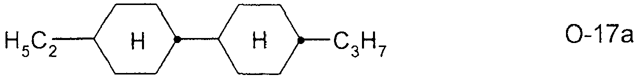 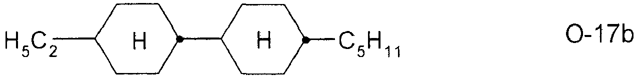 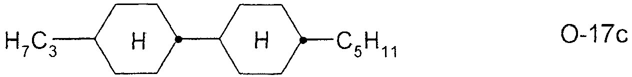 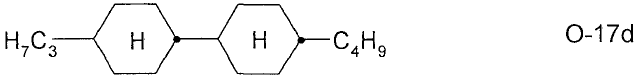
   Besonders bevorzugt enthält das erfindungsgemäße Medium die Dreikern-Verbindungen der Formel O-10a und/oder der Formel O-10b in Kombination mit einer oder mehreren Zweikern-Verbindungen der Formeln 0-17a bis 0-17d. Vorzugsweise beträgt der Gesamtanteil der Verbindungen der Formel O-10a und/oder O-10b in Kombination mit einer oder mehreren Verbindungen ausgewählt aus den Zweikern-verbindungen der Formeln O-17a bis O-17d 5-40 %, ganz besonders bevorzugt 15-35 %. Ganz besonders bevorzugte Mischungen enthalten die Verbindungen O-10a und O-17a: 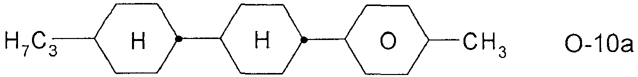 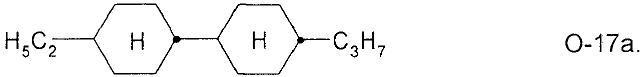
   Vorzugsweise sind die Verbindungen O-10a und 0-17a in der Mischung in einer Konzentration von 15-35 %, besonders bevorzugt von 15-25 % und insbesondere bevorzugt von 18-22 % bezogen auf die Gesamtmischung, enthalten. Ganz besonders bevorzugte Mischungen enthalten die Verbindungen O-10b und O-17a: 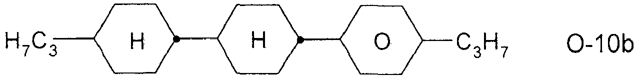 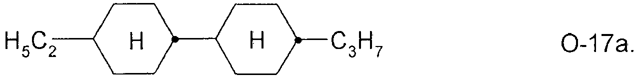
   Vorzugsweise sind die Verbindungen O-10b und O-17a in der Mischung in einer Konzentration von 15-35 %, besonders bevorzugt von 15-25 % und insbesondere bevorzugt von 18-22 % bezogen auf die Gesamtmischung, enthalten. Ganz besonders bevorzugte Mischungen enthalten folgende drei Verbindungen: 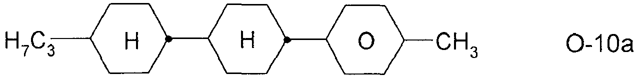 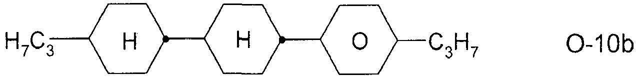 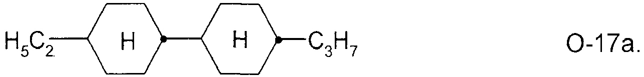
   Vorzugsweise sind die Verbindungen O-10a, O-10b und O-17a in der Mischung in einer Konzentration von 15-35 %, besonders bevorzugt von 15-25 % und insbesondere bevorzugt von 18-22 % bezogen auf die Gesamtmischung, enthalten. Bevorzugte Mischungen enthalten mindestens eine Verbindung ausgewählt aus der Gruppe der Verbindungen 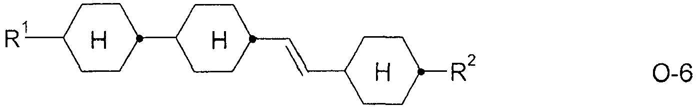 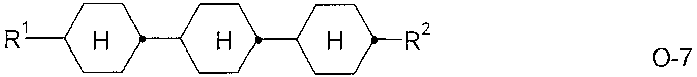 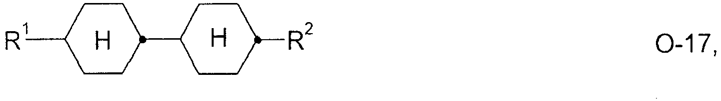 worin R¹ und R² die oben angegegebenen Bedeutungen haben. Vorzugsweise bedeutet in den Verbindungen 0-6, 0-7 und O-17 R¹ Alkyl oder Alkenyl mit 1-6 bzw. 2-6 C-Atomen und R² Alkenyl mit 2-6 C-Atomen.
   Bevorzugte Mischungen enthalten mindestens eine Verbindung der Formeln O-6a, O-6b, O-7a, O-7b, O-17e, O-17f, O-17g und O-17h: 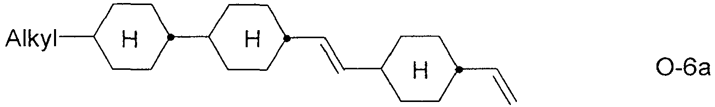 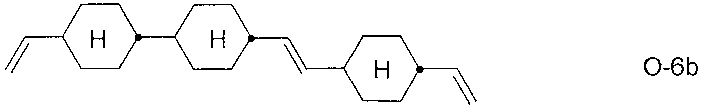 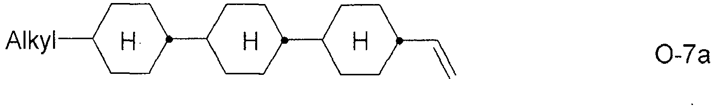 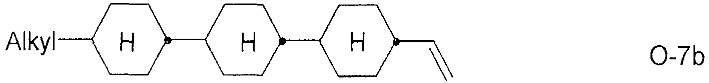 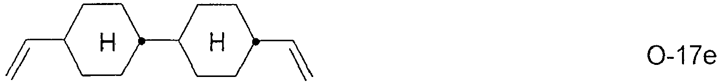 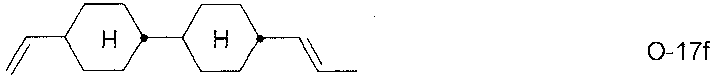 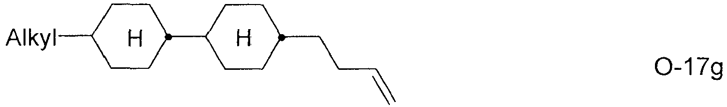 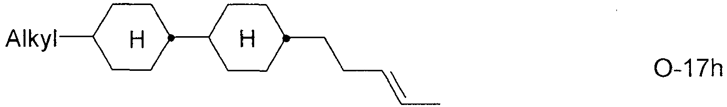 worin Alkyl einen Alkylrest mit 1-6 C-Atomen bedeutet.
   Vorzugsweise sind die Verbindungen der Formel 0-6, O-7 und O-17e-h in den erfindungsgemäßen Mischungen mit 1 - 40 Gew.%, vorzugsweise 2 - 35 Gew.% und ganz besonders bevorzugt 2 - 30 Gew.% enthalten.
j) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 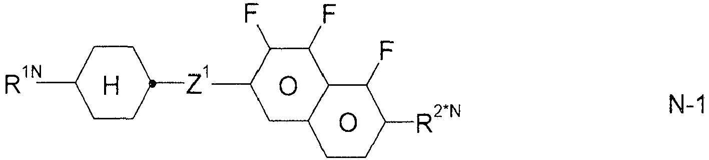 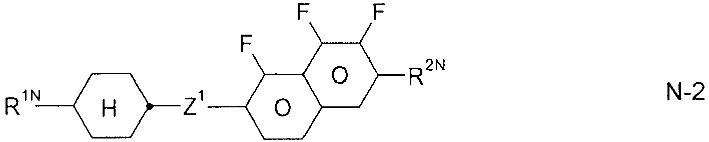 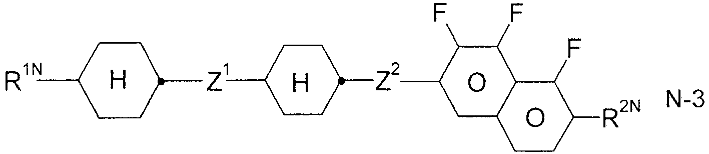 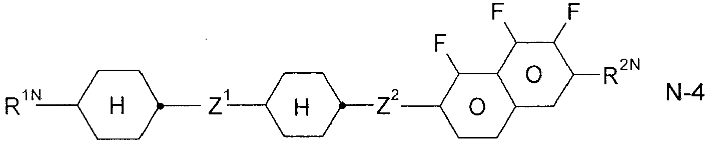 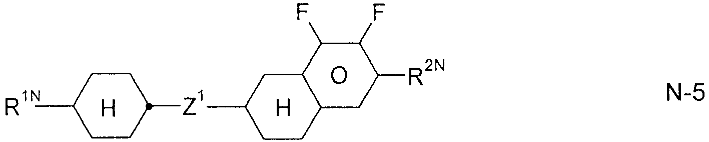
   worin R^{1N} und R^{2N} jeweils unabhängig voneinander die für R^{2A} angegebenen Bedeutungen haben, vorzugsweise geradkettiges Alkyl, geradkettiges Alkoxy oder geradkettiges Alkenyl bedeuten, und
   Z¹ und Z² jeweils unabhängig voneinander
      -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
   bedeuten.
k) Bevorzugte Mischungen enthalten eine oder mehrere Verbindungen ausgewählt aus der Gruppe der Difluordibenzochroman-Verbindungen der Formel BC, Chromane der Formeln CR, fluorierte Phenanthrene der Formeln PH-1 und PH-2, fluorierte Dibenzofurane der Formeln BF1 und BF-2, 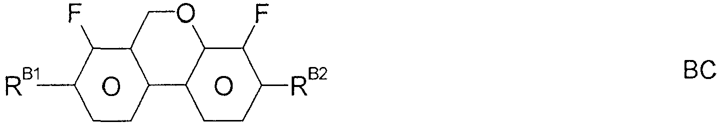 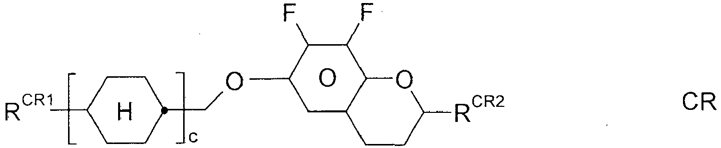 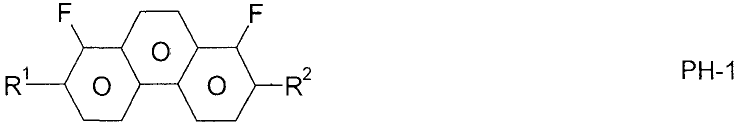 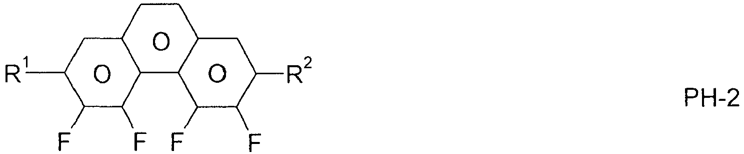 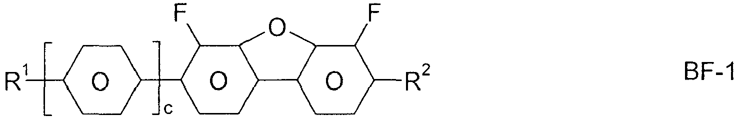 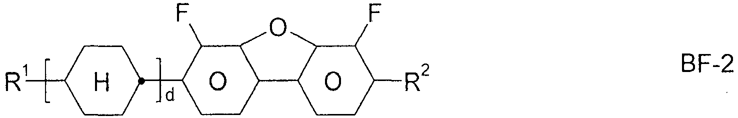 worin
   R^{B1}, R^{B2}, R^{CR1}, R^{CR2}, R¹, R² jeweils unabhängig voneinander die Bedeutung von R^{2A} aufweisen. c ist 0, 1 oder 2 und d bedeutet 1 oder 2. R¹ und R² bedeuten vorzugsweise unabhängig voneinander Alkyl oder Alkoxy mit 1 bis 6 C-Atomen. Die Verbindungen der Formeln BF-1 und BF-2 sollten nicht identisch sein mit einer oder mehrerer Verbindungen der Formel I.
   Die erfindungsgemäßen Mischungen enthalten die Verbindungen der Formeln BC, CR, PH-1, PH-2 und/oder BF vorzugsweise in Mengen von 3 bis 20 Gew.%, insbesondere in Mengen von 3 bis 15 Gew.%. Besonders bevorzugte Verbindungen der Formeln BC und CR sind die Verbindungen BC-1 bis BC-7 und CR-1 bis CR-5, 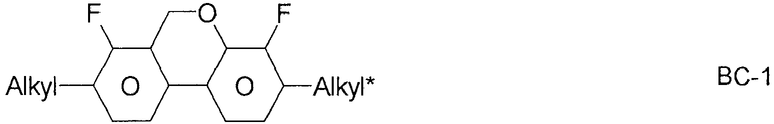 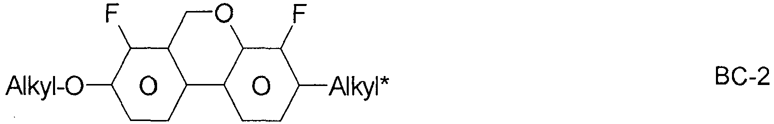 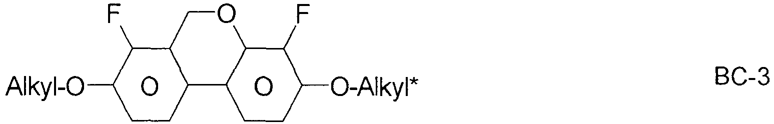 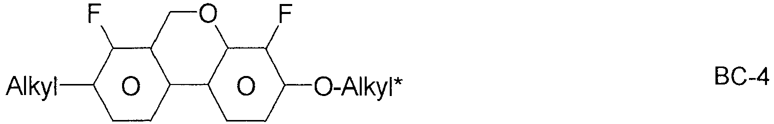 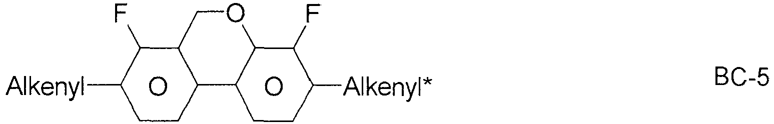 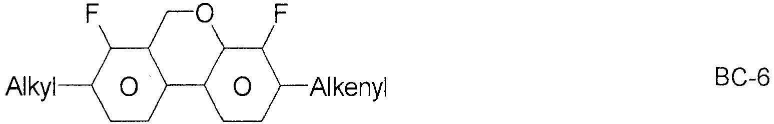 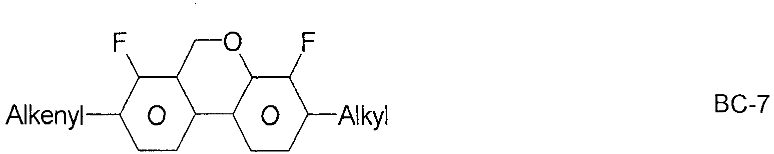 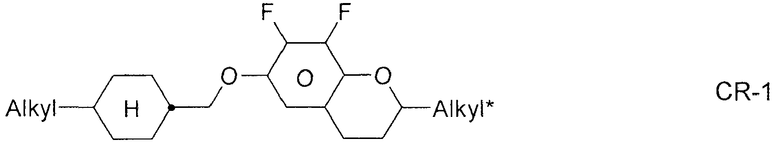 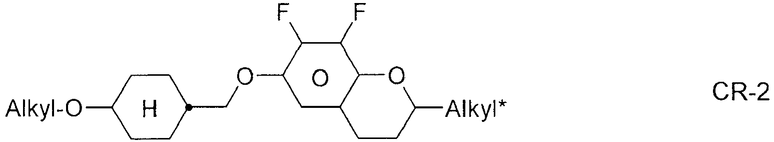 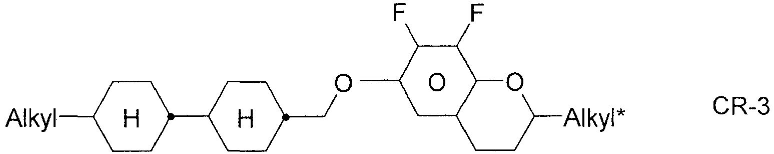 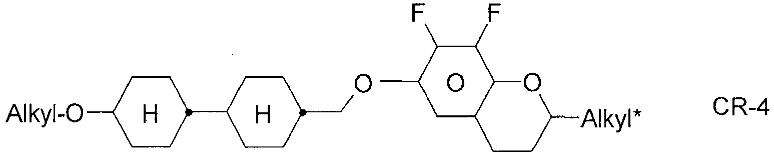 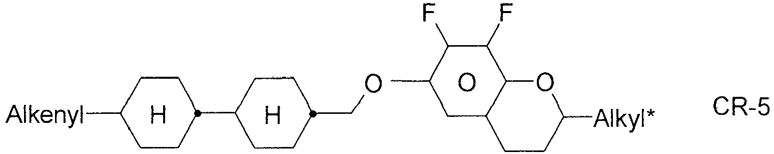 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen,
   bedeuten.
   Ganz besonders bevorzugt sind Mischungen enthaltend eine, zwei oder drei Verbindungen der Formel BC-2, BF-1 und/oder BF-2.
l) Bevorzugte Mischungen enthalten eine oder mehrere Indan-Verbindungen der Formeln In, 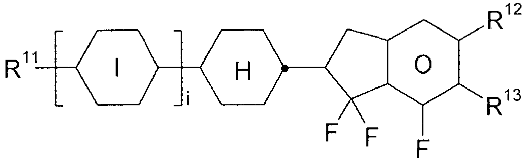 In worin
   - R¹¹, R¹², R¹³: jeweils unabhängig voneinander einen geradkettigen Alkyl-, oder Alkoxy-, Alkoxyalkyl-, Alkenylrest mit 1-6 C-Atomen,
   - R¹² und R¹³: zusätzlich Halogen, vorzugsweise F, 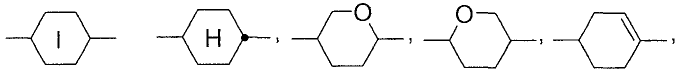 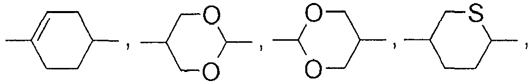 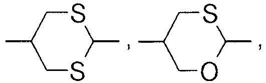
   - i: 0, 1 oder 2
   bedeuten.
   Bevorzugte Verbindungen der Formel In sind die nachfolgend genannten Verbindungen der Formeln In-1 bis In-16, 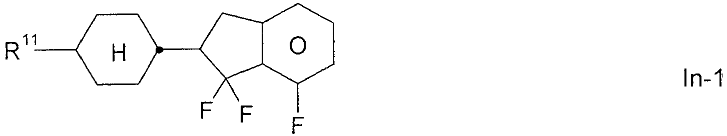 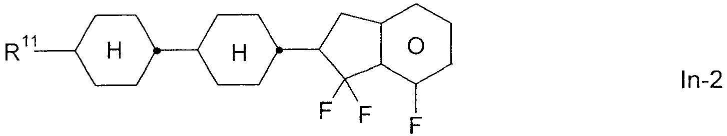 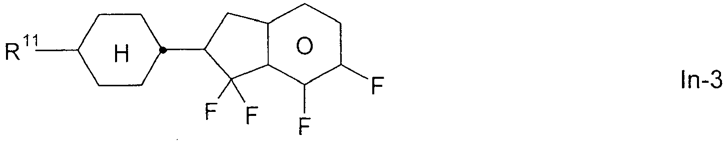 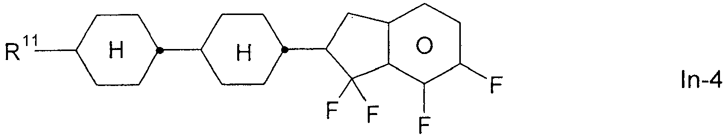 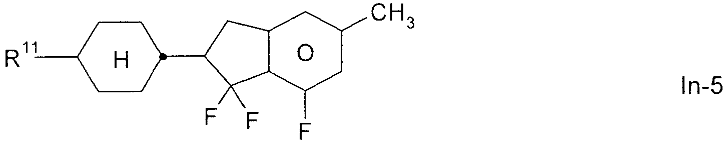 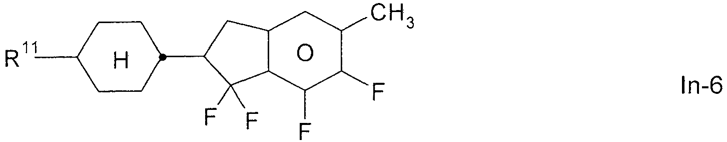 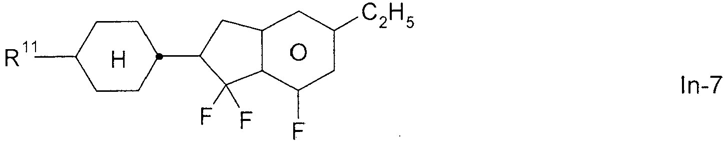 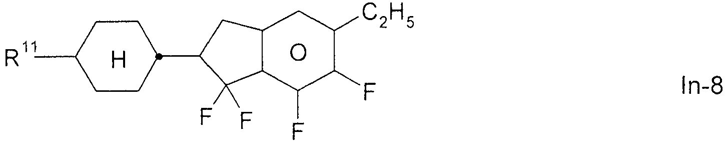 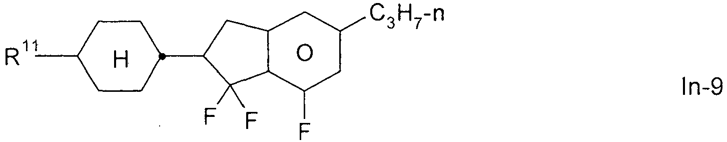 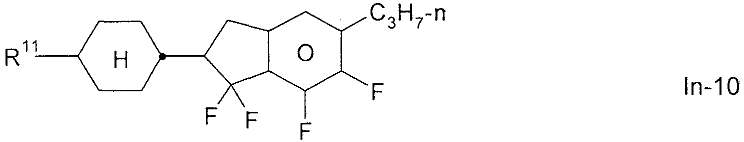 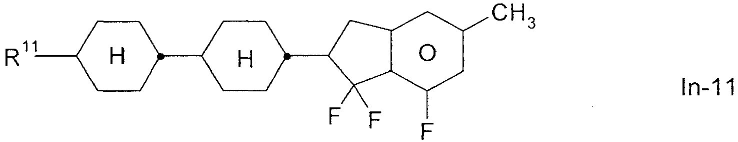 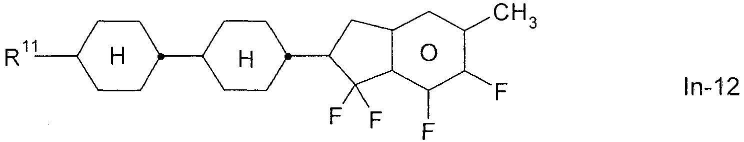 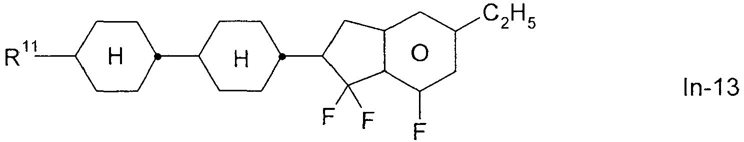 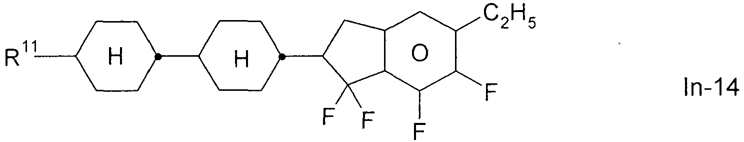 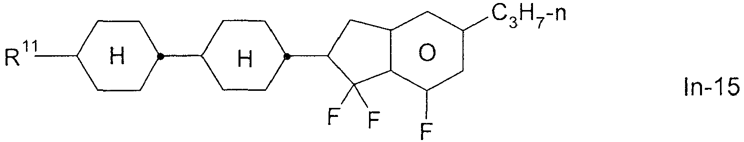 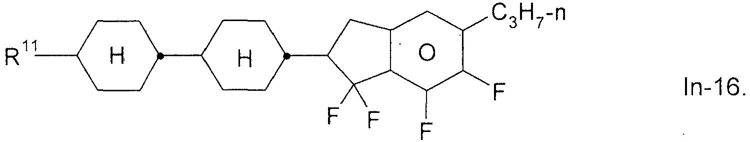
   Besonders bevorzugt sind die Verbindungen der Formeln In-1, In-2, In-3 und In-4.
   Die Verbindungen der Formeln In und der Unterformeln In-1 bis In-16 werden vorzugsweise in Konzentrationen ≥ 5 Gew.%, insbesondere 5 - 30 Gew.% und ganz besonders bevorzugt 5 - 25 Gew.% in den erfindungsgemäßen Mischungen eingesetzt.
m) Erfindungsgemäße Mischungen enthalten eine oder mehrere Verbindungen der Formeln L-1 bis L-11, 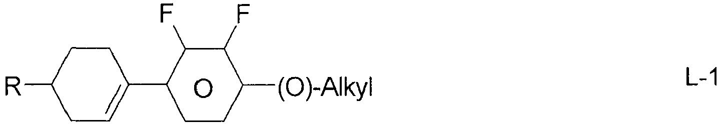 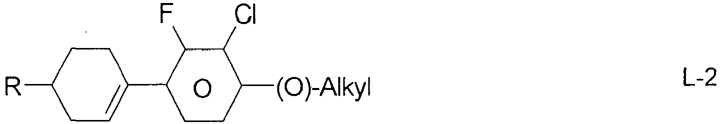 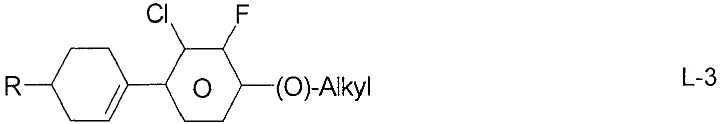 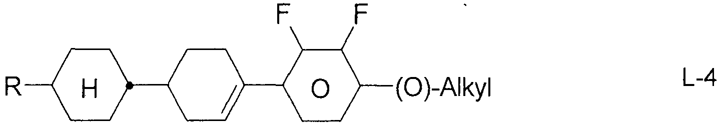 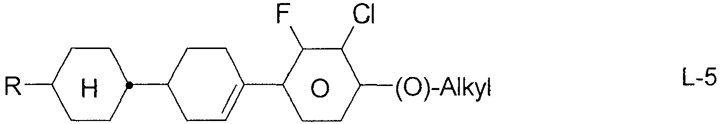 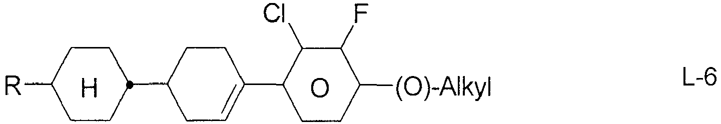 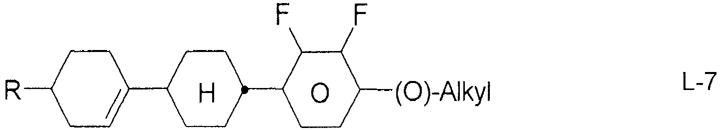 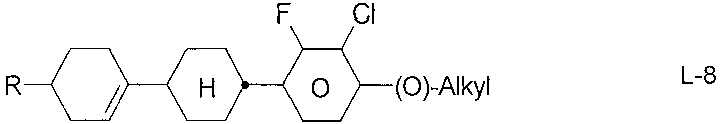 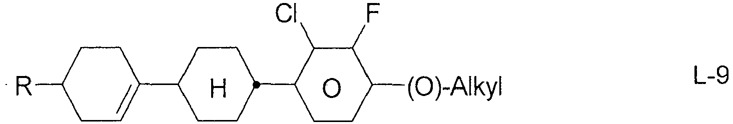 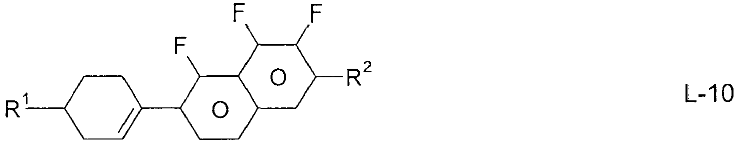 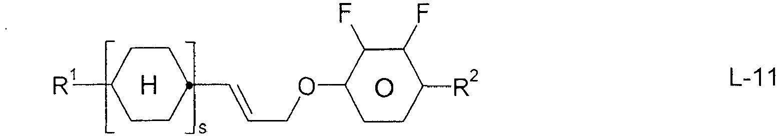 worin
   R, R¹ und R² jeweils unabhängig voneinander die für R^{2A} in Anspruch 5 angegebenen Bedeutungen haben und Alkyl ein Alkylrest mit 1-6 C-Atomen bedeutet. s bedeutet 1 oder 2.
   Besonders bevorzugt sind die Verbindungen der Formeln L-1 und L-4, insbesondere L-4.
   Die Verbindungen der Formeln L-1 bis L-11 werden vorzugsweise in Konzentrationen von 5 - 50 Gew.%, insbesondere 5 - 40 Gew.% und ganz besonders bevorzugt 10 - 40 Gew.% eingesetzt.

Besonders bevorzugte Mischungskonzepte werden nachfolgend genannt: (Die verwendeten Acronyme sind in Tabelle A erklärt. n und m bedeuten hier jeweils unabhängig voneinander 1-15, vorzugsweise 1-6.)
Die erfindungsgemäßen Mischungen enthalten vorzugsweise
- eine oder mehrere Verbindungen der Formeln I-6 und I-16, worin L¹ = L² =F bedeuten,
- CPY-n-Om, insbesondere CPY-2-O2, CPY-3-02 und/oder CPY-5-O2, vorzugsweise in Konzentrationen > 5 %, insbesondere 10-30 %, bezogen auf die Gesamtmischung,
   und/oder
- CY-n-Om, vorzugsweise CY-3-O2, CY-3-O4, CY-5-O2 und/oder CY-5-O4, vorzugsweise in Konzentrationen > 5 %, insbesondere 15-50 %, bezogen auf die Gesamtmischung,
   und/oder
- CCY-n-Om, vorzugsweise CCY-4-O2, CCY-3-02, CCY-3-O3, CCY-3-O1 und/oder CCY-5-O2, vorzugsweise in Konzentrationen > 5 %, insbesondere 10-30 %, bezogen auf die Gesamtmischung,
   und/oder
- CLY-n-Om, vorzugsweise CLY-2-O4, CLY-3-O2 und/oder CLY-3-03, vorzugsweise in Konzentrationen > 5 %, insbesondere 10-30 %, bezogen auf die Gesamtmischung,
   und/oder
- CK-n-F, vorzugsweise CK-3-F, CK-4-F und/oder CK-5-F, vorzugsweise > 5 %, insbesondere 5-25 %, bezogen auf die Gesamtmischung.

Weiterhin bevorzugt sind erfindungsgemäße Mischungen, die folgende Mischungskonzepte enthalten:
(n und m bedeuten jeweils unabhängig voneinander 1-6.)
- CPY-n-Om und CY-n-Om, vorzugsweise in Konzentrationen von 10-80 % bezogen auf die Gesamtmischung,
   und/oder

- CPY-n-Om und CK-n-F, vorzugsweise in Konzentrationen von 10-70 % bezogen auf die Gesamtmischung,
   und/oder
- CPY-n-Om und PY-n-Om, vorzugsweise CPY-2-O2 und/oder CPY-3-O2 und PY-3-O2, vorzugsweise in Konzentrationen von 10 - 45 % bezogen auf die Gesamtmischung,
   und/oder
- CPY-n-Om und CLY-n-Om, vorzugsweise in Konzentrationen von 10-80 % bezogen auf die Gesamtmischung.
   und/oder
- CCVC-n-V, vorzugsweise CCVC-3-V, vorzugsweise in Konzentrationen von 2 - 10 % bezogen auf die Gesamtmischung,
   und/oder
- CCC-n-V, vorzugsweise CCC-2-V und/oder CCC-3-V, vorzugsweise in Konzentrationen von 2 - 10 % bezogen auf die Gesamtmischung,
   und/oder
- CC-V-V, vorzugsweise in Konzentrationen von 5 - 50 % bezogen auf die Gesamtmischung.

Ein weiterer Gegenstand der Erfindung ist eine elektrooptische Anzeige mit einer Aktivmatrix-Adressierung basierend auf dem ECB-, VA-, PS-VA-, PA-VA-, IPS-, PS-IPS-, FFS- oder PS-FFS-Effekt, dadurch gekennzeichnet, dass sie als Dielektrikum ein flüssigkristallines Medium nach einem oder mehreren der Ansprüche 1 bis 16 enthält.

Das erfindungsgemäße flüssigkristalline Medium weist bevorzugt eine nematische Phase von ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität v₂₀ von maximal 30 mm²·s⁻¹ bei 20 °C auf.

Die Werte der Doppelbrechung Δn in der Flüssigkristallmischung liegen in der Regel zwischen 0,07 und 0,16, vorzugsweise zwischen 0,08 und 0,13.

Die erfindungsgemäße Flüssigkristallmischung weist ein Δε von -0,5 bis -8,0, insbesondere von -2,5 bis -6,0 auf, wobei Δε die dielektrische Anisotropie bedeutet. Die Rotationsviskosität γ₁ bei 20 °C ist vorzugsweise ≤ 150 mPa·s, insbesondere ≤ 120 mPa·s.

Die erfindungsgemäßen Flüssigkristallmedien weisen relativ kleine Werte für die Schwellenspannung (V₀) auf. Vorzugsweise sind sie im Bereich von 1,7 V bis 3,0 V, besonders bevorzugt ≤ 2,5 V und ganz besonders bevorzugt ≤ 2,3 V.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Außerdem weisen die erfindungsgemäßen Flüssigkristallmedien hohe Werte für die Voltage Holding Ratio in Flüssigkristallzellen auf.

In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Alle angegebenen Werte für Temperaturen für die vorliegende Erfindung sind in °C.

Die erfindungsgemäßen Mischungen sind für alle VA-TFT-Anwendungen geeignet, wie z.B. VAN, MVA, (S)-PVA, ASV, PSA (polymer sustained VA) und PS-VA (polymer stabilized VA). Weiterhin sind sie für IPS (In plane switching) und FFS (Fringe field switching) mit negativem Δε geeignet. Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formel I, die Verbindungen der Formeln IIA, IIB und/oder IIC, ferner eine oder mehrere Verbindungen der Formel 0-17.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm² · s⁻¹, vorzugsweise nicht mehr als 25 mm²·s⁻¹, bei 20 °C auf.

Dem Fachmann sind aus der Literatur eine Vielzahl geeigneter Materialien bekannt. Besonders bevorzugt sind Verbindungen der Formel 0-17.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm²·s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Optional kann die Mischung auch eine Komponente C enthalten, wobei es sich um Verbindungen mit einer dielektrischen Anisotropie von Δε ≥1,5 handelt. Diese sogenannten positiven Verbindungen sind in der Regel in einer Mischung mit negativer dielektrischer Anisotropie in Mengen von ≤ 20 Gew.% bezogen auf die Gesamtmischung enthalten.

Sofern die erfindungsgemäße Mischung eine oder mehrere Verbindungen mit einer dielektrischen Anisotropie von Δε ≥1,5 enthält, handelt es sich vorzugsweise um eine oder mehrere Verbindungen ausgewählt aus der Gruppe der Verbindungen der Formeln P-1 bis P-4, 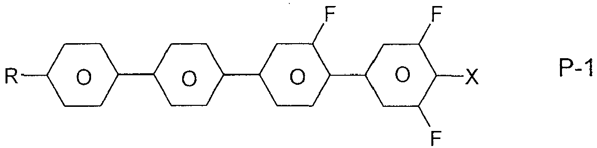 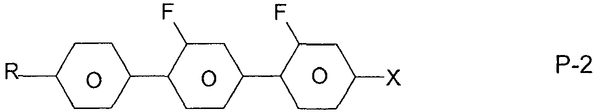 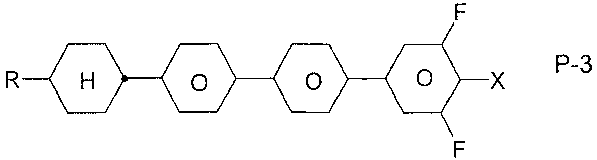 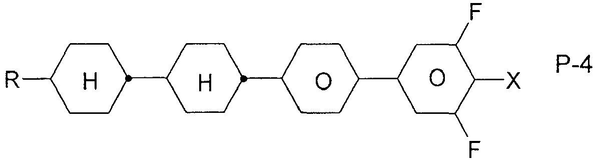 worin
- R: geradkettiges Alkyl, Alkoxy oder Alkenyl mit jeweils 1 bzw. 2 bis 6 C-Atomen, und
- X: F, Cl, CF₃, OCF₃, OCHFCF₃ oder CCF₂CHFCF₃, vorzugsweise F oder OCF₃
bedeuten.

Vorzugsweise werden die Verbindungen der Formeln P-1 bis P-4 in Konzentrationen von 0,1 - 15 %, inbesondere 0,15 - 10 % in den erfindungsgemäßen Mischungen eingesetzt.

Besonders bevorzugt ist die Verbindung der Formel, 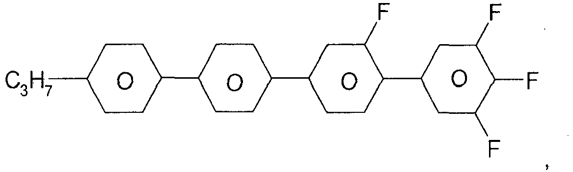 die vorzugsweise in Mengen von 0,1 - 15 % in den erfindungsgemäßen Mischungen eingesetzt wird.

Daneben können diese Flüssigkristallphasen auch mehr als 18 Komponenten, vorzugsweise 18 bis 25 Komponenten, enthalten.

Vorzugsweise enthalten die Phasen neben einer oder mehreren Verbindungen der Formel I, 4 bis 15, insbesondere 5 bis 12, und besonders bevorzugt < 10, Verbindungen der Formeln IIA, IIB und/oder IIC und optional eine oder mehrere Verbindungen der Formel O-17.

Neben Verbindungen der Formeln I und den Verbindungen der Formeln IIA, IIB und/oder IIC und optional 0-17 können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R²⁰-L-G-E-R²¹ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor oder -CN, und R²⁰ und R²¹ jeweils Alkyl, Alkenyl, Alkoxy, Alkoxyalkyl oder Alkoxy-carbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R²⁰ und R²¹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS- oder FFS- Mischung auch Verbindungen enthalten kann, worin beispielsweise H, N, O, Cl, F durch die entsprechenden Isotope ersetzt sind.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,01 - 5 Gew.%, besonders bevorzugt 0,2 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. BASF, wird vorzugsweise der Mischung enthaltend polymerisierbare Verbindungen in Mengen von 0-1 % zugesetzt. Derartige Mischungen können für sogenannte Polymer Stabilized VA-Modes (PS-VA) oder PSA (Polymer sustained VA), bei denen eine Polymerisierung der reaktiven Mesogene in der flüssigkristallinen Mischung erfolgen soll, verwendet werden. Voraussetzung hierfür ist, dass die flüssigkristallinen Verbindungen des LC Hosts unter den Polymerisationsbedingungen der reaktiven Mesogene, d.h. in der Regel unter UV-Belichtung im Wellenlängenbereich von 320-360 nm, nicht reagieren. Flüssigkristalline Verbindungen mit einer Alkenylseitenkette, wie z.B. CC-3-V, zeigen unter den genannten Polymerisationsbedingungen (UV-Polymerisation) für die RMs keine Reaktion.

In einer bevorzugten Ausführungsform der Erfindung sind die polymerisierbaren Verbindungen ausgewählt aus den Verbindungen der Formel M

R^{Ma}-A^{M1}-(Z^{M1}-A^{M2})ₘ₁-R^{Mb} M

worin die einzelnen Reste folgende Bedeutung haben:
- R^{Ma} und R^{Mb}: jeweils unabhängig voneinander P, P-Sp-, H, Halogen, SF₅, NO₂, eine Alkyl-, Alkenyl- oder Alkinylgruppe, wobei bevorzugt mindestens einer der Reste R^{Ma} und R^{Mb} eine Gruppe P oder P-Sp- bedeutet oder enthält,
- P: eine polymerisierbare Gruppe,
- Sp: eine Abstandsgruppe oder eine Einfachbindung,
- A^{M1} und A^{M2}: jeweils unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfasst oder enthalten kann, und die optional ein- oder mehrfach durch L substitutiert sein kann,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können, bevorzugt P, P-Sp-, H, OH, CH₂OH, Halogen, SF₅, NO₂, eine Alkyl-, Alkenyl- oder Alkinylgruppe,
- Y¹: Halogen,
- Z^{M1}: -O-, -S-, -CO-, -CO-O-, -OCO-, -O-CO-O- , -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- m1: 0, 1, 2, 3 oder 4 und
- n1: 1, 2, 3 oder 4,
wobei mindestens einer, bevorzugt einer, zwei oder drei, besonders bevorzugt einer oder zwei, aus der Gruppe R^{Ma}, R^{Mb} und der vorhandenen Substituenten L eine Gruppe P oder P-Sp- bedeutet oder mindestens eine Gruppe P oder P-Sp- enthält.

Besonders bevorzugte Verbindungen der Formel M sind solche, worin
- R^{Ma} und R^{Mb}: jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei bevorzugt mindestens einer der Reste R^{Ma} und R^{Mb} eine Gruppe P oder P-Sp- bedeutet oder enthält,
- A^{M1} und A^{M2}: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicydo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS,-OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Ganz besonders bevorzugt sind Verbindungen der Formel M, worin einer von R^{Ma} und R^{Mb} oder beide P oder P-Sp- bedeuten.

Geeignete und bevorzugte RMs oder Monomere bzw. Comonomere für die Verwendung in erfindungsgemäßen flüssigkristallinen Medien und PS-VA-Anzeigen oder PSA-Anzeigen, sind beispielsweise ausgewählt aus den folgenden Formeln: 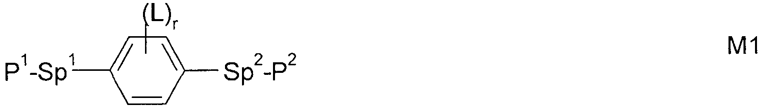 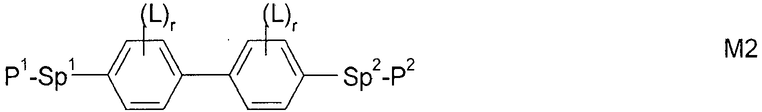 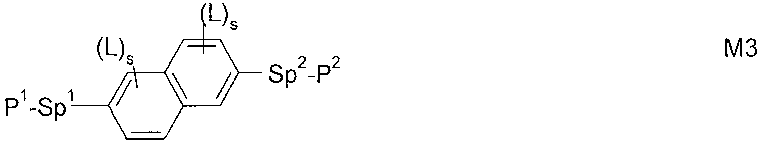 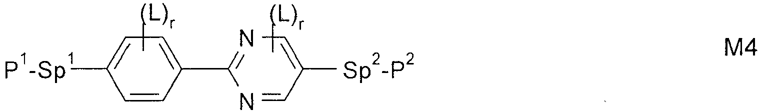 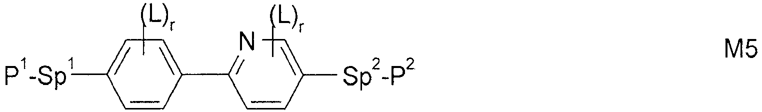 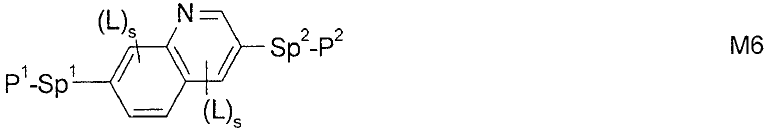 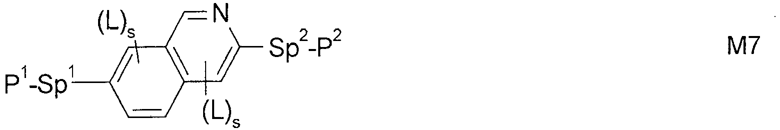 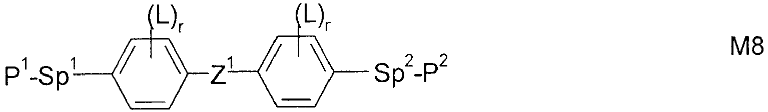 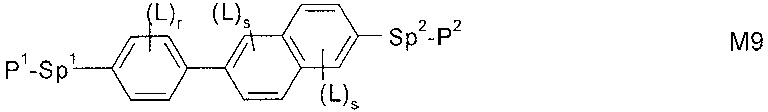 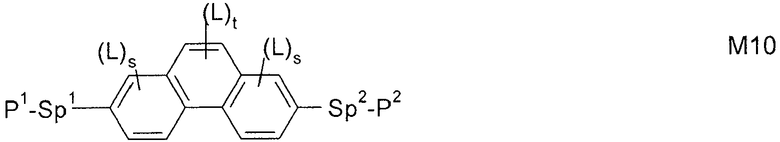 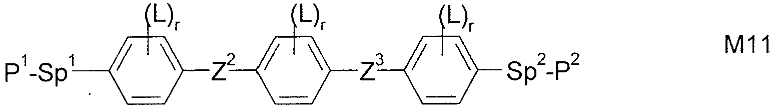 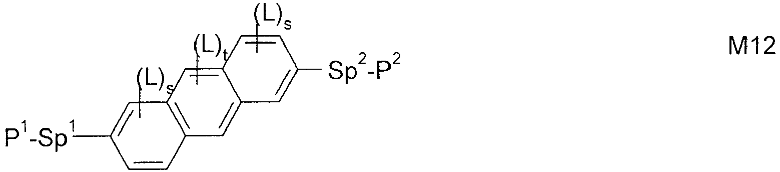 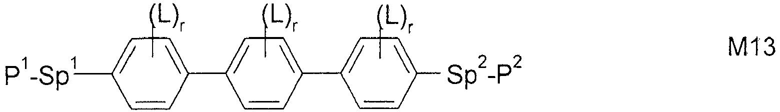 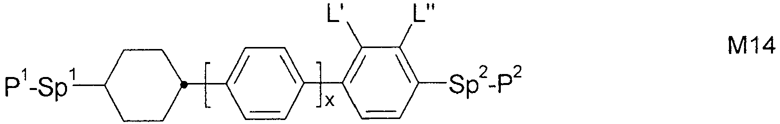 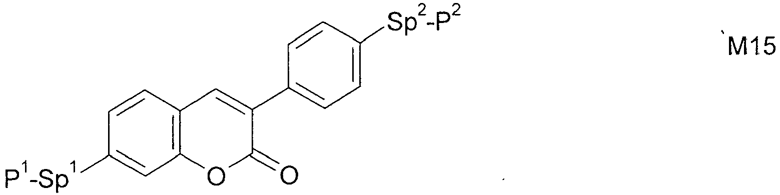 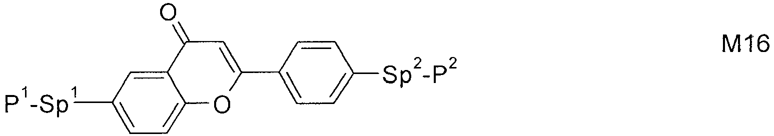 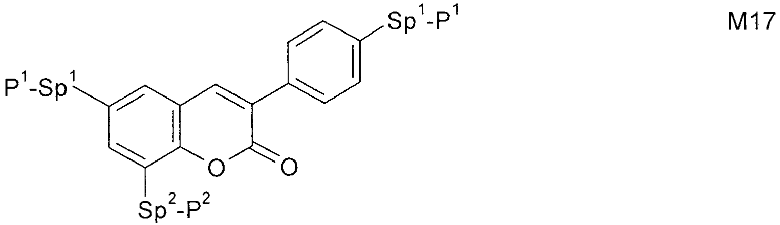 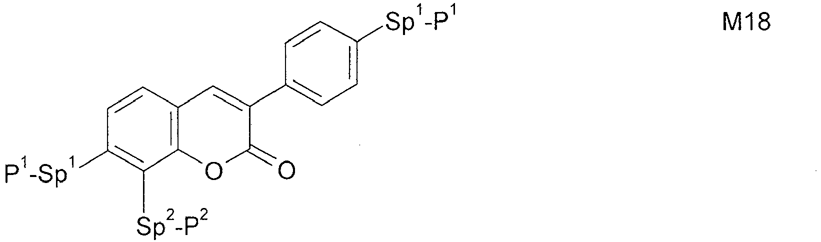 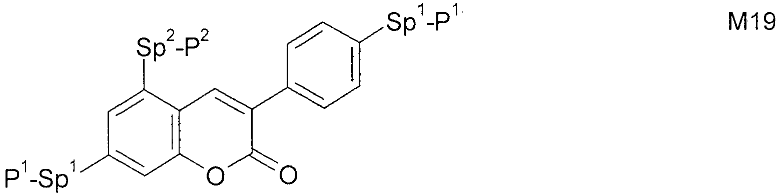 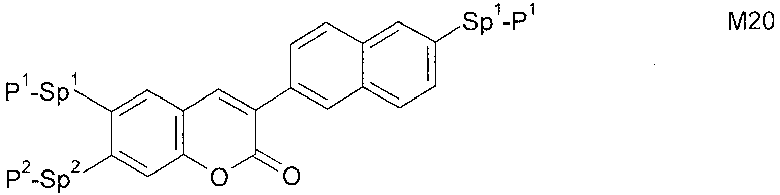 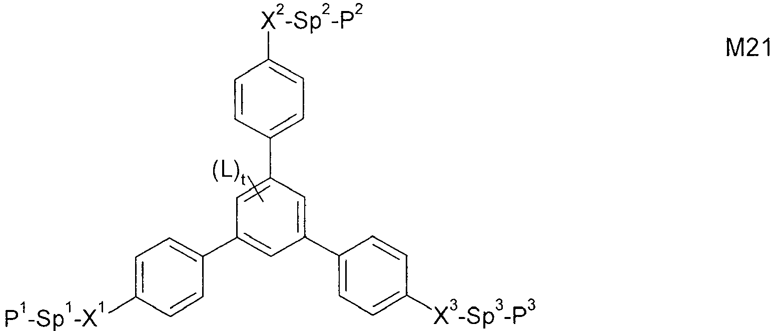 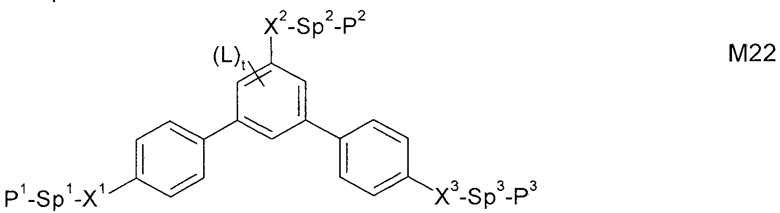 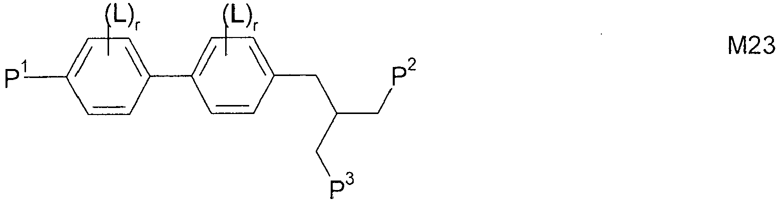 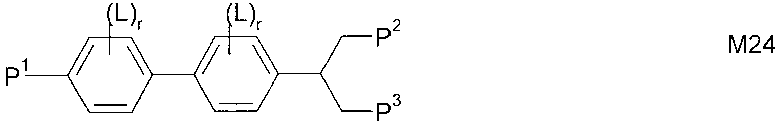 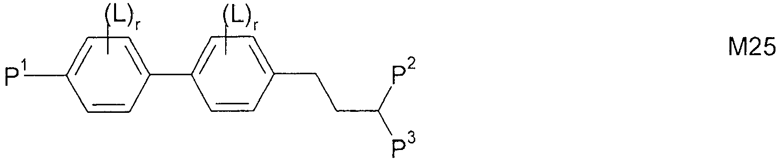 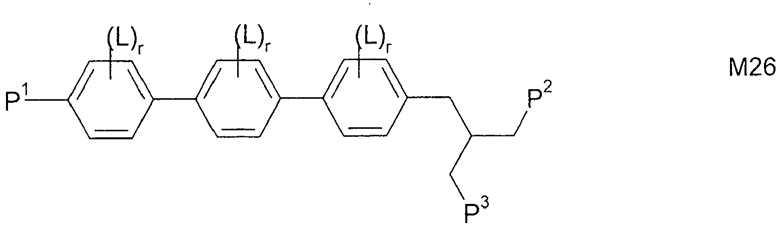 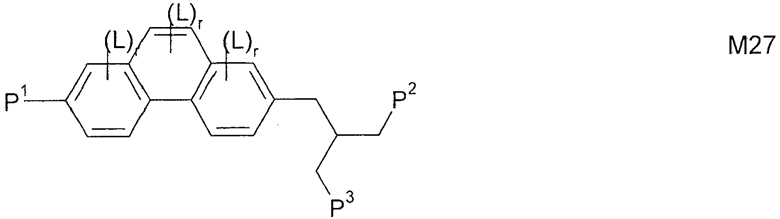 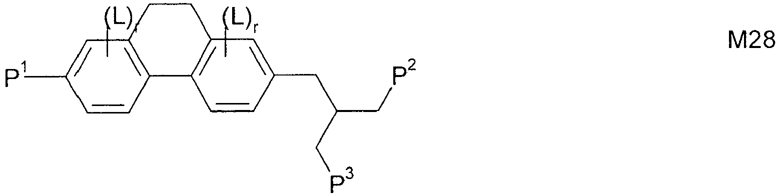 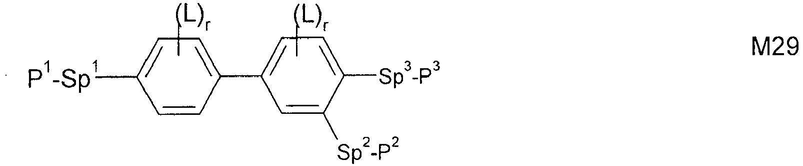 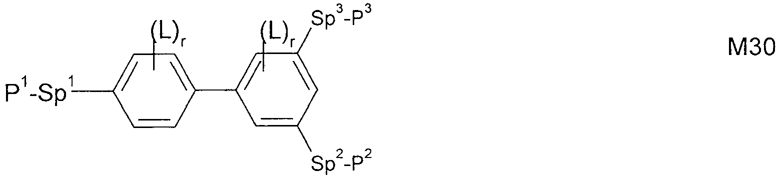 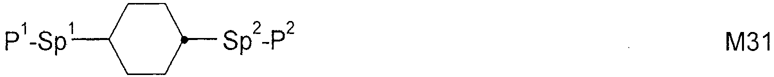 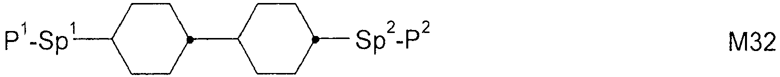 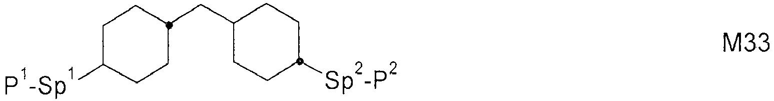 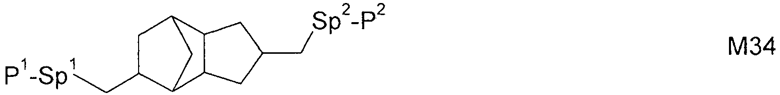 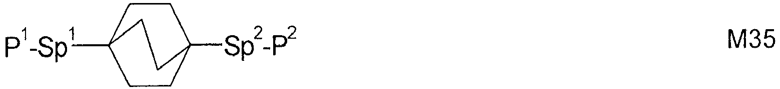 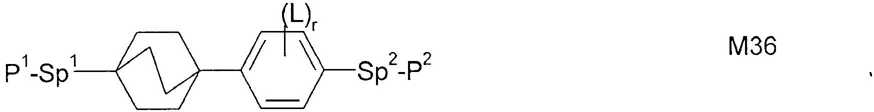 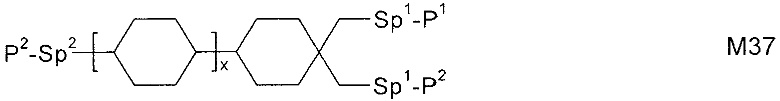 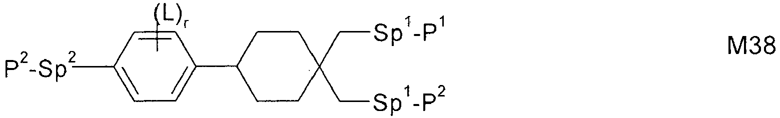 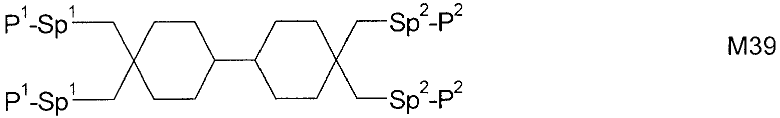 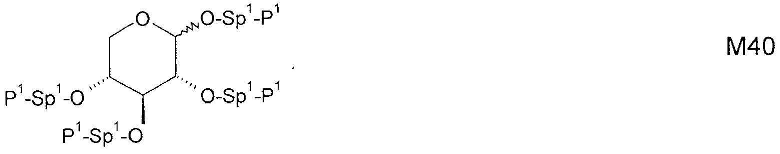 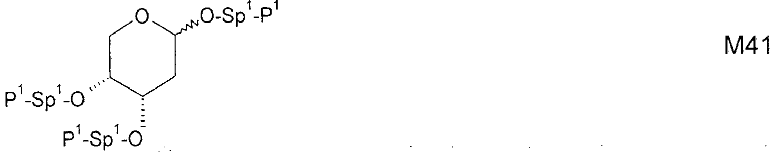 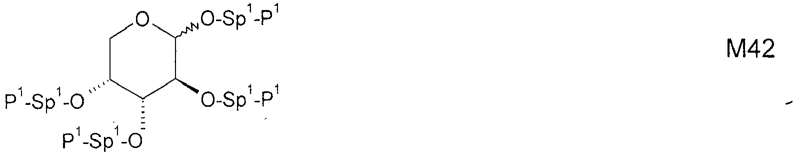 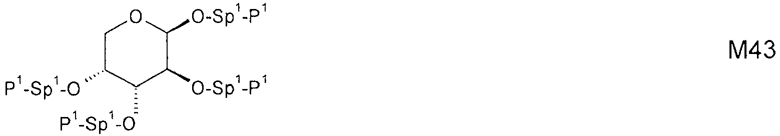 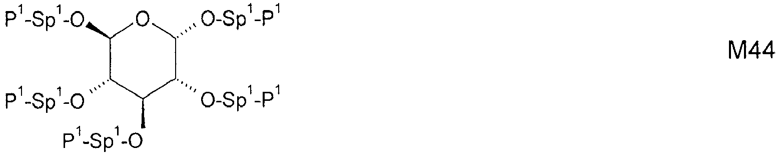 worin die einzelnen Reste folgende Bedeutung besitzen:
- P¹,P² und P³: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹, Sp² und Sp³: jeweils unabhängig voneinander eine Einfachbindung oder eine Abstandsgruppe, vorzugsweise mit einer der vor- und nachstehend für Sp^{a} angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O-, worin p1 eine ganze Zahl von 1 bis 12 ist, und wobei in den letztgenannten Gruppen die Verknüpfung zur benachbarten Ring über das O-Atom erfolgt,
wobei auch einer oder mehrere der Reste P¹-Sp¹-, P²-Sp²- und P³-Sp³- einen Rest R^{aa} bedeuten können, mit der Maßgabe dass mindestens einer der vorhandenen Reste P¹-Sp¹-, P²-Sp²- und P³-Sp³- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- X¹, X² und X³: jeweils unabhängig voneinander -CO-O-, O-CO- oder eine Einfachindung,
- Z¹: -O-, -CO-, -C(R^{y}R^{z})-,oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2,
- x: 0 oder 1.

In den Verbindungen der Formeln M1 bis M36 bedeutet 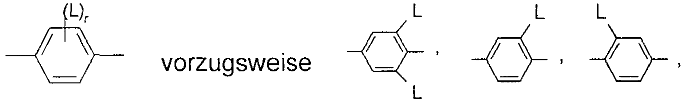 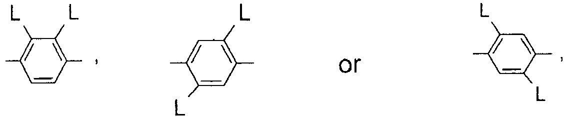 worin L, bei jedem Auftreten gleich oder verschieden, eine der vorstehenden Bedeutungen hat und vorzusgweise F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ oder P-Sp-, besonders bevorzugt F, Cl, CN, CH₃, C₂H₅, OCH₃, COCH₃, OCF₃ oder P-Sp-, ganz besonders bevorzugt F, Cl, CH₃, OCH₃, COCH₃ oder OCF₃ , insbesondere F oder CH₃ bedeutet.

Geeignete polymerisierbare Verbindungen sind beispielsweise in Tabelle D gelistet.

Bevorzugt enthalten die flüssigkristallinen Medien gemäß der vorliegenden Anmeldung insgesamt 0,1 bis 10 %, bevorzugt 0,2 bis 4,0 %, besonders bevorzugt 0,2 bis 2,0 %, an polymerisierbaren Verbindungen.

Insbesondere bevorzugt sind die polymerisierbaren Verbindungen der Formel M und der Formeln RM-1 bis RM-99.

Die erfindungsgemäßen Mischungen können weiterhin übliche Zusätze oder Additive enthalten, wie z.B. Stabilisatoren, Antioxidantien, UV-Absorber, Nanopartikel, Mikropartikel, etc.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

In der gesamten Patentanmeldung werden 1,4-Cyclohexylenringe und 1,4-Phenylenringe wie folgt dargestellt:

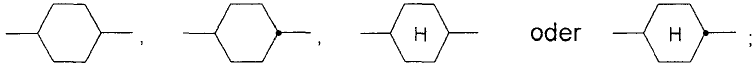

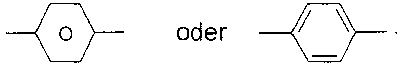

Bei den Cyclohexylenringen handelt es sich um trans-1,4-Cyclohexylenringe.

In der gesamten Patentanmeldung sowie in den Ausführungsbeispielen sind die Strukturen der Flüssigkristallverbindungen durch Acronyme angegeben. Sofern nicht anders angegeben, erfolgt die Transformation in chemische Formeln gemäß der Tabellen 1-3. Alle Reste CₙH₂ₙ₊₁, CₘH₂ₘ₊₁ und C_{m'}H_{2m'+1} bzw. CₙH₂ₙ und CₘH₂ₘ sind geradkettige Alkylreste bzw. Alkylenreste jeweils mit n, m, m' bzw. z C-Atomen.n, m, m', z bedeuten jeweils unabhängig voneinander 1, 2, 3, 4, 5, 6, 7, 8, 9, 10, 11, 12, vorzugsweise 1, 2, 3, 4, 5 oder 6. In Tabelle 1 sind die Ringelemente der jeweiligen Verbindung codiert, in Tabelle 2 sind die Brückenglieder aufgelistet und in Tabelle 3 sind die Bedeutungen der Symbole für die linken bzw. rechten Seitenketten der Verbindungen angegeben.

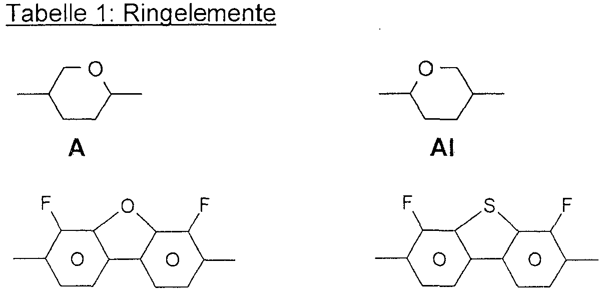

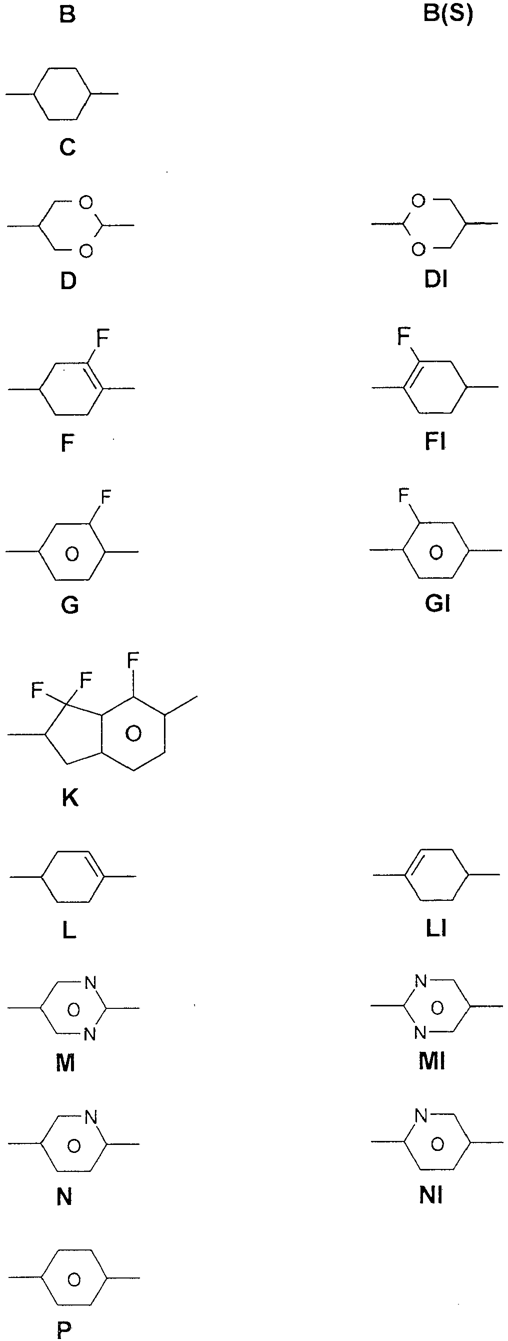

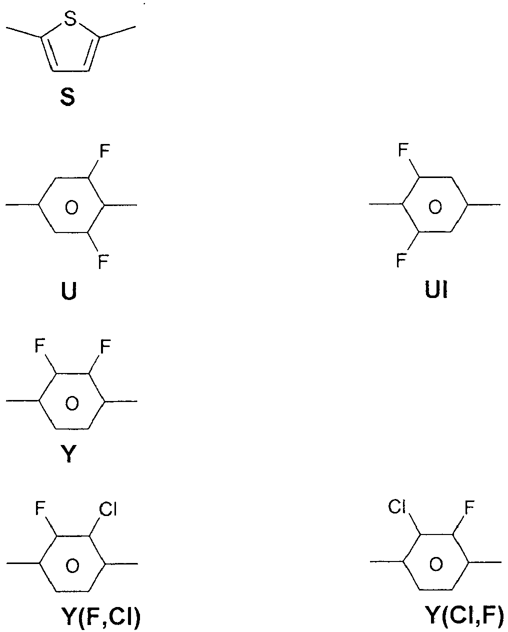

**Tabelle 2: Brückenglieder**

| | | | |
|---|---|---|---|
| **E** | -CH₂CH₂- | | |
| **V** | -CH=CH- | | |
| **T** | -C≡C- | | |
| **W** | -CF₂CF₂- | | |
| **Z** | -COO- | **ZI** | -OCO- |
| **O** | -CH₂O- | **OI** | -OCH₂- |
| **Q** | -CF₂O- | **QI** | -OCF₂- |

**Tabelle 3: Seitenketten**

| Seitenkette links | | Seitenkette rechts | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CₙH₂ₙ-CH=CH₂ |
| **Vn-** | CH₂=CH- CₙH₂ₙ- | **-Vn** | -CH=CH-CₙH₂ₙ₊₁ |
| **nVm-** | CₙH₂ₙ₊₁-CH=CH-CₘH₂ₘ- | **-nVm** | - CₙH₂ₙ-CH=CH-CₘH₂ₘ₊₁ |
| **N-** | N≡C- | **-N** | -C≡N |
| **F-** | F- | **-F** | -F |
| **Cl-** | Cl- | **-Cl** | -Cl |
| **M-** | CFH₂- | **-M** | -CFH₂ |
| **D-** | CF₂H- | **-D** | -CF₂H |
| **T-** | CF₃- | **-T** | -CF₃ |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF₃ |
| **A-** | H-C≡C- | **-A** | -C≡C-H |

Vorzugsweise enthalten die erfindungsgemäßen Mischungen neben einer oder mehreren Verbindungen der Formel I eine oder mehrere Verbindungen der nachfolgend genannten Verbindungen aus der Tabelle A.

**Tabelle A**

| |
|---|
| Folgende Abkürzungen werden verwendet: (n, m, m', z: jeweils unabhängig voneinander 1, 2, 3, 4, 5 oder 6; (O)CₘH₂ₘ₊₁ bedeutet OCₘH₂ₘ₊₁ oder CₘH₂ₘ₊₁) |
| 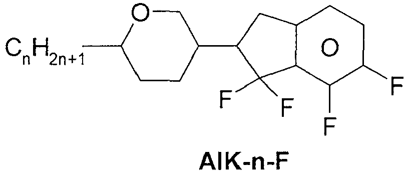 |
| 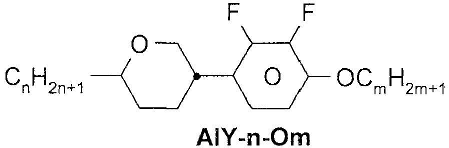 |
| 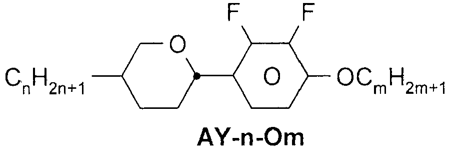 |
| 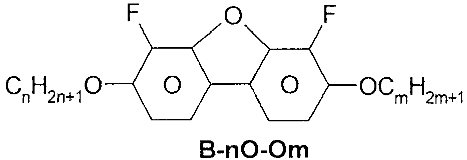 |
| 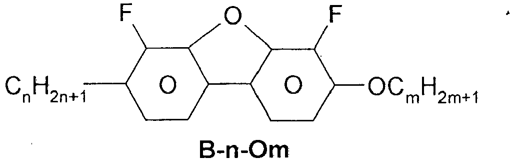 |
| 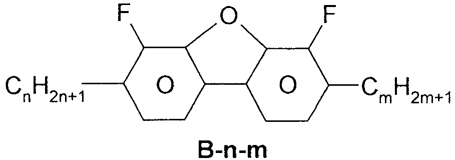 |
| 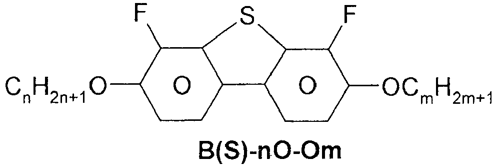 |
| 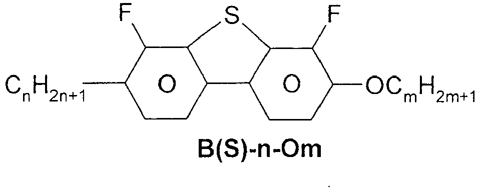 |
| 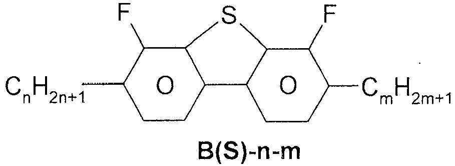 |
| 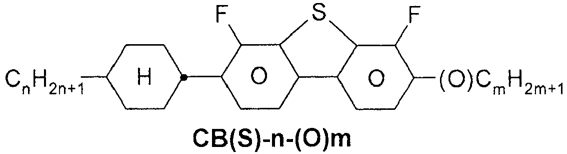 |
| 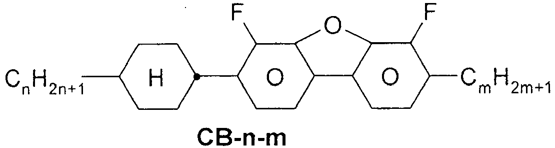 |
| 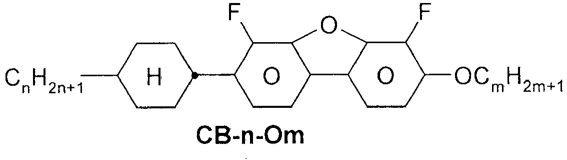 |
| 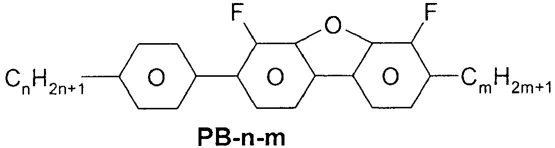 |
| 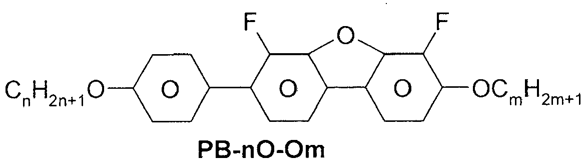 |
| 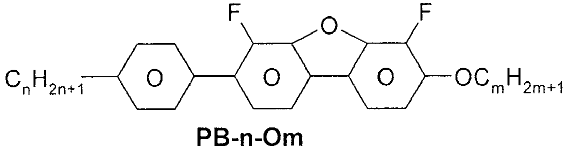 |
| 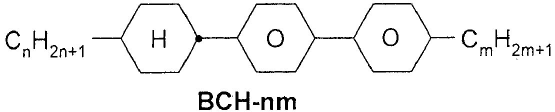 |
| 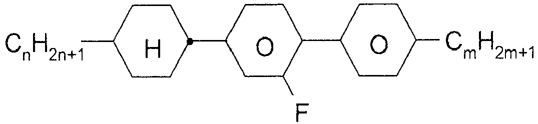 |
| 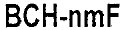 |
| 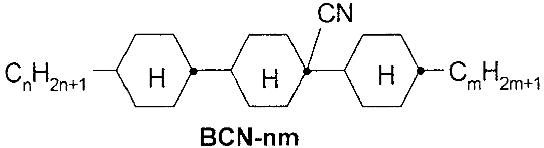 |
| 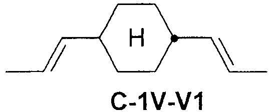 |
| 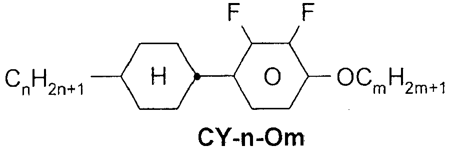 |
| 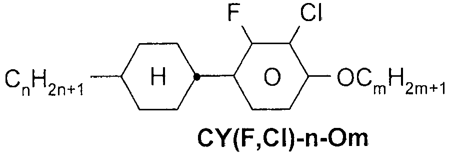 |
| 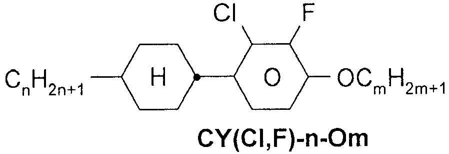 |
| 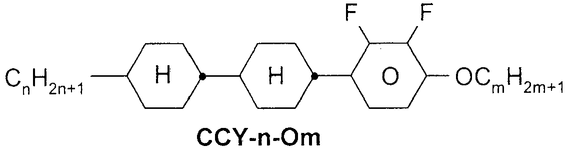 |
| 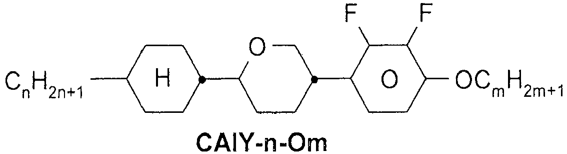 |
| 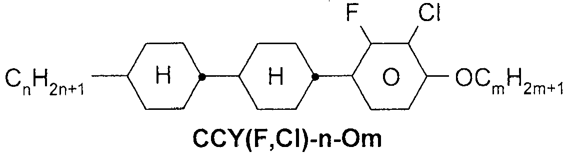 |
| 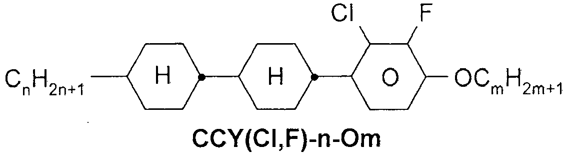 |
| 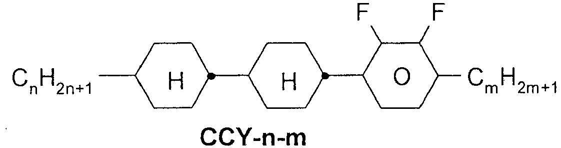 |
| 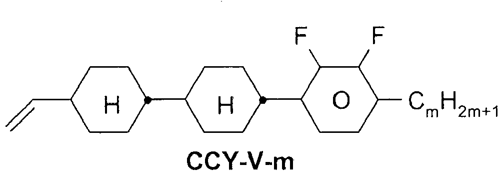 |
| 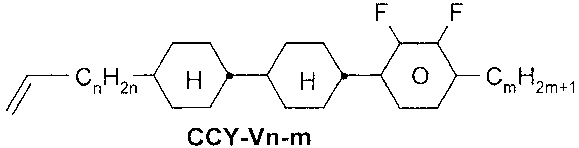 |
| 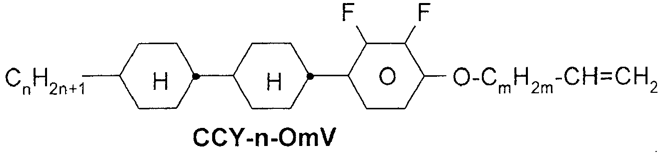 |
| 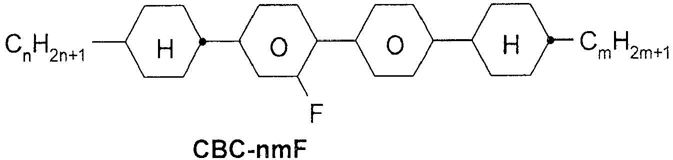 |
| 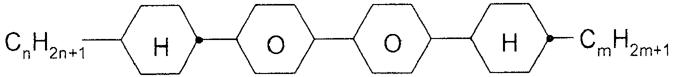 |
| 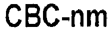 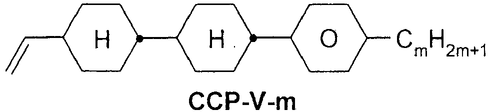 |
| 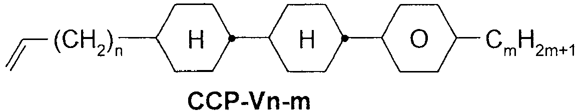 |
| 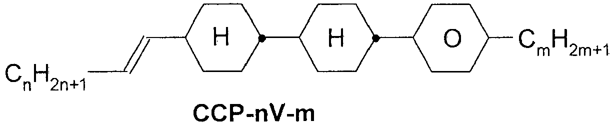 |
| 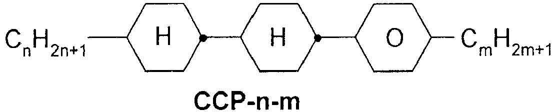 |
| 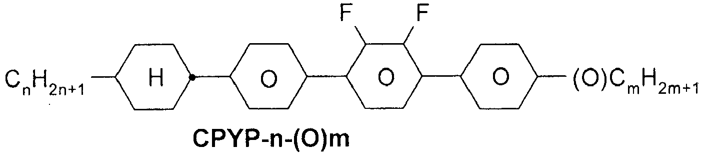 |
| 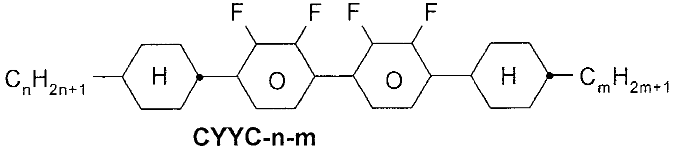 |
| 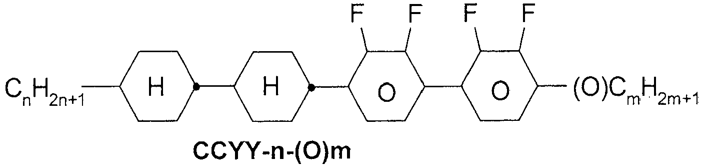 |
| 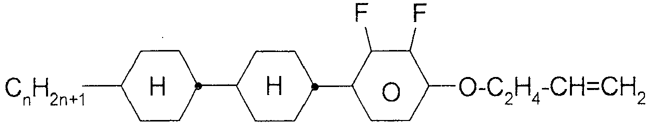 |
| 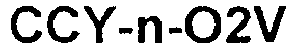 |
| 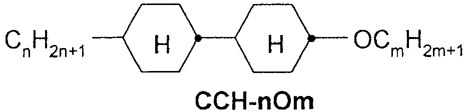 |
| 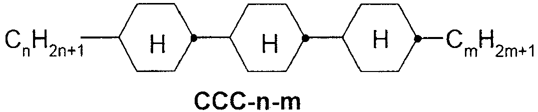 |
| 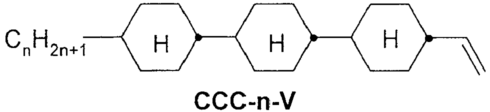 |
| 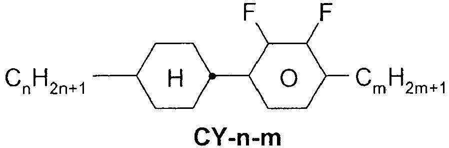 |
| 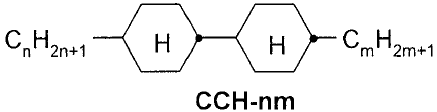 |
| 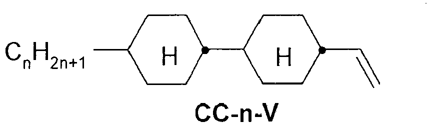 |
| 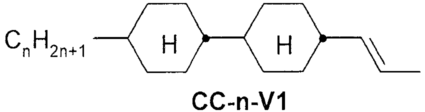 |
| 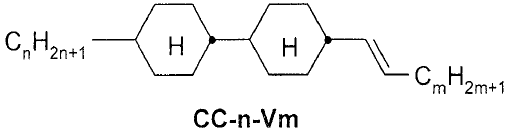 |
| 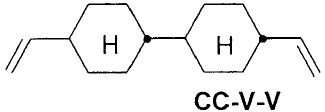 |
| 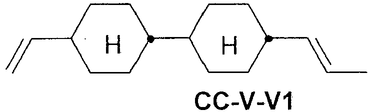 |
| 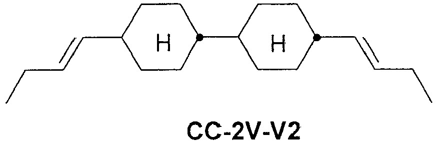 |
| 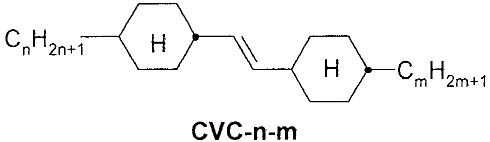 |
| 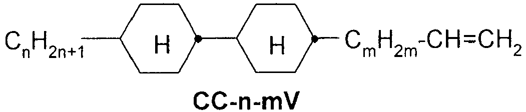 |
| 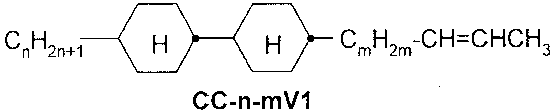 |
| 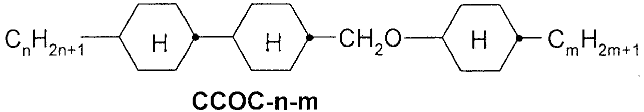 |
| 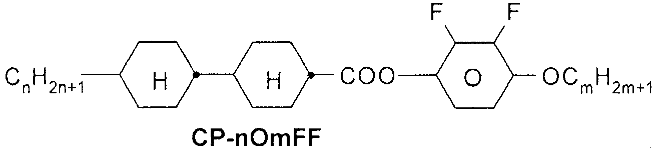 |
| 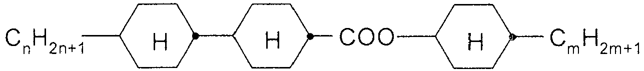 |
| 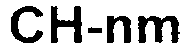 |
| 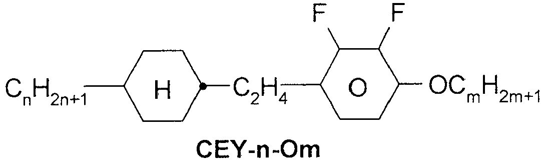 |
| 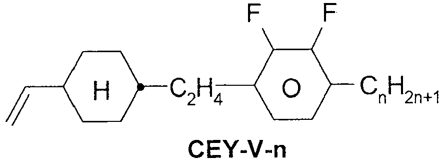 |
| 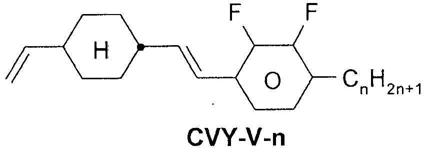 |
| 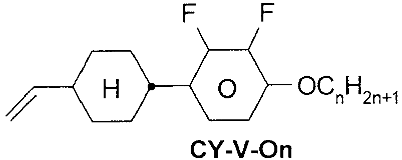 |
| 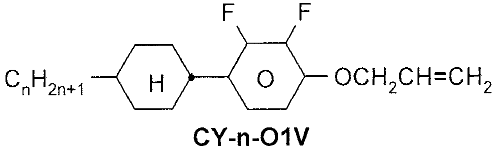 |
| 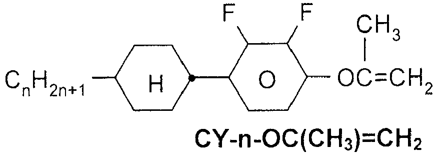 |
| 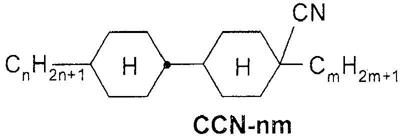 |
| 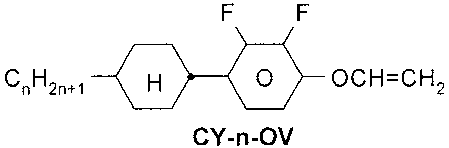 |
| 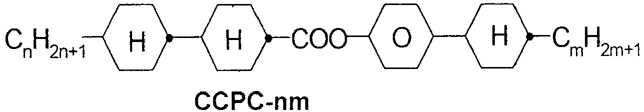 |
| 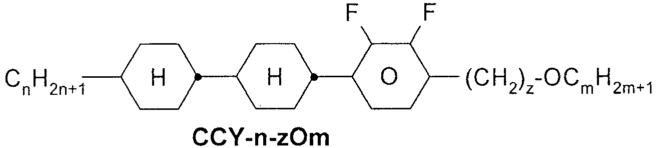 |
| 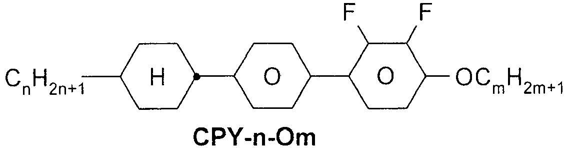 |
| 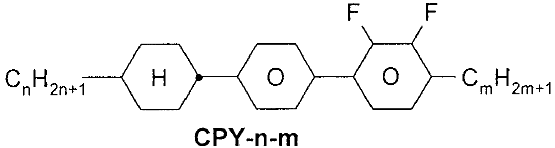 |
| 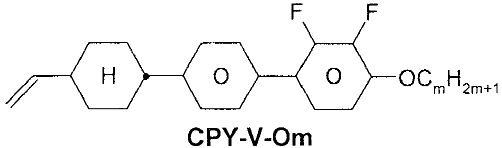 |
| 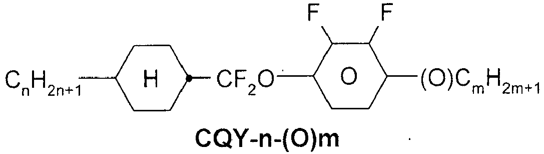 |
| 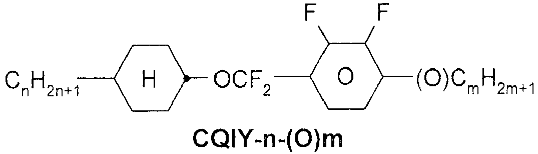 |
| 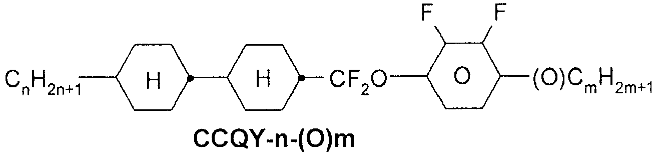 |
| 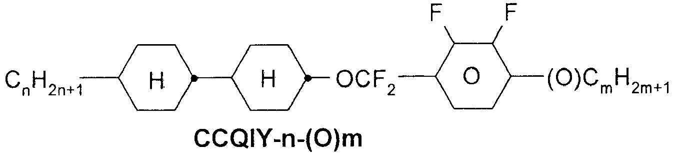 |
| 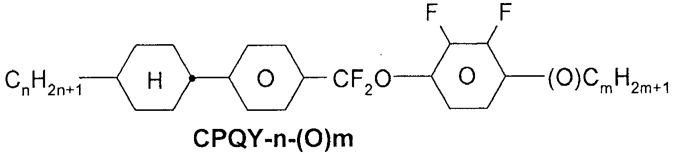 |
| 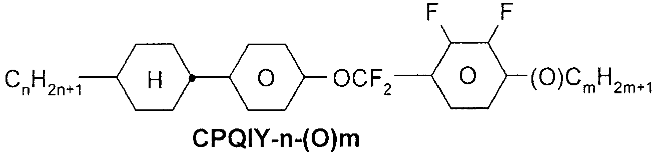 |
| 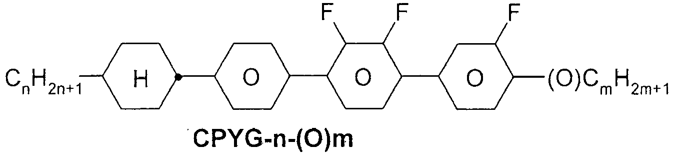 |
| 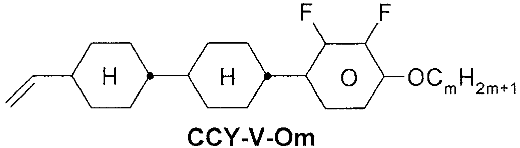 |
| 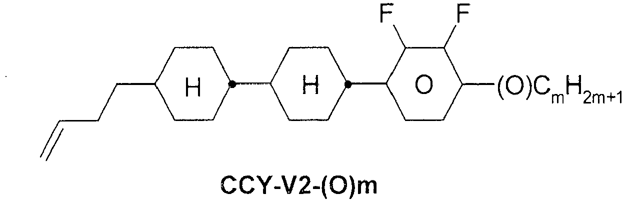 |
| 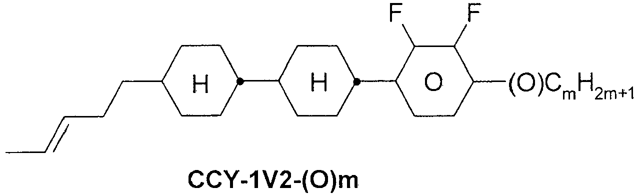 |
| 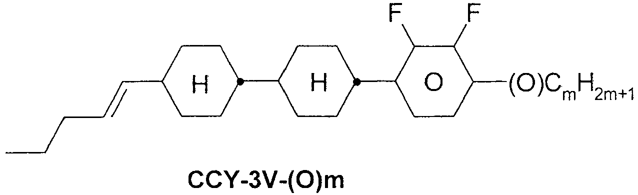 |
| 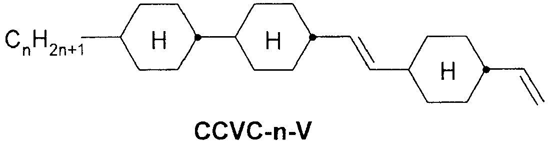 |
| 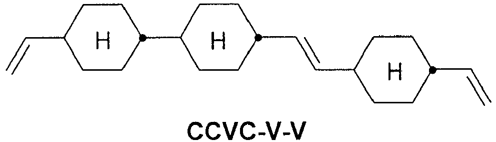 |
| 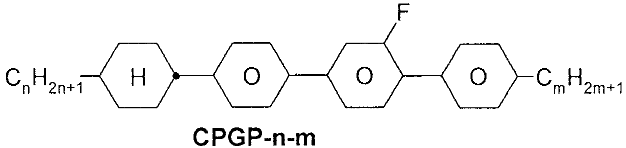 |
| 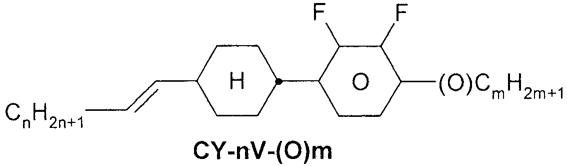 |
| 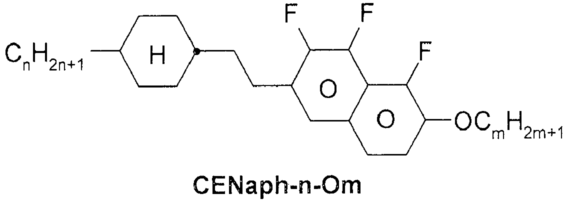 |
| 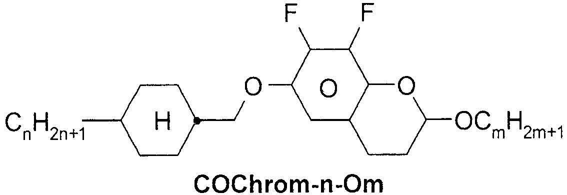 |
| 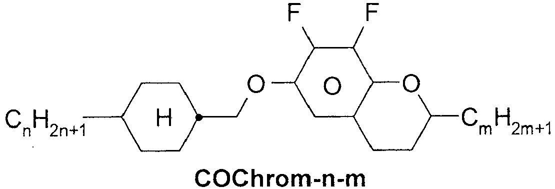 |
| 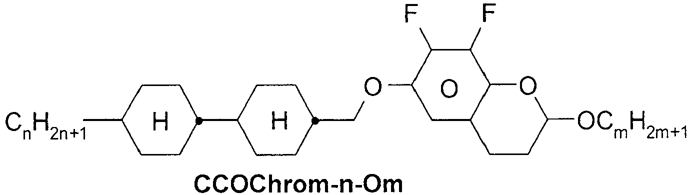 |
| 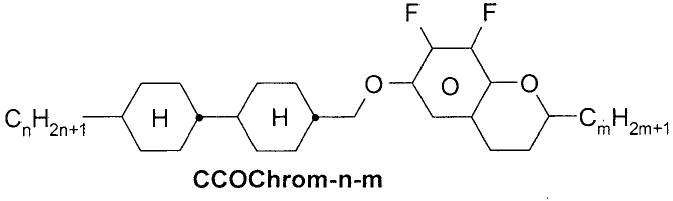 |
| 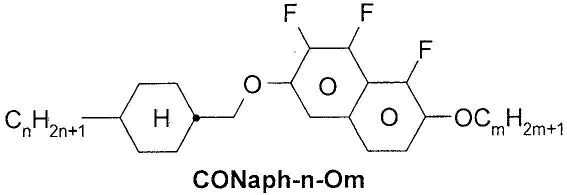 |
| 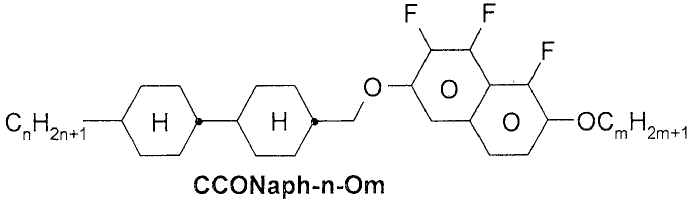 |
| 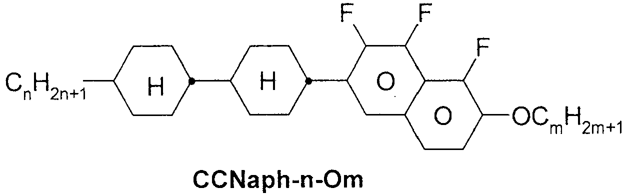 |
| 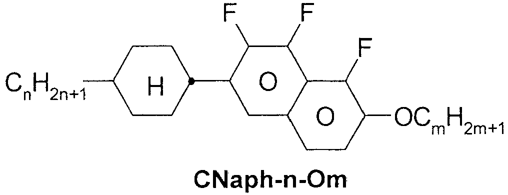 |
| 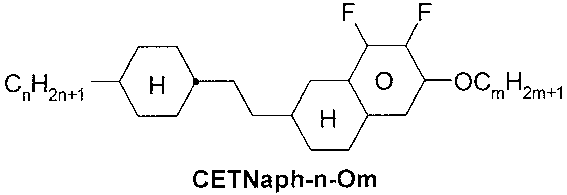 |
| 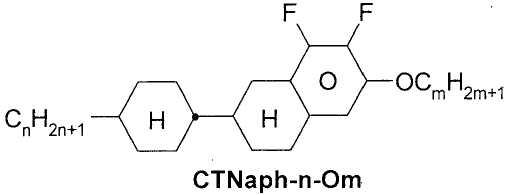 |
| 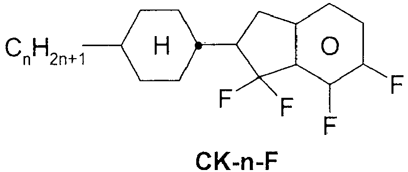 |
| 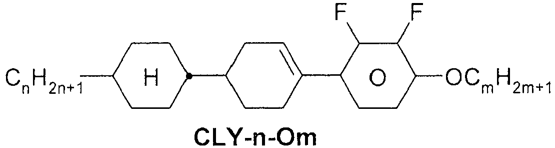 |
| 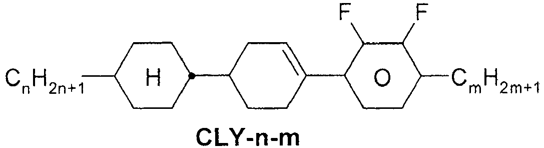 |
| 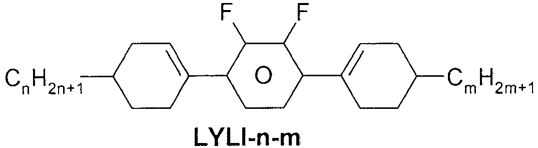 |
| 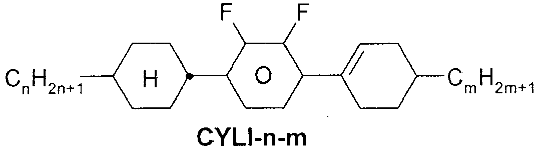 |
| 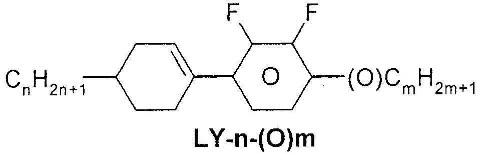 |
| 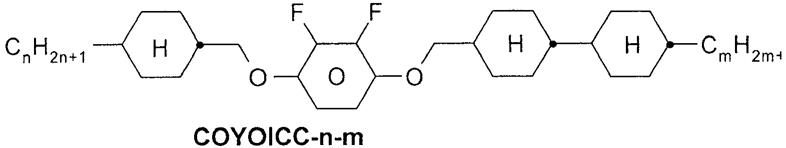 |
| 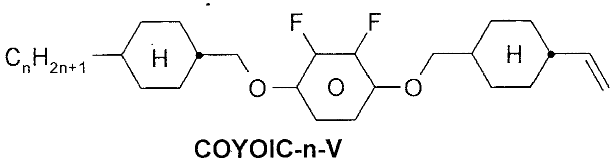 |
| 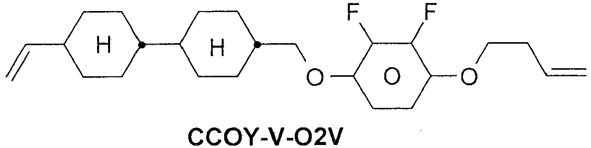 |
| 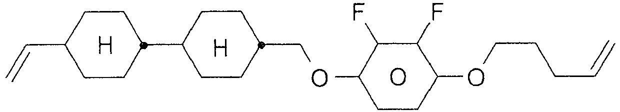 |
| 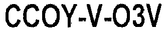 |
| 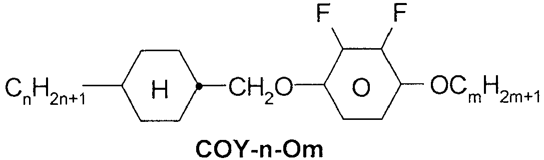 |
| 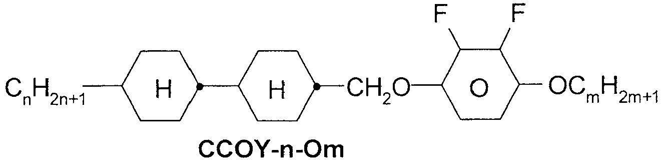 |
| 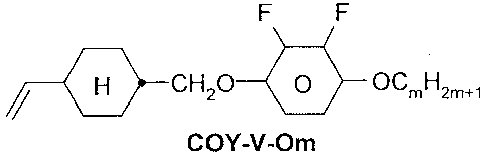 |
| 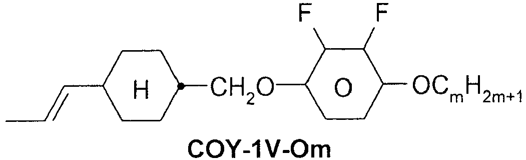 |
| 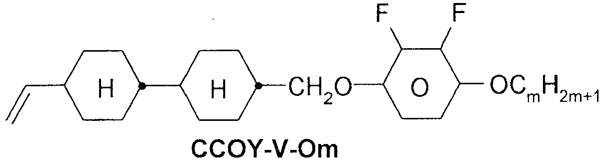 |
| 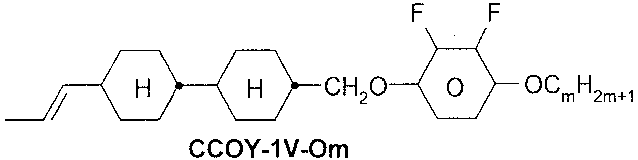 |
| 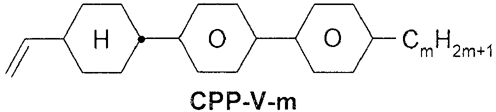 |
| 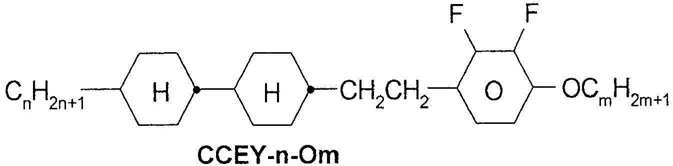 |
| 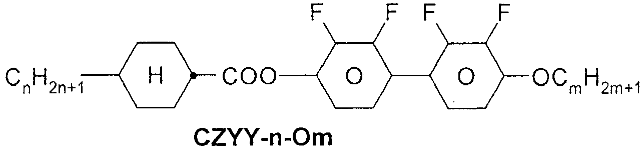 |
| 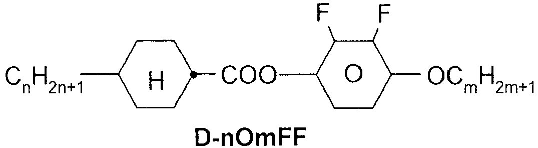 |
| 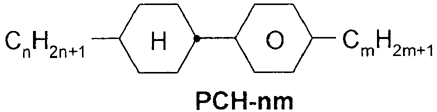 |
| 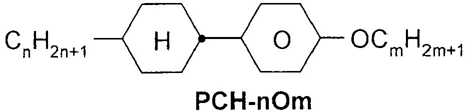 |
| 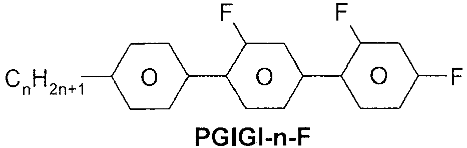 |
| 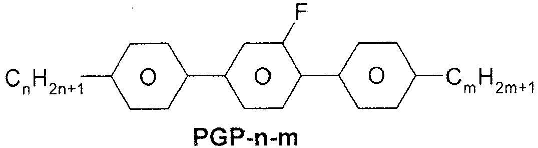 |
| 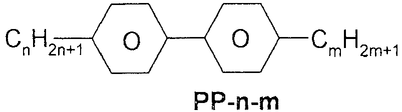 |
| 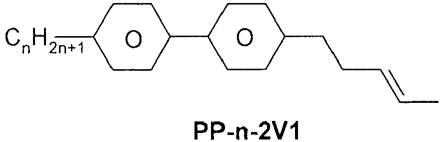 |
| 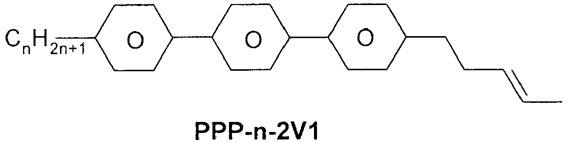 |
| 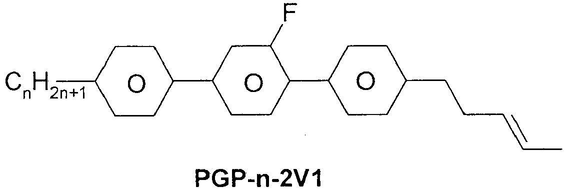 |
| 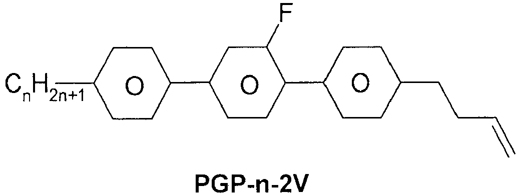 |
| 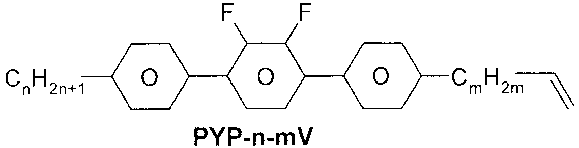 |
| 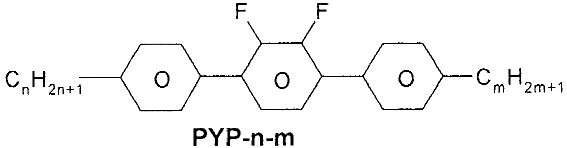 |
| 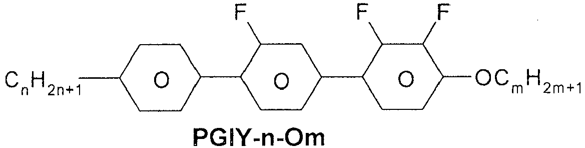 |
| 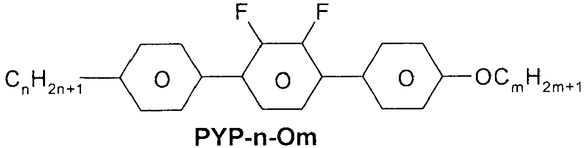 |
| 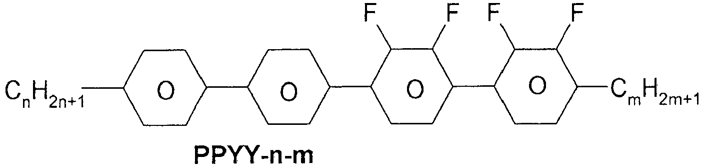 |
| 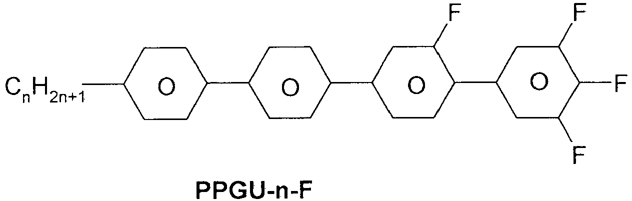 |
| 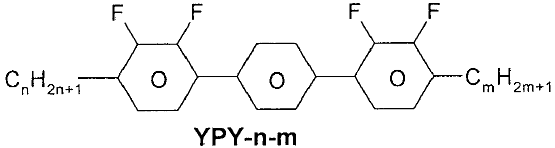 |
| 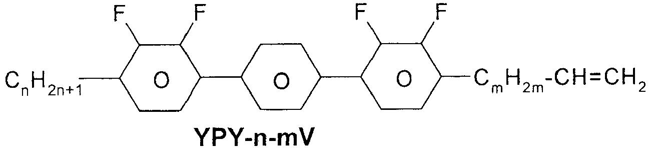 |
| 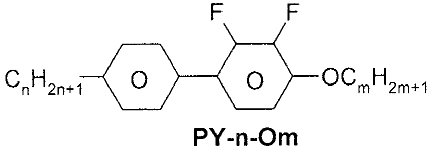 |
| 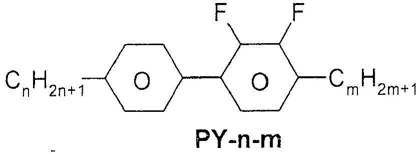 |
| 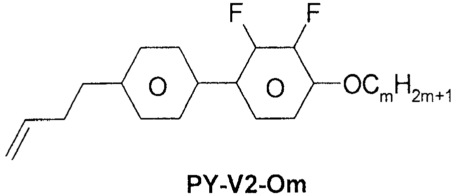 |
| 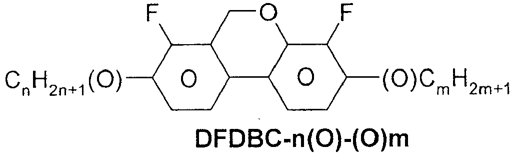 |
| 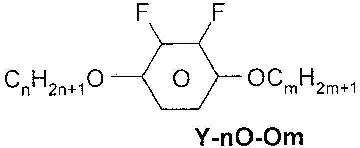 |
| 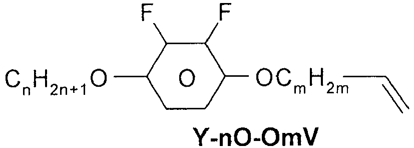 |
| 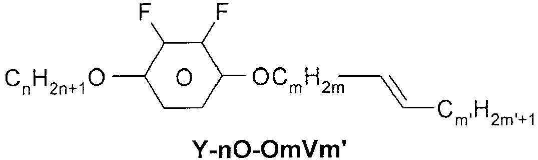 |
| 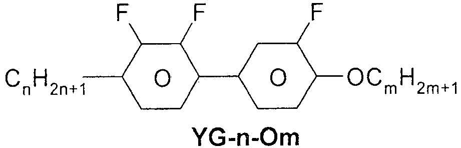 |
| 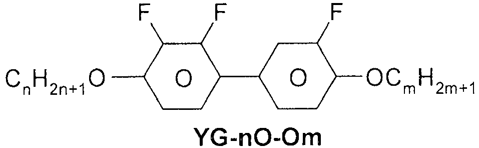 |
| 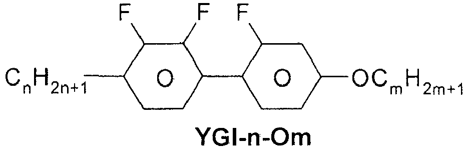 |
| 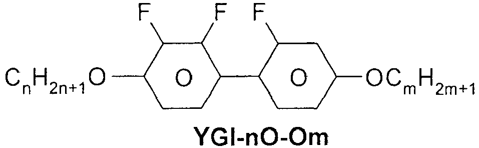 |
| 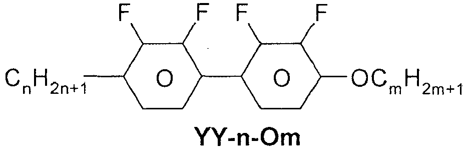 |
| 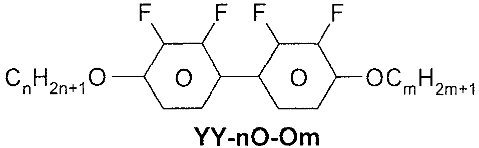 |

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten Beispielsweise können 0-15 % pleochroitische Farbstoffe, Stabilisatoren, wie z.B. Phenole, HALS (hindered amine light stabilizers), oder chirale Dotierstoffe zugesetzt werden. Geeignete Stabilisatoren für die erfindungsgemäßen Mischungen sind insbesondere solche die in Tabelle C gelistet sind.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

**Tabelle B**

| | |
|---|---|
| In der Tabelle B werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,01-3 Gew.%, zugesetzt. | |
| 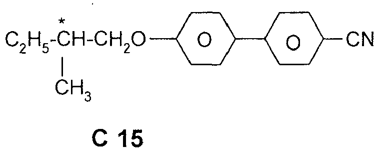 | 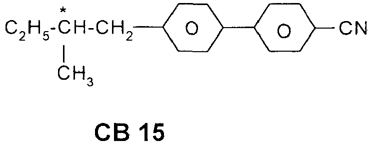 |
| 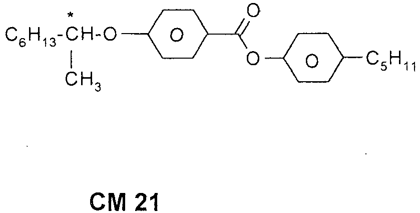 | 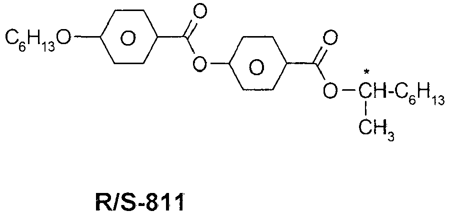 |
| 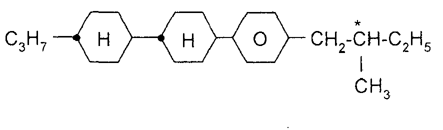 | 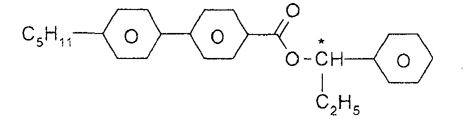 |
| 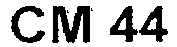 | 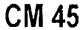 |
| 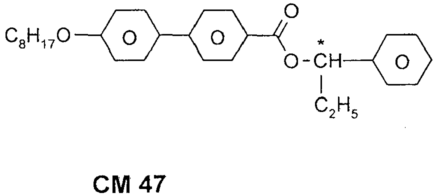 | 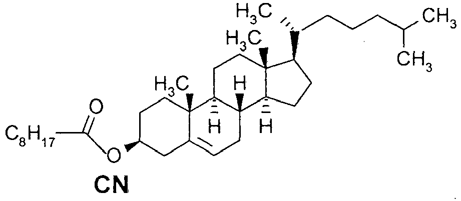 |
| 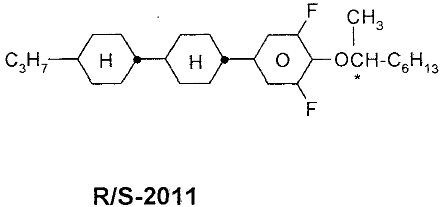 | 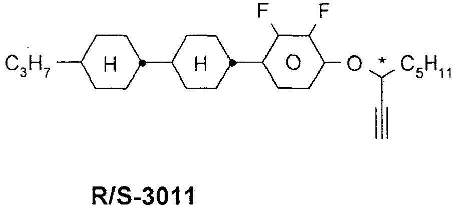 |
| 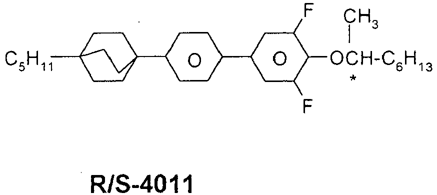 | 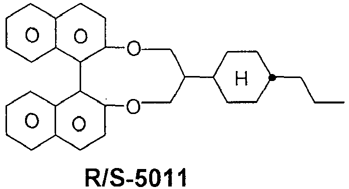 |
| 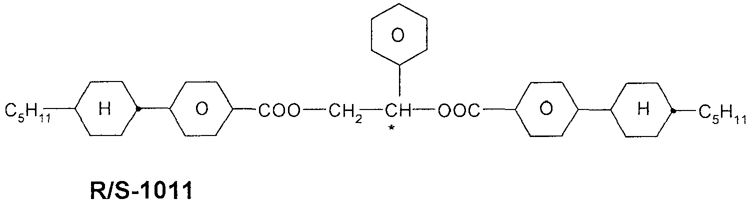 | |

Die erfindungsgemäßen Mischungen enthalten mindestens einen Stabilisator aus der nachfolgend genannten Tabelle C.

**Tabelle C**

| | |
|---|---|
| Stabilisatoren, die beispielsweise den erfindungsgemäßen Mischungen in Mengen von 0-10 Gew.%, vorzugsweise 0,001-5 Gew.%, insbesondere 0,001-1 Gew.%, zugesetzt werden können, werden nachfolgend genannt. | |
| 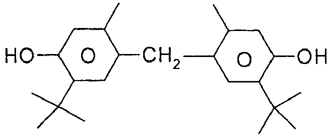 | 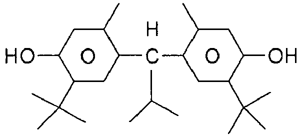 |
| 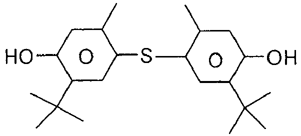 | 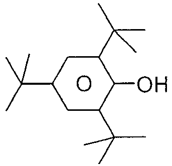 |
| 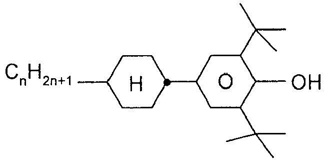 | 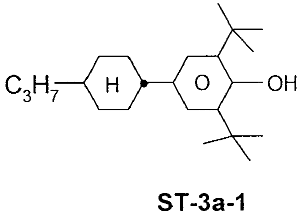 |
| n = 1, 2, 4, 5, 6 oder 7 | |
| 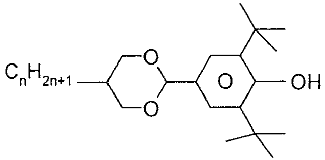 | 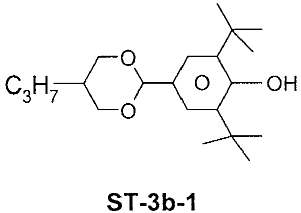 |
| n = 1, 2, 4, 5, 6 oder 7 | |
| 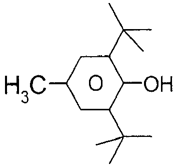 | 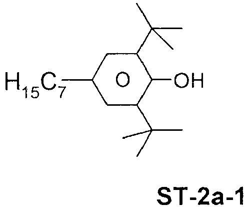 |
| 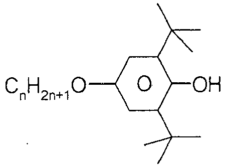 | 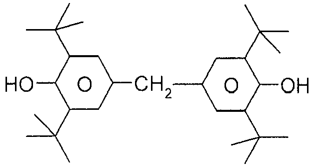 |
| 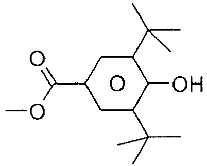 | 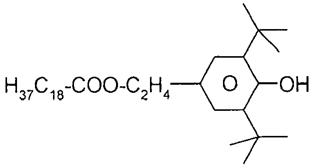 |
| 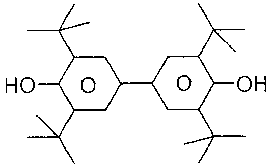 | 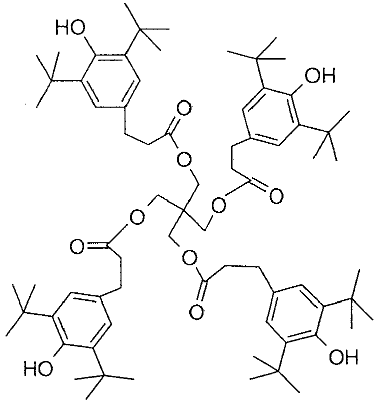 |
| 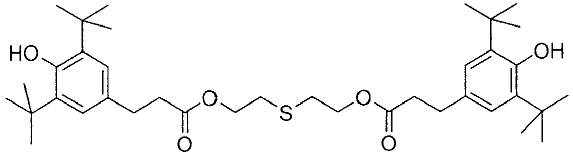 | |
| 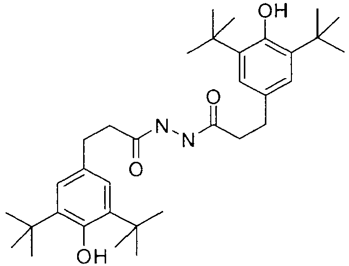 | 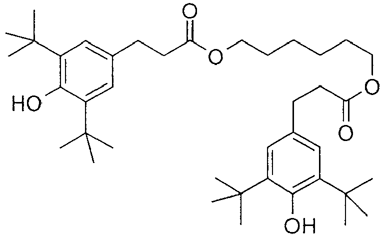 |
| 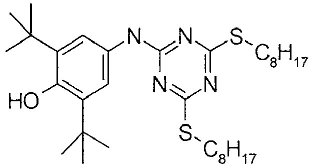 | 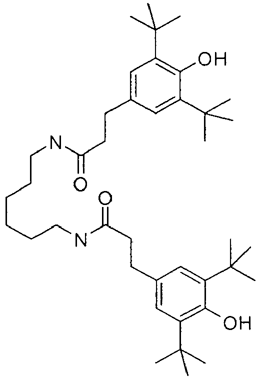 |
| 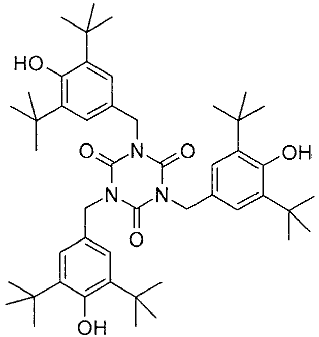 | 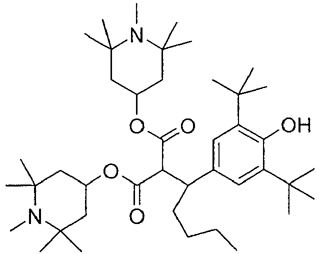 |
| 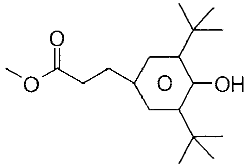 | 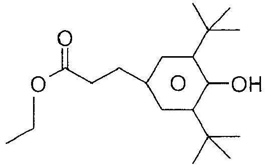 |
| 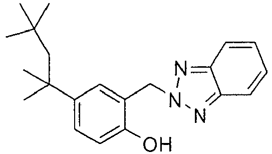 | 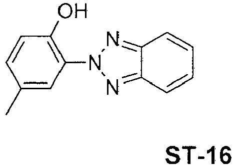 |
| 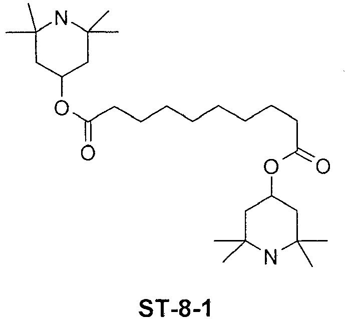 | 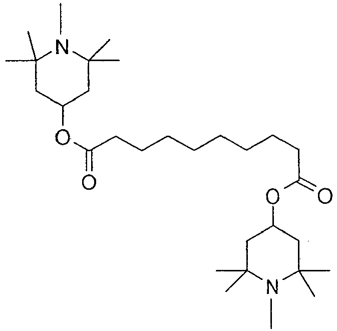 |
| 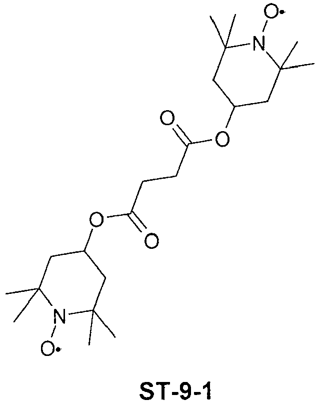 | 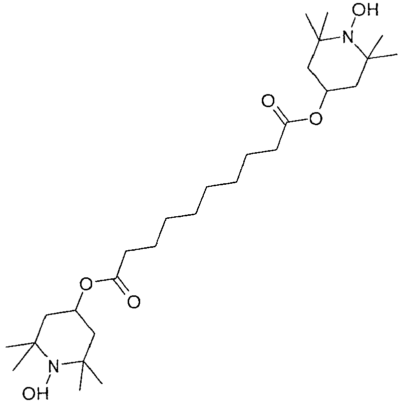 |
| 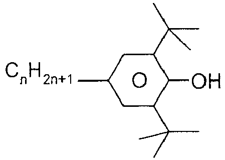 | 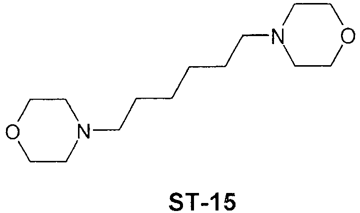 |
| n = 2, 3, 4, 5 oder 6 | |
| 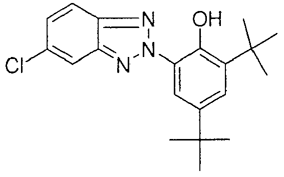 | 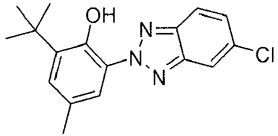 |
| 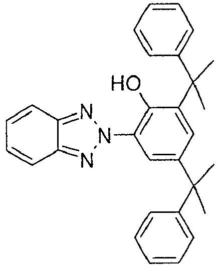 | 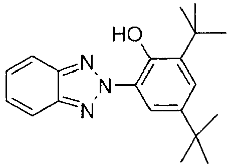 |
| 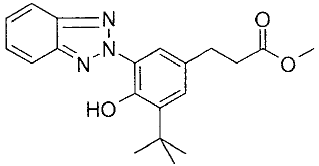 | 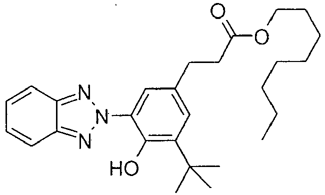 |
| 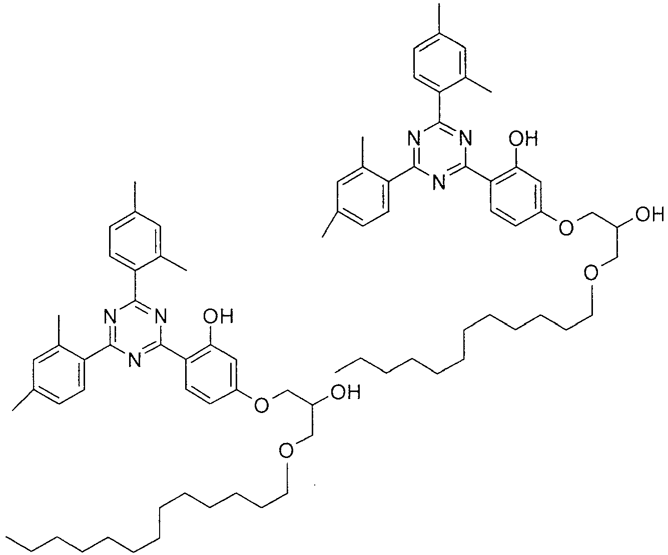 | |
| 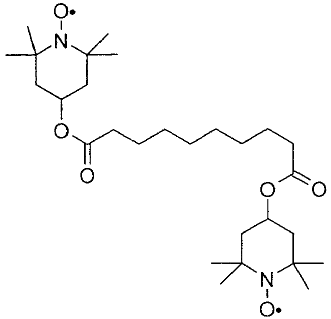 | 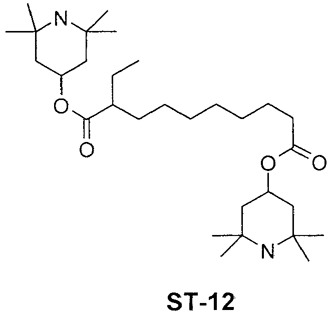 |
| 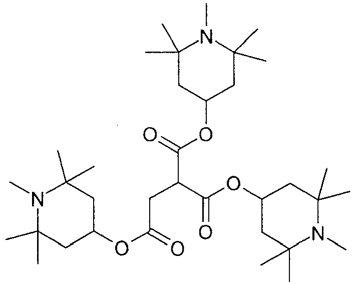 | 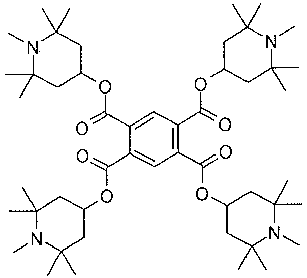 |
| 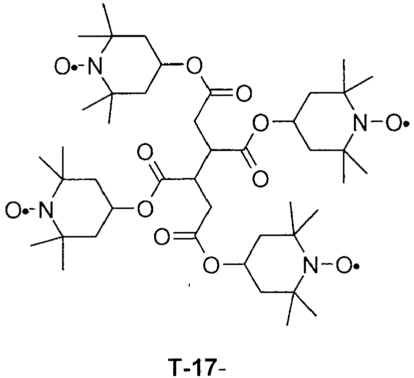 | |
| 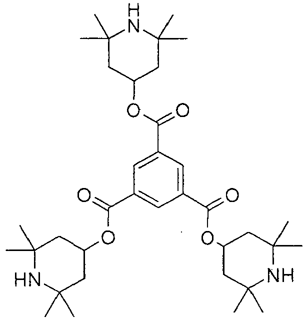 | 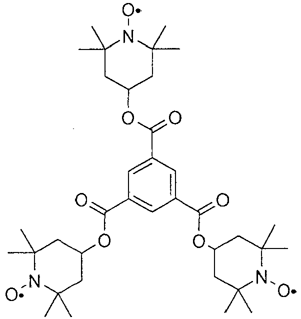 |

**Tabelle D**

| | |
|---|---|
| In der Tabelle D sind Beispielverbindungen zusammengestellt, die in den FK-Medien gemäß der vorliegenden Erfindung vorzugsweise als reaktive mesogene Verbindungen verwendet werden können. Sofern die erfindungsgemäßen Mischungen ein oder mehrere reaktive Verbindungen enthalten, werden sie vorzugsweise in Mengen von 0,01-5 Gew.% eingesetzt. Gegebenenfalls muss für die Polymerisation noch ein Initiator oder ein Gemisch aus zwei oder mehr Initiatoren zugesetzt werden. Der Initiator oder das Initiatorgemisch wird vorzugsweise in Mengen von 0,001-2 Gew.% bezogen auf die Mischung zugesetzt. Ein geeigneter Initiator ist z. B. Irgacure (Fa. BASF) oder Irganox (Fa. BASF). | |
| 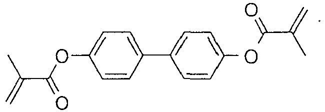 | RM-1 |
| 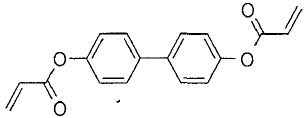 | RM-2 |
| 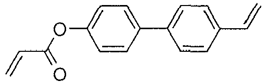 | RM-3 |
| 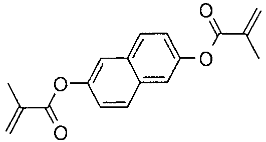 | RM-4 |
| 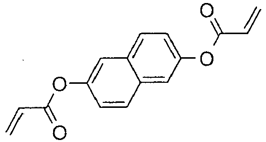 | RM-5 |
| 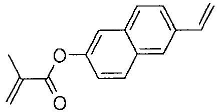 | RM-6 |
| 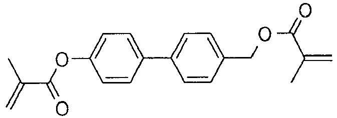 | RM-7 |
| 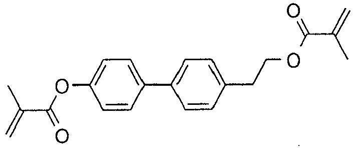 | RM-8 |
| 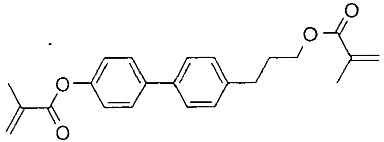 | RM-9 |
| 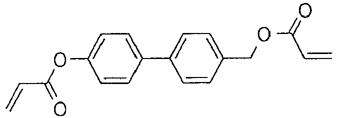 | RM-10 |
| 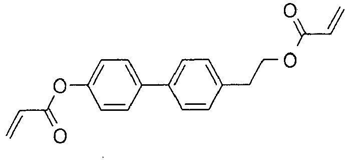 | RM-11 |
| 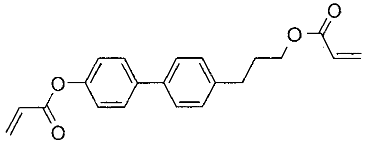 | RM-12 |
| 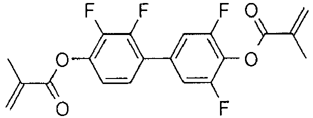 | RM-13 |
| 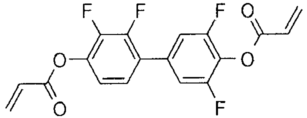 | RM-14 |
| 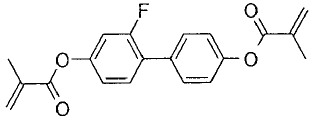 | RM-15 |
| 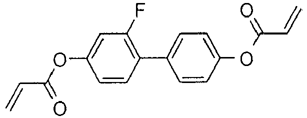 | RM-16 |
| 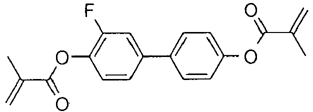 | RM-17 |
| 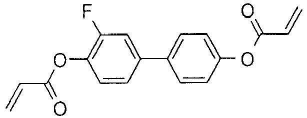 | RM-18 |
| 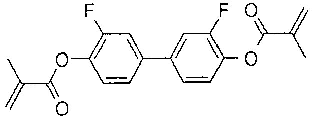 | RM-19 |
| 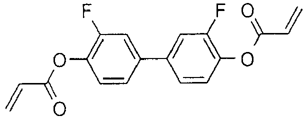 | RM-20 |
| 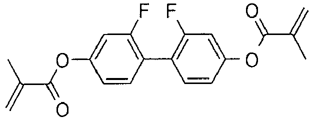 | RM-21 |
| 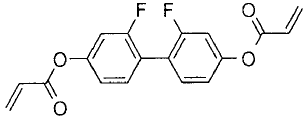 | RM-22 |
| 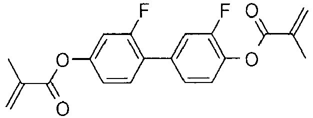 | RM-23 |
| 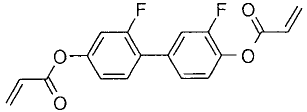 | RM-24 |
| 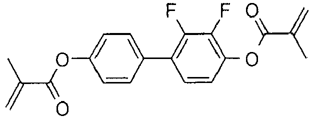 | RM-25 |
| 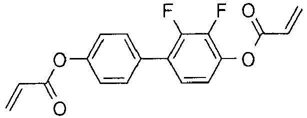 | RM-26 |
| 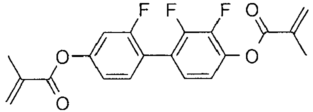 | RM-27 |
| 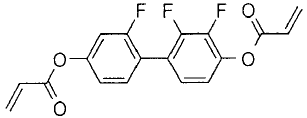 | RM-28 |
| 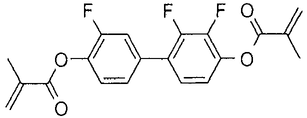 | RM-29 |
| 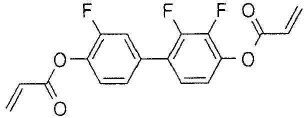 | RM-30 |
| 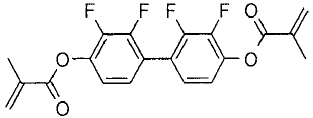 | RM-31 |
| 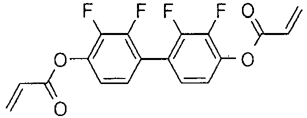 | RM-32 |
| 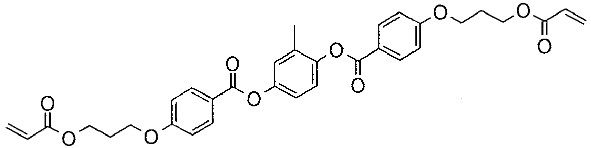 | RM-33 |
| 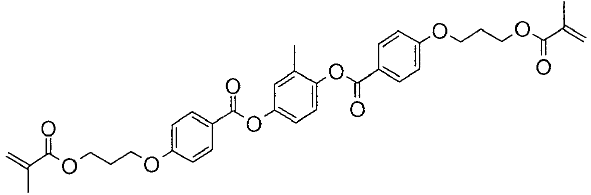 | RM-34 |
| 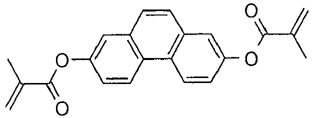 | RM-35 |
| 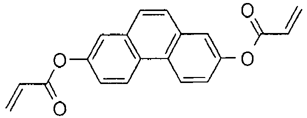 | RM-36 |
| 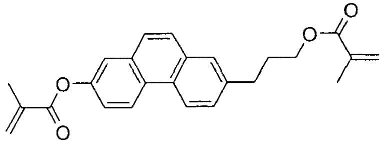 | RM-37 |
| 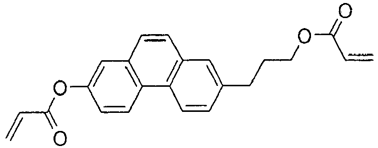 | RM-38 |
| 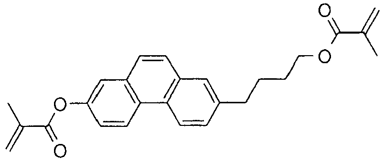 | RM-39 |
| 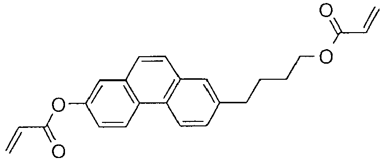 | RM-40 |
| 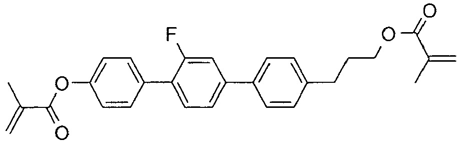 | RM-41 |
| 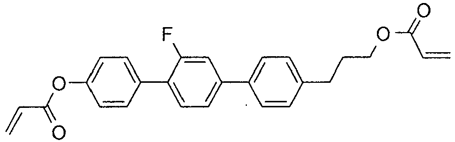 | RM-42 |
| 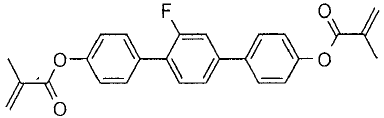 | RM-43 |
| 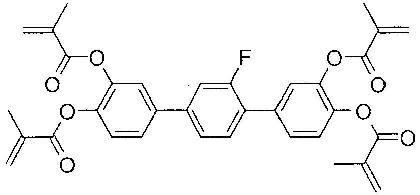 | RM-44 |
| 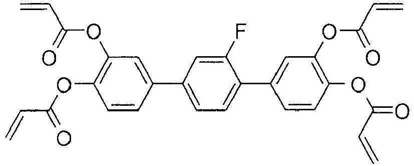 | RM-45 |
| 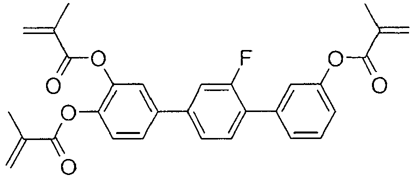 | RM-46 |
| 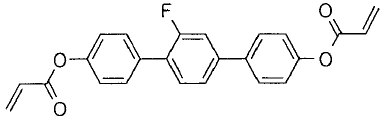 | RM-47 |
| 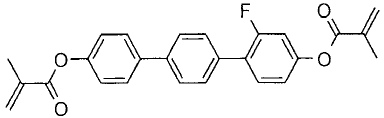 | RM-48 |
| 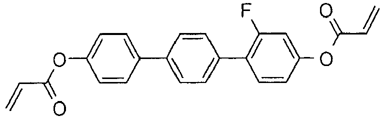 | RM-49 |
| 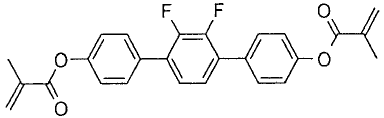 | RM-50 |
| 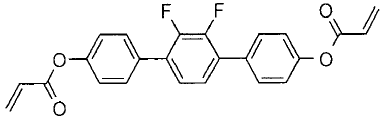 | RM-51 |
| 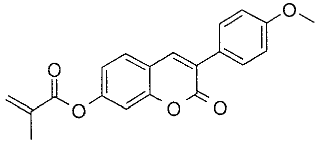 | RM-52 |
| 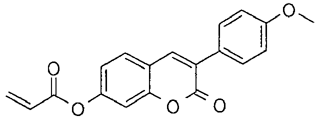 | RM-53 |
| 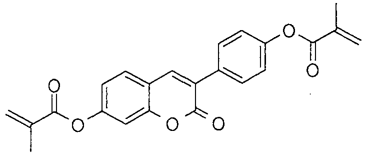 | RM-54 |
| 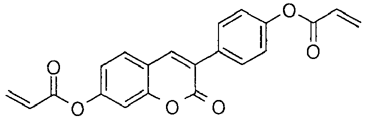 | RM-55 |
| 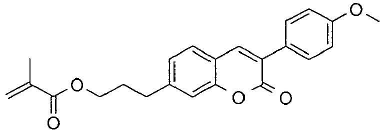 | RM-56 |
| 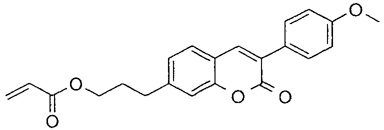 | RM-57 |
| 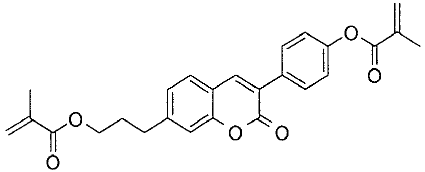 | RM-58 |
| 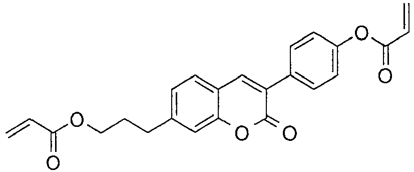 | RM-59 |
| 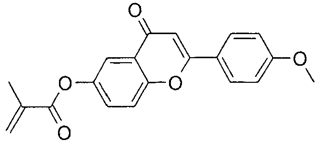 | RM-60 |
| 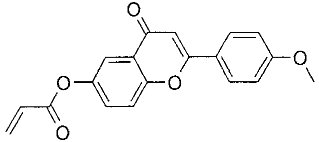 | RM-61 |
| 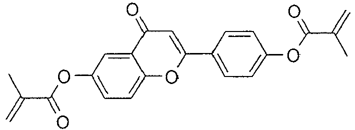 | RM-62 |
| 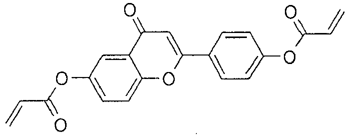 | RM-63 |
| 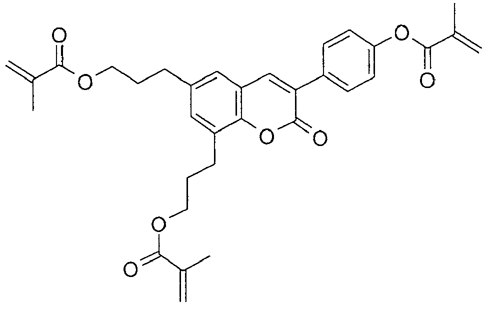 | RM-64 |
| 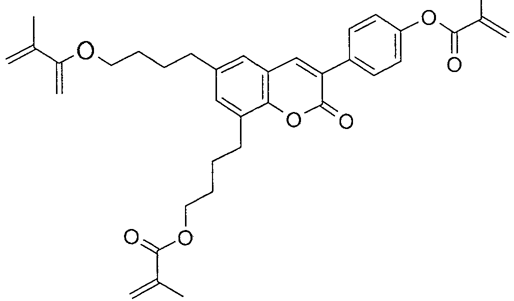 | RM-65 |
| 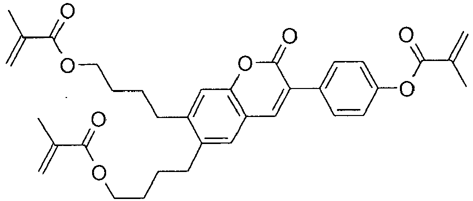 | RM-66 |
| 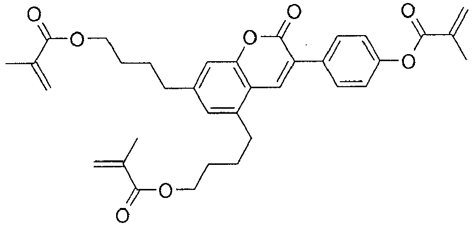 | RM-67 |
| 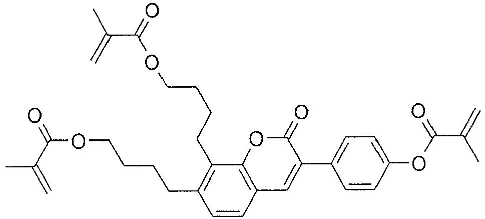 | RM-68 |
| 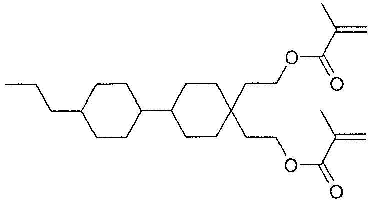 | RM-69 |
| 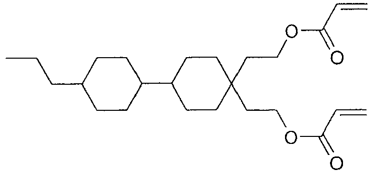 | RM-70 |
| 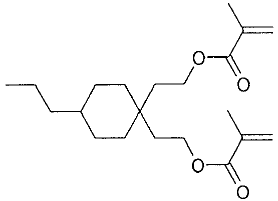 | RM-71 |
| 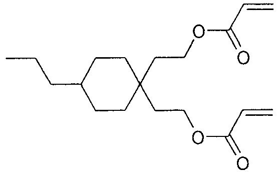 | RM-72 |
| 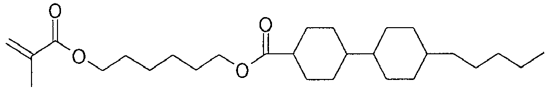 | RM-73 |
| 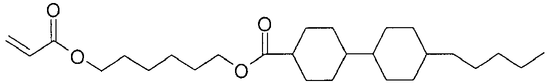 | RM-74 |
| 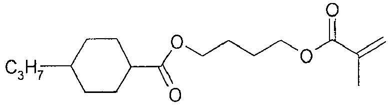 | RM-75 |
| 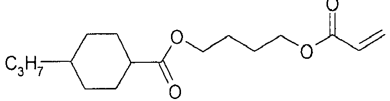 | RM-76 |
| 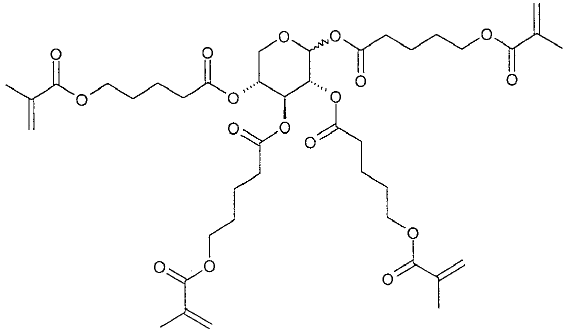 | RM-77 |
| 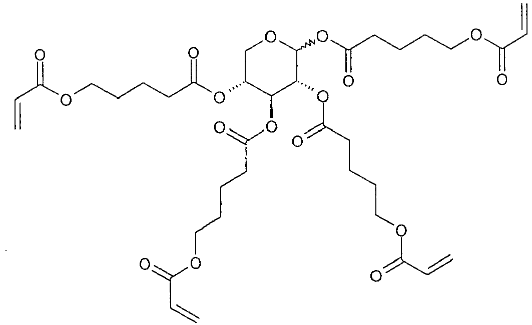 | RM-78 |
| 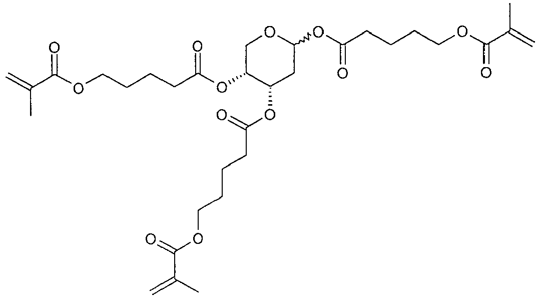 | RM-79 |
| 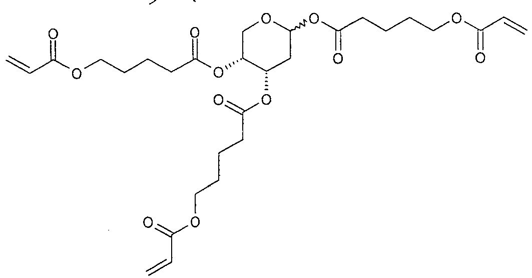 | RM-80 |
| 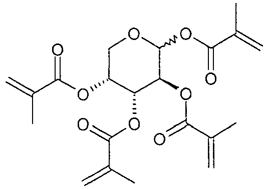 | RM-81 |
| 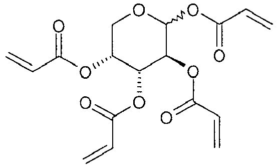 | RM-82 |
| 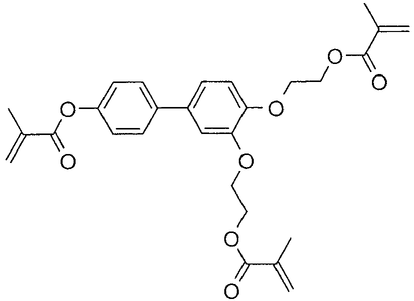 | RM-83 |
| 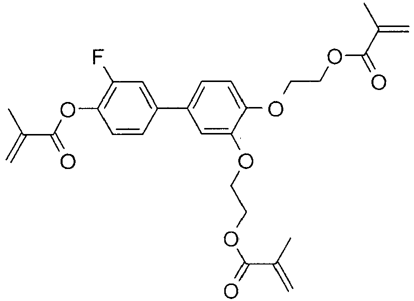 | RM-84 |
| 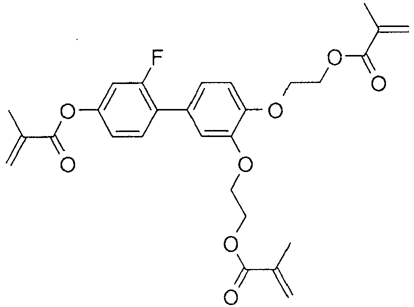 | RM-85 |
| 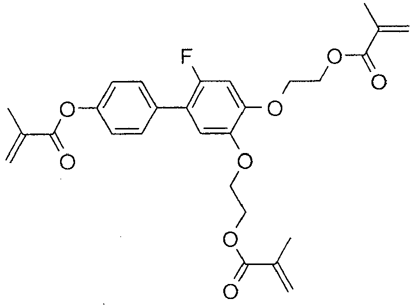 | RM-86 |
| 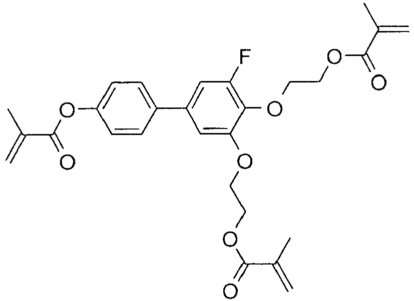 | RM-87 |
| 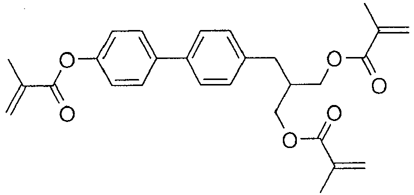 | RM-88 |
| 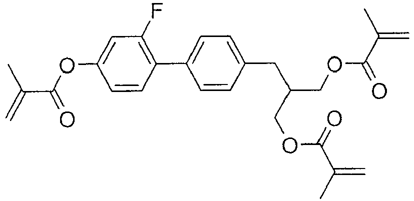 | RM-89 |
| 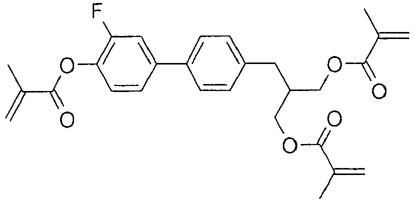 | RM-90 |
| 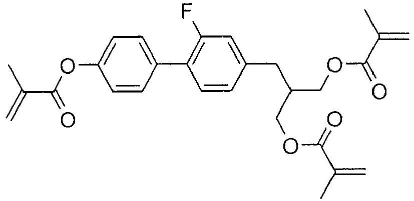 | RM-91 |
| 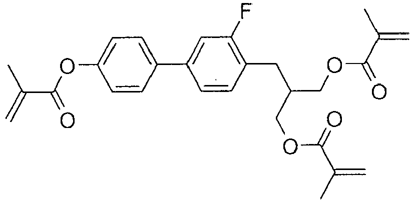 | RM-92 |
| 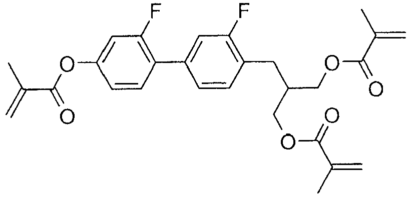 | RM-93 |
| 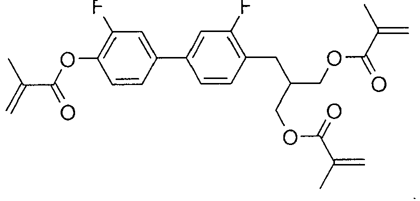 | RM-94 |
| 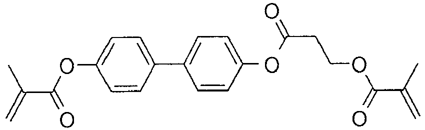 | RM-95 |
| 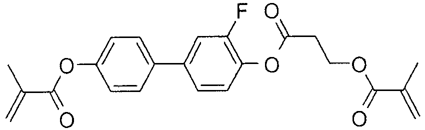 | RM-96 |
| 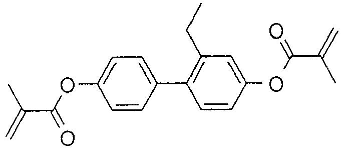 | RM-97 |
| 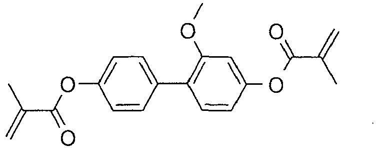 | RM-98 |
| 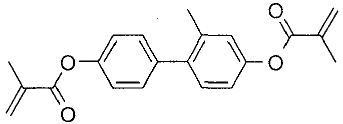 | RM-99 |

In einer bevorzugten Ausführungsform enthalten die erfindungsgemäßen Mischungen eine oder mehrere polymerisierbare Verbindungen, vorzugsweise ausgewählt aus den polymerisierbaren Verbindungen der Formeln RM-1 bis RM-99. Derartige Medien sind insbesondere für PS-VA-, PS-FFS- und PS-IPS-Anwendungen geeignet. Von den in der Tabelle D genannten reaktiven Mesogenen sind die Verbindungen RM-1, RM-2, RM-3, RM-4, RM-5, RM-11, RM-17, RM-35, RM-41, RM-44, RM-62, RM-81, RM-95 und RM-98 insbesondere bevorzugt.

### Ausführungsbeispiele:

Die folgenden Beispiele sollen die Erfindung erläutern, ohne sie zu begrenzen. In den Beispielen bedeuten F. den Schmelzpunkt und K den Klärpunkt einer flüssigkristallinen Substanz in Grad Celsius; Siedetemperaturen sind mit Kp. bezeichnet. Es bedeuten ferner: K: kristallin-fester Zustand, S: smektische Phase (der Index bezeichnet den Phasentyp), N: nematischer Zustand, Ch: cholesterische Phase, I: isotrope Phase, T_{g}: Glastemperatur. Die zwischen zwei Symbolen stehende Zahl gibt die Umwandlungstemperatur in Grad Celsius an.

Als Hostmischung zur Bestimmung der optischen Anisotropie Δn der Verbindungen der Formeln IA wird die Verkaufsmischung ZLI-4792 (Fa. Merck KGaA) verwendet. Für die Bestimmung der dielektrischen Anisotropie Δε wird die Verkaufsmischung ZLI-2857 verwendet. Aus der Änderung der Dielektrizitätskonstanten der Hostmischung nach Zugabe der zu untersuchenden Verbindung und Extrapolation auf 100 % der eingesetzten Verbindung werden die physikalischen Daten der zu untersuchenden Verbindung erhalten. Die zu untersuchende Verbindung wird in Abhängigkeit der Löslichkeit in der Regel zu 10 % in der Hostmischung gelöst.

Sofern nichts anderes angegeben ist, bedeuten Angaben von Teilen oder Prozent Gewichtsteile bzw. Gewichtsprozent.

Vor- und nachstehend bedeuten:
- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Permittivität senkrecht zum Direktor bei 20°C und 1 kHz,
- ε_{∥}: dielektrische Permittivität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität gemessen bei 20 °C [mPa·s], bestimmt nach dem Rotationsverfahren in einem magnetischen Feld,
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: Tieftemperaturstabilität [Low temperature stability (nematische Phase)], bestimmt in Testzellen.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten Tg = Glaszustand, K = kristalliner Zustand, N = nematische Phase, S = smektische Phase und I = isotrope Phase. Die Angaben zwischen diesen Symbolen stellen die Übergangstemperaturen dar.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspannung verwendete Anzeige besteht aus zwei planparallelen Glasträgerplatten im Abstand von 20 µm, welche auf den Innenseiten jeweils ein Elektrodenschicht sowie eine darüberliegende, ungeriebene Orientierungsschicht aus Polyimid aufweisen, die eine homöotrope Randorientierung der Flüssigkristallmoleküle bewirken.

Die zur Messung der Tiltwinkel verwendete Anzeige bzw. Testzelle besteht aus zwei planparallelen Glasträgerplatten im Abstand von 4 µm, welche auf den Innenseiten jeweils eine Elektrodenschicht sowie eine darüberliegende Orientierungsschicht aus Polyimid aufweisen, wobei die beiden Polyimidschichten antiparallel zueinander gerieben werden und eine homöotrope Randorientierung der Flüssigkristallmoleküle bewirken.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei gleichzeitig eine Spannung an die Anzeige angelegt wird (üblicherweise 10 V bis 30 V Wechselstrom, 1 kHz). In den Beispielen wird, falls nicht anders angegeben, eine Quecksilberdampflampe mit 50 mW/cm² verwendet, die Intensität wird mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein niedriger Wert (d.h. eine große Abweichung vom 90°-Winkel) entspricht dabei einem großen Tilt.

Der VHR -Wert wird wie folgt gemessen: Zur FK-Host-Mischung werden 0,3% einer polymerisierbaren monomeren Verbindung zugesetzt, und die dadurch entstandene Mischung in TN-VHR-Testzellen gefüllt (90° gerieben, Orientierungsschicht TN-Polyimid, Schichtdicke d ≈ 6 µm). Der HR-Wert wird nach 5 min bei 100 °C vor und nach 2h UV-Belastung (suntest) bei 1 V, 60 Hz, 64 µs pulse bestimmt (Messgerät: Autronic-Melchers VHRM-105).

Zur Untersuchung der Tieftemperaturstabilität, auch als "LTS" (low temperature stability) bezeichnet, d.h. der Stabilität der FK-Mischung gegen spontane Auskristallisation einzelner Komponenten bei tiefen Temperaturen, werden Fläschchen mit 1 g FK/RM-Mischung bei -10 °C eingelagert und es wird regelmäßig überprüft, ob die Mischungen auskristallisiert waren.

Die sogenannte "HTP" ("helical twisting power") bezeichnet das helikale Verdrillungsvermögen einer optisch aktiven bzw. chiralen Substanz in einerm FK-Medium (in µm). Falls nicht anders angegeben, wird die HTP in der kommerziell erhältlichen nematischen FK-Hostmischung MLD-6260 (Merck KGaA) bei einer Temperatur von 20°C gemessen.

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

Die nachfolgenden Mischungsbeispiele mit negativer dielektrischer Anisotropie sind insbesondere geeignet für Flüssigkristalldisplays, die mindestens eine planare Orientierungsschicht aufweisen, wie z.B. IPS- und FFS-Displays, insbesondere UB-FFS = ultra-bright FFS), sowie für VA-Displays.

### Mischungsbeispiele

### Beispiel M1

Die flüssigkristalline Mischung

| | | | |
|---|---|---|---|
| CC-3-V | 43,00 % | Klärpunkt [°C]: | 74,5 |
| CCY-3-O1 | 4,00 % | Δn [589 nm, 20 °C]: | 0,1008 |
| CCY-3-O2 | 10,00 % | Δε [1 kHz, 20 °C]: | -3,4 |
| CCY-4-O2 | 2,50 % | ε_{∥} [1 kHz, 20 °C]: | 3,6 |
| CPY-2-O2 | 10,00 % | K₁ [pN, 20 °C]: | 13,1 |
| CPY-3-O2 | 10,00 % | K₃ [pN, 20 °C]: | 14,7 |
| CY-3-O2 | 6,50 % | γ₁ [mPa·s, 20 °C]: | 82 |
| PY-3-O2 | 11,00 % | V₀ [20 °C, V]: | 2,19 |
| B(S)-2O-O5 | 3,00 % | | |

enthält zusätzlich 0,01 % ST-3a-1.

### Beispiel M2

Die flüssigkristalline Mischung

| | | | |
|---|---|---|---|
| CC-3-V | 5,00 % | Klärpunkt [°C]: | 75,5 |
| CC-3-V1 | 8,00 % | Δn [589 nm, 20 °C]: | 0,1082 |
| CCH-23 | 11,50 % | Δε [1 kHz, 20 °C]: | -3,3 |
| CCH-34 | 5,00 % | ε_{∥} [1 kHz, 20 °C]: | 3,6 |
| CCP-3-1 | 10,00 % | K₁ [pN, 20 °C]: | 15,2 |
| CCP-3-3 | 5,00 % | K₃ [pN, 20 °C]: | 16,0 |
| CCY-3-O1 | 4,00 % | γ₁ [mPa·s, 20 °C]: | 104 |
| CCY-3-O2 | 11,50 % | V₀ [20 °C, V]: | 2,31 |
| CY-3-O2 | 14,50 % | | |
| PY-3-O2 | 8,00 % | | |
| PYP-2-3 | 8,00 % | | |
| B-2O-O5 | 3,50 % | | |
| B(S)-2O-O5 | 3,50 % | | |
| PP-1-2V1 | 2,50 % | | |

enthält zusätzlich 0,02 % ST-8-1.

### Beispiel M3

Die flüssigkristalline Mischung

| | | | |
|---|---|---|---|
| CC-3-V1 | 8,00 % | Klärpunkt [°C]: | 74,0 |
| CCH-23 | 18,00 % | Δn [589 nm, 20 °C]: | 0,0979 |
| CCH-34 | 3,00 % | Δε [1 kHz, 20 °C]: | -3,4 |
| CCH-35 | 4,00 % | ε_{∥} [1 kHz, 20 °C]: | 3,6 |
| CCP-3-1 | 14,00 % | K₁ [pN, 20 °C]: | 15,0 |
| CCY-3-O2 | 11,00 % | K₃ [pN, 20 °C]: | 16,0 |
| CCY-3-O1 | 2,00 % | γ₁ [mPa·s, 20 °C]: | 100 |
| CPY-3-O2 | 11,00 % | V₀ [20 °C, V]: | 2,28 |
| CY-3-O2 | 10,00 % | | |
| PY-3-O2 | 12,00 % | | |
| Y-4O-O4 | 4,00 % | | |
| B(S)-2O-O5 | 3,00 % | | |

enthält zusätzlich 0,02 % ST-12.

### Beispiel M4

Die flüssigkristalline Mischung

| | | | |
|---|---|---|---|
| CC-3-V | 46,00 % | Klärpunkt [°C]: | 72,5 |
| CCY-3-O2 | 11,00 % | Δn [589 nm, 20 °C]: | 0,1009 |
| CCY-4-O2 | 2,50 % | Δε [1 kHz, 20 °C]: | -3,5 |
| CPY-2-O2 | 10,00 % | ε_{∥} [1 kHz, 20 °C]: | 3,6 |
| CPY-3-O2 | 10,00 % | K₁ [pN, 20 °C]: | 13,1 |
| CY-3-O2 | 5,00 % | K₃ [pN, 20 °C]: | 14,2 |
| PY-3-O2 | 8,50 % | γ₁ [mPa·s, 20 °C]: | 78 |
| B-2O-O5 | 4,00 % | V₀ [20 °C, V]: | 2,13 |
| B(S)-2O-O5 | 3,00 % | | |

enthält zusätzlich 0,02 % ST-8-1 und 0,01 % ST-3a-1.

### Beispiel M5

Die flüssigkristalline Mischung

| | | | |
|---|---|---|---|
| CC-3-V | 41,50 % | Klärpunkt [°C]: | 75,0 |
| CCY-3-O1 | 5,00 % | Δn [589 nm, 20 °C]: | 0,1016 |
| CCY-3-O2 | 11,00 % | Δε [1 kHz, 20 °C]: | -3,4 |
| CCY-4-O2 | 4,00 % | ε_{∥} [1 kHz, 20 °C]: | 3,6 |
| CPY-2-O2 | 5,50 % | K₁ [pN, 20°C]: | 13,3 |
| CPY-3-O2 | 11,00 % | K₃ [pN, 20°C]: | 14,8 |
| CY-3-O2 | 5,00 % | γ₁ [mPa·s, 20 °C]: | 88 |
| PY-3-O2 | 12,00 % | V₀ [20 °C, V]: | 2,20 |
| B(S)-5-O3 | 5,00 % | | |

enthält zusätzlich 0,02 % ST-3a-1 .

### Beispiel M6

Die flüssigkristalline Mischung

| | | | |
|---|---|---|---|
| CC-3-V | 37,00 % | Klärpunkt [°C]: | 79,0 |
| CY-3-O2 | 8,50 % | Δn [589 nm, 20 °C]: | 0,1062 |
| CCY-3-O1 | 6,00 % | Δε [1 kHz, 20 °C]: | -3,9 |
| CCY-3-O2 | 10,00 % | ε_{∥} [1 kHz, 20 °C]: | 3,7 |
| CCY-4-O2 | 7,00 % | K₁ [pN,20°C]: | 13,8 |
| CPY-2-O2 | 3,50 % | K₃ [pN, 20 °C]: | 15,5 |
| CPY-3-O2 | 10,00 % | γ₁ [mPa·s, 20 °C]: | 101 |
| PYP-2-3 | 4,50 % | V₀ [20 °C, V]: | 2,12 |
| PY-3-O2 | 9,50 % | | |
| B(S)-2O-O5 | 4,00 % | | |

enthält zusätzlich 0,025 % ST-3a-1.

### Beispiel M7

Die flüssigkristalline Mischung

| | | | |
|---|---|---|---|
| CC-3-V | 41,00 % | Klärpunkt [°C]: | 81,0 |
| CY-3-O2 | 7,00 % | Δn [589 nm, 20 °C]: | 0,1074 |
| CCY-3-O1 | 6,00 % | Δε [1 kHz, 20 °C]: | -3,8 |
| CCY-3-O2 | 10,50 % | ε_{∥} [1 kHz, 20 °C]: | 3,7 |
| CPY-2-O2 | 10,00 % | K₁ [pN, 20 °C]: | 14,0 |
| CPY-3-O2 | 11,00 % | K₃ [pN, 20°C]: | 15,5 |
| PYP-2-3 | 4,00 % | γ₁ [mPa·s, 20 °C]: | 97 |
| PY-3-O2 | 3,50 % | V₀ [20 °C, V]: | 2,13 |
| B-2O-O5 | 4,00 % | | |
| B(S)-2O-O5 | 3,00 % | | |

enthält zusätzlich 0,025 % ST-3a-1.

### Beispiel M8

Die flüssigkristalline Mischung

| | | | |
|---|---|---|---|
| CY-3-O2 | 11,00 % | Klärpunkt [°C]: | 86,0 |
| CY-3-O4 | 7,00 % | Δn [589 nm, 20 °C]: | 0,1020 |
| PY-3-O2 | 3,00 % | Δε [1 kHz, 20 °C]: | -4,9 |
| CCY-3-O1 | 7,50 % | ε_{∥} [1 kHz, 20 °C]: | 3,8 |
| CCY-3-O2 | 11,00 % | K₁ [pN, 20 °C]: | 14,4 |
| CCY-4-O2 | 10,00 % | K₃ [pN, 20 °C]: | 16,5 |
| CPY-2-O2 | 6,50 % | γ₁ [mPa·s, 20 °C]: | 138 |
| CPY-3-O2 | 11,00 % | V₀ [20 °C, V]: | 1,94 |
| CC-3-V | 29,00 % | | |
| B(S)-2O-O5 | 4,00 % | | |

enthält zusätzlich 0,025 % ST-3a-1.

### Beispiel M9

Zur Herstellung einer PS (polymer stabilized)-Mischung, z.B. für PS-IPS-, PS-VA-, PS-FFS-Anwendungen, werden 99,7 % der Mischung gemäß Beispiel M1 mit 0,3 % der polymerisierbaren Verbindung der Formel 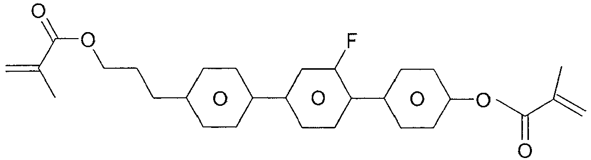 versetzt.

### Beispiel M10

Zur Herstellung einer PS (polymer stabilized)-Mischung, z.B. für PS-IPS-, PS-VA-, PS-FFS-Anwendungen, werden 99,75 % der Mischung gemäß Beispiel M1 mit 0,25 % der polymerisierbaren Verbindung der Formel 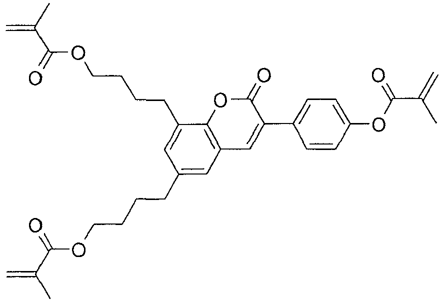 versetzt.

### Beispiel M11

Zur Herstellung einer PS (polymer stabilized)-Mischung, z.B. für PS-IPS-, PS-VA, PS-FFS-Anwendungen, werden 99,8 % der Mischung gemäß Beispiel M2 mit 0,2 % der polymerisierbaren Verbindung der Formel 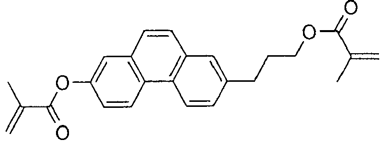 versetzt.

### Beispiel M12

Zur Herstellung einer PS (polymer stabilized)-Mischung, z.B. für PS-IPS-, PS-VA-, PS-FFS-Anwendungen, werden 99,75 % der Mischung gemäß Beispiel M4 mit 0,25 % der polymerisierbaren Verbindung der Formel 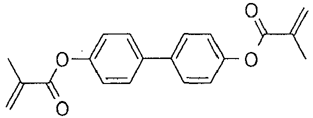 versetzt.

### Beispiel M13

Zur Herstellung einer PS (polymer stabilized)-Mischung, z.B. für PS-IPS-, PS-VA-, PS-FFS-Anwendungen, werden 99,75 % der Mischung gemäß Beispiel M4 mit 0,25 % der polymerisierbaren Verbindung der Formel 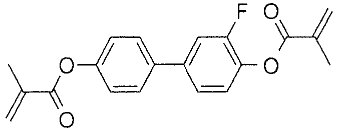 versetzt.

### Beispiel M14

Zur Herstellung einer PS (polymer stabilized)-Mischung, z.B. für PS-IPS-, PS-VA-, PS-FFS-Anwendungen werden 99,75 % der Mischung gemäß Beispiel M1 mit 0,25 % der polymerisierbaren Verbindung der Formel 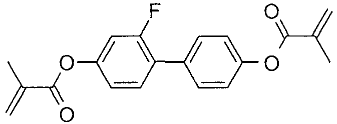 versetzt.

### Beispiel M15

Zur Herstellung einer PS (polymer stabilized)-Mischung, z.B. für PS-IPS-, PS-VA-, PS-FFS-Anwendungen, werden 99,8 % der Mischung gemäß Beispiel M1 mit 0,2 % der polymerisierbaren Verbindung der Formel 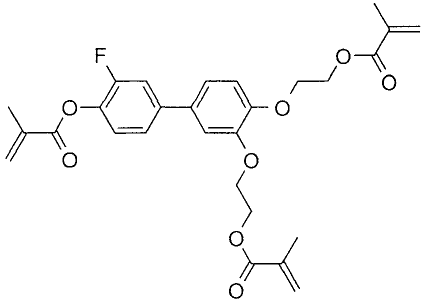 versetzt.

### Beispiel M16

Zur Herstellung einer PS (polymer stabilized)-Mischung, z.B. für PS-IPS-, PS-VA-, PS-FFS-Anwendungen, werden 99,75 % der Mischung gemäß Beispiel M5 mit 0,25 % der polymerisierbaren Verbindung der Formel 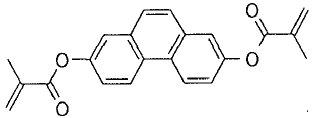 versetzt.

### Beispiel M17

Die flüssigkristalline Mischung

| | | | |
|---|---|---|---|
| CC-3-V1 | 8,00 % | Klärpunkt [°C]: | 75,0 |
| CCH-23 | 13,50 % | Δn [589 nm, 20°C]: | 0,1085 |
| CCH-34 | 6,00 % | Δε [1 kHz, 20°C]: | -3,4 |
| CCP-3-1 | 12,00 % | ε_{∥} [1 kHz, 20°C]: | 3,5 |
| CCP-3-3 | 7,00 % | ε_{⊥} [1 kHz, 20°C]: | 6,9 |
| CCY-3-O2 | 8,50 % | K₁ [pN, 20°C]: | 15,5 |
| CY-3-O2 | 20,50 % | K₃ [pN, 20°C]: | 16,0 |
| PY-3-O2 | 3,50 % | γ₁ [mPa·s, 20°C]: | 102 |
| PYP-2-3 | 8,00 % | V₀ [20°C, V]: | 2,31 |
| B(S)-2O-O5 | 4,00 % | | |
| B(S)-2O-O4 | 3,00 % | | |
| B(S)-2O-O6 | 3,00 % | | |
| PP-1-2V1 | 3,00 % | | |

enthält zusätzlich 0,025 % ST-3a-1.

### Beispiel M18

Die flüssigkristalline Mischung

| | | | |
|---|---|---|---|
| CC-3-V1 | 8,00 % | Klärpunkt [°C]: | 74,5 |
| CCH-23 | 14,50 % | Δn [589 nm, 20°C]: | 0,1081 |
| CCH-34 | 6,00 % | Δε [1 kHz, 20°C]: | -3,3 |
| CCP-3-1 | 12,00 % | ε_{∥} [1 kHz, 20°C]: | 3,6 |
| CCP-3-3 | 7,00 % | ε_{⊥} [1 kHz, 20°C]: | 6,9 |
| CCY-3-O2 | 9,00 % | K₁ [pN, 20°C]: | 15,3 |
| CY-3-O2 | 18,50 % | K₃ [pN, 20°C]: | 15,8 |
| PY-3-O2 | 4,00 % | γ₁ [mPa·s, 20°C]: | 101 |
| PYP-2-3 | 8,00 % | V₀ [20°C, V]: | 2,31 |
| B-2O-O5 | 3,00 % | | |
| B(S)-2O-O5 | 3,00 % | | |
| B(S)-2O-O4 | 2,00 % | | |
| B(S)-2O-O6 | 2,00 % | | |
| PP-1-2V1 | 3,00 % | | |

enthält zusätzlich 0,03 % ST-8-1.

### Beispiel M19

Die flüssigkristalline Mischung

| | | | |
|---|---|---|---|
| CC-3-V1 | 8,00 % | Klärpunkt [°C]: | 72,5 |
| CCH-23 | 11,50 % | Δn [589 nm, 20°C]: | 0,1082 |
| CCH-34 | 5,00 % | Δε [1 kHz, 20°C]: | -3,3 |
| CCP-3-1 | 14,50 % | ε_{∥} [1 kHz, 20°C]: | 3,7 |
| CCP-3-3 | 10,00 % | ε_{⊥} [1 kHz, 20°C]: | 7,0 |
| CCY-3-02 | 10,00 % | K₁ [pN, 20°C]: | 15,3 |
| CY-3-O2 | 14,00 % | K₃ [pN, 20°C]: | 15,7 |
| PY-3-O2 | 7,00 % | γ₁ [mPa·s, 20°C]: | 105 |
| PGIY-2-O4 | 3,50 % | V₀ [20°C, V]: | 2,28 |
| B-2O-O5 | 4,00 % | LTS [bulk, -20 °C]: | > 1000 h |
| B(S)-2O-O5 | 3,50 % | | |
| B-3-O2 | 4,00 % | | |
| PP-1-3 | 5,00 % | | |

enthält zusätzlich 0,03 % ST-12.

### Beispiel M20

Die flüssigkristalline Mischung

| | | | |
|---|---|---|---|
| CC-3-V | 36,50 % | Klärpunkt [°C]: | 74,0 |
| CC-3-V1 | 7,00 % | Δn [589 nm, 20°C]: | 0,1088 |
| CCY-3-O1 | 7,50 % | Δε [1 kHz, 20°C]: | -3,6 |
| CCY-3-O2 | 11,00 % | ε_{∥} [1 kHz, 20°C]: | 3,7 |
| CCY-4-O2 | 1,50 % | ε_{⊥} [1 kHz, 20°C]: | 7,3 |
| CLY-3-O2 | 5,00 % | K₁ [pN, 20°C]: | 14,4 |
| PGIY-2-O4 | 5,00 % | K₃ [pN, 20°C]: | 15,0 |
| PY-3-O2 | 12,00 % | γ₁ [mPa·s, 20°C]: | 85 |
| PY-1-O4 | 4,00% | V₀ [20°C, V]: | 2,15 |
| PYP-2-3 | 3,00 % | LTS [bulk, -20 °C]: | > 1000 h |
| PP-1-2V1 | 0,50 % | | |
| B(S)-2O-O5 | 4,00 % | | |
| B(S)-2O-O4 | 3,00 % | | |

enthält zusätzlich 0,03 % ST-12.

### Beispiel M21

Die flüssigkristalline Mischung

| | | | |
|---|---|---|---|
| CC-3-V | 36,50 % | Klärpunkt [°C]: | 75,0 |
| CC-3-V1 | 7,00 % | Δn [589 nm, 20°C]: | 0,1088 |
| CCY-3-O1 | 7,50 % | Δε [1 kHz, 20°C]: | -3,7 |
| CCY-3-O2 | 11,00 % | ε_{∥} [1 kHz, 20°C]: | 3,7 |
| CCY-4-O2 | 2,50 % | ε_{⊥} [1 kHz, 20°C]: | 7,3 |
| CLY-3-O2 | 5,00 % | K₁ [pN, 20°C]: | 14,7 |
| PGIY-2-O4 | 5,00 % | K₃ [pN, 20°C]: | 15,2 |
| PY-3-O2 | 12,00 % | γ₁ [mPa·s, 20°C]: | 86 |
| PY-1-O4 | 1,00 % | V₀ [20°C, V]: | 2,15 |
| PYP-2-3 | 3,00 % | | |
| PP-1-2V1 | 1,50 % | | |
| B-2O-O5 | 4,00 % | | |
| B(S)-2O-O4 | 4,00 % | | |

enthält zusätzlich 0,03 % ST-12.

### Beispiel M22

Die flüssigkristalline Mischung

| | | | |
|---|---|---|---|
| CC-3-V | 36,50 % | Klärpunkt [°C]: | 75,0 |
| CC-3-V1 | 7,00 % | Δn [589 nm, 20°C]: | 0,1083 |
| CCY-3-O1 | 7,50 % | Δε [1 kHz, 20°C]: | -3,6 |
| CCY-3-O2 | 11,00 % | ε_{∥} [1 kHz, 20°C]: | 3,7 |
| CCY-4-O2 | 2,50 % | ε_{⊥} [1 kHz, 20°C]: | 7,3 |
| CLY-3-O2 | 5,00 % | K₁ [pN, 20°C]: | 14,5 |
| PGIY-2-O4 | 5,00 % | K₃ [pN, 20°C]: | 15,2 |
| PY-3-O2 | 12,00 % | γ₁ [mPa·s, 20°C]: | 86 |
| PY-1-O4 | 1,00 % | V₀ [20°C, V]: | 2,16 |
| PYP-2-3 | 3,00 % | | |
| PP-1-2V1 | 1,50 % | | |
| B-2O-O5 | 4,00 % | | |
| B(S)-2O-O5 | 4,00 % | | |

enthält zusätzlich 0,015 % ST-8-1.

### Beispiel M23

Die flüssigkristalline Mischung

| | | | |
|---|---|---|---|
| CC-3-V | 41,50 % | Klärpunkt [°C]: | 75,0 |
| CC-3-V1 | 7,00 % | Δn [589 nm, 20°C]: | 0,0985 |
| CCY-3-O1 | 8,00 % | Δε [1 kHz, 20°C]: | -3,2 |
| CCY-3-O2 | 11,00 % | ε_{∥} [1 kHz, 20°C]: | 3,6 |
| CCY-4-O2 | 4,50 % | ε_{⊥} [1 kHz, 20°C]: | 6,8 |
| CY-3-O2 | 3,50 % | K₁ [pN, 20°C]: | 13,8 |
| PY-3-O2 | 14,50 % | K₃ [pN, 20°C]: | 15,0 |
| B(S)-2O-O5 | 5,00 % | γ₁ [mPa·s, 20°C]: | 80 |
| PGIY-2-O4 | 5,00 % | V₀ [20°C, V]: | 2,29 |
| | | LTS [bulk, -25 °C]: | > 1000 h |

enthält zusätzlich 0,015 % ST-9-1.

### Beispiel M24

Die flüssigkristalline Mischung

| | | | |
|---|---|---|---|
| CC-3-V1 | 8,00 % | Klärpunkt [°C]: | 74,0 |
| CCH-23 | 18,00 % | Δn [589 nm, 20°C]: | 0,0979 |
| CCH-34 | 3,00 % | Δε [1 kHz, 20°C]: | -3,4 |
| CCH-35 | 4,00 % | ε_{∥} [1 kHz, 20°C]: | 3,6 |
| CCP-3-1 | 14,00 % | ε_{⊥} [1 kHz, 20°C]: | 7,0 |
| CCY-3-O2 | 11,00 % | K₁ [pN, 20°C]: | 15,0 |
| CCY-3-O1 | 2,00 % | K₃ [pN, 20°C]: | 16,0 |
| CPY-3-O2 | 11,00 % | γ₁ [mPa·s, 20°C]: | 100 |
| CY-3-O2 | 10,00 % | V₀ [20°C, V]: | 2,28 |
| PY-3-O2 | 12,00 % | | |
| Y-4O-O4 | 4,00 % | | |
| B(S)-2O-O5 | 3,00 % | | |

enthält zusätzlich 0,03 % ST-2a-1.

### Beispiel M25

Die flüssigkristalline Mischung

| | | | |
|---|---|---|---|
| CC-3-V1 | 8,50 % | Klärpunkt [°C]: | 74,5 |
| CCH-23 | 18,00 % | Δn [589 nm, 20°C]: | 0,0986 |
| CCH-35 | 5,50 % | Δε [1 kHz, 20°C]: | -3,4 |
| CCP-3-1 | 13,00 % | ε_{∥} [1 kHz, 20°C]: | 3,6 |
| CCY-3-O1 | 5,00 % | ε_{⊥} [1 kHz, 20°C]: | 6,9 |
| CCY-3-O2 | 10,00 % | K₁ [pN, 20°C]: | 15,3 |
| CPY-3-O2 | 10,50 % | K₃ [pN, 20°C]: | 15,8 |
| CY-3-O2 | 10,00 % | γ₁ [mPa·s, 20°C]: | 95 |
| Y-4O-O4 | 6,00 % | V₀ [20°C, V]: | 2,30 |
| B(S)-2O-O5 | 4,00 % | | |
| PP-1-3 | 6,40 % | | |
| B(S)-2O-O4 | 3,00 % | | |

enthält zusätzlich 0,03 % ST-2a-1 und 0,02 % ST-3a-1.

### Beispiel M26

Die flüssigkristalline Mischung

| | | | |
|---|---|---|---|
| CC-3-V1 | 8,00 % | Klärpunkt [°C]: | 73,5 |
| CCH-23 | 18,00 % | Δn [589 nm, 20°C]: | 0,0979 |
| CCH-35 | 5,00 % | Δε [1 kHz, 20°C]: | -3,3 |
| CCH-34 | 1,00 % | ε_{∥} [1 kHz, 20°C]: | 3,6 |
| CCP-3-1 | 13,00 % | ε_{⊥} [1 kHz, 20°C]: | 6,9 |
| CCY-3-O1 | 5,00 % | K₁ [pN, 20°C]: | 15,2 |
| CCY-3-O2 | 10,00 % | K₃ [pN, 20°C]: | 15,7 |
| CPY-3-O2 | 10,00 % | γ₁ [mPa·s, 20°C]: | 95 |
| CY-3-O2 | 11,00 % | V₀ [20°C, V]: | 2,30 |
| Y-4O-O4 | 5,50 % | | |
| B(S)-2O-O5 | 3,00 % | | |
| PP-1-3 | 6,50 % | | |
| B(S)-2O-O4 | 2,00 % | | |
| B(S)-2O-O6 | 2,00 % | | |

enthält zusätzlich 0,01 % ST-3b-1.

### Beispiel M27

Die flüssigkristalline Mischung

| | | | |
|---|---|---|---|
| CC-3-V | 42,00 % | Klärpunkt [°C]: | 74,0 |
| CCY-3-O2 | 11,00 % | Δn [589 nm, 20°C]: | 0,1008 |
| CPY-2-O2 | 10,00 % | Δε [1 kHz, 20°C]: | -3,7 |
| CPY-3-O2 | 11,00 % | ε_{∥} [1 kHz, 20°C]: | 3,7 |
| CY-3-O3 | 17,00 % | ε_{⊥} [1 kHz, 20°C]: | 7,3 |
| PGIY-2-O4 | 5,00 % | K₁ [pN, 20°C]: | 12,8 |
| B(S)-2O-O5 | 4,00 % | K₃ [pN, 20°C]: | 14,6 |
| | | γ₁ [mPa·s, 20°C]: | 86 |
| | | V₀ [20°C, V]: | 2,11 |

enthält zusätzlich 0,02 % ST-8-1.

### Beispiel M28

Die flüssigkristalline Mischung

| | | | |
|---|---|---|---|
| CC-3-V | 42,00 % | Klärpunkt [°C]: | 73,0 |
| CCY-3-O2 | 11,00 % | Δn [589 nm, 20°C]: | 0,1004 |
| CPY-2-O2 | 9,00 % | Δε [1 kHz, 20°C]: | -3,7 |
| CPY-3-O2 | 11,00 % | ε_{∥} [1 kHz, 20°C]: | 3,7 |
| PGIY-2-O4 | 5,50 % | ε_{⊥} [1 kHz, 20°C]: | 7,3 |
| CY-3-O2 | 17,50 % | K₁ [pN, 20°C]: | 12,7 |
| B(S)-2O-O5 | 2,00 % | K₃ [pN, 20°C]: | 14,5 |
| B(S)-2O-O4 | 2,00 % | γ₁ [mPa·s, 20°C]: | 85 |
| | | V₀ [20°C, V]: | 2,10 |

enthält zusätzlich 0,02 % ST-8-1.

### Beispiel M29

Die flüssigkristalline Mischung

| | | | |
|---|---|---|---|
| CC-3-V | 44,50 % | Klärpunkt [°C]: | 74,0 |
| CCY-3-O2 | 11,00 % | Δn [589 nm, 20°C]: | 0,1010 |
| CPY-2-O2 | 9,50 % | Δε [1 kHz, 20°C]: | -3,7 |
| CPY-3-O2 | 11,00 % | ε_{∥} [1 kHz, 20°C]: | 3,7 |
| CY-3-O2 | 13,00 % | ε_{⊥} [1 kHz, 20°C]: | 7,4 |
| PGIY-2-O4 | 4,00 % | K₁ [pN, 20°C]: | 13,0 |
| B-2O-O5 | 4,00 % | K₃ [pN, 20°C]: | 14,5 |
| B-2O-O4 | 3,00 % | γ₁ [mPa·s, 20°C]: | 83 |
| | | V₀ [20°C, V]: | 2,09 |

enthält zusätzlich 0,02 % ST-8-1.

### Beispiel M30

Die flüssigkristalline Mischung

| | | | |
|---|---|---|---|
| CC-3-V | 42,00 % | Klärpunkt [°C]: | 80,5 |
| CY-3-O2 | 11,50 % | Δn [589 nm, 20°C]: | 0,1070 |
| CCY-3-O2 | 10,00 % | Δε [1 kHz, 20°C]: | -3,7 |
| CCY-4-O2 | 4,00 % | ε_{∥} [1 kHz, 20°C]: | 3,6 |
| CPY-2-O2 | 6,50 % | ε_{⊥} [1 kHz, 20°C]: | 7,4 |
| CPY-3-O2 | 11,00 % | K₁ [pN, 20°C]: | 13,9 |
| PGIY-2-O4 | 5,00 % | K₃ [pN, 20°C]: | 15,2 |
| PYP-2-3 | 3,00 % | γ₁ [mPa·s, 20°C]: | 94 |
| B(S)-2O-O5 | 4,00 % | V₀ [20°C, V]: | 2,14 |
| B(S)-2O-O4 | 3,00 % | | |

enthält zusätzlich 0,02 % ST-8-1.

### Beispiel M31

Die flüssigkristalline Mischung

| | | | |
|---|---|---|---|
| CC-3-V | 32,50 % | Klärpunkt [°C]: | 80,5 |
| CCP-3-1 | 6,50 % | Δn [589 nm, 20°C]: | 0,1031 |
| CCY-3-O2 | 10,00 % | Δε [1 kHz, 20°C]: | -4,4 |
| CLY-3-O2 | 5,00 % | ε_{∥} [1 kHz, 20°C]: | 3,8 |
| CLY-3-O3 | 4,00 % | ε_{⊥} [1 kHz, 20°C]: | 8,2 |
| CPY-3-O2 | 9,50 % | K₁ [pN, 20°C]: | 14,4 |
| CY-3-O2 | 21,50 % | K₃ [pN, 20°C]: | 16,6 |
| PGIY-2-O4 | 4,00 % | γ₁ [mPa·s, 20°C]: | 109 |
| B(S)-2O-O5 | 3,00 % | V₀ [20°C, V]: | 2,05 |
| B(S)-2O-O4 | 4,00 % | | |

enthält zusätzlich 0,02 % ST-12.

### Beispiel M32

Die flüssigkristalline Mischung

| | | | |
|---|---|---|---|
| CC-3-V | 32,00 % | Klärpunkt [°C]: | 81,0 |
| CCP-3-1 | 8,00 % | Δn [589 nm, 20°C]: | 0,1031 |
| CCY-3-O2 | 10,00 % | Δε [1 kHz, 20°C]: | -4,5 |
| CLY-3-O2 | 5,00 % | ε_{∥} [1 kHz, 20°C]: | 3,8 |
| CLY-3-O3 | 3,00 % | ε_{⊥} [1 kHz, 20°C]: | 8,2 |
| CPY-3-O2 | 10,00 % | K₁ [pN, 20°C]: | 14,8 |
| CY-3-O2 | 21,00 % | K₃ [pN, 20°C]: | 16,9 |
| PGIY-2-O4 | 3,00 % | γ₁ [mPa·s, 20°C]: | 110 |
| B-2O-O5 | 2,00 % | V₀ [20°C, V]: | 2,05 |
| B(S)-2O-O5 | 2,00 % | | |
| B(S)-2O-O4 | 2,00 % | | |
| B(S)-2O-O6 | 2,00 % | | |

enthält zusätzlich 0,02 % ST-8-1.

### Beispiel M33

Die flüssigkristalline Mischung

| | | | |
|---|---|---|---|
| CC-3-V | 33,00 % | Klärpunkt [°C]: | 80,5 |
| CCP-3-1 | 6,00 % | Δn [589 nm, 20°C]: | 0,1031 |
| CCY-3-O2 | 10,50 % | Δε [1 kHz, 20°C]: | -4,5 |
| CLY-3-O2 | 5,00 % | ε_{∥} [1 kHz, 20°C]: | 3,8 |
| CLY-3-O3 | 4,00 % | ε_{⊥} [1 kHz, 20°C]: | 8,2 |
| CPY-3-O2 | 10,00 % | K₁ [pN, 20°C]: | 14,3 |
| CY-3-O2 | 20,50 % | K₃ [pN, 20°C]: | 16,6 |
| PGIY-2-O4 | 4,00 % | γ₁ [mPa·s, 20°C]: | 109 |
| B-2O-O5 | 2,00 % | V₀ [20°C, V]: | 2,04 |
| B(S)-2O-O5 | 2,00 % | | |
| B(S)-2O-O4 | 3,00 % | | |

enthält zusätzlich 0,02 % ST-9-1 und 0,02 % ST-3b-1.

### Beispiel M34

Die flüssigkristalline Mischung

| | | | |
|---|---|---|---|
| CC-3-V | 33,00 % | Klärpunkt [°C]: | 80,0 |
| CCP-3-1 | 6,50 % | Δn [589 nm, 20°C]: | 0,1030 |
| CCY-3-O2 | 10,50 % | Δε [1 kHz, 20°C]: | -4,4 |
| CLY-3-O2 | 5,00 % | ε_{∥} [1 kHz, 20°C]: | 3,8 |
| CLY-3-O3 | 3,50 % | ε_{⊥} [1 kHz, 20°C]: | 8,2 |
| CPY-3-O2 | 10,00 % | K₁ [pN, 20°C]: | 14,3 |
| CY-3-O2 | 20,50 % | K₃ [pN, 20°C]: | 16,6 |
| PGIY-2-O4 | 4,00 % | γ₁ [mPa·s, 20°C]: | 108 |
| B-2O-O5 | 3,00 % | V₀ [20°C, V]: | 2,04 |
| B(S)-2O-O4 | 4,00 % | | |

enthält zusätzlich 0,01 % ST-9-1.

### Beispiel M35

Die flüssigkristalline Mischung

| | | | |
|---|---|---|---|
| CC-3-V | 38,50 % | Klärpunkt [°C]: | 79,5 |
| CCY-3-O1 | 4,00 % | Δn [589 nm, 20°C]: | 0,1034 |
| CCY-3-O2 | 10,00 % | Δε [1 kHz, 20°C]: | -4,4 |
| CLY-3-O2 | 7,00 % | ε_{∥} [1 kHz, 20°C]: | 3,8 |
| CLY-3-O3 | 3,00 % | ε_{⊥} [1 kHz, 20°C]: | 8,2 |
| CPY-2-O2 | 4,00 % | K₁ [pN, 20°C]: | 14,4 |
| CPY-3-O2 | 10,00 % | K₃ [pN, 20°C]: | 15,9 |
| CY-3-O2 | 9,50 % | γ₁ [mPa·s, 20°C]: | 102 |
| PY-3-O2 | 6,00 % | V₀ [20°C, V]: | 2,01 |
| B(S)-2O-O5 | 4,00 % | | |
| B-2O-O5 | 4,00 % | | |

enthält zusätzlich 0,01 % ST-8-1.

### Beispiel M36

Zur Herstellung einer PS (polymer stabilized)-Mischung, z.B. für PS-IPS-, PS-VA-, PS-FFS-Anwendungen, werden 99,7 % der Mischung gemäß Beispiel M17 mit 0,3 % der polymerisierbaren Verbindung der Formel 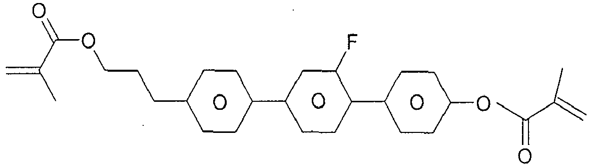 versetzt.

### Beispiel M37

Zur Herstellung einer PS (polymer stabilized)-Mischung, z.B. für PS-IPS-, PS-VA, PS-FFS-Anwendungen, werden 99,75 % der Mischung gemäß Beispiel M17 mit 0,25 % der polymerisierbaren Verbindung der Formel 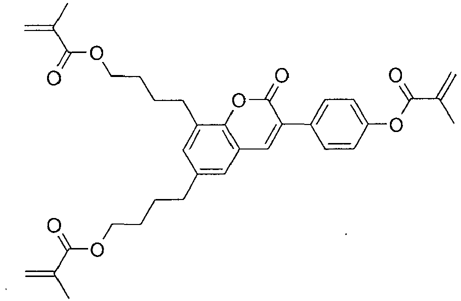 versetzt.

### Beispiel M38

Zur Herstellung einer PS (polymer stabilized)-Mischung, z.B. für PS-IPS-, PS-VA-, PS-FFS-Anwendungen, werden 99,8 % der Mischung gemäß Beispiel M17 mit 0,2 % der polymerisierbaren Verbindung der Formel 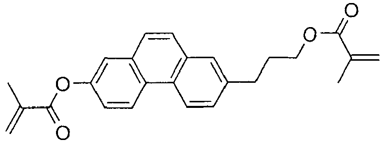 versetzt.

### Beispiel M39

Zur Herstellung einer PS (polymer stabilized)-Mischung, z.B. für PS-IPS-, PS-VA-, PS-FFS-Anwendungen, werden 99,75 % der Mischung gemäß Beispiel M17 mit 0,25 % der polymerisierbaren Verbindung der Formel 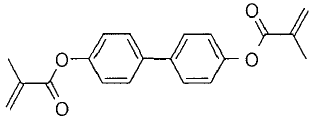 versetzt.

### Beispiel M40

Zur Herstellung einer PS (polymer stabilized)-Mischung, z.B. für PS-IPS-, PS-VA-, PS-FFS-Anwendungen, werden 99,75 % der Mischung gemäß Beispiel M17 mit 0,25 % der polymerisierbaren Verbindung der Formel 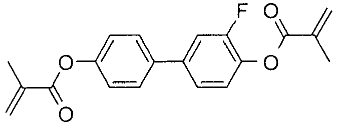 versetzt.

### Beispiel M41

Zur Herstellung einer PS (polymer stabilized)-Mischung, z.B. für PS-IPS-, PS-VA-, PS-FFS-Anwendungen, werden 99,75 % der Mischung gemäß Beispiel M17 mit 0,25 % der polymerisierbaren Verbindung der Formel 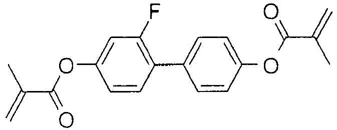 versetzt.

### Beispiel M42

Zur Herstellung einer PS (polymer stabilized)-Mischung, z.B. für PS-IPS-, PS-VA-, PS-FFS-Anwendungen, werden 99,8 % der Mischung gemäß Beispiel M17 mit 0,2 % der polymerisierbaren Verbindung der Formel 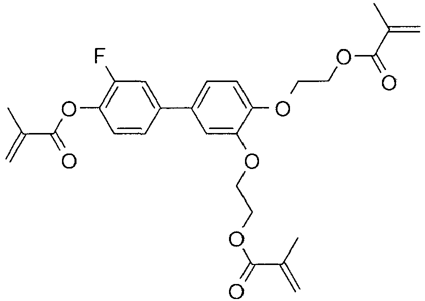 versetzt.

### Beispiel M43

Zur Herstellung einer PS (polymer stabilized)-Mischung, z.B. für PS-IPS-, PS-VA-, PS-FFS-Anwendungen, werden 99,7 % der Mischung gemäß Beispiel M19 mit 0,3 % der polymerisierbaren Verbindung der Formel 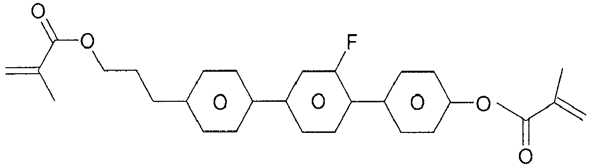 versetzt.

### Beispiel M44

Zur Herstellung einer PS (polymer stabilized)-Mischung, z.B. für PS-IPS-, PS-VA-, PS-FFS-Anwendungen, werden 99,75 % der Mischung gemäß Beispiel M19 mit 0,25 % der polymerisierbaren Verbindung der Formel 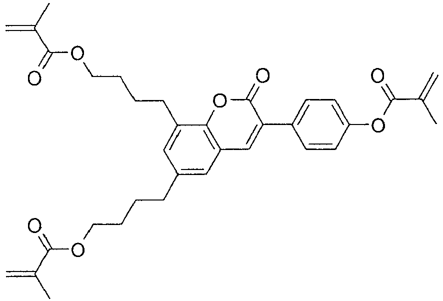 versetzt.

### Beispiel M45

Zur Herstellung einer PS (polymer stabilized)-Mischung, z.B. für PS-IPS-, PS-VA-, PS-FFS-Anwendungen, werden 99,8 % der Mischung gemäß Beispiel M19 mit 0,2 % der polymerisierbaren Verbindung der Formel 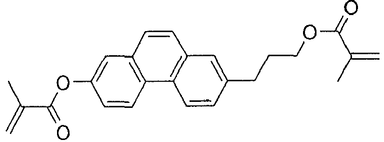 versetzt.

### Beispiel M46

Zur Herstellung einer PS (polymer stabilized)-Mischung, z.B. für PS-IPS-, PS-VA-, PS-FFS-Anwendungen, werden 99,75 % der Mischung gemäß Beispiel M19 mit 0,001 % Irganox 1076 und 0,25 % der polymerisierbaren Verbindung der Formel 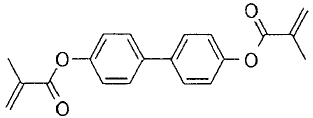 versetzt.

### Beispiel M47

Zur Herstellung einer PS (polymer stabilized)-Mischung, z.B. für PS-IPS-, PS-VA-, PS-FFS-Anwendungen, werden 99,75 % der Mischung gemäß Beispiel M19 mit 0,25 % der polymerisierbaren Verbindung der Formel 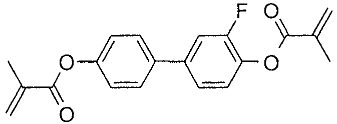 versetzt.

### Beispiel M48

Zur Herstellung einer PS (polymer stabilized)-Mischung, z.B. für PS-IPS-, PS-VA-, PS-FFS-Anwendungen, werden 99,75 % der Mischung gemäß Beispiel M19 mit 0,25 % der polymerisierbaren Verbindung der Formel 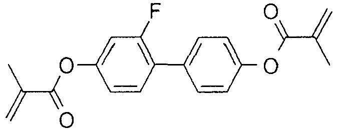 versetzt.

### Beispiel M49

Zur Herstellung einer PS (polymer stabilized)-Mischung, z.B. für PS-IPS-, PS-VA-, PS-FFS-Anwendungen, 99,8 % der Mischung gemäß Beispiel M19 mit 0,2 % der polymerisierbaren Verbindung der Formel 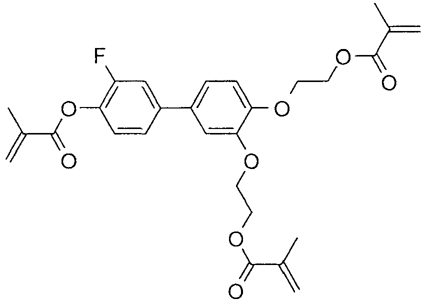 versetzt.

### Beispiel M50

Zur Herstellung einer PS (polymer stabilized)-Mischung, z.B. für PS-IPS-, PS-VA-, PS-FFS-Anwendungen, werden 99,75 % der Mischung gemäß Beispiel M19 mit 0,25 % der polymerisierbaren Verbindung der Formel 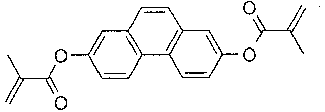 versetzt.

### Beispiel M51

Zur Herstellung einer PS (polymer stabilized)-Mischung, z.B. für PS-IPS-, PS-VA-, PS-FFS-Anwendungen, werden 99,7 % der Mischung gemäß Beispiel M22 mit 0,3 % der polymerisierbaren Verbindung der Formel 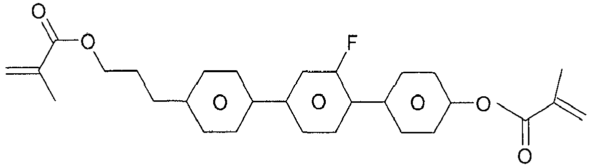 versetzt.

### Beispiel M52

Zur Herstellung einer PS (polymer stabilized)-Mischung, z.B. für PS-IPS-, PS-VA-, PS-FFS-Anwendungen, 99,75 % der Mischung gemäß Beispiel M22 mit 0,25 % der polymerisierbaren Verbindung der Formel 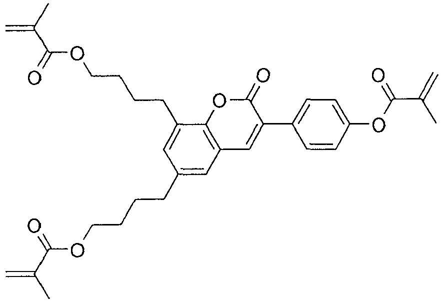 versetzt.

### Beispiel M53

Zur Herstellung einer PS (polymer stabilized)-Mischung, z.B. für PS-IPS-, PS-VA-, PS-FFS-Anwendungen, werden 99,8 % der Mischung gemäß Beispiel M22 mit 0,2 % der polymerisierbaren Verbindung der Formel 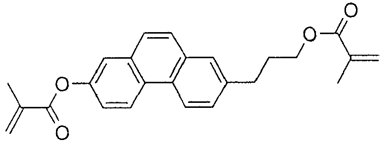 versetzt.

### Beispiel 54

Zur Herstellung einer PS (polymer stabilized)-Mischung, z.B. für PS-IPS-, PS-VA-, PS-FFS-Anwendungen, werden 99,75 % der Mischung gemäß Beispiel M22 mit 0,25 % der polymerisierbaren Verbindung der Formel 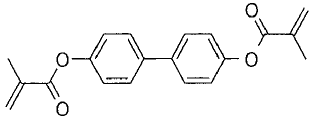 versetzt.

### Beispiel M55

Zur Herstellung einer PS (polymer stabilized)-Mischung, z.B. für PS-IPS-, PS-VA-, PS-FFS-Anwendungen, werden 99,75 % der Mischung gemäß Beispiel M22 mit 0,25 % der polymerisierbaren Verbindung der Formel 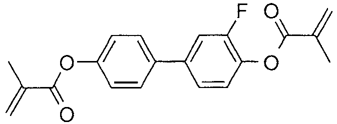 versetzt.

### Beispiel M56

Zur Herstellung einer PS (polymer stabilized)-Mischung, z.B. für PS-IPS-, PS-VA-, PS-FFS-Anwendungen, werden 99,75 % der Mischung gemäß Beispiel M22 mit 0,25 % der polymerisierbaren Verbindung der Formel 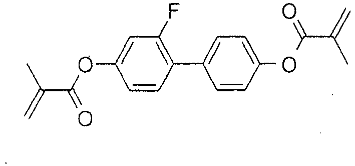 versetzt.

### Beispiel M57

Zur Herstellung einer PS (polymer stabilized)-Mischung, z.B. für PS-IPS-, PS-VA-, PS-FFS-Anwendungen, werden 99,8 % der Mischung gemäß Beispiel M22 mit 0,2 % der polymerisierbaren Verbindung der Formel 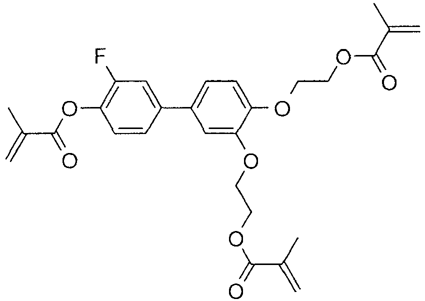 versetzt.

### Beispiel 58

Zur Herstellung einer PS (polymer stabilized)-Mischung, z.B. für PS-IPS-, PS-VA-, PS-FFS-Anwendungen, werden 99,8 % der Mischung gemäß Beispiel M28 mit 0,2 % der polymerisierbaren Verbindung der Formel 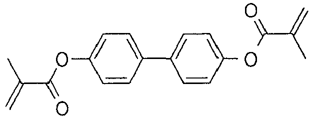 versetzt.

### Beispiel M59

Zur Herstellung einer PS (polymer stabilized)-Mischung, z.B. für PS-IPS-, PS-VA-, PS-FFS-Anwendungen, werden 99,75 % der Mischung gemäß Beispiel M28 mit 0,25 % der polymerisierbaren Verbindung der Formel 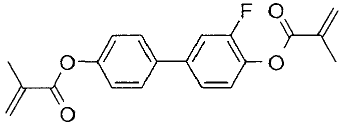 versetzt.

### Beispiel 60

Zur Herstellung einer PS (polymer stabilized)-Mischung, z.B. für PS-IPS-, PS-VA-, PS-FFS-Anwendungen, werden 99,7 % der Mischung gemäß Beispiel M33 mit 0,3 % der polymerisierbaren Verbindung der Formel 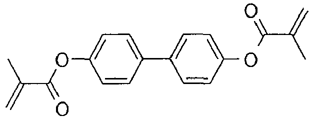 versetzt.

### Beispiel M61

Zur Herstellung einer PS (polymer stabilized)-Mischung, z.B. für PS-IPS-, PS-VA-, PS-FFS-Anwendungen, werden 99,7 % der Mischung gemäß Beispiel M33 mit 0,3 % der polymerisierbaren Verbindung der Formel 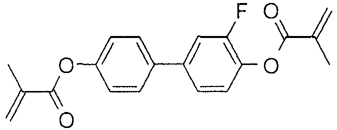 versetzt.

### Beispiel 62

Zur Herstellung einer PS (polymer stabilized)-Mischung, z.B. für PS-IPS-, PS-VA-, PS-FFS-Anwendungen, werden 99,8 % der Mischung gemäß Beispiel M33 mit 0,2 % der polymerisierbaren Verbindung der Formel 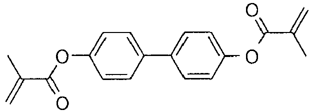 und 0,2 % der polymerisierbaren Verbindung 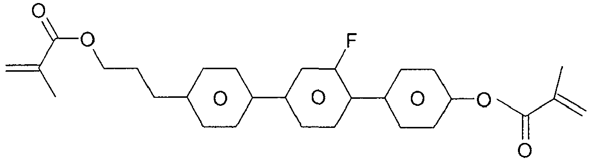 versetzt.

### Beispiel M63

Die flüssigkristalline Mischung

| | | | |
|---|---|---|---|
| CC-3-V | 41,00 % | Klärpunkt [°C]: | 74,0 |
| CCY-3-O2 | 11,00 % | Δn [589 nm, 20 °C]: | 0,1005 |
| CCY-3-O1 | 2,50 % | Δε [1 kHz, 20 °C]: | -3,7 |
| CLY-3-O2 | 4,00 % | ε_{∥} [1 kHz, 20 °C]: | 3,7 |
| CLY-3-O3 | 4,00 % | K₁ [pN, 20 °C]: | 13,3 |
| CPY-2-O2 | 4,00 % | K₃ [pN, 20 °C]: | 15,0 |
| CPY-3-O2 | 11,00 % | γ₁ [mPa·s, 20 °C]: | 87 |
| CY-3-O2 | 7,50 % | V₀ [20 °C, V]: | 2,14 |
| PY-3-O2 | 12,00 % | | |
| B-3O-O5 | 3,00 % | | |

enthält zusätzlich 0,025 % ST-8-1.

### Beispiel M64

Die flüssigkristalline Mischung

| | | | |
|---|---|---|---|
| CC-3-V | 42,00 % | Klärpunkt [°C]: | 73,5 |
| CCY-3-O1 | 5,00 % | Δn [589 nm, 20 °C]: | 0,1009 |
| CCY-3-O2 | 10,00 % | Δε [1 kHz, 20 °C]: | -3,5 |
| CCY-4-O2 | 2,50 % | ε_{∥} [1 kHz, 20 °C]: | 3,6 |
| CPY-2-O2 | 10,00 % | K₁ [pN, 20 °C]: | 12,9 |
| CPY-3-O2 | 10,00 % | K₃ [pN, 20 °C]: | 14,5 |
| CY-3-O2 | 6,50 % | γ₁ [mPa·s, 20 °C]: | 88 |
| PY-3-O2 | 11,00 % | V₀ [20 °C, V]: | 2,14 |
| B-3O-O5 | 3,00 % | | |

enthält zusätzlich 0,025 % ST-12.

### Beispiel M65

Die flüssigkristalline Mischung

| | | | |
|---|---|---|---|
| CC-3-V | 43,00 % | Klärpunkt [°C]: | 73,5 |
| CCY-3-O1 | 5,00 % | Δn [589 nm, 20 °C]: | 0,1011 |
| CCY-3-O2 | 10,00 % | Δε [1 kHz, 20 °C]: | -3,6 |
| CCY-4-O2 | 2,00 % | ε_{∥} [1 kHz, 20 °C]: | 3,7 |
| CPY-2-O2 | 10,00 % | K₁ [pN, 20 °C]: | 13,3 |
| CPY-3-O2 | 10,00 % | K₃[pN, 20°C]: | 14,7 |
| CY-3-O2 | 5,00 % | γ₁ [mPa·s, 20 °C]: | 83 |
| PY-3-O2 | 11,00 % | V₀ [20 °C, V]: | 2,14 |
| B-3O-O5 | 4,00 % | | |

enthält zusätzlich 0,025 % ST-3a-1.

### Beispiel M66

Die flüssigkristalline Mischung

| | | | |
|---|---|---|---|
| CC-3-V | 40,50 % | Klärpunkt [°C]: | 74,0 |
| CCY-3-O1 | 5,00 % | Δn [589 nm, 20 °C]: | 0,1005 |
| CCY-3-O2 | 10,00 % | Δε [1 kHz, 20 °C]: | -3,6 |
| CCY-4-O2 | 3,50 % | ε_{∥} [1 kHz, 20 °C]: | 3,6 |
| CPY-2-O2 | 10,00 % | K₁ [pN, 20 °C]: | 12,9 |
| CPY-3-O2 | 10,00 % | K₃ [pN, 20 °C]: | 14,6 |
| CY-3-O2 | 8,00 % | γ₁ [mPa·s, 20 °C]: | 88 |
| PY-3-O2 | 11,00 % | V₀ [20 °C, V]: | 2,14 |
| B-3O-O4 | 2,00 % | | |

enthält zusätzlich 0,025 % ST-12.

### Beispiel M67

Die flüssigkristalline Mischung

| | | | |
|---|---|---|---|
| CC-3-V | 42,00 % | Klärpunkt [°C]: | 73,5 |
| CCY-3-O1 | 5,00 % | Δn [589 nm, 20 °C]: | 0,1011 |
| CCY-3-O2 | 10,00 % | Δε [1 kHz, 20 °C]: | -3,6 |
| CCY-4-O2 | 2,50 % | ε_{∥} [1 kHz, 20 °C]: | 3,7 |
| CPY-2-O2 | 10,00 % | K₁ [pN, 20 °C]: | 12,9 |
| CPY-3-O2 | 10,00 % | K₃ [pN, 20 °C]: | 14,6 |
| CY-3-O2 | 6,50 % | γ₁ [mPa·s, 20 °C]: | 85 |
| PY-3-O2 | 11,00 % | V₀ [20 °C, V]: | 2,14 |
| B-2O-O4 | 3,00 % | | |

enthält zusätzlich 0,03 % ST-2a-1.

### Beispiel M68

Die flüssigkristalline Mischung

| | | | |
|---|---|---|---|
| CC-3-V | 42,00 % | Klärpunkt [°C]: | 73,5 |
| CCY-3-O1 | 5,00 % | Δn [589 nm, 20 °C]: | 0,1001 |
| CCY-3-O2 | 10,00 % | Δε [1 kHz, 20 °C]: | -3,5 |
| CCY-4-O2 | 2,50 % | ε_{∥} [1 kHz, 20 °C]: | 3,6 |
| CPY-2-O2 | 10,00 % | K₁[pN,20°C]: | 13,0 |
| CPY-3-O2 | 10,00 % | K₃ [pN, 20 °C]: | 14,5 |
| CY-3-O2 | 6,50 % | γ₁ [mPa·s, 20 °C]: | 84 |
| PY-3-O2 | 11,00 % | V₀ [20 °C, V]: | 2,15 |
| B-3O-O6 | 3,00 % | | |

enthält zusätzlich 0,025 % ST-8-1.

### Beispiel M69

Die flüssigkristalline Mischung

| | | | |
|---|---|---|---|
| CC-3-V | 42,00 % | Klärpunkt [°C]: | 73,5 |
| CCY-3-O1 | 5,00 % | Δn [589 nm, 20 °C]: | 0,1007 |
| CCY-3-O2 | 10,00 % | Δε [1 kHz, 20 °C]: | -3,5 |
| CCY-4-O2 | 2,50 % | ε_{∥} [1 kHz, 20 °C]: | 3,7 |
| CPY-2-O2 | 10,00 % | K₁ [pN, 20 °C]: | 12,9 |
| CPY-3-O2 | 10,00 % | K₃ [pN, 20 °C]: | 14,6 |
| CY-3-O2 | 6,50 % | γ₁ [mPa·s, 20 °C]: | 84 |
| PY-3-O2 | 11,00 % | V₀ [20 °C, V]: | 2,15 |
| B-2O-O5 | 3,00 % | | |

enthält zusätzlich 0,025 % ST-8-1.

| Vergleich | VHR nach UV |
|---|---|
| M69 ohne Stabilisator | 60 % |
| M69 mit Stabilisator (0,025 % ST-8-1) | 79 % |

### Beispiel M70

Die flüssigkristalline Mischung

| | | | |
|---|---|---|---|
| CC-3-V | 45,50 % | Klärpunkt [°C]: | 73,0 |
| CCY-3-O1 | 3,00 % | Δn [589 nm, 20 °C]: | 0,1011 |
| CCY-3-O2 | 11,00 % | Δε [1 kHz, 20 °C]: | -3,5 |
| CCY-4-O2 | 3,50 % | ε_{∥} [1 kHz, 20 °C]: | 3,6 |
| CPY-2-O2 | 7,50 % | K₁ [pN, 20 °C]: | 13,1 |
| CPY-3-O2 | 10,00 % | K₃ [pN, 20 °C]: | 14,3 |
| CY-3-O2 | 2,00 % | γ₁ [mPa·s, 20 °C]: | 79 |
| PY-3-O2 | 11,50 % | V₀ [20 °C, V]: | 2,15 |
| B-2O-O5 | 6,00 % | | |

enthält zusätzlich 0,025 % ST-8-1.

### Beispiel M71

Die flüssigkristalline Mischung

| | | | |
|---|---|---|---|
| CC-3-V | 42,00 % | Klärpunkt [°C]: | 73,5 |
| CCY-3-O1 | 5,00 % | Δn [589 nm, 20 °C]: | 0,0993 |
| CCY-3-O2 | 10,00 % | Δε [1 kHz, 20 °C]: | -3,5 |
| CCY-4-O2 | 2,50 % | ε_{∥} [1 kHz, 20 °C]: | 3,6 |
| CPY-2-O2 | 10,00 % | K₁ [pN, 20 °C]: | 12,9 |
| CPY-3-O2 | 10,00 % | K₃ [pN, 20 °C]: | 14,5 |
| CY-3-O2 | 6,50 % | γ₁ [mPa·s, 20 °C]: | 84 |
| PY-3-O2 | 11,00 % | V₀ [20 °C, V]: | 2,14 |
| B-3O-O3 | 3,00 % | | |

enthält zusätzlich 0,025 % ST-8-1.

### Beispiel M72

Die flüssigkristalline Mischung

| | | | |
|---|---|---|---|
| CC-3-V | 45,50 % | Klärpunkt [°C]: | 73,5 |
| CCY-3-O1 | 3,00 % | Δn [589 nm, 20 °C]: | 0,1009 |
| CCY-3-O2 | 11,00 % | Δε [1 kHz, 20 °C]: | -3,5 |
| CCY-4-O2 | 3,00 % | ε_{∥} [1 kHz, 20 °C]: | 3,6 |
| CPY-2-O2 | 8,50 % | K₁ [pN, 20 °C]: | 13,2 |
| CPY-3-O2 | 10,00 % | K₃ [pN, 20 °C]: | 14,3 |
| CY-3-O2 | 2,00 % | γ₁ [mPa·s, 20 °C]: | 80 |
| PY-3-O2 | 11,00 % | V₀ [20 °C, V]: | 2,15 |
| B-2O-O5 | 3,00 % | | |
| B-3O-O5 | 3,00 % | | |

enthält zusätzlich 0,025 % ST-8-1.

### Beispiel M73

Die flüssigkristalline Mischung

| | | | |
|---|---|---|---|
| CC-3-V | 35,50 % | Klärpunkt [°C]: | 73,0 |
| CCY-3-O1 | 6,00 % | Δn [589 nm, 20 °C]: | 0,1006 |
| CCY-3-O2 | 11,00 % | Δε [1 kHz, 20 °C]: | -4,4 |
| CCY-4-O2 | 6,50 % | ε_{∥} [1 kHz, 20 °C]: | 3,9 |
| CPY-2-O2 | 4,00 % | K₁ [pN, 20 °C]: | 12,9 |
| CPY-3-O2 | 10,00 % | K₃ [pN, 20 °C]: | 14,6 |
| CY-3-O2 | 12,00 % | γ₁ [mPa·s, 20 °C]: | 99 |
| PY-3-O2 | 10,00 % | V₀ [20 °C, V]: | 1,93 |
| B-3O-O5 | 2,50 % | | |
| B-3O-O4 | 2,50 % | | |

enthält zusätzlich 0,025 % ST-3a-1.

### Beispiel M74

Die flüssigkristalline Mischung

| | | | |
|---|---|---|---|
| CC-3-V | 34,50 % | Klärpunkt [°C]: | 75,0 |
| CC-3-V1 | 8,00 % | Δn [589 nm, 20 °C]: | 0,1084 |
| CCY-3-O1 | 6,00 % | Δε [1 kHz, 20 °C]: | -3,1 |
| CCY-3-O2 | 11,50 % | ε_{∥} [1 kHz, 20 °C]: | 3,5 |
| CCY-4-O2 | 3,50 % | K₁ [pN, 20 °C]: | 14,3 |
| CPY-3-O2 | 11,50 % | K₃ [pN, 20 °C]: | 15,9 |
| PY-3-O2 | 16,00 % | γ₁ [mPa·s, 20 °C]: | 87 |
| PYP-2-3 | 3,00 % | V₀ [20 °C, V]: | 2,40 |
| PP-1-2V1 | 3,00 % | | |
| B-3O-O5 | 3,00 % | | |

enthält zusätzlich 0,02 % ST-2a-1.

### Beispiel M75

Die flüssigkristalline Mischung

| | | | |
|---|---|---|---|
| CC-3-V | 34,50 % | Klärpunkt [°C]: | 75,0 |
| CC-3-V1 | 8,00 % | Δn [589 nm, 20 °C]: | 0,1075 |
| CCY-3-O1 | 7,00 % | Δε [1 kHz, 20 °C]: | -3,1 |
| CCY-3-O2 | 11,50 % | ε_{∥} [1 kHz, 20 °C]: | 3,5 |
| CCY-4-O2 | 3,50 % | K₁ [pN, 20 °C]: | 14,7 |
| CPY-3-O2 | 11,50 % | K₃ [pN, 20 °C]: | 16,4 |
| PY-3-O2 | 13,00 % | γ₁ [mPa·s, 20 °C]: | 84 |
| PP-1-2V1 | 6,00 % | V₀ [20 °C, V]: | 2,41 |
| B-2O-O5 | 5,00 % | | |

enthält zusätzlich 0,02 % ST-8-1.

### Beispiel M76

Die flüssigkristalline Mischung

| | | | |
|---|---|---|---|
| CC-V-V | 37,00 % | Klärpunkt [°C]: | 73,5 |
| CC-V-V1 | 10,00 % | Δn [589 nm, 20 °C]: | 0,1026 |
| CCVC-V-V | 7,00 % | Δε [1 kHz, 20 °C]: | -3,0 |
| CCVC-3-V | 7,00 % | ε_{∥} [1 kHz, 20 °C]: | 3,7 |
| CCC-2-V | 3,00 % | K₁ [pN, 20 °C]: | 11,8 |
| CCC-3-V | 4,00 % | K₃ [pN, 20 °C]: | 11,9 |
| B-4O-O4 | 3,00 % | γ₁ [mPa·s, 20 °C]: | 57 |
| B-3O-O4 | 8,50 % | V₀ [20 °C, V]: | 2,10 |
| B-3O-O5 | 8,50 % | | |
| PB-3-O4 | 7,00 % | | |
| CB-3-O4 | 5,00 % | | |

enthält zusätzlich 0,02 % ST-8-1.

### Beispiel M77

Die flüssigkristalline Mischung

| | | | |
|---|---|---|---|
| CC-V-V | 18,00 % | Klärpunkt [°C]: | 77,8 |
| CC-3-V | 21,00 % | Δn [589 nm, 20 °C]: | 0,1040 |
| CC-V-V1 | 10,00 % | Δε [1 kHz, 20 °C]: | -3,2 |
| CCVC-V-V | 7,00 % | ε_{∥} [1 kHz, 20 °C]: | 3,7 |
| CCVC-3-V | 7,00 % | K₁[pN, 20 °C]: | 13,3 |
| CCC-2-V | 2,00 % | K₃ [pN, 20 °C]: | 12,2 |
| CCC-3-V | 3,00 % | γ₁ [mPa·s, 20 °C]: | 64 |
| B-4O-O4 | 3,00 % | V₀ [20 °C, V]: | 2,07 |
| B-3O-O4 | 8,50 % | | |
| B-3O-O5 | 8,50 % | | |
| PB-3-O4 | 7,00 % | | |
| CB-3-O4 | 5,00 % | | |

enthält zusätzlich 0,02 % ST-12.

### Beispiel M78

Die flüssigkristalline Mischung

| | | | |
|---|---|---|---|
| CC-V-V | 38,00 % | Klärpunkt [°C]: | 74,0 |
| CCVC-V-V | 5,00 % | Δn [589 nm, 20 °C]: | 0,1119 |
| CCVC-3-V | 10,00 % | Δε [1 kHz, 20 °C]: | -4,8 |
| CCC-2-V | 3,00 % | ε_{∥} [1 kHz, 20 °C]: | 4,3 |
| CCC-3-V | 4,00 % | K_{1 [}pN, 20 °C]: | 12,3 |
| B-4O-O4 | 2,00 % | K₃ [pN, 20 °C]: | 11,0 |
| B-3O-O4 | 5,00 % | γ₁ [mPa·s, 20 °C]: | 76 |
| B-3O-O5 | 7,00 % | V₀ [20 °C, V]: | 1,60 |
| PB-3-O4 | 6,00 % | | |
| CB-3-O4 | 7,00 % | | |
| B-2O-O5 | 8,00 % | | |
| B-2O-O6 | 5,00 % | | |

enthält zusätzlich 0,025 % ST-8-1.

### Beispiel M79

Die flüssigkristalline Mischung

| | | | |
|---|---|---|---|
| CC-V-V | 25,00 % | Klärpunkt [°C]: | 81,0 |
| CCVC-V-V | 4,00 % | Δn [589 nm, 20 °C]: | 0,1068 |
| CCVC-3-V | 9,00 % | Δε [1 kHz, 20 °C]: | -4,2 |
| CCC-2-V | 3,00 % | ε_{∥} [1 kHz, 20 °C]: | 4,1 |
| CCC-3-V | 3,00 % | K₁ [pN, 20 °C]: | 14,6 |
| B-3O-O4 | 4,00 % | K₃ [pN, 20 °C]: | 11,8 |
| B-3O-O5 | 5,00 % | γ₁ [mPa·s, 20 °C]: | 90 |
| PB-3-O4 | 4,00 % | V₀ [20 °C, V]: | 1,70 |
| CB-3-O4 | 7,00 % | | |
| B-2O-O5 | 6,00 % | | |
| B-2O-O6 | 5,00 % | | |
| B-2O-O4 | 3,00 % | | |
| B-1O-O4 | 3,00 % | | |
| CCOC-3-3 | 3,00 % | | |
| CCH-23 | 3,00 % | | |
| CCH-34 | 10,00 % | | |
| CCOC-4-3 | 3,00 % | | |

enthält zusätzlich 0,02 % ST-8-1 und 0,1 % ST-3a-1.

### Beispiel M80

Die flüssigkristalline Mischung

| | | | |
|---|---|---|---|
| CC-V-V | 28,00 % | Klärpunkt [°C]: | 55,5 |
| CCVC-V-V | 5,00 % | Δε [1 kHz, 20 °C]: | -7,6 |
| CCVC-3-V | 10,00 % | ε_{∥} [1 kHz, 20 °C]: | 5,8 |
| CCC-2-V | 3,00 % | K₁ [pN, 20 °C]: | 11,1 |
| CCC-3-V | 3,00 % | K₃ [pN, 20 °C]: | 8,6 |
| B-4O-O4 | 3,00 % | γ₁ [mPa·s, 20 °C]: | 90 |
| B-3O-O4 | 4,00 % | V₀ [20 °C, V]: | 1,12 |
| B-3O-O5 | 3,00 % | | |
| B-4O-O5 | 3,00 % | | |
| B-2O-O4 | 3,00 % | | |
| B-2O-O5 | 5,00 % | | |
| B-2O-O6 | 3,00 % | | |
| B-1O-O5 | 3,00 % | | |
| B-3O-O3 | 4,00 % | | |
| B-3O-O6 | 3,00 % | | |
| B-1O-O4 | 5,00 % | | |
| B-2O-O5i | 5,00 % | | |
| CCP-V-1 | 7,00 % | | |

enthält zusätzlich 0,02 % ST-8-1.

### Beispiel M81

Die flüssigkristalline Mischung

| | | | |
|---|---|---|---|
| CC-V-V | 35,00 % | Klärpunkt [°C]: | 67,5 |
| CCVC-V-V | 5,00 % | Δε [1 kHz, 20 °C]: | -6,2 |
| CCVC-3-V | 8,00 % | ε_{∥} [1 kHz, 20 °C]: | 4,8 |
| CCC-2-V | 3,00 % | K₁ [pN, 20 °C]: | 11,9 |
| CCC-3-V | 4,00 % | K₃ [pN, 20 °C]: | 9,6 |
| B-4O-O4 | 2,00 % | γ₁ [mPa·s, 20 °C]: | 86 |
| B-3O-O4 | 5,00 % | V₀ [20 °C, V]: | 1,32 |
| B-3O-O5 | 7,00 % | | |
| PB-3-O4 | 6,00 % | | |
| CB-3-O4 | 7,00 % | | |
| B-2O-O5 | 8,00 % | | |
| B-2O-O6 | 5,00 % | | |
| B-3O-O3 | 5,00 % | | |

enthält zusätzlich 0,02 % ST-8-1.

### Beispiel M82

Die flüssigkristalline Mischung

| | | | |
|---|---|---|---|
| CC-V-V | 35,00 % | Klärpunkt [°C]: | 67,5 |
| CCVC-V-V | 5,00 % | Δε [1 kHz, 20 °C]: | -6,2 |
| CCVC-3-V | 8,00 % | ε_{∥} [1 kHz, 20 °C]: | 4,8 |
| CCC-2-V | 3,00 % | K₁ [pN, 20°C]: | 11,9 |
| CCC-3-V | 4,00 % | K₃ [pN, 20 °C]: | 9,6 |
| B-4O-O4 | 2,00 % | γ₁ [mPa·s, 20 °C]: | 86 |
| B-3O-O4 | 5,00 % | V₀ [20 °C, V]: | 1,32 |
| B-3O-O5 | 7,00 % | | |
| PB-3-O4 | 6,00 % | | |
| CB-3-O4 | 7,00 % | | |
| B-2O-O5 | 8,00 % | | |
| B-2O-O6 | 5,00 % | | |
| B-3O-O3 | 5,00 % | | |

enthält zusätzlich 0,03 % ST-12.

### Beispiel M83

Die flüssigkristalline Mischung

| | | | |
|---|---|---|---|
| CC-3-V | 10,00 % | Klärpunkt [°C]: | 74,5 |
| CC-3-V1 | 8,00 % | Δn [589 nm, 20 °C]: | 0,1078 |
| CCH-23 | 10,00 % | Δε [1 kHz, 20 °C]: | -3,3 |
| CCH-34 | 5,00 % | ε_{∥} [1 kHz, 20 °C]: | 3,5 |
| CCP-3-1 | 7,00 % | K₁ [pN, 20 °C]: | 14,6 |
| CCY-3-O1 | 5,00 % | K₃ [pN, 20 °C]: | 15,7 |
| CCY-3-O2 | 11,00 % | γ₁ [mPa·s, 20 °C]: | 101 |
| CCY-4-O2 | 4,50 % | V₀ [20 °C, V]: | 2,32 |
| CPY-3-O2 | 3,00 % | | |
| CY-3-O2 | 12,00 % | | |
| PY-3-O2 | 8,50 % | | |
| PYP-2-3 | 8,00 % | | |
| B-2O-O5 | 4,00 % | | |
| PP-1-2V1 | 4,00 % | | |

enthält zusätzlich 0,03 % ST-9-1.

### Beispiel M84

Die flüssigkristalline Mischung

| | | | |
|---|---|---|---|
| CC-3-V | 15,00 % | Klärpunkt [°C]: | 74,0 |
| CC-3-V1 | 8,00 % | Δn [589 nm, 20 °C]: | 0,1078 |
| CCH-23 | 10,00 % | Δε [1 kHz, 20 °C]: | -3,1 |
| CCH-34 | 7,00 % | ε_{∥} [1 kHz, 20 °C]: | 3,5 |
| CCY-3-O1 | 8,00 % | K₁ [pN, 20 °C]: | 14,6 |
| CCY-3-O2 | 11,00 % | K₃ [pN,20°C]: | 15,1 |
| CCY-4-O2 | 3,50 % | γ₁ [mPa·s, 20 °C]: | 94 |
| CPY-3-O2 | 6,00 % | V₀ [20 °C, V]: | 2,32 |
| CY-3-O2 | 5,50 % | | |
| PY-3-O2 | 10,00 % | | |
| PYP-2-3 | 8,00 % | | |
| B-2O-O5 | 4,00 % | | |
| PP-1-2V1 | 4,00 % | | |

enthält zusätzlich 0,03 % ST-8-1.

### Beispiel M85

Die flüssigkristalline Mischung

| | | | |
|---|---|---|---|
| CC-3-V | 42,50 % | Klärpunkt [°C]: | 75,0 |
| CCP-3-1 | 4,50 % | Δn [589 nm, 20 °C]: | 0,0984 |
| CCY-3-O1 | 9,00 % | Δε [1 kHz, 20 °C]: | -3,2 |
| CCY-3-O2 | 11,00 % | ε_{∥} [1 kHz, 20 °C]: | 3,6 |
| CPY-3-O2 | 8,00 % | K₁ [pN, 20 °C]: | 13,5 |
| CPY-2-O2 | 4,50 % | K₃ [pN, 20 °C]: | 15,1 |
| CY-3-O2 | 3,00 % | γ₁ [mPa·s, 20 °C]: | 81 |
| PY-3-O2 | 13,50 % | V₀ [20 °C, V]: | 2,29 |
| B-2O-O5 | 4,00 % | | |

enthält zusätzlich 0,025 % ST-8-1.

### Beispiel M86

Die flüssigkristalline Mischung

| | | | |
|---|---|---|---|
| CC-3-V | 45,00 % | Klärpunkt [°C]: | 75,0 |
| CCP-3-1 | 3,00 % | Δn [589 nm, 20 °C]: | 0,0991 |
| CCY-3-O1 | 8,50 % | Δε [1 kHz, 20 °C]: | -3,3 |
| CCY-3-O2 | 11,00 % | ε_{∥} [1 kHz, 20 °C]: | 3,6 |
| CCY-4-O2 | 1,50 % | K₁ [pN, 20 °C]: | 13,8 |
| CPY-3-O2 | 11,50 % | K₃ [pN, 20 °C]: | 15,3 |
| PY-3-O2 | 12,50 % | γ₁ [mPa·s, 20 °C]: | 80 |
| B-2O-O5 | 4,00 % | V₀ [20 °C, V]: | 2,28 |
| B-3-O2 | 3,00 % | | |

enthält zusätzlich 0,03 % ST-8-1.

### Beispiel M87

Die flüssigkristalline Mischung

| | | | |
|---|---|---|---|
| CC-3-V1 | 8,00 % | Klärpunkt [°C]: | 74,0 |
| CCH-23 | 18,00 % | Δn [589 nm, 20 °C]: | 0,0978 |
| CCH-34 | 3,00 % | Δε [1 kHz, 20 °C]: | -3,4 |
| CCH-35 | 4,00 % | ε_{∥} [1 kHz, 20 °C]: | 3,6 |
| CCP-3-1 | 14,00 % | K₁ [pN, 20 °C]: | 14,9 |
| CCY-3-O2 | 11,00 % | K₃ [pN, 20 °C]: | 16,1 |
| CCY-3-O1 | 2,00 % | γ₁ [mPa·s, 20 °C]: | 102 |
| CPY-3-O2 | 11,00 % | V₀ [20 °C, V]: | 2,28 |
| CY-3-O2 | 10,50 % | | |
| PY-3-O2 | 12,50 % | | |
| B-2O-O5 | 3,00 % | | |
| Y-4O-O4 | 3,00 % | | |

enthält zusätzlich 0,025 % ST-8-1.

| Vergleich | VHR nach UV |
|---|---|
| M87 ohne Stabilisator | 83 % |
| M87 mit Stabilisator (0,025 % ST-8-1) | 90 % |

### Beispiel M88

Die flüssigkristalline Mischung

| | | | |
|---|---|---|---|
| CC-3-V1 | 8,00 % | Klärpunkt [°C]: | 74,0 |
| CCH-23 | 18,00 % | Δn [589 nm, 20 °C]: | 0,0978 |
| CCH-34 | 3,00 % | Δε [1 kHz, 20 °C]: | -3,4 |
| CCH-35 | 4,00 % | ε_{∥} [1 kHz, 20 °C]: | 3,6 |
| CCP-3-1 | 14,00 % | K₁ [pN, 20 °C]: | 14,9 |
| CCY-3-O2 | 11,00 % | K₃ [pN, 20 °C]: | 16,1 |
| CCY-3-O1 | 2,00 % | γ₁ [mPa·s, 20 °C]: | 102 |
| CPY-3-O2 | 11,00 % | V₀ [20 °C, V]: | 2,28 |
| CY-3-O2 | 10,50 % | | |
| PY-3-O2 | 12,50 % | | |
| B-2O-O5 | 3,00 % | | |
| Y-4O-O4 | 3,00 % | | |

enthält zusätzlich 0,01 % ST-9-1.

| Vergleich | VHR nach UV |
|---|---|
| M88 ohne Stabilisator | 83 % |
| M88 mit Stabilisator (0,01 % ST-9-1) | 89 % |

### Beispiel M89

Die flüssigkristalline Mischung

| | | | |
|---|---|---|---|
| CC-3-V1 | 7,00 % | Klärpunkt [°C]: | 73,0 |
| CCH-23 | 18,00 % | Δn [589 nm, 20 °C]: | 0,0969 |
| CCH-34 | 3,00 % | Δε [1 kHz, 20 °C]: | -3,4 |
| CCH-35 | 4,00 % | ε_{∥} [1 kHz, 20 °C]: | 3,6 |
| CCP-3-1 | 14,00 % | K₁ [pN, 20 °C]: | 14,6 |
| CCY-3-O2 | 11,00 % | K₃ [pN, 20 °C]: | 15,8 |
| CCY-3-O1 | 3,00 % | γ₁ [mPa·s, 20 °C]: | 102 |
| CPY-3-O2 | 11,00 % | V₀ [20 °C, V]: | 2,29 |
| CY-3-O2 | 12,00 % | | |
| PY-3-O2 | 11,00 % | | |
| Y-4O-O4 | 3,00 % | | |
| B-2-O2 | 3,00 % | | |

enthält zusätzlich 0,01 % ST-9-1.

### Beispiel M90

Zur Herstellung einer PS-VA-Mischung werden 99,7 % der Mischung gemäß Beispiel M34 mit 0,3 % der polymerisierbaren Verbindung der Formel 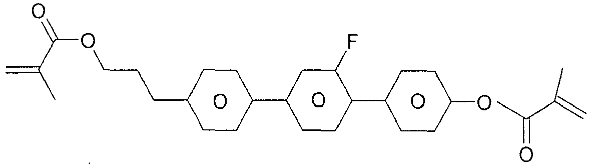 versetzt.

### Beispiel M91

Zur Herstellung einer PS-VA-Mischung werden 99,75 % der Mischung gemäß Beispiel M34 mit 0,25 % der polymerisierbaren Verbindung der Formel 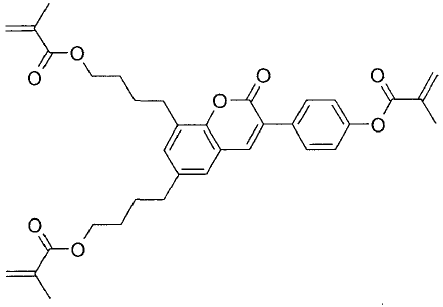 versetzt.

### Beispiel M92

Zur Herstellung einer PS-VA-Mischung werden 99,8 % der Mischung gemäß Beispiel M35 mit 0,2 % der polymerisierbaren Verbindung der Formel 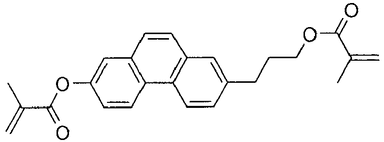 versetzt.

### Beispiel M93

Zur Herstellung einer PS-VA-Mischung werden 99,75 % der Mischung gemäß Beispiel M63 mit 0,25 % der polymerisierbaren Verbindung der Formel 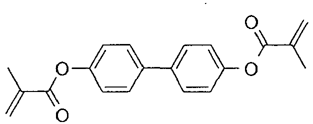 versetzt.

### Beispiel M94

Zur Herstellung einer PS-VA-Mischung werden 99,75 % der Mischung gemäß Beispiel M63 mit 0,25 % der polymerisierbaren Verbindung der Formel 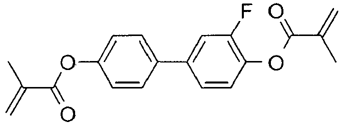 versetzt.

### Beispiel M95

Zur Herstellung einer PS-VA-Mischung werden 99,75 % der Mischung gemäß Beispiel M63 mit 0,3 % der polymerisierbaren Verbindung der Formel 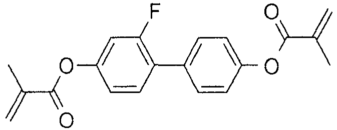 versetzt.

### Beispiel M96

Zur Herstellung einer PS-VA-Mischung werden 99,8 % der Mischung gemäß Beispiel M65 mit 0,2 % der polymerisierbaren Verbindung der Formel 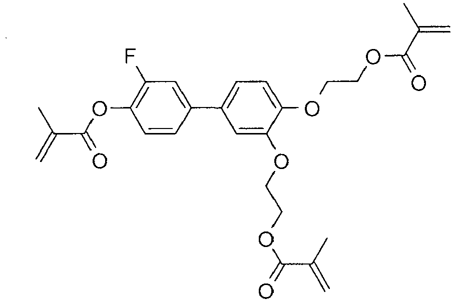 versetzt.

### Beispiel M97

Zur Herstellung einer PS-VA-Mischung werden 99,8 % der Mischung gemäß Beispiel M70 mit 0,2 % der polymerisierbaren Verbindung der Formel 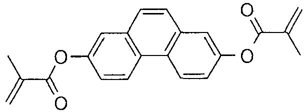 versetzt.

### Beispiel M98

Zur Herstellung einer PS-VA-Mischung werden 99,75 % der Mischung gemäß Beispiel M71 mit 0,25 % der polymerisierbaren Verbindung der Formel 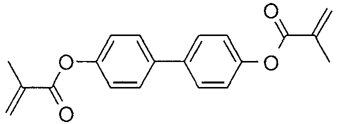 versetzt.

### Beispiel M99

Zur Herstellung einer PS-VA-Mischung werden 99,7 % der Mischung gemäß Beispiel M72 mit 0,3 % der polymerisierbaren Verbindung der Formel 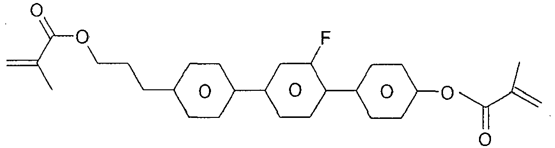 versetzt.

### Beispiel M100

Die flüssigkristalline Mischung

| | | | |
|---|---|---|---|
| CC-V-V | 31,50 % | Klärpunkt [°C]: | 75,0 |
| CCP-3-1 | 5,00 % | Δn [589 nm, 20 °C]: | 0,0949 |
| CCY-2-1 | 12,00 % | Δε [1 kHz, 20 °C]: | -3,8 |
| CCY-3-O1 | 7,50 % | ε_{∥} [1 kHz, 20 °C]: | 3,7 |
| CCY-3-O2 | 8,00 % | K₁ [pN, 20 °C]: | 11,4 |
| CLY-3-O2 | 5,50 % | K₃ [pN, 20 °C]: | 14,2 |
| CLY-3-O3 | 4,00 % | γ₁ [mPa·s, 20 °C]: | 88 |
| CPY-2-O2 | 4,50 % | V₀ [20 °C, V]: | 2,04 |
| CPY-3-O2 | 3,00 % | | |
| CY-3-O2 | 11,00 % | | |
| PY-1-O4 | 4,00 % | | |
| B-2O-O5 | 4,00 % | | |

enthält zusätzlich 0,03 % ST-12.

### Beispiel M101

Die flüssigkristalline Mischung

| | | | |
|---|---|---|---|
| CC-3-V | 36,50 % | Klärpunkt [°C]: | 80,0 |
| CCY-3-O1 | 6,00 % | Δn [589 nm, 20 °C]: | 0,1028 |
| CCY-3-O2 | 6,00 % | Δε [1 kHz, 20 °C]: | -4,4 |
| CCY-4-O2 | 2,50 % | ε_{∥} [1 kHz, 20 °C]: | 3,8 |
| CLY-3-O2 | 7,00 % | K₁ [pN, 20 °C]: | 14,2 |
| CLY-3-O3 | 3,00 % | K₃ [pN, 20 °C]: | 15,9 |
| CPY-2-O2 | 7,00 % | γ₁ [mPa·s, 20 °C]: | 108 |
| CPY-3-O2 | 10,00 % | V₀ [20 °C, V]: | 2,01 |
| CY-3-O2 | 11,50 % | | |
| PY-3-O2 | 5,50 % | | |
| B-2O-O5 | 5,00 % | | |

enthält zusätzlich 0,025 % ST-8-1.

### Beispiel M102

Die flüssigkristalline Mischung

| | | | |
|---|---|---|---|
| CY-3-O2 | 9,00 % | Klärpunkt [°C]: | 87,0 |
| CY-3-O4 | 7,00 % | Δn [589 nm, 20 °C]: | 0,1026 |
| PY-3-O2 | 3,00 % | Δε [1 kHz, 20 °C]: | -4,9 |
| CCY-3-O1 | 8,00 % | ε_{∥} [1 kHz, 20 °C]: | 3,9 |
| CCY-3-O2 | 11,00 % | K₁ [pN, 20 °C]: | 14,5 |
| CCY-4-O2 | 10,00 % | K₃ [pN, 20 °C]: | 16,7 |
| CPY-2-O2 | 6,50 % | γ₁ [mPa·s, 20 °C]: | 142 |
| CPY-3-O2 | 12,00 % | V₀ [20 °C, V]: | 1,95 |
| CC-3-V | 29,50 % | | |
| B-2O-O5 | 4,00 % | | |

enthält zusätzlich 0,025 % ST-8-1.

### Beispiel M103

Die flüssigkristalline Mischung

| | | | |
|---|---|---|---|
| CY-3-O2 | 12,50 % | Klärpunkt [°C]: | 87,0 |
| CCY-3-O1 | 9,00 % | Δn [589 nm, 20 °C]: | 0,1025 |
| CCY-3-O2 | 11,00 % | Δε [1 kHz, 20 °C]: | -4,8 |
| CCY-4-O2 | 7,00 % | ε_{∥} [1 kHz, 20 °C]: | 3,8 |
| CPY-3-O2 | 3,00 % | K₁ [pN, 20 °C]: | 14,1 |
| CC-3-V | 31,00 % | K₃ [pN, 20 °C]: | 16,8 |
| B-2O-O5 | 4,00 % | γ₁ [mPa·s, 20 °C]: | 127 |
| PY-V2-O2 | 5,50 % | V₀ [20 °C, V]: | 1,97 |
| CPY-V-O2 | 6,00 % | | |
| CPY-V-O4 | 5,00 % | | |
| CCY-V-O2 | 6,00 % | | |

enthält zusätzlich 0,025 % ST-12.

### Beispiel M104

Die flüssigkristalline Mischung

| | | | |
|---|---|---|---|
| CC-3-V | 34,50 % | Klärpunkt [°C]: | 74,0 |
| CC-3-V1 | 8,00 % | Δn [589 nm, 20 °C]: | 0,1072 |
| CCY-3-O1 | 5,50 % | Δε [1 kHz, 20 °C]: | -3,0 |
| CCY-3-O2 | 11,50 % | ε_{∥} [1 kHz, 20 °C]: | 3,5 |
| PY-3-O2 | 7,50 % | K₁ [pN, 20 °C]: | 14,0 |
| PP-1-2V1 | 7,00 % | K₃ [pN, 20 °C]: | 15,8 |
| B-2O-O5 | 4,00 % | γ₁ [mPa·s, 20 °C]: | 78 |
| PY-V2-O2 | 5,00 % | V₀ [20 °C, V]: | 2,43 |
| CPY-V-O2 | 6,00 % | | |
| CPY-V-O4 | 5,00 % | | |
| CCY-V-O2 | 6,00 % | | |

enthält zusätzlich 0,025 % ST-8-1.

### Beispiel M105

Die flüssigkristalline Mischung

| | | | |
|---|---|---|---|
| CC-3-V | 42,00 % | Klärpunkt [°C]: | 74,5 |
| CCP-3-1 | 5,00 % | Δn [589 nm, 20 °C]: | 0,0997 |
| CCY-3-O1 | 3,00 % | Δε [1 kHz, 20 °C]: | -3,3 |
| CCY-3-O2 | 11,00 % | ε_{∥} [1 kHz, 20 °C]: | 3,6 |
| CCY-V-O2 | 6,00 % | K₁ [pN, 20 °C]: | 13,0 |
| CPY-V-O2 | 6,50 % | K₃ [pN, 20 °C]: | 14,9 |
| CPY-V-O4 | 5,00 % | γ₁ [mPa·s, 20 °C]: | 75 |
| CY-3-O2 | 3,50 % | V₀ [20 °C, V]: | 2,26 |
| PY-3-O2 | 5,00 % | | |
| B-2O-O5 | 4,00 % | | |
| PY-V2-O2 | 9,00 % | | |

enthält zusätzlich 0,025 % ST-8-1.

### Beispiel M106

Zur Herstellung einer PS (polymer stabilized)-Mischung, z.B. für PS-IPS-, PS-VA-, PS-FFS-Anwendungen, werden 99,7 % der Mischung gemäß Beispiel M100 mit 0,3 % der polymerisierbaren Verbindung der Formel 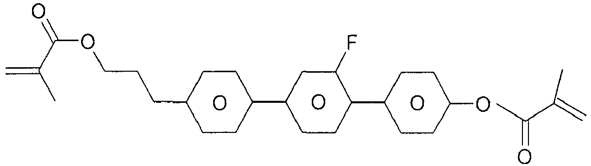 versetzt.

### Beispiel M107

Zur Herstellung einer PS (polymer stabilized)-Mischung, z.B. für PS-IPS-, PS-VA-, PS-FFS-Anwendungen, werden 99,75 % der Mischung gemäß Beispiel M100 mit 0,25 % der polymerisierbaren Verbindung der Formel 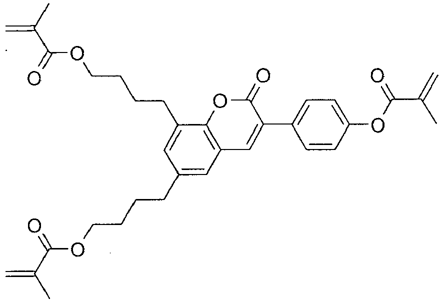 versetzt.

### Beispiel M108

Zur Herstellung einer PS-VA-Mischung werden 99,8 % der Mischung gemäß Beispiel M101 mit 0,2 % der polymerisierbaren Verbindung der Formel 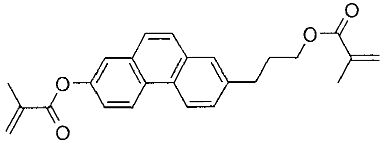 versetzt.

### Beispiel M109

Zur Herstellung einer PS-VA-Mischung werden 99,75 % der Mischung gemäß Beispiel M102 mit 0,25 % der polymerisierbaren Verbindung der Formel 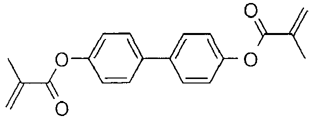 versetzt.

### Beispiel M110

Zur Herstellung einer PS-VA-Mischung werden 99,75 % der Mischung gemäß Beispiel M102 mit 0,25 % der polymerisierbaren Verbindung der Formel 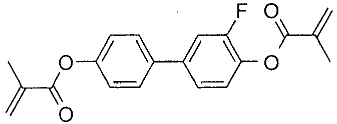 versetzt.

### Beispiel M111

Zur Herstellung einer PS (polymer stabilized)-Mischung, z.B. für PS-IPS-, PS-VA-, PS-FFS-Anwendungen, werden 99,7 % der Mischung gemäß Beispiel M102 mit 0,3 % der polymerisierbaren Verbindung der Formel 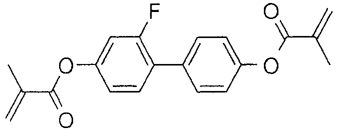 versetzt.

### Beispiel M112

Zur Herstellung einer PS-VA-Mischung werden 99,8 % der Mischung gemäß Beispiel M102 mit 0,2 % der polymerisierbaren Verbindung der Formel 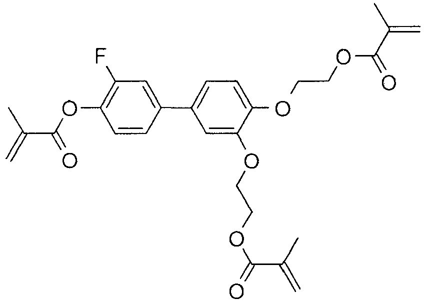 versetzt.

### Beispiel M113

Zur Herstellung einer PS-VA-Mischung werden 99,8 % der Mischung gemäß Beispiel M103 mit 0,2 % der polymerisierbaren Verbindung der Formel 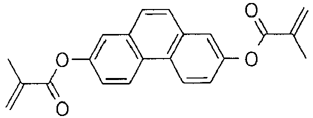 versetzt.

### Beispiel M114

Zur Herstellung einer PS-VA-Mischung werden 99,75 % der Mischung gemäß Beispiel M104 mit 0,25 % der polymerisierbaren Verbindung der Formel 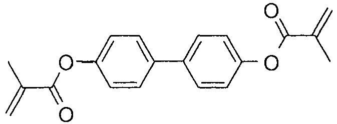 versetzt.

### Beispiel M115

Zur Herstellung einer PS-VA-Mischung werden 99,7 % der Mischung gemäß Beispiel M104 mit 0,3 % der polymerisierbaren Verbindung der Formel 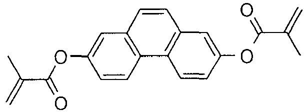 versetzt.

### Beispiel M116

Zur Herstellung einer PS-VA-Mischung werden 99,7 % der Mischung gemäß Beispiel M104 mit 0,3 % der polymerisierbaren Verbindung der Formel 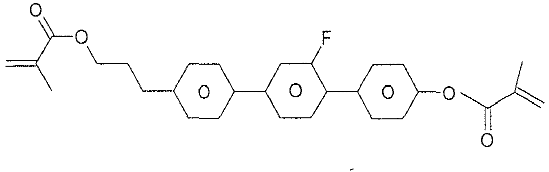 versetzt.

### Beispiel M117

Zur Herstellung einer PS-VA-Mischung werden 99,75 % der Mischung gemäß Beispiel M104 mit 0,25 % der polymerisierbaren Verbindung der Formel 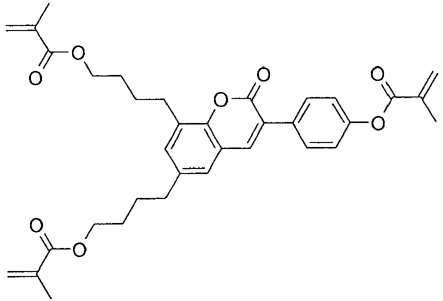 versetzt.

### Beispiel M118

Zur Herstellung einer PS-VA-Mischung werden 99,7 % der Mischung gemäß Beispiel M104 mit 0,3 % der polymerisierbaren Verbindung der Formel 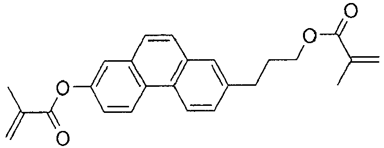 versetzt.

### Beispiel M119

Zur Herstellung einer PS-VA-Mischung werden 99,75 % der Mischung gemäß Beispiel M105 mit 0,25 % der polymerisierbaren Verbindung der Formel 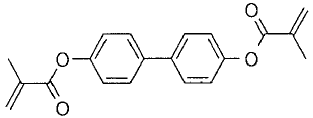 versetzt.

### Beispiel M120

Zur Herstellung einer PS-VA-Mischung werden 99,75 % der Mischung gemäß Beispiel M105 mit 0,25 % der polymerisierbaren Verbindung der Formel 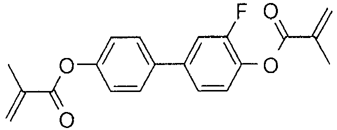 versetzt.

### Beispiel M121

Zur Herstellung einer PS-VA-Mischung werden 99,75 % der Mischung gemäß Beispiel M105 mit 0,25 % der polymerisierbaren Verbindung der Formel 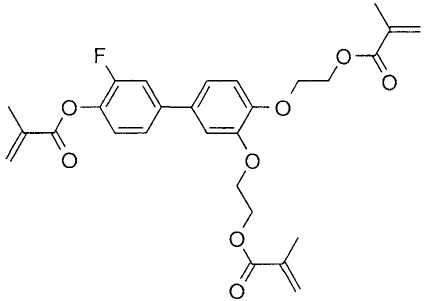 versetzt.

### Beispiel M122

Zur Herstellung einer PS-VA-Mischung werden 99,75 % der Mischung gemäß Beispiel M105 mit 0,25 % der polymerisierbaren Verbindung der Formel 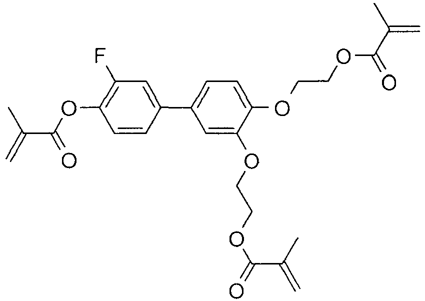 versetzt.

### Beispiel M123

Zur Herstellung einer PS-VA-Mischung werden 99,8 % der Mischung gemäß Beispiel M105 mit 0,3 % der polymerisierbaren Verbindung der Formel 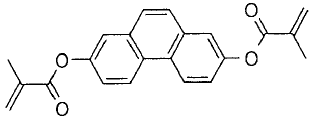 versetzt.

### Beispiel M124

Die flüssigkristalline Mischung

| | | | |
|---|---|---|---|
| CC-3-V | 17,00% | Klärpunkt [°C]: | 75,5 |
| CC-V-V | 20,00% | Δn [589 nm, 20°C]: | 0,1079 |
| CC-3-V1 | 8,00% | ε_{∥} [1 kHz, 20°C]: | 3,4 |
| CCY-3-O1 | 6,00% | ε_{⊥} [1 kHz, 20°C]: | 6,1 |
| CCY-3-O2 | 10,00% | Δε [1 kHz, 20°C]: | -2,7 |
| CCY-4-O2 | 2,50% | K₁ [pN, 20°C]: | 12,5 |
| CPY-2-O2 | 5,50% | K₃ [pN, 20°C]: | 14,8 |
| CPY-3-O2 | 11,50% | V₀ [pN, 20°C]: | 2,45 |
| PY-3-O2 | 8,50% | γ₁ [mPa·s, 20 °C]: | 75 |
| PYP-2-3 | 5,00% | | |
| PP-1-2V1 | 3,00% | | |
| B-3O-O5 | 3,00% | | |

enthält zusätzlich 0,025 % ST-8-1.

### Beispiel M125

Die flüssigkristalline Mischung

| | | | |
|---|---|---|---|
| CC-3-V | 20,50% | Klärpunkt [°C]: | 74,5 |
| CC-V-V | 15,00% | Δn [589 nm, 20°C]: | 0,1095 |
| CC-3-V1 | 8,00% | ε_{∥} [1 kHz, 20°C]: | 3,5 |
| CLY-3-O2 | 6,00% | ε_{⊥} [1 kHz, 20°C]: | 6,3 |
| CCY-3-O2 | 11,50% | Δε [1 kHz, 20°C]: | -2,9 |
| CCY-4-O2 | 4,00% | K₁ [pN, 20°C]: | 13,5 |
| CPY-3-O2 | 7,50% | K₃ [pN, 20°C]: | 15,2 |
| BCH-32 | 3,50% | V₀ [pN, 20°C]: | 2,43 |
| PY-3-O2 | 11,50% | γ₁ [mPa·s, 20 °C]: | 77 |
| PGIY-2-O4 | 4,50% | | |
| PP-1-2V1 | 4,00% | | |
| B-2O-O5 | 4,00% | | |

enthält zusätzlich 0,025 % ST-2a-1.

### Beispiel M126

Die flüssigkristalline Mischung

| | | | |
|---|---|---|---|
| CC-V-V | 36,00% | Klärpunkt [°C]: | 75 |
| CC-3-V1 | 8,00% | Δn [589 nm, 20°C]: | 0,1076 |
| CLY-3-O2 | 6,00% | ε_{∥} [1 kHz, 20°C]: | 3,4 |
| CCY-3-O2 | 11,50% | ε_{⊥} [1 kHz, 20°C]: | 6,0 |
| CCY-4-O2 | 5,00% | Δε [1 kHz, 20°C]: | -2,7 |
| CPY-3-O2 | 7,50% | K₁ [pN, 20°C]: | 12,0 |
| BCH-32 | 7,00% | K₃ [pN, 20°C]: | 14,3 |
| PY-3-O2 | 8,00% | V₀ [pN, 20°C]: | 2,46 |
| PGIY-2-O4 | 4,50% | γ₁ [mPa·s, 20 °C]: | 70 |
| PP-1-2V1 | 2,50% | | |
| B-2O-O5 | 4,00% | | |

enthält zusätzlich 0,03 % ST-12.

### Beispiel M127

Die flüssigkristalline Mischung

| | | | |
|---|---|---|---|
| CC-V-V | 34,00% | Klärpunkt [°C]: | 75,5 |
| CC-3-V1 | 8,00% | Δn [589 nm, 20°C]: | 0,1085 |
| CCY-3-O1 | 7,00% | ε_{∥} [1 kHz, 20°C]: | 3,4 |
| CCY-3-O2 | 11,50% | ε_{⊥} [1 kHz, 20°C]: | 6,1 |
| CCY-4-O2 | 5,00% | Δε [1 kHz, 20°C]: | -2,7 |
| CPY-3-O2 | 7,50% | K₁ [pN, 20°C]: | 12,0 |
| BCH-32 | 7,00% | K₃ [pN, 20°C]: | 14,4 |
| PY-3-O2 | 8,00% | V₀ [pN, 20°C]: | 2,44 |
| PGIY-2-O4 | 4,50% | γ₁ [mPa·s, 20 °C]: | 74 |
| PP-1-2V1 | 3,50% | | |
| B-2O-O5 | 4,00% | | |

enthält zusätzlich 0,025 % ST-8-1.

### Beispiel M128

Die flüssigkristalline Mischung

| | | | |
|---|---|---|---|
| CC-3-V | 9,50% | Klärpunkt [°C]: | 74,0 |
| CC-V-V | 29,00% | Δn [589 nm, 20°C]: | 0,0989 |
| CCP-3-1 | 10,00% | ε_{∥} [1 kHz, 20°C]: | 3,6 |
| CCY-3-O1 | 8,50% | ε_{⊥} [1 kHz, 20°C]: | 6,7 |
| CCY-3-O2 | 11,00% | Δε [1 kHz, 20°C]: | -3,2 |
| CPY-2-O2 | 2,00% | K₁ [pN, 20°C]: | 11,8 |
| CPY-3-O2 | 11,00% | K₃ [pN, 20°C]: | 14,8 |
| CY-3-O2 | 5,00% | V₀ [pN, 20°C]: | 2,28 |
| PY-3-O2 | 10,00% | γ₁ [mPa·s, 20 °C]: | 76 |
| B-2O-O5 | 4,00% | | |

enthält zusätzlich 0,025 % ST-8-1.

### Beispiel M129

Die flüssigkristalline Mischung

| | | | |
|---|---|---|---|
| CC-3-V | 15,50% | Klärpunkt [°C]: | 74,5 |
| CC-V-V | 20,00% | Δn [589 nm, 20°C]: | 0,1075 |
| CC-3-V1 | 8,00% | ε_{∥} [1 kHz, 20°C]: | 3,5 |
| CCY-3-O1 | 8,00% | ε_{⊥} [1 kHz, 20°C]: | 6,5 |
| CCY-3-O2 | 11,50% | Δε [1 kHz, 20°C]: | -3,0 |
| CCY-4-O2 | 4,50% | K₁ [pN, 20°C]: | 12,9 |
| CPY-3-O2 | 8,50% | K₃ [pN, 20°C]: | 15,0 |
| PY-2-O2 | 6,50% | V₀ [pN, 20°C]: | 2,35 |
| PGIY-2-O4 | 5,00% | γ₁ [mPa·s, 20 °C]: | 76 |
| PP-1-2V1 | 6,50% | LTS bulk [-20 °C]: | > 1000 h |
| B(S)-2O-O5 | 3,00% | | |
| B-2O-O5 | 3,00% | | |

enthält zusätzlich 0,1 % ST-8-1.

### Beispiel M130

Die flüssigkristalline Mischung

| | | | |
|---|---|---|---|
| CC-3-V | 17,50% | Klärpunkt [°C]: | 74 |
| CC-V-V | 20,00% | Δn [589 nm, 20°C]: | 0,1074 |
| CC-3-V1 | 8,00% | ε_{∥} [1 kHz, 20°C]: | 3,5 |
| CCY-3-O1 | 8,00% | ε_{⊥} [1 kHz, 20°C]: | 6,4 |
| CCY-3-O2 | 12,00% | Δε [1 kHz, 20°C]: | -2,9 |
| CPY-3-O2 | 12,00% | K₁ [pN, 20°C]: | 12,7 |
| PY-2-O2 | 6,00% | K₃ [pN, 20°C]: | 15,1 |
| PGIY-2-O4 | 4,50% | V₀ [pN, 20°C]: | 2,41 |
| PP-1-2V1 | 6,00% | γ₁ [mPa·s, 20 °C]: | 72 |
| B(S)-2O-O5 | 3,00% | | |
| B-2O-O5 | 3,00% | | |

enthält zusätzlich 0,025 % ST-8-1.

### Beispiel M131

Die flüssigkristalline Mischung

| | | | |
|---|---|---|---|
| CC-3-V | 22,00% | Klärpunkt [°C]: | 76 |
| CC-V-V | 20,00% | Δn [589 nm, 20°C]: | 0,0946 |
| CCY-3-O1 | 8,00% | ε_{∥} [1 kHz, 20°C]: | 3,7 |
| CCY-3-O2 | 12,00% | ε_{⊥} [1 kHz, 20°C]: | 7,5 |
| CCY-4-O2 | 2,50% | Δε [1 kHz, 20°C]: | -3,9 |
| CLY-3-O2 | 6,00% | K₁ [pN, 20°C]: | 12,4 |
| CLY-3-O3 | 9,50% | K₃ [pN, 20°C]: | 14,3 |
| CPY-3-O2 | 1,50% | V₀ [pN, 20°C]: | 2,04 |
| CY-3-O2 | 2,50% | γ₁ [mPa·s, 20 °C]: | 78 |
| B-2O-O5 | 3,00% | | |
| B(S)-2O-O5 | 3,00% | | |
| PY-2-O2 | 10,00% | | |

enthält zusätzlich 0,025 % ST-8-1.

### Beispiel M132

Die flüssigkristalline Mischung

| | | | |
|---|---|---|---|
| CC-3-V | 20,50% | Klärpunkt [°C]: | 76 |
| CC-V-V | 20,00% | Δn [589 nm, 20°C]: | 0,0945 |
| CCY-3-O1 | 8,00% | ε_{∥} [1 kHz, 20°C]: | 3,7 |
| CCY-3-O2 | 11,50% | ε_{⊥} [1 kHz, 20°C]: | 7,6 |
| CCY-4-O2 | 4,00% | Δε [1 kHz, 20°C]: | -3,9 |
| CPY-2-O2 | 6,00% | K₁ [pN, 20°C]: | 11,9 |
| CPY-3-O2 | 11,00% | K₃ [pN, 20°C]: | 14,7 |
| CY-3-O2 | 13,50% | V₀ [pN, 20°C]: | 2,05 |
| B-2O-O5 | 3,00% | γ₁ [mPa·s, 20 °C]: | 84 |
| B(S)-2O-O5 | 2,50% | | |

enthält zusätzlich 0,025 % ST-8-1.

### Beispiel M133

Die flüssigkristalline Mischung

| | | | |
|---|---|---|---|
| CC-3-V | 19,50% | Klärpunkt [°C]: | 75,5 |
| CC-V-V | 23,00% | Δn [589 nm, 20°C]: | 0,0989 |
| CCP-3-1 | 5,50% | ε_{∥} [1 kHz, 20°C]: | 3,5 |
| CCY-3-O1 | 8,00% | ε_{⊥} [1 kHz, 20°C]: | 6,6 |
| CCY-3-O2 | 11,00% | Δε [1 kHz, 20°C]: | -3,1 |
| CCY-4-O2 | 4,00% | K₁ [pN, 20°C]: | 12,2 |
| CPY-3-O2 | 12,00% | K₃ [pN, 20°C]: | 14,8 |
| PY-3-O2 | 13,00% | V₀ [pN, 20°C]: | 2,30 |
| B-2O-O5 | 4,00% | γ₁ [mPa·s, 20 °C]: | 75 |

enthält zusätzlich 0,025 % ST-8-1.

### Beispiel M134

Die flüssigkristalline Mischung

| | | | |
|---|---|---|---|
| CC-V-V | 15,00% | Klärpunkt [°C]: | 74,5 |
| CC-3-V1 | 7,00% | Δn [589 nm, 20°C]: | 0,1071 |
| CCH-23 | 6,50% | ε_{∥} [1 kHz, 20°C]: | 3,6 |
| CCH-34 | 4,00% | ε_{⊥} [1 kHz, 20°C]: | 6,7 |
| CCP-3-1 | 16,00% | Δε [1 kHz, 20°C]: | -3,2 |
| CCY-3-O1 | 4,50% | K₁ [pN, 20°C]: | 13,4 |
| CCY-3-O2 | 12,00% | K₃ [pN, 20°C]: | 15,0 |
| CY-3-O2 | 8,50% | V₀ [pN, 20°C]: | 2,29 |
| PY-3-O2 | 11,50% | γ₁ [mPa·s, 20 °C]: | 88 |
| PYP-2-3 | 8,00% | | |
| B-2O-O5 | 4,00% | | |
| B(S)-2O-O5 | 3,00% | | |

enthält zusätzlich 0,025 % ST-8-1.

### Beispiel M135

Die flüssigkristalline Mischung

| | | | |
|---|---|---|---|
| CC-3-V | 23,00% | Klärpunkt [°C]: | 74,5 |
| CC-V-V | 20,00% | Δn [589 nm, 20°C]: | 0,0974 |
| CCP-3-1 | 5,00% | ε_{∥} [1 kHz, 20°C]: | 3,5 |
| CCY-3-O1 | 7,50% | ε_{⊥} [1 kHz, 20°C]: | 6,6 |
| CCY-3-O2 | 11,00% | Δε [1 kHz, 20°C]: | -3,1 |
| CCY-4-O2 | 5,00% | K₁ [pN, 20°C]: | 12,3 |
| CPY-3-O2 | 11,00% | K₃ [pN, 20°C]: | 14,7 |
| PY-3-O2 | 13,50% | V₀ [pN, 20°C]: | 2,30 |
| B-2O-O5 | 4,00% | γ₁ [mPa·s, 20 °C]: | 74 |

enthält zusätzlich 0,025 % ST-8-1.

### Beispiel M136

Die flüssigkristalline Mischung

| | | | |
|---|---|---|---|
| BCH-32 | 8,50% | Klärpunkt [°C]: | 73,0 |
| CC-3-V | 15,00% | Δn [589 nm, 20°C]: | 0,1052 |
| CC-V-V | 14,00% | ε_{∥} [1 kHz, 20°C]: | 3,4 |
| CCP-3-1 | 11,00% | ε_{⊥} [1 kHz, 20°C]: | 6,0 |
| CCY-3-O1 | 7,00% | Δε [1 kHz, 20°C]: | -2,6 |
| CCY-3-O2 | 8,50% | K₁ [pN, 20°C]: | 12,5 |
| CPY-3-O2 | 7,00% | K₃ [pN, 20°C]: | 14,7 |
| CY-3-O2 | 17,00% | V₀ [pN, 20°C]: | 2,53 |
| PP-1-3 | 7,00% | γ₁ [mPa·s, 20 °C]: | 79 |
| B-2O-O5 | 4,00% | | |
| PYP-2-3 | 1,00% | | |

enthält zusätzlich 0,025 % ST-8-1.

### Beispiel M137

Die flüssigkristalline Mischung

| | | | |
|---|---|---|---|
| CC-V-V | 31,50% | Klärpunkt [°C]: | 75,0 |
| CCP-3-1 | 5,00% | Δn [589 nm, 20°C]: | 0,0949 |
| CCY-2-1 | 12,00% | ε_{∥} [1 kHz, 20°C]: | 3,7 |
| CCY-3-O1 | 7,50% | ε_{⊥} [1 kHz, 20°C]: | 7,5 |
| CCY-3-O2 | 8,00% | Δε [1 kHz, 20°C]: | -3,8 |
| CLY-3-O2 | 5,50% | K₁ [pN, 20°C]: | 11,4 |
| CLY-3-O3 | 4,00% | K₃ [pN, 20°C]: | 14,2 |
| CPY-2-O2 | 4,50% | V₀ [pN, 20°C]: | 2,04 |
| CPY-3-O2 | 3,00% | γ₁ [mPa·s, 20 °C]: | 88 |
| CY-3-O2 | 11,00% | | |
| PY-1-O4 | 4,00% | | |
| B-2O-O5 | 4,00% | | |

enthält zusätzlich 0,025 % ST-8-1.

### Beispiel M138

Die flüssigkristalline Mischung

| | | | |
|---|---|---|---|
| CC-V-V | 31,50% | Klärpunkt [°C]: | 74,5 |
| CCP-3-1 | 4,00% | Δn [589 nm, 20°C]: | 0,0945 |
| CCY-2-1 | 12,00% | ε_{∥} [1 kHz, 20°C]: | 3,7 |
| CCY-3-O1 | 7,50% | ε_{⊥} [1 kHz, 20°C]: | 7,6 |
| CCY-3-O2 | 11,50% | Δε [1 kHz, 20°C]: | -3,8 |
| CLY-3-O2 | 5,00% | K₁ [pN, 20°C]: | 11,2 |
| CPY-3-O2 | 4,50% | K₃ [pN, 20°C]: | 14,4 |
| CY-3-O2 | 14,00% | V₀ [pN, 20°C]: | 2,05 |
| PY-4-O2 | 2,00% | γ₁ [mPa·s, 20 °C]: | 90 |
| PGIY-2-O4 | 3,00% | | |
| B-2O-O5 | 4,00% | | |
| CCPC-33 | 1,00% | | |

enthält zusätzlich 0,025 % ST-8-1.

### Beispiel M139

Die flüssigkristalline Mischung

| | | | |
|---|---|---|---|
| CC-3-V | 14,50% | Klärpunkt [°C]: | 74 |
| CC-V-V | 20,00% | Δn [589 nm, 20°C]: | 0,1074 |
| CC-3-V1 | 8,00% | Δε [1 kHz, 20°C]: | -3,0 |
| CCY-3-O1 | 5,50% | K₁ [pN, 20°C]: | 12,7 |
| CCY-3-O2 | 11,50% | K₃ [pN, 20°C]: | 15,4 |
| CPY-3-O2 | 4,00% | V₀ [pN, 20°C]: | 2,42 |
| PY-3-O2 | 3,50% | γ₁ [mPa·s, 20 °C]: | 73 |
| PP-1-2V1 | 7,00% | | |
| B-2O-O5 | 4,00% | | |
| PY-V2-O2 | 5,00% | | |
| CPY-V-O2 | 6,00% | | |
| CPY-V-O4 | 5,00% | | |
| CCY-V-O2 | 6,00% | | |

enthält zusätzlich 0,025 % ST-8-1.

### Beispiel M140

Die flüssigkristalline Mischung

| | | | |
|---|---|---|---|
| CCP-V-1 | 4,00% | Klärpunkt [°C]: | 92,5 |
| CCY-3-O2 | 7,50% | Δn [589 nm, 20°C]: | 0,1074 |
| CLY-3-O2 | 8,00% | Δε [1 kHz, 20°C]: | -2,5 |
| CLY-3-O3 | 5,00% | ε_{∥} [1 kHz, 20°C]: | 3,2 |
| CPY-3-O2 | 10,00% | ε_{⊥} [1 kHz, 20°C]: | 5,7 |
| PGIY-2-O4 | 5,00% | K₁ [pN, 20°C]: | 16,4 |
| PYP-2-3 | 6,00% | K₃ [pN, 20°C]: | 18,0 |
| B-2O-O5 | 5,00% | V₀ [pN, 20°C]: | 2,82 |
| CC-3-V | 41,50% | γ₁ [mPa·s, 20 °C]: | 96 |
| CC-3-V1 | 8,00% | | |

enthält zusätzlich 0,025 % ST-8-1.

### Beispiel M141

Die flüssigkristalline Mischung

| | | | |
|---|---|---|---|
| CLY-3-O2 | 10,00% | Klärpunkt [°C]: | 80 |
| CLY-3-O3 | 1,50% | Δn [589 nm, 20°C]: | 0,1080 |
| CPY-2-O2 | 4,00% | Δε [1 kHz, 20°C]: | -2,4 |
| CPY-3-O2 | 10,00% | ε_{∥} [1 kHz, 20°C]: | 3,3 |
| PGIY-2-O4 | 5,00% | ε_{⊥} [1 kHz, 20°C]: | 5,7 |
| PYP-2-3 | 8,00% | K₁ [pN, 20°C]: | 14,0 |
| B-2O-O5 | 4,50% | K₃ [pN, 20°C]: | 15,8 |
| CC-3-V | 44,50% | V₀ [pN, 20°C]: | 2,68 |
| CC-3-V1 | 8,00% | γ₁ [mPa·s, 20 °C]: | 80 |
| CY-3-O2 | 2,50% | | |
| CY-5-O2 | 2,00% | | |

enthält zusätzlich 0,025 % ST-8-1.

### Beispiel M141

Die flüssigkristalline Mischung

| | | | |
|---|---|---|---|
| CCP-V2-1 | 5,00% | Klärpunkt [°C]: | 79,5 |
| CLY-3-O2 | 10,00% | Δn [589 nm, 20°C]: | 0,1079 |
| CPY-3-O2 | 9,00% | Δε [1 kHz, 20°C]: | -2,0 |
| PGIY-2-O4 | 2,50% | ε_{∥} [1 kHz, 20°C]: | 3,2 |
| PYP-2-3 | 8,00% | ε_{⊥} [1 kHz, 20°C]: | 5,3 |
| PYP-2-4 | 5,00% | K₁ [pN, 20°C]: | 14,4 |
| B-2O-O5 | 4,00% | K₃ [pN, 20°C]: | 15,5 |
| CC-3-V | 43,00% | V₀ [pN, 20°C]: | 2,92 |
| CC-3-V1 | 7,50% | γ₁ [mPa·s, 20 °C]: | 75 |
| CY-3-O2 | 6,00% | | |

enthält zusätzlich 0,025 % ST-8-1.

### Beispiel M143

Die flüssigkristalline Mischung

| | | | |
|---|---|---|---|
| CCY-3-O1 | 4,00% | Klärpunkt [°C]: | 79,8 |
| CCY-3-O2 | 8,50% | Δn [589 nm, 20°C]: | 0,1013 |
| CCY-4-O2 | 5,00% | Δε [1 kHz, 20°C]: | -3,7 |
| CLY-3-O2 | 10,00% | ε_{∥} [1 kHz, 20°C]: | 3,6 |
| CLY-3-O3 | 4,00% | ε_{⊥} [1 kHz, 20°C]: | 7,3 |
| PGIY-2-O4 | 5,00% | K₁ [pN, 20°C]: | 14,7 |
| PYP-2-3 | 1,00% | K₃ [pN, 20°C]: | 16,3 |
| B-2O-O5 | 5,00% | V₀ [pN, 20°C]: | 2,20 |
| CC-3-V | 34,50% | γ₁ [mPa·s, 20 °C]: | 97 |
| CC-3-V1 | 8,50% | | |
| CY-3-O2 | 5,00% | | |
| PY-3-O2 | 9,50% | | |

enthält zusätzlich 0,02 % ST-9-1.

### Beispiel M144

Die flüssigkristalline Mischung

| | | | |
|---|---|---|---|
| CCY-3-O2 | 7,00% | Klärpunkt [°C]: | 80 |
| CCY-4-O2 | 2,00% | Δn [589 nm, 20°C]: | 0,1009 |
| CLY-3-O2 | 8,00% | Δε [1 kHz, 20°C]: | -3,7 |
| CLY-3-O3 | 4,00% | ε_{∥} [1 kHz, 20°C]: | 3,6 |
| CPY-2-O2 | 3,00% | ε_{⊥} [1 kHz, 20°C]: | 7,3 |
| CPY-3-O2 | 8,00% | K₁ [pN, 20°C]: | 14,4 |
| PGIY-2-O4 | 5,00% | K₃ [pN, 20°C]: | 16,4 |
| PYP-2-3 | 1,00% | V₀ [pN, 20°C]: | 2,21 |
| B-2O-O5 | 5,00% | γ₁ [mPa·s, 20 °C]: | 99 |
| CC-3-V | 35,00% | | |
| CC-3-V1 | 8,00% | | |
| CY-3-O2 | 12,00% | | |
| CY-5-O2 | 2,00% | | |

enthält zusätzlich 0,025 % ST-8-1.

### Beispiel M145

Die flüssigkristalline Mischung

| | | | |
|---|---|---|---|
| CY-3-O2 | 4,00% | Klärpunkt [°C]: | 100 |
| CY-3-O4 | 18,00% | Δn [589 nm, 20°C]: | 0,0955 |
| CCY-3-O1 | 5,00% | Δε [1 kHz, 20°C]: | -5,0 |
| CCY-3-O2 | 6,00% | ε_{∥} [1 kHz, 20°C]: | 3,8 |
| CCY-3-O3 | 6,00% | ε_{⊥} [1 kHz, 20°C]: | 8,8 |
| CCY-4-O2 | 6,00% | K₁ [pN, 20°C]: | 15,2 |
| CLY-3-O2 | 2,50% | K₃ [pN, 20°C]: | 16,0 |
| CPY-2-O2 | 8,00% | V₀ [pN, 20°C]: | 1,90 |
| CC-4-V | 18,00% | γ₁ [mPa·s, 20 °C]: | 226 |
| CC-5-V | 4,00% | | |
| CH-33 | 3,00% | | |
| CH-35 | 3,00% | | |
| CCPC-33 | 4,50% | | |
| CCPC-34 | 4,50% | | |
| B-2O-O5 | 7,50% | | |

enthält zusätzlich 0,025 % ST-8-1.

### Beispiel M146

Die flüssigkristalline Mischung

| | | | |
|---|---|---|---|
| CCY-3-O1 | 8,00% | Klärpunkt [°C]: | 81,5 |
| CCY-4-O2 | 6,00% | Δn [589 nm, 20°C]: | 0,1075 |
| CLY-3-O2 | 10,00% | Δε [1 kHz, 20°C]: | -3,1 |
| CPY-3-O2 | 10,50% | ε_{∥} [1 kHz, 20°C]: | 3,5 |
| PYP-2-3 | 9,00% | ε_{⊥} [1 kHz, 20°C]: | 6,6 |
| B-2O-O5 | 5,00% | K₁ [pN, 20°C]: | 14,3 |
| CC-3-V | 45,00% | K₃ [pN, 20°C]: | 15,7 |
| PY-3-O2 | 5,00% | V₀ [pN, 20°C]: | 2,38 |
| Y-4O-O4 | 1,50% | γ₁ [mPa·s, 20 °C]: | 90 |

enthält zusätzlich 0,025 % ST-8-1.

### Beispiel M147

Die flüssigkristalline Mischung

| | | | |
|---|---|---|---|
| CC-3-V | 35,00% | Klärpunkt [°C]: | 86 |
| CCY-3-O1 | 5,00% | Δn [589 nm, 20°C]: | 0,1208 |
| CCY-3-O2 | 7,50% | Δε [1 kHz, 20°C]: | -4,2 |
| CLY-3-O2 | 8,00% | ε_{∥} [1 kHz, 20°C]: | 3,8 |
| CPY-2-O2 | 10,00% | ε_{⊥} [1 kHz, 20°C]: | 8,0 |
| CPY-3-O2 | 10,00% | K₁ [pN, 20°C]: | 14,3 |
| PY-3-O2 | 12,50% | K₃ [pN, 20°C]: | 15,6 |
| PGIY-2-O4 | 8,00% | V₀ [pN, 20°C]: | 2,04 |
| B-2O-O5 | 4,00% | γ₁ [mPa·s, 20 °C]: | 129 |

enthält zusätzlich 0,025 % ST-8-1.

### Beispiel M148

Die flüssigkristalline Mischung

| | | | |
|---|---|---|---|
| CCY-3-O1 | 7,00% | Klärpunkt [°C]: | 80 |
| CLY-3-O2 | 10,00% | Δn [589 nm, 20°C]: | 0,1141 |
| CPY-2-O2 | 10,00% | Δε [1 kHz, 20°C]: | -4,0 |
| CPY-3-O2 | 10,00% | ε_{∥} [1 kHz, 20°C]: | 3,7 |
| PYP-2-3 | 3,00% | ε_{⊥} [1 kHz, 20°C]: | 7,7 |
| B-2O-O5 | 4,00% | K₁ [pN, 20°C]: | 14,9 |
| CC-3-V | 38,00% | K₃ [pN, 20°C]: | 15,6 |
| PY-1-O4 | 10,00% | V₀ [pN, 20°C]: | 2,09 |
| PY-3-O2 | 4,50% | γ₁ [mPa·s, 20 °C]: | 108 |
| CCY-3-O2 | 3,50% | | |

enthält zusätzlich 0,025 % ST-8-1.

### Beispiel M149

Die flüssigkristalline Mischung

| | | | |
|---|---|---|---|
| CCY-3-O1 | 7,00% | Klärpunkt [°C]: | 90 |
| CCY-4-O2 | 4,00% | Δn [589 nm, 20°C]: | 0,1139 |
| CLY-3-O2 | 10,00% | Δε [1 kHz, 20°C]: | -4,2 |
| CPY-2-O2 | 10,00% | ε_{∥} [1 kHz, 20°C]: | 3,7 |
| CPY-3-O2 | 10,00% | ε_{⊥} [1 kHz, 20°C]: | 7,9 |
| PYP-2-3 | 2,50% | K₁ [pN, 20°C]: | 16,2 |
| B-2O-O5 | 4,00% | K₃ [pN, 20°C]: | 17,0 |
| CC-3-V | 35,50% | V₀ [pN, 20°C]: | 2,12 |
| PY-1-O4 | 10,00% | γ₁ [mPa·s, 20 °C]: | 131 |
| PY-3-O2 | 1,00% | | |
| CCY-3-O2 | 6,00% | | |

enthält zusätzlich 0,025 % ST-12.

### Beispiel M150

Die flüssigkristalline Mischung

| | | | |
|---|---|---|---|
| B-2O-O5 | 5,00% | Klärpunkt [°C]: | 80,1 |
| BCH-32 | 7,00% | Δn [589 nm, 20°C]: | 0,1121 |
| CC-3-V | 34,50% | Δε [1 kHz, 20°C]: | -3,9 |
| CCP-V-1 | 2,00% | K₁ [pN, 20°C]: | 14,0 |
| CCY-3-O1 | 5,00% | K₃ [pN, 20°C]: | 14,5 |
| CCY-3-O2 | 4,00% | V₀ [pN, 20°C]: | 2,03 |
| CCY-4-O2 | 2,00% | γ₁ [mPa·s, 20 °C]: | 104 |
| CLY-3-O2 | 8,00% | | |
| CPY-2-O2 | 10,00% | | |
| CPY-3-O2 | 7,00% | | |
| PGIY-2-O4 | 6,00% | | |
| PY-3-O2 | 2,00% | | |
| Y-4O-O4 | 7,50% | | |

enthält zusätzlich 0,025 % ST-8-1.

### Beispiel M151

Die flüssigkristalline Mischung

| | | | |
|---|---|---|---|
| CCY-3-O1 | 7,00% | Klärpunkt [°C]: | 80,5 |
| CCY-4-O2 | 1,50% | Δn [589 nm, 20°C]: | 0,1070 |
| CLY-3-O2 | 10,00% | Δε [1 kHz, 20°C]: | -3,9 |
| CPY-2-O2 | 9,50% | K₁ [pN, 20°C]: | 15,0 |
| CPY-3-O2 | 8,00% | K₃ [pN, 20°C]: | 15,7 |
| B-2O-O5 | 4,00% | V₀ [pN, 20°C]: | 2,12 |
| CC-3-V | 40,00% | γ₁ [mPa·s, 20 °C]: | 104 |
| PY-1-O4 | 9,50% | | |
| PY-3-O2 | 4,50% | | |
| CCY-3-O2 | 6,00% | | |

enthält zusätzlich 0,025 % ST-12.

### Beispiel M152

Die flüssigkristalline Mischung

| | | | |
|---|---|---|---|
| CCY-3-O1 | 7,00% | Klärpunkt [°C]: | 80,5 |
| CLY-3-O2 | 10,00% | Δn [589 nm, 20°C]: | 0,1140 |
| CPY-2-O2 | 10,00% | Δε [1 kHz, 20°C]: | -4,0 |
| CPY-3-O2 | 10,00% | K₁ [pN, 20°C]: | 14,8 |
| PYP-2-3 | 3,00% | K₃ [pN, 20°C]: | 15,6 |
| B-2O-O5 | 5,00% | V₀ [pN, 20°C]: | 2,09 |
| CC-3-V | 38,50% | γ₁ [mPa·s, 20 °C]: | 107 |
| PY-1-O4 | 10,00% | | |
| PY-3-O2 | 3,00% | | |
| CCY-3-O2 | 3,50% | | |

enthält zusätzlich 0,025 % ST-8-1.

### Beispiel M153

Die flüssigkristalline Mischung

| | | | |
|---|---|---|---|
| CCY-3-O1 | 7,00% | Klärpunkt [°C]: | 78,5 |
| CLY-3-O2 | 10,00% | Δn [589 nm, 20°C]: | 0,1142 |
| CPY-2-O2 | 10,00% | Δε [1 kHz, 20°C]: | -4,0 |
| CPY-3-O2 | 10,00% | K₁ [pN, 20°C]: | 14,3 |
| PGIY-2-O4 | 5,00% | K₃ [pN, 20°C]: | 14,8 |
| PYP-2-3 | 1,00% | V₀ [pN, 20°C]: | 45,66 |
| B-2O-O5 | 5,00% | γ₁ [mPa·s, 20 °C]: | 103 |
| CC-3-V | 39,50% | | |
| PY-1-O4 | 10,00% | | |
| Y-4O-O4 | 1,50% | | |
| CCY-3-O2 | 1,00% | | |

enthält zusätzlich 0,025 % ST-8-1.

### Beispiel M154

Die flüssigkristalline Mischung

| | | | |
|---|---|---|---|
| CCY-3-O1 | 7,00% | Klärpunkt [°C]: | 74,5 |
| CLY-3-O2 | 10,00% | Δn [589 nm, 20°C]: | 0,1014 |
| CPY-2-O2 | 10,50% | Δε [1 kHz, 20°C]: | -3,7 |
| CPY-3-O2 | 9,50% | γ₁ [mPa·s, 20 °C]: | 89 |
| B-20-O5 | 3,50% | | |
| CC-3-V | 42,00% | | |
| PY-1-O4 | 10,00% | | |
| Y-4O-O4 | 3,50% | | |
| CCY-3-O2 | 4,00% | | |

enthält zusätzlich 0,025 % ST-8-1.

### Beispiel M155

Die flüssigkristalline Mischung

| | | | |
|---|---|---|---|
| CCY-3-O1 | 7,00% | Klärpunkt [°C]: | 76,5 |
| CLY-3-O2 | 10,00% | Δn [589 nm, 20°C]: | 0,1003 |
| CPY-2-O2 | 10,50% | Δε [1 kHz, 20°C]: | -3,7 |
| CPY-3-O2 | 10,00% | K₁ [pN, 20°C]: | 14,0 |
| B-2O-O5 | 5,00% | K₃ [pN, 20°C]: | 14,7 |
| CC-3-V | 43,50% | V₀ [pN, 20°C]: | 2,09 |
| PY-1-O4 | 6,00% | γ₁ [mPa·s, 20 °C]: | 89 |
| Y-4O-O4 | 4,00% | | |
| CCY-3-O2 | 4,00% | | |

enthält zusätzlich 0,025 % ST-8-1.

### Beispiel M156

Die flüssigkristalline Mischung

| | | | |
|---|---|---|---|
| B-2O-O5 | 5,00% | Klärpunkt [°C]: | 80 |
| CC-3-V | 37,00% | Δn [589 nm, 20°C]: | 0,1094 |
| CCP-V-1 | 4,50% | Δε [1 kHz, 20°C]: | -3,7 |
| CCY-3-O1 | 5,00% | ε_{∥} [1 kHz, 20°C]: | 3,7 |
| CCY-3-O2 | 6,00% | ε_{⊥} [1 kHz, 20°C]: | 7,4 |
| CCY-4-O2 | 5,00% | K₁ [pN, 20°C]: | 13,9 |
| CLY-3-O2 | 8,00% | K₃ [pN, 20°C]: | 14,4 |
| CPY-2-O2 | 9,50% | V₀ [pN, 20°C]: | 2,09 |
| PGIY-2-O4 | 6,00% | γ₁ [mPa·s, 20 °C]: | 106 |
| PY-3-O2 | 14,00% | | |

enthält zusätzlich 0,025 % ST-8-1.

### Beispiel M157

Die flüssigkristalline Mischung

| | | | |
|---|---|---|---|
| CCY-3-O1 | 7,00% | Klärpunkt [°C]: | 90 |
| CCY-4-O2 | 4,00% | Δn [589 nm, 20°C]: | 0,1139 |
| CLY-3-O2 | 10,00% | Δε [1 kHz, 20°C]: | -4,2 |
| CPY-2-O2 | 10,00% | ε_{∥} [1 kHz, 20°C]: | 3,7 |
| CPY-3-O2 | 10,00% | ε_{⊥} [1 kHz, 20°C]: | 7,9 |
| PYP-2-3 | 2,50% | K₁ [pN, 20°C]: | 16,2 |
| B-2O-O5 | 4,00% | K₃ [pN, 20°C]: | 17,0 |
| CC-3-V | 35,50% | V₀ [pN, 20°C]: | 2,12 |
| PY-1-O4 | 10,00% | γ₁ [mPa·s, 20 °C]: | 131 |
| PY-3-O2 | 1,00% | | |
| CCY-3-O2 | 6,00% | | |

enthält zusätzlich 0,025 % ST-8-1.

### Beispiel M158

Die flüssigkristalline Mischung

| | | | |
|---|---|---|---|
| CC-3-V | 35,50% | Klärpunkt [°C]: | 75,1 |
| CC-3-V1 | 10,00% | Δn [589 nm, 20°C]: | 0,1096 |
| CCP-3-1 | 1,50% | Δε [1 kHz, 20°C]: | -3,2 |
| CLY-3-O2 | 10,00% | ε_{∥} [1 kHz, 20°C]: | 3,5 |
| CLY-3-O3 | 3,00% | ε_{⊥} [1 kHz, 20°C]: | 6,7 |
| CPY-2-O2 | 9,00% | K₁ [pN, 20°C]: | 14,3 |
| CPY-3-O2 | 10,50% | K₃ [pN, 20°C]: | 15,9 |
| PY-3-O2 | 16,50% | V₀ [pN, 20°C]: | 2,37 |
| PYP-2-3 | 1,00% | γ₁ [mPa·s, 20 °C]: | 84 |
| B-2O-O5 | 3,00% | | |

enthält zusätzlich 0,025 % ST-8-1.

### Beispiel M159

Zur Herstellung einer PS-VA-Mischung werden 99,9 % der Mischung gemäß Beispiel M158 mit 0,1 % der polymerisierbaren Verbindung der Formel 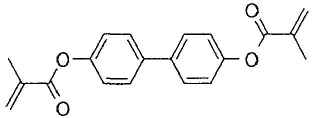 versetzt.

### Beispiel M160

Zur Herstellung einer PS-VA-Mischung werden 99,6 % der Mischung gemäß Beispiel M158 mit 0,4 % der polymerisierbaren Verbindung der Formel 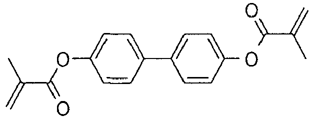 versetzt.

### Beispiel M161

Zur Herstellung einer PS-VA-Mischung werden 99,7 % der Mischung gemäß Beispiel M158 mit 0,3 % der polymerisierbaren Verbindung der Formel 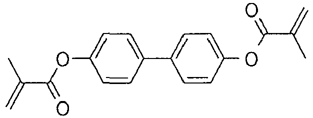 versetzt.

### Beispiel M162

Zur Herstellung einer PS-VA-Mischung werden 99,8 % der Mischung gemäß Beispiel M158 mit 0,2 % der polymerisierbaren Verbindung der Formel 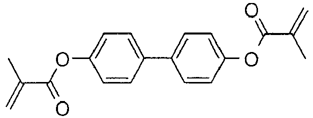 versetzt.

### Beispiel M163

Die flüssigkristalline Mischung

| | | | |
|---|---|---|---|
| CC-3-V | 35,50% | Klärpunkt [°C]: | 75,1 |
| CC-3-V1 | 10,00% | Δn [589 nm, 20°C]: | 0,1096 |
| CCP-3-1 | 1,50% | Δε [1 kHz, 20°C]: | -3,2 |
| CLY-3-O2 | 10,00% | ε_{∥} [1 kHz, 20°C]: | 3,5 |
| CLY-3-O3 | 3,00% | ε_{⊥} [1 kHz, 20°C]: | 6,7 |
| CPY-2-O2 | 9,00% | K₁ [pN, 20°C]: | 14,3 |
| CPY-3-O2 | 10,50% | K₃ [pN, 20°C]: | 15,9 |
| PY-3-O2 | 16,50% | V₀ [pN, 20°C]: | 2,37 |
| PYP-2-3 | 1,00% | γ₁ [mPa·s, 20 °C]: | 84 |
| B-2O-O5 | 3,00% | | |

enthält zusätzlich 0,025 % ST-12.

### Beispiel M164

Zur Herstellung einer PS-VA-Mischung werden 99,9 % der Mischung gemäß Beispiel M163 mit 0,1 % der polymerisierbaren Verbindung der Formel 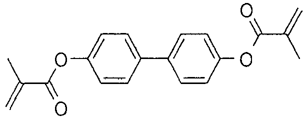 versetzt.

### Beispiel M165

Zur Herstellung einer PS-VA-Mischung werden 99,6 % der Mischung gemäß Beispiel M163 mit 0,4 % der polymerisierbaren Verbindung der Formel 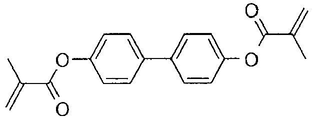 versetzt.

### Beispiel M166

Zur Herstellung einer PS-VA-Mischung werden 99,7 % der Mischung gemäß Beispiel M163 mit 0,3 % der polymerisierbaren Verbindung der Formel 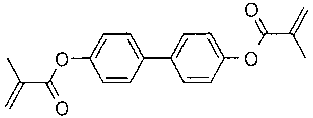 versetzt.

### Beispiel M167

Zur Herstellung einer PS-VA-Mischung werden 99,8 % der Mischung gemäß Beispiel M163 mit 0,2 % der polymerisierbaren Verbindung der Formel 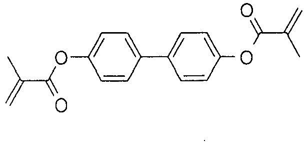 versetzt.

### Beispiel M168

Die flüssigkristalline Mischung

| | | | |
|---|---|---|---|
| CC-3-V | 36,50% | Klärpunkt [°C]: | 74,1 |
| CC-3-V1 | 6,00% | Δn [589 nm, 20°C]: | 0,1087 |
| CCY-3-O1 | 7,00% | Δε [1 kHz, 20°C]: | -3,2 |
| CCY-3-O2 | 9,00% | ε_{∥} [1 kHz, 20°C]: | 3,6 |
| CCY-5-O2 | 2,00% | ε_{⊥} [1 kHz, 20°C]: | 6,8 |
| CLY-3-O2 | 10,00% | K₁ [pN, 20°C]: | 14,1 |
| PY-1-O4 | 3,00% | K₃ [pN, 20°C]: | 15,7 |
| PY-3-O2 | 14,00% | V₀ [pN, 20°C]: | 2,33 |
| PYP-2-3 | 9,50% | γ₁ [mPa·s, 20 °C]: | 87 |
| B-2O-O5 | 3,00% | | |

enthält zusätzlich 0,025 % ST-8-1.

### Beispiel M169

Die flüssigkristalline Mischung

| | | | |
|---|---|---|---|
| CY-3-O2 | 3,50% | Klärpunkt [°C]: | 74,3 |
| CCY-3-O1 | 5,00% | Δn [589 nm, 20°C]: | 0,1096 |
| CCY-3-O2 | 2,50% | Δε [1 kHz, 20°C]: | -4,0 |
| CPY-2-O2 | 8,00% | ε_{∥} [1 kHz, 20°C]: | 4,0 |
| CPY-3-O2 | 10,00% | ε_{⊥} [1 kHz, 20°C]: | 8,0 |
| PYP-2-3 | 4,00% | K₁ [pN, 20°C]: | 13,0 |
| CLY-3-O2 | 7,00% | K₃ [pN, 20°C]: | 13,7 |
| CLY-3-O3 | 4,00% | V₀ [pN, 20°C]: | 1,94 |
| Y-4O-O4 | 7,00% | γ₁ [mPa·s, 20 °C]: | 96 |
| PGIY-2-O4 | 7,00% | | |
| B-2O-O5 | 4,00% | | |
| CC-3-V | 38,00% | | |

enthält zusätzlich 0,025 % ST-8-1.

### Beispiel M170

Die flüssigkristalline Mischung

| | | | |
|---|---|---|---|
| CCY-3-O1 | 6,00% | Klärpunkt [°C]: | 80 |
| CCY-3-O2 | 8,00% | Δn [589 nm, 20°C]: | 0,1010 |
| CCY-4-O2 | 4,00% | Δε [1 kHz, 20°C]: | -3,7 |
| CCY-5-O2 | 2,50% | ε_{∥} [1 kHz, 20°C]: | 3,6 |
| CLY-3-O2 | 8,00% | ε_{⊥} [1 kHz, 20°C]: | 7,3 |
| CLY-3-O3 | 4,00% | K₁ [pN, 20°C]: | 15,0 |
| PGIY-2-O4 | 5,00% | K₃ [pN, 20°C]: | 16,3 |
| B-2O-O5 | 4,00% | V₀ [pN, 20°C]: | 2,20 |
| CC-3-V | 36,00% | γ₁ [mPa·s, 20 °C]: | 98 |
| CC-3-V1 | 7,50% | | |
| CY-3-O2 | 2,00% | | |
| PY-3-O2 | 12,00% | | |

enthält zusätzlich 0,025 % ST-8-1.

### Beispiel M171

Die flüssigkristalline Mischung

| | | | |
|---|---|---|---|
| CCY-3-O2 | 6,00% | Klärpunkt [°C]: | 80,4 |
| CCY-4-O2 | 3,00% | Δn [589 nm, 20°C]: | 0,1014 |
| CLY-3-O2 | 8,00% | Δε [1 kHz, 20°C]: | -3,7 |
| CLY-3-O3 | 2,00% | ε_{∥} [1 kHz, 20°C]: | 3,6 |
| CPY-2-O2 | 6,50% | ε_{⊥} [1 kHz, 20°C]: | 7,3 |
| CPY-3-O2 | 8,00% | K₁ [pN, 20°C]: | 13,9 |
| PGIY-2-O4 | 5,00% | K₃ [pN, 20°C]: | 15,8 |
| B-2O-O5 | 5,00% | V₀ [pN, 20°C]: | 2,20 |
| CC-3-V | 36,00% | γ₁ [mPa·s, 20 °C]: | 99 |
| CC-3-V1 | 7,50% | | |
| CY-3-O2 | 11,00% | | |
| CY-5-O2 | 2,00% | | |

enthält zusätzlich 0,01 % ST-8-1.

### Beispiel M172

Die flüssigkristalline Mischung

| | | | |
|---|---|---|---|
| BCH-32 | 3,00% | Klärpunkt [°C]: | 74,7 |
| CC-3-V | 15,00% | Δn [589 nm, 20°C]: | 0,1086 |
| CC-3-V1 | 9,00% | Δε [1 kHz, 20°C]: | -3,2 |
| CCH-34 | 4,00% | ε_{∥} [1 kHz, 20°C]: | 3,6 |
| CCH-35 | 5,00% | ε_{⊥} [1 kHz, 20°C]: | 6,7 |
| CCP-3-1 | 8,00% | K₁ [pN, 20°C]: | 13,4 |
| CCP-3-3 | 5,00% | K₃ [pN, 20°C]: | 15,6 |
| CPY-2-O2 | 10,50% | V₀ [pN, 20°C]: | 2,31 |
| CPY-3-O2 | 10,50% | γ₁ [mPa·s, 20 °C]: | 109 |
| CY-3-O2 | 15,00% | | |
| PY-3-O2 | 12,00% | | |
| B-2O-O5 | 3,00% | | |

enthält zusätzlich 0,025 % ST-8-1.

### Beispiel M173

Die flüssigkristalline Mischung

| | | | |
|---|---|---|---|
| BCH-32 | 2,50% | Klärpunkt [°C]: | 74,4 |
| CCP-3-1 | 8,00% | Δn [589 nm, 20°C]: | 0,1093 |
| CCY-3-O1 | 8,00% | Δε [1 kHz, 20°C]: | -3,1 |
| CCY-3-O2 | 11,00% | ε_{∥} [1 kHz, 20°C]: | 3,5 |
| CCY-5-O2 | 1,50% | ε_{⊥} [1 kHz, 20°C]: | 6,6 |
| PGIY-2-O4 | 5,00% | K₁ [pN, 20°C]: | 15,3 |
| B-2O-O5 | 4,00% | K₃ [pN, 20°C]: | 15,8 |
| CC-3-V | 5,00% | V₀ [pN, 20°C]: | 2,37 |
| CC-3-V1 | 7,00% | γ₁ [mPa·s, 20 °C]: | 105 |
| CCH-23 | 11,00% | | |
| CCH-34 | 9,00% | | |
| CCH-35 | 2,00% | | |
| CY-3-O2 | 2,50% | | |
| PCH-301 | 1,00% | | |
| PP-1-2V1 | 4,50% | | |
| PY-3-O2 | 18,00% | | |

enthält zusätzlich 0,025 % ST-8-1.

### Beispiel M174

Die flüssigkristalline Mischung

| | | | |
|---|---|---|---|
| BCH-32 | 6,50 % | Klärpunkt [°C]: | 74,2 |
| CCP-3-1 | 8,00 % | Δn [589 nm, 20°C]: | 0,1086 |
| CCY-3-O2 | 11,00 % | Δε [1 kHz, 20°C]: | -3,2 |
| CCY-5-O2 | 7,50 % | ε_{∥} [1 kHz, 20°C]: | 3,6 |
| PGIY-2-O4 | 5,00 % | ε_{⊥} [1 kHz, 20°C]: | 6,8 |
| B-2O-O5 | 3,00 % | K₁ [pN, 20°C]: | 14,2 |
| CC-3-V | 10,00 % | K₃ [pN, 20°C]: | 15,9 |
| CC-3-V1 | 8,00 % | V₀ [pN, 20°C]: | 2,35 |
| CCH-23 | 10,00 % | γ₁ [mPa·s, 20 °C]: | 105 |
| CCH-34 | 3,00 % | | |
| CY-3-O2 | 9,00 % | | |
| PCH-301 | 1,50 % | | |
| PP-1-2V1 | 1,50 % | | |
| PY-3-O2 | 16,00 % | | |

enthält zusätzlich 0,025 % ST-8-1.

### Beispiel M175

Die flüssigkristalline Mischung

| | | | |
|---|---|---|---|
| B-2O-O5 | 3,00 % | Klärpunkt [°C]: | 74,5 |
| CC-3-V | 15,00 % | Δn [589 nm, 20°C]: | 0,1092 |
| CC-3-V1 | 10,00 % | Δε [1 kHz, 20°C]: | -3,3 |
| CCH-34 | 9,00 % | ε_{∥} [1 kHz, 20°C]: | 3,6 |
| CCP-3-1 | 8,00 % | ε_{⊥} [1 kHz, 20°C]: | 6,9 |
| CCP-3-3 | 6,00 % | K₁ [pN, 20°C]: | 14,0 |
| CPY-2-O2 | 8,50 % | K₃ [pN, 20°C]: | 15,7 |
| CPY-3-O2 | 11,00 % | V₀ [pN, 20°C]: | 2,31 |
| CY-3-O2 | 15,00 % | γ₁ [mPa·s, 20 °C]: | 102 |
| PGIY-2-O4 | 4,00 % | | |
| PY-3-O2 | 10,50 % | | |

enthält zusätzlich 0,025 % ST-8-1.

### Beispiel M176

Die flüssigkristalline Mischung

| | | | |
|---|---|---|---|
| B-2O-O5 | 3,00 % | Klärpunkt [°C]: | 74,5 |
| BCH-32 | 2,00 % | Δn [589 nm, 20°C]: | 0,1090 |
| CC-3-V | 37,00 % | Δε [1 kHz, 20°C]: | -3,2 |
| CC-3-V1 | 6,50 % | ε_{∥} [1 kHz, 20°C]: | 3,6 |
| CCY-3-O1 | 6,50 % | ε_{⊥} [1 kHz, 20°C]: | 6,8 |
| CCY-3-O2 | 3,50 % | K₁ [pN, 20°C]: | 14,1 |
| CLY-3-O2 | 10,00 % | K₃ [pN, 20°C]: | 15,9 |
| CPY-3-O2 | 10,50 % | V₀ [pN, 20°C]: | 2,35 |
| PY-3-O2 | 18,00 % | γ₁ [mPa·s, 20 °C]: | 86 |
| PYP-2-3 | 3,00 % | | |

enthält zusätzlich 0,025 % ST-12.

### Beispiel M177

Die flüssigkristalline Mischung

| | | | |
|---|---|---|---|
| B-2O-O5 | 3,00 % | Klärpunkt [°C]: | 74,6 |
| CC-3-V | 36,50 % | Δn [589 nm, 20°C]: | 0,1092 |
| CC-3-V1 | 9,00 % | Δε [1 kHz, 20°C]: | -3,2 |
| CCY-3-O1 | 5,50 % | ε_{∥} [1 kHz, 20°C]: | 3,5 |
| CLY-3-O2 | 10,00 % | ε_{⊥} [1 kHz, 20°C]: | 6,7 |
| CPY-2-O2 | 6,50 % | K₁ [pN, 20°C]: | 14,2 |
| CPY-3-O2 | 10,50 % | K₃ [pN, 20°C]: | 15,7 |
| PY-3-O2 | 16,00 % | V₀ [pN, 20°C]: | 2,34 |
| PYP-2-3 | 3,00 % | γ₁ [mPa·s, 20 °C]: | 86 |

enthält zusätzlich 0,025 % ST-8-1.

### Beispiel M178

Die flüssigkristalline Mischung

| | | | |
|---|---|---|---|
| B-2O-O5 | 4,00 % | Klärpunkt [°C]: | 74,6 |
| BCH-32 | 0,50 % | Δn [589 nm, 20°C]: | 0,1036 |
| CC-3-V | 33,00 % | Δε [1 kHz, 20°C]: | -3,4 |
| CC-3-V1 | 8,00 % | ε_{∥} [1 kHz, 20°C]: | 3,6 |
| CCH-301 | 1,00 % | ε_{⊥} [1 kHz, 20°C]: | 7,0 |
| CCY-3-1 | 2,50 % | K₁ [pN, 20°C]: | 13,4 |
| CCY-3-O1 | 9,00 % | K₃ [pN, 20°C]: | 14,9 |
| CCY-4-O2 | 5,00 % | V₀ [pN, 20°C]: | 2,21 |
| CPY-2-O2 | 5,50 % | γ₁ [mPa·s, 20 °C]: | 92 |
| CPY-3-O2 | 12,50 % | | |
| CY-3-O2 | 7,00 % | | |
| PY-1-O4 | 1,50 % | | |
| PY-3-O2 | 8,00 % | | |
| PYP-2-3 | 2,50 % | | |

enthält zusätzlich 0,025 % ST-8-1.

### Beispiel M179

Die flüssigkristalline Mischung

| | | | |
|---|---|---|---|
| CC-3-V | 34,50 % | Klärpunkt [°C]: | 74,7 |
| CC-3-V1 | 10,00 % | Δn [589 nm, 20°C]: | 0,1094 |
| CCP-3-1 | 1,00 % | Δε [1 kHz, 20°C]: | -3,2 |
| CLY-3-O2 | 10,00 % | ε_{∥} [1 kHz, 20°C]: | 3,5 |
| CLY-3-O3 | 3,00 % | ε_{⊥} [1 kHz, 20°C]: | 6,8 |
| CPY-2-O2 | 8,00 % | K₁ [pN, 20°C]: | 13,9 |
| CPY-3-O2 | 10,50 % | K₃ [pN, 20°C]: | 15,8 |
| CY-3-O2 | 4,50 % | V₀ [pN, 20°C]: | 2,34 |
| PY-3-O2 | 12,50 % | γ₁ [mPa·s, 20 °C]: | 87 |
| PYP-2-3 | 3,00 % | | |
| B-2O-O5 | 3,00 % | | |

enthält zusätzlich 0,04 % ST-3b-1 und 0,02 % ST-9-1.

### Beispiel M180

Die flüssigkristalline Mischung

| | | | |
|---|---|---|---|
| B-2O-O5 | 3,00 % | Klärpunkt [°C]: | 74,8 |
| BCH-32 | 2,50 % | Δn [589 nm, 20°C]: | 0,1096 |
| CC-3-V | 42,00 % | Δε [1 kHz, 20°C]: | -3,2 |
| CC-3-V1 | 1,00 % | ε_{∥} [1 kHz, 20°C]: | 3,5 |
| CCY-3-O2 | 9,00 % | ε_{⊥} [1 kHz, 20°C]: | 6,7 |
| CLY-3-O2 | 10,00 % | K₁ [pN, 20°C]: | 14,1 |
| CPY-2-O2 | 2,00 % | K₃ [pN, 20°C]: | 15,7 |
| CPY-3-O2 | 10,50 % | V₀ [pN, 20°C]: | 2,34 |
| PY-3-O2 | 17,00 % | γ₁ [mPa·s, 20 °C]: | 85 |
| PYP-2-3 | 3,00 % | | |

enthält zusätzlich 0,025 % ST-8-1.

### Beispiel M181

Die flüssigkristalline Mischung

| | | | |
|---|---|---|---|
| CY-3-02 | 3,00 % | Klärpunkt [°C]: | 74,9 |
| CCY-3-O1 | 5,00 % | Δn [589 nm, 20°C]: | 0,1032 |
| CCY-3-O2 | 4,50 % | Δε [1 kHz, 20°C]: | -4,0 |
| CPY-2-O2 | 8,00 % | ε_{∥} [1 kHz, 20°C]: | 3,9 |
| CPY-3-O2 | 10,00 % | ε_{⊥} [1 kHz, 20°C]: | 7,9 |
| CLY-3-O2 | 7,00 % | K₁ [pN, 20°C]: | 13,2 |
| CLY-3-O3 | 4,00 % | K₃ [pN, 20°C]: | 13,9 |
| Y-4O-O4 | 7,00 % | V₀ [pN, 20°C]: | 1,96 |
| PGIY-2-O4 | 7,00 % | γ₁ [mPa·s, 20 °C]: | 92 |
| B-2O-O5 | 4,00 % | | |
| CC-3-V | 40,50 % | | |

enthält zusätzlich 0,025 % ST-8-1.

### Beispiel M182

Die flüssigkristalline Mischung

| | | | |
|---|---|---|---|
| CC-3-V | 37,50 % | | |
| CCY-3-O1 | 5,00 % | | |
| CCY-3-O2 | 13,75 % | | |
| CCY-4-O2 | 4,25 % | | |
| CPY-3-O2 | 13,50 % | | |
| CY-3-O2 | 7,50 % | | |
| PY-3-O2 | 15,50 % | | |
| B-2O-O4 | 3,00 % | | |

enthält zusätzlich 0,025 % ST-8-1.

### Beispiel M183

Die flüssigkristalline Mischung

| | | | |
|---|---|---|---|
| CCP-V-1 | 2,00 % | Klärpunkt [°C]: | 75 |
| CCY-3-O1 | 7,00 % | Δn [589 nm, 20°C]: | 0,1050 |
| CCY-3-O2 | 7,00 % | Δε [1 kHz, 20°C]: | -3,7 |
| CCY-4-O2 | 3,00 % | ε_{∥} [1 kHz, 20°C]: | 3,7 |
| CCY-5-O2 | 1,50 % | ε_{⊥} [1 kHz, 20°C]: | 7,4 |
| CLY-3-O2 | 8,00 % | K₁ [pN, 20°C]: | 14,8 |
| CLY-3-O3 | 2,00 % | K₃ [pN, 20°C]: | 15,4 |
| PGIY-2-O4 | 5,00 % | V₀ [pN, 20°C]: | 2,15 |
| B-2O-O5 | 5,00 % | γ₁ [mPa·s, 20 °C]: | 93 |
| CC-3-V | 34,00 % | | |
| CC-3-V1 | 8,00 % | | |
| PY-1-O4 | 3,50 % | | |
| PY-3-O2 | 14,00 % | | |

enthält zusätzlich 0,025 % ST-8-1.

### Beispiel M184

Die flüssigkristalline Mischung

| | | | |
|---|---|---|---|
| CCP-V-1 | 2,00 % | Klärpunkt [°C]: | 75 |
| CCY-3-O1 | 5,00 % | Δn [589 nm, 20°C]: | 0,1013 |
| CCY-3-O2 | 7,50 % | Δε [1 kHz, 20°C]: | -3,7 |
| CCY-4-O2 | 3,50 % | ε_{∥} [1 kHz, 20°C]: | 3,7 |
| CLY-3-O2 | 10,00 % | ε_{⊥} [1 kHz, 20°C]: | 7,4 |
| CLY-3-O3 | 2,00 % | K₁ [pN, 20°C]: | 14,4 |
| PGIY-2-O4 | 5,00 % | K₃ [pN, 20°C]: | 15,5 |
| B-2O-O5 | 5,00 % | V₀ [pN, 20°C]: | 2,15 |
| CC-3-V | 34,00 % | γ₁ [mPa·s, 20 °C]: | 91 |
| CC-3-V1 | 8,00 % | | |
| CY-3-O2 | 6,00 % | | |
| PY-3-O2 | 12,00 % | | |

enthält zusätzlich 0,025 % ST-8-1.

### Beispiel M185

Die flüssigkristalline Mischung

| | | | |
|---|---|---|---|
| CCP-V-1 | 1,00 % | Klärpunkt [°C]: | 75 |
| CCY-3-O1 | 7,00 % | Δn [589 nm, 20°C]: | 0,1081 |
| CCY-3-O2 | 7,00 % | Δε [1 kHz, 20°C]: | -3,7 |
| CCY-4-O2 | 3,00 % | ε_{∥} [1 kHz, 20°C]: | 3,7 |
| CCY-5-O2 | 1,00 % | ε_{⊥} [1 kHz, 20°C]: | 7,4 |
| CLY-3-O2 | 8,00 % | K₁ [pN, 20°C]: | 14,5 |
| CLY-3-O3 | 2,00 % | K₃ [pN, 20°C]: | 15,2 |
| PGIY-2-O4 | 5,00 % | V₀ [pN, 20°C]: | 2,14 |
| PYP-2-3 | 2,50 % | γ₁ [mPa·s, 20 °C]: | 93 |
| B-2O-O5 | 5,00 % | | |
| CC-3-V | 34,00 % | | |
| CC-3-V1 | 7,50 % | | |
| PY-1-O4 | 2,00 % | | |
| PY-3-O2 | 15,00 % | | |

enthält zusätzlich 0,025 % ST-8-1.

### Beispiel M186

Die flüssigkristalline Mischung

| | | | |
|---|---|---|---|
| CY-3-O2 | 3,00 % | Klärpunkt [°C]: | 75,1 |
| CCY-3-O1 | 5,00 % | Δn [589 nm, 20°C]: | 0,1021 |
| CCY-3-O2 | 3,00 % | Δε [1 kHz, 20°C]: | -3,7 |
| CPY-2-O2 | 8,00 % | ε_{∥} [1 kHz, 20°C]: | 3,8 |
| CPY-3-O2 | 10,00 % | ε_{⊥} [1 kHz, 20°C]: | 7,5 |
| CLY-3-O2 | 7,00 % | K₁ [pN, 20°C]: | 13,3 |
| CLY-3-O3 | 4,00 % | K₃ [pN, 20°C]: | 14,0 |
| Y-4O-O4 | 6,00 % | V₀ [pN, 20°C]: | 2,04 |
| PGIY-2-O4 | 7,00 % | γ₁ [mPa·s, 20 °C]: | 87 |
| B-2O-O5 | 4,00 % | | |
| CC-3-V | 43,00 % | | |

enthält zusätzlich 0,025 % ST-8-1.

### Beispiel M187

Die flüssigkristalline Mischung

| | | | |
|---|---|---|---|
| CCY-3-O1 | 8,00 % | Klärpunkt [°C]: | 75,5 |
| CCY-4-O2 | 3,00 % | Δn [589 nm, 20°C]: | 0,1024 |
| CLY-3-O2 | 8,00 % | Δε [1 kHz, 20°C]: | -3,8 |
| CLY-3-O3 | 4,00 % | ε_{∥} [1 kHz, 20°C]: | 3,7 |
| CPY-2-O2 | 7,50 % | ε_{⊥} [1 kHz, 20°C]: | 7,5 |
| CPY-3-O2 | 3,00 % | | |
| B-2O-O5 | 4,00 % | | |
| CC-3-V | 41,50 % | | |
| PY-1-O4 | 5,00 % | | |
| PY-3-O2 | 11,50 % | | |
| CCY-3-O2 | 4,50 % | | |

enthält zusätzlich 0,025 % ST-8-1.

### Beispiel M188

Die flüssigkristalline Mischung

| | | | |
|---|---|---|---|
| CCY-3-O1 | 6,50 % | Klärpunkt [°C]: | 79,5 |
| CLY-3-O2 | 10,00 % | Δn [589 nm, 20°C]: | 0,1070 |
| CPY-2-O2 | 10,00 % | Δε [1 kHz, 20°C]: | -3,9 |
| CPY-3-O2 | 10,00 % | ε_{∥} [1 kHz, 20°C]: | 3,7 |
| PYP-2-3 | 5,50 % | ε_{⊥} [1 kHz, 20°C]: | 7,6 |
| B-2O-O5 | 4,00 % | K₁ [pN, 20°C]: | 13,9 |
| CC-3-V | 37,00 % | K₃ [pN, 20°C]: | 15,5 |
| CY-3-O2 | 14,00 % | V₀ [pN, 20°C]: | 2,09 |
| CCY-3-O2 | 1,50 % | γ₁ [mPa·s, 20 °C]: | 104 |
| CY-5-O2 | 1,50 % | | |

enthält zusätzlich 0,02 % ST-12.

### Beispiel M189

Die flüssigkristalline Mischung

| | | | |
|---|---|---|---|
| CCP-V2-1 | 5,00 % | Klärpunkt [°C]: | 79,5 |
| CLY-3-O2 | 10,00 % | Δn [589 nm, 20°C]: | 0,1079 |
| CPY-3-v2 | 9,00 % | Δε [1 kHz, 20°C]: | -2,0 |
| PGIY-2-O4 | 2,50 % | ε_{∥} [1 kHz, 20°C]: | 3,2 |
| PYP-2-3 | 8,00 % | ε_{⊥} [1 kHz, 20°C]: | 5,3 |
| PYP-2-4 | 5,00 % | K₁ [pN, 20°C]: | 14,4 |
| B-2O-O5 | 4,00 % | K₃ [pN, 20°C]: | 15,5 |
| CC-3-V | 43,00 % | V₀ [pN, 20°C]: | 2,92 |
| CC-3-V1 | 7,50 % | γ₁ [mPa·s, 20 °C]: | 75 |
| CY-3-O2 | 6,00 % | | |

enthält zusätzlich 0,03 % ST-2a-1.

### Beispiel M190

Die flüssigkristalline Mischung

| | | | |
|---|---|---|---|
| CCY-3-O1 | 1,00 % | Klärpunkt [°C]: | 79,5 |
| CLY-3-O2 | 10,00 % | Δn [589 nm, 20°C]: | 0,1151 |
| CLY-3-O3 | 1,50 % | Δε [1 kHz, 20°C]: | -4,0 |
| CPY-2-O2 | 10,00 % | ε_{∥} [1 kHz, 20°C]: | 3,7 |
| CPY-3-O2 | 10,00 % | ε_{⊥} [1 kHz, 20°C]: | 7,7 |
| PGIY-2-O4 | 5,00 % | K₁ [pN, 20°C]: | 14,4 |
| PYP-2-3 | 6,00 % | K₃ [pN, 20°C]: | 15,7 |
| B-2O-O5 | 2,50 % | V₀ [pN, 20°C]: | 2,09 |
| CC-3-V | 27,00 % | γ₁ [mPa·s, 20 °C]: | 115 |
| CC-3-V1 | 8,00 % | | |
| CY-3-O2 | 11,00 % | | |
| CY-5-O2 | 6,50 % | | |
| CY-3-O4 | 1,50 % | | |

enthält zusätzlich 0,025 % ST-8-1.

### Beispiel M191

Die flüssigkristalline Mischung

| | | | |
|---|---|---|---|
| CLY-3-O2 | 10,00 % | Klärpunkt [°C]: | 79,5 |
| CLY-3-O3 | 2,00 % | Δn [589 nm, 20°C]: | 0,1157 |
| CPY-2-O2 | 10,50 % | Δε [1 kHz, 20°C]: | -4,0 |
| CPY-3-O2 | 9,50 % | ε_{∥} [1 kHz, 20°C]: | 3,7 |
| PGIY-2-O4 | 5,00 % | ε_{⊥} [1 kHz, 20°C]: | 7,7 |
| PYP-2-3 | 5,50 % | K₁ [pN, 20°C]: | 14,6 |
| B-2O-O5 | 5,00 % | K₃ [pN, 20°C]: | 15,5 |
| CC-3-V | 30,00 % | V₀ [pN, 20°C]: | 2,07 |
| CC-3-V1 | 7,50 % | γ₁ [mPa·s, 20 °C]: | 111 |
| CY-3-O2 | 11,00 % | | |
| CY-5-O2 | 4,00 % | | |

enthält zusätzlich 0,025 % ST-8-1.

### Beispiel M192

Die flüssigkristalline Mischung

| | | | |
|---|---|---|---|
| CCY-3-O1 | 4,00 % | Klärpunkt [°C]: | 79,8 |
| CCY-3-O2 | 8,50 % | Δn [589 nm, 20°C]: | 0,1013 |
| CCY-4-O2 | 5,00 % | Δε [1 kHz, 20°C]: | -3,7 |
| CLY-3-O2 | 10,00 % | ε_{∥} [1 kHz, 20°C]: | 3,6 |
| CLY-3-O3 | 4,00 % | ε_{⊥} [1 kHz, 20°C]: | 7,3 |
| PGIY-2-O4 | 5,00 % | K₁ [pN, 20°C]: | 14,7 |
| PYP-2-3 | 1,00 % | K₃ [pN, 20°C]: | 16,3 |
| B-2O-O5 | 5,00 % | V₀ [pN, 20°C]: | 2,20 |
| CC-3-V | 34,50 % | γ₁ [mPa·s, 20 °C]: | 97 |
| CC-3-V1 | 8,50 % | | |
| CY-3-O2 | 5,00 % | | |
| PY-3-O2 | 9,50 % | | |

enthält zusätzlich 0,025 % ST-8-1.

### Beispiel M193

Die flüssigkristalline Mischung

| | | | |
|---|---|---|---|
| B-2O-O5 | 4,00 % | Klärpunkt [°C]: | 79,9 |
| CC-3-V | 32,00 % | Δn [589 nm, 20°C]: | 0,1036 |
| CCP-3-1 | 2,00 % | Δε [1 kHz, 20°C]: | -4,4 |
| CCY-3-O2 | 8,00 % | ε_{∥} [1 kHz, 20°C]: | 4,0 |
| CCY-4-O2 | 8,00 % | ε_{⊥} [1 kHz, 20°C]: | 8,3 |
| CLY-3-O2 | 6,50 % | K₁ [pN, 20°C]: | 13,4 |
| CLY-3-O3 | 6,50 % | K₃ [pN, 20°C]: | 14,4 |
| CPY-2-O2 | 8,00 % | V₀ [pN, 20°C]: | 1,92 |
| CPY-3-O2 | 8,00 % | γ₁ [mPa·s, 20 °C]: | 89 |
| CY-3-O2 | 2,00 % | | |
| PY-3-O2 | 10,00 % | | |
| Y-4O-O4 | 5,00 % | | |

enthält zusätzlich 0,04 % ST-3b-1 und 0,01 % ST-9-1..

### Beispiel M194

Die flüssigkristalline Mischung

| | | | |
|---|---|---|---|
| B-2O-O5 | 4,00 % | Klärpunkt [°C]: | 79,9 |
| CC-3-V | 32,00 % | Δn [589 nm, 20°C]: | 0,1058 |
| CCP-3-1 | 2,00 % | Δε [1 kHz, 20°C]: | -4,6 |
| CCY-3-O2 | 8,00 % | K₁ [pN, 20°C]: | 14,3 |
| CCY-4-O2 | 8,00 % | K₃ [pN, 20°C]: | 15,1 |
| CLY-3-O2 | 6,50 % | V₀ [pN, 20°C]: | 1,91 |
| CLY-3-O3 | 6,50 % | γ₁ [mPa·s, 20 °C]: | 113 |
| CPY-2-O2 | 8,00 % | | |
| CPY-3-O2 | 8,00 % | | |
| CY-3-O2 | 2,00 % | | |
| PY-3-O2 | 10,00 % | | |
| Y-4O-O4 | 5,00 % | | |

enthält zusätzlich 0,04 % ST-3b-1 und 0,01 % ST-9-1.

### Beispiel M195

Die flüssigkristalline Mischung

| | | | |
|---|---|---|---|
| CC-3-V | 22,00 % | | |
| CC-3-V1 | 7,00 % | | |
| COY-3-O1 | 4,00 % | | |
| COY-3-O2 | 6,00 % | | |
| COY-1V-O2 | 4,00 % | | |
| CPP-V-3 | 6,50 % | | |
| BCH-32 | 5,00 % | | |
| PYP-2-3 | 8,00 % | | |
| CCOY-V-O2 | 2,50 % | | |
| CCOY-2-O2 | 10,00 % | | |
| BCH-52 | 4,00 % | | |
| CCOY-V-O3 | 3,00 % | | |
| CCOY-3-O2 | 11,00 % | | |
| CCOY-1V-O2 | 4,00 % | | |
| B-2O-O5 | 3,00 % | | |

enthält zusätzlich 0,03 % ST-3a-1.

### Beispiel M196

Die flüssigkristalline Mischung

| | | | |
|---|---|---|---|
| B-2O-O5 | 5,00 % | Klärpunkt [°C]: | 80 |
| CC-3-V | 37,00 % | Δn [589 nm, 20°C]: | 0,1094 |
| CCP-V-1 | 4,50 % | Δε [1 kHz, 20°C]: | -3,7 |
| CCY-3-O1 | 5,00 % | ε_{∥} [1 kHz, 20°C]: | 3,7 |
| CCY-3-O2 | 6,00 % | ε_{⊥} [1 kHz, 20°C]: | 7,4 |
| CCY-4-O2 | 5,00 % | K₁ [pN, 20°C]: | 13,9 |
| CLY-3-O2 | 8,00 % | K₃ [pN, 20°C]: | 14,4 |
| CPY-2-O2 | 9,50 % | V₀ [pN, 20°C]: | 2,09 |
| PGIY-2-O4 | 6,00 % | γ₁ [mPa·s, 20 °C]: | 106 |
| PY-3-O2 | 14,00 % | | |

enthält zusätzlich 0,025 % ST-8-1.

### Beispiel M197

Die flüssigkristalline Mischung

| | | | |
|---|---|---|---|
| B-2O-O5 | 5,00 % | Klärpunkt [°C]: | 80,1 |
| BCH-32 | 7,00 % | Δn [589 nm, 20°C]: | 0,1096 |
| CC-3-V | 34,50 % | Δε [1 kHz, 20°C]: | -3,7 |
| CCP-V-1 | 2,00 % | ε_{∥} [1 kHz, 20°C]: | 3,9 |
| CCY-3-O1 | 5,00 % | ε_{⊥} [1 kHz, 20°C]: | 7,6 |
| CCY-3-O2 | 4,00 % | K₁ [pN, 20°C]: | 13,3 |
| CCY-4-O2 | 2,00 % | K₃ [pN, 20°C]: | 13,7 |
| CLY-3-O2 | 8,00 % | V₀ [pN, 20°C]: | 2,04 |
| CPY-2-O2 | 10,00 % | γ₁ [mPa·s, 20 °C]: | 104 |
| CPY-3-O2 | 7,00 % | | |
| PGIY-2-O4 | 6,00 % | | |
| PY-3-O2 | 2,00 % | | |
| Y-4O-O4 | 7,50 % | | |

enthält zusätzlich 0,025 % ST-8-1.

### Beispiel M198

Die flüssigkristalline Mischung

| | | | |
|---|---|---|---|
| CCY-3-O1 | 7,00 % | Klärpunkt [°C]: | 80 |
| CCY-3-O2 | 6,00 % | Δn [589 nm, 20°C]: | 0,1073 |
| CCY-4-O2 | 6,50 % | Δε [1 kHz, 20°C]: | -3,9 |
| CCY-5-O2 | 3,00 % | ε_{∥} [1 kHz, 20°C]: | 3,7 |
| CLY-3-O2 | 10,00 % | ε_{⊥} [1 kHz, 20°C]: | 7,6 |
| PGIY-2-O4 | 5,00 % | γ₁ [mPa·s, 20 °C]: | 90 |
| PYP-2-3 | 2,00 % | | |
| B-2O-O5 | 5,00 % | | |
| CC-3-V | 33,50 % | | |
| CC-3-V1 | 7,00 % | | |
| PY-1-O4 | 5,00 % | | |
| PY-3-O2 | 10,00 % | | |

enthält zusätzlich 0,025 % ST-8-1.

### Beispiel M199

Die flüssigkristalline Mischung

| | | | |
|---|---|---|---|
| CLY-3-O2 | 10,00 % | Klärpunkt [°C]: | 80 |
| CLY-3-O3 | 1,50 % | Δn [589 nm, 20°C]: | 0,1080 |
| CPY-2-O2 | 4,00 % | Δε [1 kHz, 20°C]: | -2,4 |
| CPY-3-O2 | 10,00 % | ε_{∥} [1 kHz, 20°C]: | 3,3 |
| PGIY-2-O4 | 5,00 % | ε_{⊥} [1 kHz, 20°C]: | 5,7 |
| PYP-2-3 | 8,00 % | K₁ [pN, 20°C]: | 14,0 |
| B-2O-O5 | 4,50 % | K₃ [pN, 20°C]: | 15,8 |
| CC-3-V | 44,50 % | V₀ [pN, 20°C]: | 2,68 |
| CC-3-V1 | 8,00 % | γ₁ [mPa·s, 20 °C]: | 80 |
| CY-3-O2 | 2,50 % | | |
| CY-5-O2 | 2,00 % | | |

enthält zusätzlich 0,025 % ST-8-1.

### Beispiel M200

Die flüssigkristalline Mischung

| | | | |
|---|---|---|---|
| CCY-3-O2 | 7,00 % | Klärpunkt [°C]: | 80 |
| CCY-4-O2 | 2,00 % | Δn [589 nm, 20°C]: | 0,1009 |
| CLY-3-O2 | 8,00 % | Δε [1 kHz, 20°C]: | -3,7 |
| CLY-3-O3 | 4,00 % | ε_{∥} [1 kHz, 20°C]: | 3,6 |
| CPY-2-O2 | 3,00 % | ε_{⊥} [1 kHz, 20°C]: | 7,3 |
| CPY-3-O2 | 8,00 % | K₁ [pN, 20°C]: | 14,4 |
| PGIY-2-O4 | 5,00 % | K₃ [pN, 20°C]: | 16,4 |
| PYP-2-3 | 1,00 % | V₀ [pN, 20°C]: | 2,21 |
| B-2O-O5 | 5,00 % | γ₁ [mPa·s, 20 °C]: | 99 |
| CC-3-V | 35,00 % | | |
| CC-3-V1 | 8,00 % | | |
| CY-3-O2 | 12,00 % | | |
| CY-5-O2 | 2,00 % | | |

enthält zusätzlich 0,025 % ST-8-1.

### Beispiel M201

Die flüssigkristalline Mischung

| | | | |
|---|---|---|---|
| CC-3-V | 37,50 % | Klärpunkt [°C]: | 80,2 |
| CCY-3-O1 | 5,00 % | Δn [589 nm, 20°C]: | 0,1097 |
| CCY-3-O2 | 3,00 % | Δε [1 kHz, 20°C]: | -3,9 |
| CCY-4-O2 | 7,00 % | ε_{∥} [1 kHz, 20°C]: | 3,7 |
| CLY-3-O2 | 8,00 % | ε_{⊥} [1 kHz, 20°C]: | 7,6 |
| CPY-2-O2 | 10,00 % | K₁ [pN, 20°C]: | 13,5 |
| CPY-3-O2 | 8,00 % | K₃ [pN, 20°C]: | 14,5 |
| PY-1-O4 | 3,50 % | V₀ [pN, 20°C]: | 1,08 |
| PY-3-O2 | 12,00 % | γ₁ [mPa·s, 20 °C]: | 110 |
| PGIY-2-O4 | 2,00 % | | |
| B-2O-O5 | 4,00 % | | |

enthält zusätzlich 0,025 % ST-8-1.

### Beispiel M202

Die flüssigkristalline Mischung

| | | | |
|---|---|---|---|
| B-2O-O5 | 4,00 % | Klärpunkt [°C]: | 80,4 |
| CC-3-V | 24,50 % | Δn [589 nm, 20°C]: | 0,1030 |
| CC-3-V1 | 5,00 % | Δε [1 kHz, 20°C]: | -4,4 |
| CCP-3-1 | 3,00 % | ε_{∥} [1 kHz, 20°C]: | 4,0 |
| CCY-3-O2 | 8,00 % | ε_{⊥} [1 kHz, 20°C]: | 8,4 |
| CCY-4-O2 | 8,00 % | K₁ [pN, 20°C]: | 13,3 |
| CLY-3-O2 | 6,00 % | K₃ [pN, 20°C]: | 14,3 |
| CLY-3-O3 | 6,00 % | V₀ [pN, 20°C]: | 1,91 |
| CPY-2-O2 | 6,50 % | γ₁ [mPa·s, 20 °C]: | 96 |
| CPY-3-O2 | 8,00 % | | |
| CY-3-O2 | 8,00 % | | |
| PYP-2-3 | 5,00 % | | |
| Y-4O-O4 | 8,00 % | | |

enthält zusätzlich 0,04 % ST-3b-1 und 0,01 % ST-9-1..

### Beispiel M203

Die flüssigkristalline Mischung

| | | | |
|---|---|---|---|
| BCH-32 | 0,50 % | Klärpunkt [°C]: | 80,4 |
| CC-3-V | 37,00 % | Δn [589 nm, 20°C]: | 0,1195 |
| CCY-3-O1 | 5,00 % | Δε [1 kHz, 20°C]: | -3,9 |
| CCY-3-O2 | 3,50 % | ε_{∥} [1 kHz, 20°C): | 3,8 |
| CLY-3-O2 | 8,00 % | ε_{⊥} [1 kHz, 20°C]: | 7,7 |
| CPY-2-O2 | 10,00 % | K₁ [pN, 20°C]: | 13,5 |
| CPY-3-O2 | 10,00 % | K₃ [pN, 20°C]: | 14,5 |
| PY-3-O2 | 14,00 % | V₀ [pN, 20°C]: | 2,04 |
| PGIY-2-O4 | 8,00 % | γ₁ [mPa·s, 20 °C]: | 114 |
| B-2O-O5 | 4,00 % | | |

enthält zusätzlich 0,01 % ST-8-1.

### Beispiel M204

Die flüssigkristalline Mischung

| | | | |
|---|---|---|---|
| CCY-3-O2 | 6,00 % | Klärpunkt [°C]: | 80,4 |
| CCY-4-O2 | 3,00 % | Δn [589 nm, 20°C]: | 0,1014 |
| CLY-3-O2 | 8,00 % | Δε [1 kHz, 20°C]: | -3,7 |
| CLY-3-O3 | 2,00 % | ε_{∥} [1 kHz, 20°C]: | 3,6 |
| CPY-2-O2 | 6,50 % | ε_{⊥} [1 kHz, 20°C]: | 7,3 |
| CPY-3-O2 | 8,00 % | K₁ [pN, 20°C]: | 13,9 |
| PGIY-2-O4 | 5,00 % | K₃ [pN, 20°C]: | 15,8 |
| B-2O-O5 | 5,00 % | V₀ [pN, 20°C]: | 2,20 |
| CC-3-V | 36,00 % | γ₁ [mPa·s, 20 °C]: | 99 |
| CC-3-V1 | 7,50 % | | |
| CY-3-O2 | 11,00 % | | |
| CY-5-O2 | 2,00 % | | |

enthält zusätzlich 0,04 % ST-3b-1 und 0,01 % ST-9-1.

### Beispiel M205

Die flüssigkristalline Mischung

| | | | |
|---|---|---|---|
| CC-3-V | 25,00 % | Klärpunkt [°C]: | 80,5 |
| CC-3-V1 | 7,00 % | Δn [589 nm, 20°C]: | 0,0995 |
| CCP-3-1 | 7,00 % | Δε [1 kHz, 20°C]: | -3,8 |
| CCY-3-O1 | 4,50 % | ε_{∥} [1 kHz, 20°C]: | 3,7 |
| CCY-3-O2 | 6,50 % | ε_{⊥} [1 kHz, 20°C]: | 7,5 |
| CCY-4-O2 | 5,00 % | K₁ [pN, 20°C]: | 13,7 |
| CCY-5-v2 | 4,00 % | K₃ [pN, 20°C]: | 15,8 |
| CLY-3-O2 | 8,00 % | V₀ [pN, 20°C]: | 2,12 |
| CY-3-O2 | 12,00 % | γ₁ [mPa·s, 20 °C]: | 111 |
| CY-3-O4 | 4,00 % | | |
| PY-3-O2 | 7,00 % | | |
| PGIY-2-O4 | 6,00 % | | |
| B-2O-O5 | 4,00 % | | |

enthält zusätzlich 0,04 % ST-3b-1 und 0,01 % ST-9-1.

### Beispiel M206

Die flüssigkristalline Mischung

| | | | |
|---|---|---|---|
| CC-3-V | 26,00 % | Klärpunkt [°C]: | 80,8 |
| CC-3-V1 | 7,00 % | Δn [589 nm, 20°C]: | 0,1099 |
| CCP-3-1 | 6,00 % | Δε [1 kHz, 20°C]: | -3,9 |
| CCY-3-O1 | 2,00 % | ε_{∥} [1 kHz, 20°C]: | 3,7 |
| CCY-3-O2 | 7,00 % | ε_{⊥} [1 kHz, 20°C]: | 7,6 |
| CCY-4-O2 | 7,00 % | K₁ [pN, 20°C]: | 14,2 |
| CCY-5-O2 | 4,00 % | K₃ [pN, 20°C]: | 15,6 |
| CLY-3-O2 | 8,00 % | V₀ [pN, 20°C]: | 2,12 |
| CY-3-O2 | 4,00 % | γ₁ [mPa·s, 20 °C]: | 121 |
| PY-1-O4 | 5,00 % | | |
| PY-3-O2 | 12,00 % | | |
| PGIY-2-O4 | 8,00 % | | |
| B-2O-O5 | 4,00 % | | |

enthält zusätzlich 0,04 % ST-3b-1 und 0,01 % ST-9-1.

### Beispiel M207

Die flüssigkristalline Mischung

| | | | |
|---|---|---|---|
| CC-3-V | 44,50 % | Klärpunkt [°C]: | 73,5 |
| CCY-3-O1 | 3,00 % | Δn [589 nm, 20°C]: | 0,1009 |
| CCY-3-O2 | 11,00 % | Δε [1 kHz, 20°C]: | -3,5 |
| CCY-4-O2 | 3,00 % | ε_{∥} [1 kHz, 20°C]: | 3,6 |
| CPY-2-O2 | 9,00 % | ε_{⊥} [1 kHz, 20°C]: | 7,1 |
| CPY-3-O2 | 10,00 % | K₁ [pN, 20°C]: | 13,1 |
| CY-3-O2 | 3,50 % | K₃ [pN, 20°C]: | 14,4 |
| PY-3-O2 | 11,00 % | V₀ [pN, 20°C]: | 2,16 |
| B-2O-O5 | 5,00 % | γ₁ [mPa·s, 20 °C]: | 81 |

enthält zusätzlich 0,025 % ST-8-1.

| Vergleich | VHR nach UV |
|---|---|
| M207 ohne Stabilisator | 54 % |
| M207 mit Stabilisator (0,025 % ST-8-1) | 76 % |

### Beispiel M208

Die flüssigkristalline Mischung

| | | | |
|---|---|---|---|
| CCY-3-O1 | 8,00 % | Klärpunkt [°C]: | 82 |
| CCY-3-O2 | 1,00 % | Δn [589 nm, 20°C]: | 0,1081 |
| CLY-3-O2 | 10,00 % | Δε [1 kHz, 20°C]: | -3,5 |
| CPY-2-O2 | 9,50 % | ε_{∥} [1 kHz, 20°C]: | 3,6 |
| CPY-3-O2 | 10,00 % | ε_{⊥} [1 kHz, 20°C]: | 7,2 |
| PGIY-2-O4 | 5,00 % | K₁ [pN, 20°C]: | 14,4 |
| PYP-2-3 | 1,00 % | K₃ [pN, 20°C]: | 15,3 |
| B-2O-O5 | 5,00 % | V₀ [pN, 20°C]: | 2,20 |
| CC-3-V | 44,50 % | γ₁ [mPa·s, 20 °C]: | 95 |
| PY-1-O4 | 4,00 % | | |
| Y-4O-O4 | 2,00 % | | |

enthält zusätzlich 0,04 % ST-3b-1 und 0,01 % ST-9-1.

### Beispiel M209

Die flüssigkristalline Mischung

| | | | |
|---|---|---|---|
| B-2O-O5 | 4,00 % | Klärpunkt [°C]: | 84,6 |
| CC-3-V | 31,00 % | Δn [589 nm, 20°C]: | 0,1069 |
| CC-3-V1 | 4,00 % | Δε [1 kHz, 20°C]: | -3,8 |
| CCP-3-1 | 3,00 % | ε_{∥} [1 kHz, 20°C]: | 3,7 |
| CCY-3-O2 | 8,50 % | ε_{⊥} [1 kHz, 20°C]: | 7,5 |
| CCY-4-O2 | 6,00 % | K₁ [pN, 20°C]: | 14,1 |
| CLY-3-O2 | 6,00 % | K₃ [pN, 20°C]: | 15,0 |
| CLY-3-O3 | 6,00 % | V₀ [pN, 20°C]: | 2,09 |
| CPY-2-O2 | 8,00 % | γ₁ [mPa·s, 20 °C]: | 88 |
| CPY-3-O2 | 8,00 % | | |
| PY-3-O2 | 8,00 % | | |
| PY-4-O2 | 3,00 % | | |
| PYP-2-4 | 1,50 % | | |
| Y-4O-O4 | 3,00 % | | |

enthält zusätzlich 0,04 % ST-3b-1 und 0,015 % ST-9-1.

### Beispiel M210

Die flüssigkristalline Mischung

| | | | |
|---|---|---|---|
| CCY-3-O2 | 10,00 % | Klärpunkt [°C]: | 85 |
| CCY-5-O2 | 7,00 % | Δn [589 nm, 20°C]: | 0,1047 |
| CPY-2-O2 | 10,00 % | Δε [1 kHz, 20°C]: | -3,4 |
| CPY-3-O2 | 10,00 % | ε_{∥} [1 kHz, 20°C]: | 3,5 |
| PYP-2-3 | 5,50 % | ε_{⊥} [1 kHz, 20°C]: | 6,9 |
| B-2O-O5 | 4,00 % | K₁ [pN, 20°C]: | 14,6 |
| CC-3-V | 32,00 % | K₃ [pN, 20°C]: | 17,4 |
| CC-3-V1 | 10,00 % | V₀ [pN, 20°C]: | 2,37 |
| CY-3-O2 | 10,00 % | γ₁ [mPa·s, 20 °C]: | 108 |
| CY-5-O2 | 1,50 % | | |

enthält zusätzlich 0,04 % ST-3b-1 und 0,01 % ST-9-1.

### Beispiel M211

Die flüssigkristalline Mischung

| | | | |
|---|---|---|---|
| CC-3-V | 35,00 % | Klärpunkt [°C]: | 86 |
| CCY-3-O1 | 5,00 % | Δn [589 nm, 20°C]: | 0,1208 |
| CCY-3-O2 | 7,50 % | Δε [1 kHz, 20°C]: | -4,2 |
| CLY-3-O2 | 8,00 % | ε_{∥} [1 kHz, 20°C]: | 3,8 |
| CPY-2-O2 | 10,00 % | ε_{⊥} [1 kHz, 20°C]: | 8,0 |
| CPY-3-O2 | 10,00 % | K₁ [pN, 20°C]: | 14,3 |
| PY-3-O2 | 12,50 % | K₃ [pN, 20°C]: | 15,6 |
| PGIY-2-O4 | 8,00 % | V₀ [pN, 20°C]: | 2,04 |
| B-2O-O5 | 4,00 % | γ₁ [mPa·s, 20 °C]: | 129 |

enthält zusätzlich 0,04 % ST-3b-1 und 0,01 % ST-9-1.

### Beispiel M212

Die flüssigkristalline Mischung

| | | | |
|---|---|---|---|
| CC-3-V | 35,00 % | Klärpunkt [°C]: | 86,1 |
| CCY-3-O1 | 5,00 % | Δn [589 nm, 20°C]: | 0,1103 |
| CCY-3-O2 | 6,00 % | Δε [1 kHz, 20°C]: | -4,1 |
| CCY-3-O3 | 2,00 % | ε_{∥} [1 kHz, 20°C]: | 3,7 |
| CCY-4-O2 | 6,00 % | ε_{⊥} [1 kHz, 20°C]: | 7,8 |
| CLY-3-O2 | 8,00 % | K₁ [pN, 20°C]: | 14,2 |
| CPY-2-O2 | 10,00 % | K₃ [pN, 20°C]: | 15,7 |
| CPY-3-O2 | 9,50 % | V₀ [pN, 20°C]: | 2,06 |
| PY-1-O4 | 3,50 % | γ₁ [mPa·s, 20 °C]: | 125 |
| PY-3-O2 | 11,00 % | | |
| B-2O-O5 | 4,00 % | | |

enthält zusätzlich 0,04 % ST-3b-1 und 0,01 % ST-9-1.

### Beispiel M213

Die flüssigkristalline Mischung

| | | | |
|---|---|---|---|
| CCY-3-O1 | 3,50 % | Klärpunkt [°C]: | 86,5 |
| CCY-3-O2 | 4,50 % | Δn [589 nm, 20°C]: | 0,1053 |
| CLY-3-O2 | 9,00 % | Δε [1 kHz, 20°C]: | -3,4 |
| CPY-2-O2 | 10,50 % | ε_{∥} [1 kHz, 20°C]: | 3,5 |
| CPY-3-O2 | 11,00 % | ε_{⊥} [1 kHz, 20°C]: | 6,9 |
| PYP-2-3 | 3,50 % | K₁ [pN, 20°C]: | 14,8 |
| CC-3-V | 32,00 % | K₃ [pN, 20°C]: | 17,8 |
| CC-3-V1 | 12,00 % | V₀ [pN, 20°C]: | 2,41 |
| CY-3-O2 | 10,00 % | γ₁ [mPa·s, 20 °C]: | 105 |
| B-2O-O5 | 4,00 % | | |

enthält zusätzlich 0,04 % ST-3b-1 und 0,01 % ST-9-1.

### Beispiel M214

Die flüssigkristalline Mischung

| | | | |
|---|---|---|---|
| CC-3-V | 22,50 % | Klärpunkt [°C]: | 97,2 |
| CC-3-V1 | 7,00 % | Δn [589 nm, 20°C]: | 0,1005 |
| CCP-3-1 | 2,00 % | Δε [1 kHz, 20°C]: | -4,6 |
| CCY-3-O1 | 5,00 % | ε_{∥} [1 kHz, 20°C]: | 3,6 |
| CCY-3-O2 | 7,00 % | ε_{⊥} [1 kHz, 20°C]: | 8,2 |
| CCY-3-O3 | 5,00 % | K₁ [pN, 20°C]: | 15,8 |
| CCY-4-O2 | 7,00 % | K₃ [pN, 20°C]: | 18,6 |
| CCY-5-O2 | 5,00 % | V₀ [pN, 20°C]: | 2,13 |
| CLY-3-O2 | 8,00 % | γ₁ [mPa·s, 20 °C]: | 172 |
| CPY-3-O2 | 8,00 % | | |
| CY-3-O2 | 12,00 % | | |
| CY-5-O2 | 4,50 % | | |
| PGIY-2-O4 | 3,00 % | | |
| B-2O-O5 | 4,00 % | | |

enthält zusätzlich 0,04 % ST-3b-1 und 0,01 % ST-9-1.

### Beispiel M215

Die flüssigkristalline Mischung

| | | | |
|---|---|---|---|
| CC-3-V | 21,50 % | Klärpunkt [°C]: | 98,6 |
| CC-3-V1 | 7,00 % | Δn [589 nm, 20°C]: | 0,1103 |
| CCP-3-1 | 3,00 % | Δε [1 kHz, 20°C]: | -4,6 |
| CCY-3-O1 | 5,00 % | ε_{∥} [1 kHz, 20°C]: | 3,7 |
| CCY-3-O2 | 7,00 % | ε_{⊥} [1 kHz, 20°C]: | 8,3 |
| CCY-4-O2 | 7,00 % | K₁ [pN, 20°C]: | 16,3 |
| CCY-5-O2 | 4,00 % | K₃ [pN, 20°C]: | 18,7 |
| CLY-3-O2 | 8,00 % | V₀ [pN, 20°C]: | 2,12 |
| CPY-3-O2 | 10,50 % | γ₁ [mPa·s, 20 °C]: | 175 |
| CY-3-O2 | 12,00 % | | |
| CY-5-O2 | 3,00 % | | |
| PGIY-2-O4 | 8,00 % | | |
| B-2O-O5 | 4,00 % | | |

enthält zusätzlich 0,04 % ST-3b-1 und 0,01 % ST-9-1.

### Beispiel M216

Die flüssigkristalline Mischung

| | | | |
|---|---|---|---|
| CC-3-V1 | 7,00 % | Klärpunkt [°C]: | 109 |
| CCP-3-1 | 10,00 % | Δn [589 nm, 20°C]: | 0,1012 |
| CCP-3-3 | 6,50 % | Δε [1 kHz, 20°C]: | -5,2 |
| CCY-3-O1 | 5,00 % | ε_{∥} [1 kHz, 20°C]: | 3,7 |
| CCY-3-O2 | 6,00 % | ε_{⊥} [1 kHz, 20°C]: | 8,9 |
| CCY-3-O3 | 7,50 % | K₁ [pN, 20°C]: | 18,2 |
| CCY-4-O2 | 8,00 % | K₃ [pN, 20°C]: | 21,4 |
| CCY-5-O2 | 4,00 % | V₀ [pN, 20°C]: | 2,13 |
| CCY-3-1 | 8,00 % | γ₁ [mPa·s, 20 °C]: | 287 |
| CLY-3-O2 | 8,00 % | | |
| CY-3-O2 | 12,00 % | | |
| CY-3-O4 | 14,00 % | | |
| B-2O-O5 | 4,00 % | | |

enthält zusätzlich 0,04 % ST-3b-1 und 0,01 % ST-9-1.

### Beispiel M217

Die flüssigkristalline Mischung

| | | | |
|---|---|---|---|
| CC-3-V | 10,75 % | Klärpunkt [°C]: | 111,8 |
| CC-3-V1 | 3,50 % | Δn [589 nm, 20°C]: | 0,1104 |
| CCP-3-1 | 7,50 % | Δε [1 kHz, 20°C]: | -5,2 |
| CCY-3-O1 | 5,00 % | ε_{∥} [1 kHz, 20°C]: | 3,7 |
| CCY-3-O2 | 7,50 % | ε_{⊥} [1 kHz, 20°C]: | 8,9 |
| CCY-4-O2 | 7,50 % | K₁ [pN, 20°C]: | 17,9 |
| CCY-5-O2 | 4,50 % | K₃ [pN, 20°C]: | 21,0 |
| CLY-3-O2 | 8,00 % | V₀ [pN, 20°C]: | 2,13 |
| CPY-3-O2 | 8,00 % | γ₁ [mPa·s, 20 °C]: | 267 |
| CY-3-O2 | 12,00 % | | |
| CY-5-O2 | 5,00 % | | |
| PGIY-2-O4 | 4,00 % | | |
| B-2O-O5 | 4,00 % | | |
| CCP-3-3 | 1,75 % | | |
| CCY-3-O3 | 3,00 % | | |
| CCY-2-1 | 4,00 % | | |
| CCY-3-1 | 4,00 % | | |

enthält zusätzlich 0,04 % ST-3b-1 und 0,01 % ST-9-1.

### Beispiel M218

Die flüssigkristalline Mischung

| | | | |
|---|---|---|---|
| CCP-3-1 | 12,00 % | Klärpunkt [°C]: | 126 |
| CCP-3-3 | 3,50 % | Δn [589 nm, 20°C]: | 0,1103 |
| CCY-3-O1 | 5,00 % | Δε [1 kHz, 20°C]: | -5,8 |
| CCY-3-O2 | 8,00 % | ε_{∥} [1 kHz, 20°C]: | 3,7 |
| CCY-3-O3 | 6,00 % | ε_{⊥} [1 kHz, 20°C]: | 9,5 |
| CCY-4-O2 | 8,00 % | K₁ [pN, 20°C]: | 20,3 |
| CCY-5-O2 | 5,00 % | K₃ [pN, 20°C]: | 23,8 |
| CCY-2-1 | 8,00 % | V₀ [pN, 20°C]: | 2,14 |
| CCY-3-1 | 8,00 % | γ₁ [mPa·s, 20 °C]: | 422 |
| CLY-3-O2 | 8,00 % | | |
| CPY-3-O2 | 5,50 % | | |
| CY-3-O2 | 12,00 % | | |
| CY-5-O2 | 7,00 % | | |
| B-2O-O5 | 4,00 % | | |

enthält zusätzlich 0,04 % ST-3b-1 und 0,01 % ST-9-1.

### Beispiel M219

Die flüssigkristalline Mischung

| | | | |
|---|---|---|---|
| CC-3-V | 12,50 % | Klärpunkt [°C]: | 110,3 |
| CC-3-V1 | 6,50 % | Δn [589 nm, 20°C]: | 0,1100 |
| CCP-3-1 | 12,50 % | Δε [1 kHz, 20°C]: | -4,8 |
| CCY-3-O1 | 5,00 % | ε_{∥} [1 kHz, 20°C]: | 3,6 |
| CCY-3-O2 | 7,50 % | ε_{⊥} [1 kHz, 20°C]: | 8,4 |
| CCY-4-O2 | 3,00 % | K₁ [pN, 20°C]: | 17,9 |
| CCY-5-O2 | 3,50 % | K₃ [pN, 20°C]: | 20,8 |
| CLY-2-O4 | 5,00 % | V₀ [pN, 20°C]: | 2,22 |
| CLY-3-O2 | 7,00 % | γ₁ [mPa·s, 20 °C]: | 233 |
| CLY-3-O3 | 6,00 % | | |
| CPY-3-O2 | 8,00 % | | |
| CY-3-O2 | 12,00 % | | |
| CY-5-O2 | 4,00 % | | |
| PGIY-2-O4 | 3,50 % | | |
| B-2O-O5 | 4,00 % | | |

enthält zusätzlich 0,04 % ST-3b-1 und 0,01 % ST-9-1.

### Beispiel M220

Die flüssigkristalline Mischung

| | | | |
|---|---|---|---|
| CC-3-V | 14,00 % | Klärpunkt [°C]: | 111 |
| CC-3-V1 | 6,00 % | Δn [589 nm, 20°C]: | 0,1102 |
| CCP-3-1 | 7,00 % | Δε [1 kHz, 20°C]: | -5,2 |
| CCY-3-O1 | 5,00 % | ε_{∥} [1 kHz, 20°C]: | 3,7 |
| CCY-3-O2 | 8,00 % | ε_{⊥} [1 kHz, 20°C]: | 8,9 |
| CCY-4-O2 | 5,50 % | K₁ [pN, 20°C]: | 18,5 |
| CCY-5-O2 | 2,00 % | K₃ [pN, 20°C]: | 20,5 |
| CLY-2-O4 | 7,00 % | V₀ [pN, 20°C]: | 2,10 |
| CLY-3-O2 | 8,00 % | γ₁ [mPa·s, 20 °C]: | 241 |
| CLY-3-O3 | 7,00 % | | |
| CPY-3-O2 | 10,00 % | | |
| CY-3-O2 | 12,00 % | | |
| CY-5-O2 | 2,50 % | | |
| PGIY-2-O4 | 2,00 % | | |
| B-2O-O5 | 4,00 % | | |

### Beispiel M221

Die flüssigkristalline Mischung

| | | | |
|---|---|---|---|
| CC-3-V | 12,25 % | Klärpunkt [°C]: | 110,9 |
| CC-3-V1 | 6,00 % | Δn [589 nm, 20°C]: | 0,1101 |
| CCP-3-1 | 11,00 % | Δε [1 kHz, 20°C]: | -5,0 |
| CCY-3-O1 | 5,00 % | ε_{∥} [1 kHz, 20°C]: | 3,6 |
| CCY-3-O2 | 7,75 % | ε_{⊥} [1 kHz, 20°C]: | 8,6 |
| CCY-4-O2 | 5,00 % | K₁ [pN, 20°C]: | 18,5 |
| CCY-5-O2 | 3,50 % | K₃ [pN, 20°C]: | 20,8 |
| CLY-2-O4 | 5,00 % | V₀ [pN, 20°C]: | 2,16 |
| CLY-3-O2 | 7,00 % | γ₁ [mPa·s, 20 °C]: | 240 |
| CLY-3-O3 | 6,00 % | | |
| CPY-3-O2 | 8,00 % | | |
| CY-3-O2 | 12,00 % | | |
| CY-5-O2 | 4,25 % | | |
| PGIY-2-O4 | 3,25 % | | |
| B-2O-O5 | 4,00 % | | |

enthält zusätzlich 0,04 % ST-3b-1 und 0,01 % ST-9-1.

### Beispiel M222

Die flüssigkristalline Mischung

| | | | |
|---|---|---|---|
| CC-3-V | 12,00 % | Klärpunkt [°C]: | 111,6 |
| CC-3-V1 | 5,50 % | Δn [589 nm, 20°C]: | 0,1101 |
| CCP-3-1 | 9,50 % | Δε [1 kHz, 20°C]: | -5,2 |
| CCY-3-O1 | 5,00 % | ε_{∥} [1 kHz, 20°C]: | 3,7 |
| CCY-3-O2 | 8,00 % | ε_{⊥} [1 kHz, 20°C]: | 8,9 |
| CCY-4-O2 | 7,00 % | K₁ [pN, 20°C]: | 18,6 |
| CCY-5-O2 | 3,50 % | K₃ [pN, 20°C]: | 20,6 |
| CLY-2-O4 | 5,00 % | V₀ [pN, 20°C]: | 2,11 |
| CLY-3-O2 | 7,00 % | γ₁ [mPa·s, 20 °C]: | 252 |
| CLY-3-O3 | 6,00 % | | |
| CPY-3-O2 | 8,00 % | | |
| CY-3-O2 | 12,00 % | | |
| CY-5-O2 | 4,50 % | | |
| PGIY-2-O4 | 3,00 % | | |
| B-2O-O5 | 4,00 % | | |

enthält zusätzlich 0,04 % ST-3b-1 und 0,01 % ST-9-1.

### Beispiel M223

Die flüssigkristalline Mischung

| | | | |
|---|---|---|---|
| CC-3-V1 | 8,50 % | Klärpunkt [°C]: | 74 |
| CCH-23 | 18,00 % | Δn [589 nm, 20°C]: | 0,0975 |
| CCH-34 | 3,00 % | Δε [1 kHz, 20°C]: | -3,4 |
| CCH-35 | 6,00 % | ε_{∥} [1 kHz, 20°C]: | 3,5 |
| CCP-3-1 | 10,50 % | ε_{⊥} [1 kHz, 20°C]: | 6,9 |
| CCY-3-O2 | 11,00 % | K₁ [pN, 20°C]: | 15,1 |
| CCY-3-O1 | 9,00 % | K₃ [pN, 20°C]: | 15,5 |
| CPY-3-O2 | 4,50 % | V₀ [pN, 20°C]: | 2,27 |
| CY-3-O2 | 8,00 % | γ₁ [mPa·s, 20 °C]: | 101 |
| PY-3-O2 | 13,00 % | | |
| PY-4-O2 | 5,50 % | | |
| B-2O-O5 | 3,00 % | | |

enthält zusätzlich 0,025 % ST-8-1.

| Vergleich | VHR nach UV |
|---|---|
| M223 ohne Stabilisator | 88 % |
| M223 mit Stabilisator (0,025 % ST-8-1) | 92 % |

### Beispiel M224

Die flüssigkristalline Mischung

| | | | |
|---|---|---|---|
| CC-3-V1 | 8,50 % | Klärpunkt [°C]: | 74 |
| CCH-23 | 18,00 % | Δn [589 nm, 20°C]: | 0,0975 |
| CCH-34 | 3,00 % | Δε [1 kHz, 20°C]: | -3,4 |
| CCH-35 | 6,00 % | ε_{∥} [1 kHz, 20°C]: | 3,5 |
| CCP-3-1 | 10,50 % | ε_{⊥} [1 kHz, 20°C]: | 6,9 |
| CCY-3-O2 | 11,00 % | K₁ [pN, 20°C]: | 15,1 |
| CCY-3-O1 | 9,00 % | K₃ [pN, 20°C]: | 15,5 |
| CPY-3-O2 | 4,50 % | V₀ [pN, 20°C]: | 2,27 |
| CY-3-O2 | 8,00 % | γ₁ [mPa·s, 20 °C]: | 101 |
| PY-3-O2 | 13,00 % | | |
| PY-4-O2 | 5,50 % | | |
| B-2O-O5 | 3,00 % | | |

enthält zusätzlich 0,01 % ST-9-1.

| Vergleich | VHR nach UV |
|---|---|
| M224 ohne Stabilisator | 88 % |
| M224 mit Stabilisator (0,025 % ST-9-1) | 93 % |

### Beispiel M225

Die flüssigkristalline Mischung

| | | | |
|---|---|---|---|
| CY-3-O2 | 3,00 % | Klärpunkt [°C]: | 75,1 |
| CCY-3-O1 | 5,00 % | Δn [589 nm, 20°C]: | 0,10215 |
| CCY-3-O2 | 3,00 % | Δε [1 kHz, 20°C]: | -3,7 |
| CPY-2-O2 | 8,00 % | ε_{∥} [1 kHz, 20°C]: | 3,8 |
| CPY-3-O2 | 10,00 % | ε_{⊥} [1 kHz, 20°C]: | 7,5 |
| CLY-3-O2 | 7,00 % | K₁ [pN, 20°C]: | 13,3 |
| CLY-3-O3 | 4,00 % | K₃ [pN, 20°C]: | 14,0 |
| Y-4O-O4 | 6,00 % | V₀ [pN, 20°C]: | 2,04 |
| PGIY-2-O4 | 7,00 % | γ₁ [mPa·s, 20 °C]: | 87 |
| B-2O-O5 | 4,00 % | | |
| CC-3-V | 43,00 % | | |

enthält zusätzlich 0,04 % ST-3b-1 und 0,01 % ST-9-1.

### Beispiel M226

Die flüssigkristalline Mischung

| | | | |
|---|---|---|---|
| CY-3-O2 | 3,00 % | Klärpunkt [°C]: | 74,9 |
| CCY-3-O1 | 5,00 % | Δn [589 nm, 20°C]: | 0,1032 |
| CCY-3-O2 | 4,50 % | Δε [1 kHz, 20°C]: | -4,0 |
| CPY-2-O2 | 8,00 % | ε_{∥} [1 kHz, 20°C]: | 3,9 |
| CPY-3-O2 | 10,00 % | ε_{⊥} [1 kHz, 20°C]: | 7,9 |
| CLY-3-O2 | 7,00 % | K₁ [pN, 20°C]: | 13,2 |
| CLY-3-O3 | 4,00 % | K₃ [pN, 20°C]: | 13,9 |
| Y-4O-O4 | 7,00 % | V₀ [pN, 20°C]: | 1,96 |
| PGIY-2-O4 | 7,00 % | γ₁ [mPa·s, 20 °C]: | 92 |
| B-2O-O5 | 4,00 % | | |
| CC-3-V | 40,50 % | | |

enthält zusätzlich 0,04 % ST-3b-1 und 0,01 % ST-9-1..

### Beispiel M227

Die flüssigkristalline Mischung

| | | | |
|---|---|---|---|
| CY-3-02 | 3,50% | Klärpunkt [°C]: | 74,3 |
| CCY-3-O1 | 5,00% | Δn [589 nm, 20°C]: | 0,1096 |
| CCY-3-O2 | 2,50% | Δε [1 kHz, 20°C]: | -4,0 |
| CPY-2-O2 | 8,00% | ε_{∥} [1 kHz, 20°C]: | 4,0 |
| CPY-3-O2 | 10,00% | ε_{⊥} [1 kHz, 20°C]: | 8,0 |
| PYP-2-3 | 4,00% | K₁ [pN, 20°C]: | 13,0 |
| CLY-3-O2 | 7,00% | K₃ [pN, 20°C]: | 13,7 |
| CLY-3-O3 | 4,00% | V₀ [pN, 20°C]: | 1,94 |
| Y-4O-O4 | 7,00% | γ₁ [mPa·s, 20 °C]: | 96 |
| PGIY-2-O4 | 7,00% | | |
| B-2O-O5 | 4,00% | | |
| CC-3-V | 38,00% | | |

enthält zusätzlich 0,04 % ST-3b-1 und 0,01 % ST-9-1..

### Beispiel M228

Die flüssigkristalline Mischung

| | | | |
|---|---|---|---|
| B-2O-O5 | 4,00 % | Klärpunkt [°C]: | 84,6 |
| CC-3-V | 31,00 % | Δn [589 nm, 20°C]: | 0,1069 |
| CC-3-V1 | 4,00 % | Δε [1 kHz, 20°C]: | -3,8 |
| CCP-3-1 | 3,00 % | ε_{∥} [1 kHz, 20°C]: | 3,7 |
| CCY-3-O2 | 8,50 % | ε_{⊥} [1 kHz, 20°C]: | 7,5 |
| CCY-4-O2 | 6,00 % | K₁ [pN, 20°C]: | 14,1 |
| CLY-3-O2 | 6,00 % | K₃ [pN, 20°C]: | 15,0 |
| CLY-3-O3 | 6,00 % | V₀ [pN, 20°C]: | 2,09 |
| CPY-2-O2 | 8,00 % | γ₁ [mPa·s, 20 °C]: | 88 |
| CPY-3-O2 | 8,00 % | | |
| PY-3-O2 | 8,00 % | | |
| PY-4-O2 | 3,00 % | | |
| PYP-2-4 | 1,50 % | | |
| Y-4O-O4 | 3,00 % | | |

enthält zusätzlich 0,04 % ST-3b-1 und 0,015 % ST-9-1..

### Beispiel M229

Die flüssigkristalline Mischung

| | | | |
|---|---|---|---|
| CC-3-V | 5,00 % | Klärpunkt [°C]: | 75,5 |
| CC-3-V1 | 8,00 % | Δn [589 nm, 20 °C]: | 0,1082 |
| CCH-23 | 11,50 % | Aε [1 kHz, 20 °C]: | -3,3 |
| CCH-34 | 5,00 % | ε_{∥}[1 kHz, 20 °C]: | 3,6 |
| CCP-3-1 | 10,00 % | K₁ [pN, 20 °C]: | 15,2 |
| CCP-3-3 | 5,00 % | K₃ [pN, 20 °C]: | 16,0 |
| CCY-3-O1 | 4,00 % | γ₁ [mPa·s, 20 °C]: | 104 |
| CCY-3-O2 | 11,50 % | V₀ [20 °C, V]: | 2,31 |
| CY-3-O2 | 14,50 % | | |
| PY-3-O2 | 8,00 % | | |
| PYP-2-3 | 8,00 % | | |
| B-2O-O5 | 3,50 % | | |
| B(S)-2O-O5 | 3,50 % | | |
| PP-1-2V1 | 2,50 % | | |

enthält zusätzlich 0,04 % ST-3b-1 und 0,01 % ST-9-1..

### Beispiel M230

Die flüssigkristalline Mischung

| | | | |
|---|---|---|---|
| CC-3-V | 20,00 % | Klärpunkt [°C]: | 99 |
| CC-3-V1 | 6,00 % | Δn [589 nm, 20 °C]: | 0,1008 |
| CCP-3-1 | 5,50 % | Aε [1 kHz, 20 °C]: | -4,7 |
| CCY-3-O1 | 4,00 % | ε_{∥} [1 kHz, 20 °C]: | 3,6 |
| CCY-3-O2 | 5,00 % | K₁ [pN, 20 °C]: | 16,4 |
| CCY-3-O3 | 4,00 % | K₃ [pN, 20 °C]: | 18,6 |
| CCY-4-O2 | 5,00 % | γ₁ [mPa·s, 20 °C]: | 183 |
| CCY-5-O2 | 3,00 % | V₀ [20 °C, V]: | 2,12 |
| CLY-2-O4 | 4,00 % | | |
| CLY-3-O2 | 7,00 % | | |
| CLY-3-O3 | 5,00 % | | |
| CPY-3-O2 | 10,00 % | | |
| CY-3-O2 | 10,00 % | | |
| CY-5-O2 | 8,00 % | | |
| B-2O-O5 | 4,00 % | | |

enthält zusätzlich 0,04 % ST-3b-1 und 0,01 % ST-9-1.

### Beispiel M231

Zur Herstellung einer PS (polymer stabilized)-Mischung, z.B. für PS-IPS-, PS-VA-, PS-FFS-Anwendungen, werden 99,7 % der Mischung gemäß Beispiel M230 mit 0,001 % Irganox 1076 und 0,3 % der polymerisierbaren Verbindung der Formel 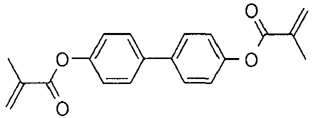 versetzt.

### Beispiel M232

Die flüssigkristalline Mischung

| | | | |
|---|---|---|---|
| CC-3-V | 42,00 % | Klärpunkt [°C]: | 74 |
| CCY-3-O2 | 11,00 % | Δn [589 nm, 20 °C]: | 0,1008 |
| CPY-2-O2 | 10,00 % | Aε [1 kHz, 20 °C]: | -3,7 |
| CPY-3-O2 | 11,00 % | ε_{⊥} [1 kHz, 20°C]: | 7,3 |
| CY-3-O2 | 17,00 % | K₁ [pN, 20 °C]: | 12,8 |
| PGIY-2-O4 | 5,00 % | K₃ [pN, 20 °C]: | 14,6 |
| B(S)-2O-O5 | 4,00 % | γ₁ [mPa·s, 20 °C]: | 86 |
| | | V₀ [20 °C, V]: | 2,11 |

enthält zusätzlich 0,03 % ST-8-1.

### Beispiel M233

Die flüssigkristalline Mischung

| | | | |
|---|---|---|---|
| CY-3-O2 | 17,00 % | Klärpunkt [°C]: | 74,4 |
| CCY-3-O2 | 6,00 % | Δn [589 nm, 20 °C]: | 0,1116 |
| CLY-3-O2 | 7,00 % | Δε [1 kHz, 20 °C]: | -3,7 |
| CPY-2-O2 | 3,00 % | ε_{⊥} [1 kHz, 20°C]: | 7,4 |
| CPY-3-O2 | 10,00 % | K₁ [pN, 20 °C]: | 13,5 |
| PYP-2-3 | 6,50 % | K₃ [pN, 20 °C]: | 15,2 |
| PGIY-2-O4 | 7,00 % | γ₁ [mPa·s, 20 °C]: | 97 |
| B-2O-O5 | 4,00 % | V₀ [20 °C, V]: | 2,14 |
| CC-3-V | 33,00 % | ε_{⊥} [1 kHz, 20°C]: | 7,4 |
| CC-3-V1 | 6,50 % | | |

enthält zusätzlich 0,025 % ST-8-1.

### Beispiel M234

Die flüssigkristalline Mischung

| | | | |
|---|---|---|---|
| CY-3-O2 | 15,00 % | Klärpunkt [°C]: | 80,1 |
| CY-5-O2 | 3,50 % | Δn [589 nm, 20 °C]: | 0,0951 |
| CCY-3-O1 | 5,00 % | Aε [1 kHz, 20 °C]: | -4,0 |
| CCY-3-O2 | 6,00 % | ε_{⊥} [1 kHz, 20°C]: | 7,7 |
| CCY-3-O3 | 5,50 % | K₁ [pN, 20 °C]: | 13,9 |
| CCY-4-O2 | 6,00 % | K₃ [pN, 20 °C]: | 15,5 |
| PYP-2-3 | 6,00 % | γ₁ [mPa·s, 20 °C]: | 111 |
| CLY-3-O2 | 7,00 % | V₀ [20 °C, V]: | 2,05 |
| CLY-3-O3 | 7,00 % | | |
| B-2O-O5 | 4,00 % | | |
| CC-3-V | 35,00 % | | |

enthält zusätzlich 0,015 % ST-9-1.

### Beispiel M235

Die flüssigkristalline Mischung

| | | | |
|---|---|---|---|
| B-2O-O5 | 4,00 % | Klärpunkt [°C]: | 74,2 |
| BCH-32 | 8,00 % | Δn [589 nm, 20 °C]: | 0,1091 |
| CC-3-V1 | 9,00 % | Δε [1 kHz, 20 °C]: | -3,1 |
| CCH-301 | 2,00 % | ε_{⊥} [1 kHz, 20°C]: | 6,7 |
| CCH-34 | 8,00 % | K₁ [pN, 20 °C]: | 14,5 |
| CCH-35 | 7,00 % | K₃ [pN, 20 °C]: | 16,5 |
| CCP-3-1 | 8,00 % | γ₁ [mPa·s, 20 °C]: | 108 |
| CCP-V2-1 | 5,00 % | V₀ [20 °C, V]: | 2,41 |
| CCY-3-O2 | 10,50 % | | |
| CLY-3-O2 | 1,00 % | | |
| CPY-3-O2 | 2,50 % | | |
| CY-3-O2 | 11,50 % | | |
| PCH-301 | 5,50 % | | |
| PY-3-O2 | 18,00 % | | |

enthält zusätzlich 0,005 % ST-3a-1.

### Beispiel M235a

Zur Herstellung einer PS (polymer stabilized)-Mischung, z.B. für PS-IPS-, PS-VA-, PS-FFS-Anwendungen, werden 99,65 % der Mischung gemäß Beispiel M235 mit 0,35 % der polymerisierbaren Verbindung der Formel 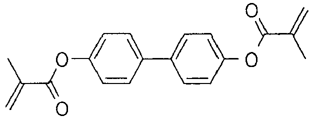 versetzt.

### Beispiel M236

Die flüssigkristalline Mischung

| | | | |
|---|---|---|---|
| CLY-2-O4 | 2,00 % | Klärpunkt [°C]: | 79,5 |
| CLY-3-O2 | 7,50 % | Δn [589 nm, 20 °C]: | 0,1151 |
| CLY-3-O3 | 4,50 % | Δε [1 kHz, 20 °C]: | -4,0 |
| CPY-2-O2 | 10,00 % | ε_{∥} [1 kHz, 20 °C]: | |
| CPY-3-O2 | 10,00 % | ε_{⊥} [1 kHz, 20°C]: | 7,7 |
| PGIY-2-O4 | 8,00 % | K₁ [pN, 20 °C]: | 14,3 |
| PYP-2-3 | 3,00 % | K₃ [pN, 20 °C]: | 14,9 |
| B-2O-O5 | 5,00 % | γ₁ [mPa·s, 20 °C]: | 107 |
| CC-3-V | 38,50 % | V₀ [20°C, V]: | 2,02 |
| CY-3-O2 | 11,50 % | | |

enthält zusätzlich 0,015 % ST-3a-1.

### Beispiel M236

Zur Herstellung einer PS (polymer stabilized)-Mischung, z.B. für PS-IPS-, PS-VA-, PS-FFS-Anwendungen, werden 99,75 % der Mischung gemäß Beispiel M236 mit 0,25 % der polymerisierbaren Verbindung der Formel 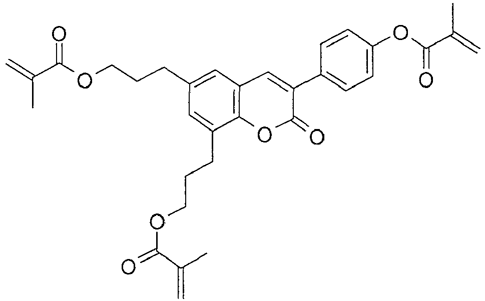 versetzt.

### Beispiel M237

Die flüssigkristalline Mischung

| | | | |
|---|---|---|---|
| CCY-3-O1 | 3,50 % | Klärpunkt [°C]: | 84,5 |
| CCY-3-O2 | 7,50 % | Δn [589 nm, 20 °C]: | 0,1184 |
| CCY-4-O2 | 8,00 % | Δε [1 kHz, 20 °C]: | -4,8 |
| CCY-5-O2 | 7,50 % | ε_{⊥} [1 kHz, 20°C]: | 8,7 |
| CLY-3-O2 | 10,00 % | K₁ [pN, 20 °C]: | 16,7 |
| PGIY-2-O4 | 5,00 % | K₃ [pN, 20 °C]: | 17,3 |
| PYP-2-3 | 3,00 % | V₀ [20 °C, V]: | 1,99 |
| B-2O-O5 | 5,00 % | | |
| CC-3-V | 23,00 % | | |
| CC-3-V1 | 8,00 % | | |
| PY-1-O4 | 5,50 % | | |
| PY-3-O2 | 14,00 % | | |

enthält zusätzlich 0,03 % ST-3a-1.

### Beispiel M238

Die flüssigkristalline Mischung

| | | | |
|---|---|---|---|
| CCY-3-O1 | 3,00 % | Klärpunkt [°C]: | 84,5 |
| CCY-3-O2 | 8,00 % | Δn [589 nm, 20 °C]: | 0,1223 |
| CCY-4-O2 | 8,00 % | Δε [1 kHz, 20 °C]: | -4,9 |
| CCY-5-O2 | 7,00 % | ε_{⊥} [1 kHz, 20°C]: | 8,8 |
| CLY-3-O2 | 10,00 % | K₁ [pN, 20 °C]: | 16,7 |
| PGIY-2-O4 | 5,00 % | K₃ [pN, 20 °C]: | 17,3 |
| PYP-2-3 | 4,50 % | V₀ [20 °C, V]: | 1,98 |
| B-2O-O5 | 5,00 % | | |
| CC-3-V | 21,50 % | | |
| CC-3-V1 | 8,00 % | | |
| PY-1-O4 | 5,00 % | | |
| PY-3-O2 | 15,00 % | | |

enthält zusätzlich 0,03 % ST-3a-1.

### Beispiel M239

Die flüssigkristalline Mischung

| | | | |
|---|---|---|---|
| CCY-3-O2 | 8,50 % | Klärpunkt [°C]: | 79,0 |
| CCY-4-O2 | 8,00 % | Δn [589 nm, 20 °C]: | 0,1125 |
| CLY-2-O4 | 5,00 % | Aε [1 kHz, 20 °C]: | -4,5 |
| CLY-3-O2 | 8,00 % | ε_{⊥} [1 kHz, 20°C]: | 8,3 |
| CLY-3-O3 | 5,00 % | K₁ [pN, 20 °C]: | 15,6 |
| PGIY-2-O4 | 5,00 % | K₃ [pN, 20 °C]: | 15,6 |
| PYP-2-3 | 1,00 % | γ₁ [mPa·s, 20 °C]: | 116 |
| B-2O-O5 | 5,00 % | V₀ [20 °C, V]: | 1,96 |
| CC-3-V | 27,50 % | | |
| CC-3-V1 | 8,00 % | | |
| PY-1-04 | 4,00 % | | |
| PY-3-02 | 15,00 % | | |

enthält zusätzlich 0,025 % ST-3a-1.

### Beispiel M240

Die flüssigkristalline Mischung

| | | | |
|---|---|---|---|
| CCY-3-01 | 5,00 % | Klärpunkt [°C]: | 79,5 |
| CCY-3-02 | 8,00 % | Δn [589 nm, 20 °C]: | 0,1047 |
| CCY-4-02 | 8,00 % | Δε [1 kHz, 20 °C]: | -4,4 |
| CLY-2-04 | 5,00 % | ε_{⊥} [1 kHz, 20°C]: | 8,2 |
| CLY-3-02 | 8,00 % | K₁ [pN, 20 °C]: | 15,5 |
| CLY-3-03 | 5,00 % | K₃ [pN, 20 °C]: | 15,9 |
| B-2O-O5 | 5,00 % | γ₁ [mPa·s, 20 °C]: | 115 |
| CC-3-V | 28,50 % | V₀ [20 °C, V]: | 1,99 |
| CC-3-V1 | 7,50 % | | |
| PY-1-O4 | 5,00 % | | |
| PY-3-O2 | 15,00 % | | |

enthält zusätzlich 0,025 % ST-3a-1.

### Beispiel M241

Die flüssigkristalline Mischung

| | | | |
|---|---|---|---|
| CCY-3-01 | 2,00 % | Klärpunkt [°C]: | 79,0 |
| CCY-3-02 | 8,00 % | Δn [589 nm, 20 °C]: | 0,1048 |
| CCY-4-02 | 8,00 % | Δε [1 kHz, 20 °C]: | -4,1 |
| CLY-2-04 | 5,00 % | ε_{⊥} [1 kHz, 20°C]: | 7,9 |
| CLY-3-02 | 8,00 % | K₁ [pN, 20 °C]: | 15,6 |
| CLY-3-O3 | 5,00 % | K₃ [pN, 20 °C]: | 15,7 |
| PGIY-2-O4 | 2,50 % | γ₁ [mPa·s, 20 °C]: | 107 |
| B-2O-O5 | 5,00 % | | |
| CC-3-V | 31,00 % | | |
| CC-3-V1 | 8,00 % | | |
| PY-1-04 | 2,50 % | | |
| PY-3-02 | 15,00 | | |

enthält zusätzlich 0,02 % ST-2a-1.

### Beispiel M242

Die flüssigkristalline Mischung

| | | | |
|---|---|---|---|
| CCY-3-O2 | 8,00 % | Klärpunkt [°C]: | 79,5 |
| CCY-4-O2 | 3,50 % | Δn [589 nm, 20 °C]: | 0,1050 |
| CCY-5-O2 | 3,50 % | Δε [1 kHz, 20 °C]: | -3,8 |
| CLY-2-O4 | 5,00 % | ε_{⊥} [1 kHz, 20°C]: | 7,5 |
| CLY-3-O2 | 8,00 % | K₁ [pN, 20 °C]: | 15,6 |
| CLY-3-O3 | 5,00 % | K₃ [pN, 20 °C]: | 15,8 |
| PGIY-2-O4 | 5,00 % | γ₁ [mPa·s, 20 °C]: | 102 |
| B-2O-O5 | 5,00 % | V₀ [20 °C, V]: | 2,13 |
| CC-3-V | 34,00 % | | |
| CC-3-V1 | 8,00 % | | |
| PY-3-O2 | 15,00 % | | |

enthält zusätzlich 0,025 % ST-3a-1.

### Beispiel M243

Die flüssigkristalline Mischung

| | | | |
|---|---|---|---|
| CCY-3-02 | 8,00 % | Klärpunkt [°C]: | 75,0 |
| CCY-4-02 | 8,00 % | Δn [589 nm, 20 °C]: | 0,1047 |
| CLY-2-04 | 5,00 % | Δε [1 kHz, 20 °C]: | -4,2 |
| CLY-3-02 | 8,00 % | ε_{⊥} [1 kHz, 20°C]: | 8,0 |
| CLY-3-03 | 5,00 % | K₁ [pN, 20 °C]: | 15,0 |
| PGIY-2-O4 | 2,00 % | K₃ [pN, 20 °C]: | 15,2 |
| B-2O-O5 | 5,00 % | γ₁ [mPa·s, 20 °C]: | 105 |
| CC-3-V | 30,00 % | V₀ [20 °C, V]: | 1,99 |
| CC-3-V1 | 8,00 % | | |
| CY-5-02 | 2,00 % | | |
| PY-1-04 | 4,00 % | | |
| PY-3-02 | 15,00 % | | |

enthält zusätzlich 0,03 % ST-3a-1.

### Beispiel M244

Die flüssigkristalline Mischung

| | | | |
|---|---|---|---|
| CCP-3-1 | 7,00 % | Klärpunkt [°C]: | 75,5 |
| CLY-3-02 | 10,00 % | Δn [589 nm, 20 °C]: | 0,0992 |
| CPY-2-O2 | 9,50 % | Δε [1 kHz, 20 °C]: | -3,2 |
| CPY-3-O2 | 10,50 % | ε_{⊥} [1 kHz, 20°C]: | 6,7 |
| B-2O-O5 | 5,00 % | K₁ [pN, 20 °C]: | 13,1 |
| CC-3-V | 42,50 % | K₃ [pN, 20 °C]: | 15,4 |
| CY-3-02 | 12,00 % | γ₁ [mPa·s, 20 °C]: | 85 |
| PY-3-O2 | 3,50 % | V₀ [20°C, V]: | 2,32 |

enthält zusätzlich 0,03 % ST-3a-1.

### Beispiel M245

Die flüssigkristalline Mischung

| | | | |
|---|---|---|---|
| CC-3-V | 32,50 % | Klärpunkt [°C]: | 79,8 |
| CC-3-V1 | 2,00 % | Δn [589 nm, 20 °C]: | 0,1043 |
| CCP-3-1 | 2,50 % | Δε [1 kHz, 20 °C]: | -3,5 |
| CCY-3-O2 | 8,00 % | K₁ [pN, 20 °C]: | 13,7 |
| CCY-4-O2 | 3,00 % | K₃ [pN, 20 °C]: | 14,8 |
| CLY-3-O2 | 6,00 % | γ₁ [mPa·s, 20 °C]: | 102 |
| CLY-3-O3 | 6,00 % | V₀ [20 °C, V]: | 2,16 |
| CPY-2-O2 | 8,00 % | | |
| CPY-3-O2 | 8,00 % | | |
| CY-3-O2 | 9,00 % | | |
| PYP-2-3 | 6,00 % | | |
| PYP-2-4 | 3,00 % | | |
| Y-4O-O4 | 6,00 % | | |

enthält zusätzlich 0,04 % ST-3b-1 und 0,015 % ST-9-1.

### Beispiel M246

Die flüssigkristalline Mischung

| | | | |
|---|---|---|---|
| CY-3-O2 | 10,00 % | Klärpunkt [°C]: | 69,7 |
| PY-3-O2 | 13,50 % | Δn [589 nm, 20 °C]: | 0,1077 |
| CLY-3-O2 | 8,00 % | Δε [1 kHz, 20 °C]: | -3,8 |
| CLY-3-O3 | 4,00 % | ε_{⊥} [1 kHz, 20°C]: | 7,7 |
| CPY-2-O2 | 10,00 % | K₁ [pN, 20 °C]: | 12,3 |
| CPY-3-O2 | 10,00 % | K₃ [pN, 20 °C]: | 13,7 |
| B-2O-O5 | 5,00 % | γ₁ [mPa·s, 20 °C]: | 76 |
| CC-3-V | 32,00 % | V₀ [20 °C, V]: | 1,98 |
| CC-3-V1 | 4,00 % | | |
| CCP-3-1 | 2,50 % | | |
| BCH-32 | 1,00 % | | |

enthält zusätzlich 0,02 % ST-3a-1.

### Beispiel M247

Die flüssigkristalline Mischung

| | | | |
|---|---|---|---|
| PY-3-O2 | 16,00 % | Klärpunkt [°C]: | 69,8 |
| PY-4-O2 | 6,50 % | Δn [589 nm, 20 °C]: | 0,1075 |
| CCY-3-O1 | 4,00 % | Aε [1 kHz, 20 °C]: | -3,9 |
| CCY-3-O2 | 6,00 % | ε_{⊥} [1 kHz, 20°C]: | 7,8 |
| CPY-4-O2 | 6,00 % | K₁ [pN, 20 °C]: | 12,6 |
| CLY-3-O2 | 8,00 % | K₃ [pN, 20 °C]: | 13,0 |
| CLY-3-O3 | 4,00 % | V₀ [20 °C, V]: | 2,17 |
| B-2O-O5 | 5,00 % | | |
| PGIY-2-O4 | 6,00 % | | |
| CC-3-V | 32,00 % | | |
| CC-3-V1 | 5,50 % | | |
| BCH-32 | 1,00 % | | |

enthält zusätzlich 0,02 % ST-3a-1.

### Beispiel M248

Die flüssigkristalline Mischung

| | | | |
|---|---|---|---|
| CY-3-O2 | 12,00 % | Klärpunkt [°C]: | 75,6 |
| CY-5-O2 | 8,00 % | Δn [589 nm, 20 °C]: | 0,1024 |
| CCY-3-O2 | 5,00 % | Δε [1 kHz, 20 °C]: | -4,0 |
| CCY-4-O2 | 2,00 % | ε_{⊥} [1 kHz, 20°C]: | 7,9 |
| CLY-3-O2 | 8,00 % | K₁ [pN, 20 °C]: | 12,5 |
| CPY-2-O2 | 10,00 % | K₃ [pN, 20 °C]: | 14,0 |
| CPY-3-O2 | 10,00 % | γ₁ [mPa·s, 20 °C]: | 83 |
| B-2O-O5 | 4,00 % | V₀ [20 °C, V]: | 1,96 |
| PGIY-2-O4 | 5,00 % | | |
| CC-3-V | 36,00 % | | |

enthält zusätzlich 0,02 % ST-3a-1 und 0,05 % ST-3b-1.

### Beispiel M249

Die flüssigkristalline Mischung

| | | | |
|---|---|---|---|
| B-O2-O5 | 5,00 % | Klärpunkt [°C]: | 74,5 |
| BCH-52 | 8,00 % | Δn [589 nm, 20 °C]: | 0,1033 |
| CC-3-V | 22,50 % | Aε [1 kHz, 20 °C]: | -3,0 |
| CCH-13 | 9,40 % | ε_{⊥} [1 kHz, 20°C]: | 6,5 |
| CCH-34 | 5,50 % | K₁ [pN, 20 °C]: | 13,4 |
| CCY-3-O1 | 8,20 % | K₃ [pN, 20 °C]: | 13,5 |
| CCY-3-O2 | 8,80 % | γ₁ [mPa·s, 20 °C]: | 96 |
| CCY-4-O2 | 11,60 % | V₀ [20 °C, V]: | 2,26 |
| PP-1-2V1 | 2,00 % | | |
| PY-3-O2 | 15,00 % | | |
| PY-4-O2 | 1,00 % | | |
| PYP-2-3 | 3,00 | | |

enthält zusätzlich 0,02 % ST-3a-1.

### Beispiel M249a

Zur Herstellung einer PS (polymer stabilized)-Mischung, z.B. für PS-IPS-, PS-VA-, PS-FFS-Anwendungen, werden 99,7 % der Mischung gemäß Beispiel M249 mit 0,001 % Irganox 1076 und 0,3 % der polymerisierbaren Verbindung der Formel 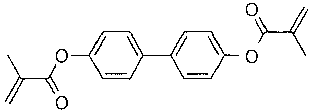 versetzt.

### Beispiel M250

Die flüssigkristalline Mischung

| | | | |
|---|---|---|---|
| CY-3-O2 | 17,00 % | Klärpunkt [°C]: | 74,4 |
| CCY-3-O2 | 6,00 % | Δn [589 nm, 20 °C]: | 0,1116 |
| CLY-3-O2 | 7,00 % | Δε [1 kHz, 20 °C]: | -3,7 |
| CPY-2-O2 | 3,00 % | ε_{⊥} [1 kHz, 20°C]: | 7,4 |
| CPY-3-O2 | 10,00 % | K₁ [pN, 20 °C]: | 13,5 |
| PYP-2-3 | 6,50 % | K₃ [pN, 20 °C]: | 15,2 |
| PGIY-2-O4 | 7,00 % | γ₁ [mPa·s, 20 °C]: | 97 |
| B2O-O5 | 4,00 % | V₀ [20 °C, V]: | 2,14 |
| CC-3-V | 33,00 % | | |
| CC-3-V1 | 6,50 % | | |

enthält zusätzlich 0,02 % ST-3a-1.

### Beispiel M251

Die flüssigkristalline Mischung

| | | | |
|---|---|---|---|
| B-2O-O5 | 4,00 % | Klärpunkt [°C]: | 75,2 |
| BCH-32 | 7,00 % | Δn [589 nm, 20 °C]: | 0,1040 |
| CC-3-V | 35,00 % | Aε [1 kHz, 20 °C]: | -3,3 |
| CCY-3-O2 | 8,00 % | ε_{⊥} [1 kHz, 20°C]: | 7,0 |
| CCY-4-O2 | 8,00 % | K₁ [pN, 20 °C]: | 13,0 |
| CLY-3-O2 | 6,00 % | K₃ [pN, 20 °C]: | 13,7 |
| CLY-3-O3 | 6,00 % | γ₁ [mPa·s, 20 °C]: | 76 |
| CY-3-O2 | 5,50 % | V₀ [20 °C, V]: | 2,14 |
| CY-5-O2 | 3,00 % | | |
| PY-3-O2 | 13,00 % | | |
| PYP-2-3 | 4,50 % | | |

enthält zusätzlich 0,02 % ST-3a-1.

### Beispiel M252

Die flüssigkristalline Mischung

| | | | |
|---|---|---|---|
| CC-3-V | 42,00 % | Klärpunkt [°C]: | 74,0 |
| CCY-3-O2 | 11,00 % | Δn [589 nm, 20 °C]: | 0,1008 |
| CPY-2-O2 | 10,00 % | Δε [1 kHz, 20 °C]: | -3,7 |
| CPY-3-O2 | 11,00 % | ε_{⊥} [1 kHz, 20°C]: | 7,3 |
| CY-3-O2 | 17,00 % | K₁ [pN, 20 °C]: | 12,8 |
| PGIY-2-O4 | 5,00 % | K₃ [pN, 20 °C]: | 14,6 |
| B(S)-2O-O5 | 4,00 % | γ₁ [mPa·s, 20 °C]: | 86 |
| | | V₀ [20 °C, V]: | 2,11 |

enthält zusätzlich 0,025 % ST-3a-1.

### Beispiel M253

Die flüssigkristalline Mischung

| | | | |
|---|---|---|---|
| B-2O-O5 | 4,00 % | Klärpunkt [°C]: | 89,6 |
| BCH-32 | 3,50 % | Δn [589 nm, 20 °C]: | 0,1096 |
| CC-3-V | 25,00 % | Δε [1 kHz, 20 °C]: | -4,2 |
| CCP-3-1 | 11,00 % | ε_{⊥} [1 kHz, 20°C]: | 7,8 |
| CCY-3-O1 | 3,00 % | K₁ [pN, 20 °C]: | 16,3 |
| CCY-3-O2 | 8,00 % | K₃ [pN, 20 °C]: | 17,6 |
| CCY-4-O2 | 8,00 % | γ₁ [mPa·s, 20 °C]: | 139 |
| CLY-3-O2 | 6,50 % | V₀ [20 °C, V]: | 2,17 |
| CLY-3-O3 | 6,50 % | | |
| CY-3-O2 | 8,50 % | | |
| PGIY-2-O4 | 3,00 % | | |
| PY-3-O2 | 13,00 % | | |

enthält zusätzlich 0,025 % ST-9-1.

### Beispiel M254

Die flüssigkristalline Mischung

| | | | |
|---|---|---|---|
| CC-3-V | 37,00 % | Klärpunkt [°C]: | 80,0 |
| CY-3-O2 | 15,00 % | Δn [589 nm, 20 °C]: | 0,1079 |
| CCY-3-O1 | 5,00 % | Δε [1 kHz, 20 °C]: | -3,7 |
| CCY-3-O2 | 11,00 % | ε_{∥} [1 kHz, 20 °C]: | 3,7 |
| CPY-2-O2 | 9,50 % | ε_{⊥} [1 kHz, 20°C]: | 7,4 |
| CPY-3-O2 | 10,50 % | K₁ [pN, 20°C]: | 13,5 |
| PYP-2-3 | 4,00 % | K₃ [pN, 20 °C]: | 15,3 |
| PGIY-2-O4 | 4,00 % | γ₁ [mPa·s, 20 °C]: | 104 |
| B(S)-1-O5 | 4,00 % | V₀ [20 °C, V]: | 2,14 |
| | | LTS [bulk, -20 °C]: | > 1000 h |

enthält zusätzlich 0,02 % ST-3a-1.

### Beispiel M255

Die flüssigkristalline Mischung

| | | | |
|---|---|---|---|
| CC-3-V | 37,00 % | Klärpunkt [°C]: | 80,0 |
| CY-3-O2 | 14,50 % | Δn [589 nm, 20 °C]: | 0,1077 |
| CCY-3-O1 | 5,00 % | Δε [1 kHz, 20 °C]: | -3,7 |
| CCY-3-O2 | 11,00 % | e_{∥} [1 kHz, 20 °C]: | 3,7 |
| CPY-2-O2 | 10,00 % | ε_{⊥} [1 kHz, 20°C]: | 7,4 |
| CPY-3-O2 | 10,50 % | K₁ [pN, 20 °C]: | 13,4 |
| PYP-2-3 | 4,00 % | K₃ [pN, 20 °C]: | 15,2 |
| PGIY-2-O4 | 4,00 % | γ₁ [mPa·s, 20 °C]: | 104 |
| B(S)-2-O5 | 4,00 % | V₀ [20 °C, V]: | 2,14 |
| | | LTS [bulk, -20 °C]: | > 1000 h |

enthält zusätzlich 0,02 % ST-3a-1 und 0,01 % ST-8-1.

### Beispiel M256

Die flüssigkristalline Mischung

| | | | |
|---|---|---|---|
| CC-3-V | 40,00 % | Klärpunkt [°C]: | 80,5 |
| CY-3-O2 | 10,50 % | Δn [589 nm, 20 °C]: | 0,1076 |
| CCY-3-O1 | 5,00 % | Δε [1 kHz, 20 °C]: | -3,6 |
| CCY-3-O2 | 11,00 % | ε_{∥} [1 kHz, 20 °C]: | 3,6 |
| CPY-2-O2 | 7,50 % | ε_{⊥} [1 kHz, 20°C]: | 7,2 |
| CPY-3-O2 | 11,00 % | K₁ [pN, 20 °C]: | 14,2 |
| PYP-2-3 | 3,00 % | K₃ [pN, 20 °C]: | 15,5 |
| PGIY-2-O4 | 4,00 % | γ₁ [mPa·s, 20 °C]: | 99 |
| B(S)-5-O3 | 4,00 % | V₀ [20 °C, V]: | 2,20 |
| B(S)-5-O4 | 4,00 % | LTS [bulk, -20 °C]: | > 1000 h |

enthält zusätzlich 0,02 % ST-3a-1.

### Beispiel M257

Die flüssigkristalline Mischung

| | | | |
|---|---|---|---|
| CC-3-V | 38,00 % | Klärpunkt [°C]: | 79,0 |
| CY-3-O2 | 7,50 % | Δn [589 nm, 20 °C]: | 0,1075 |
| CCY-3-O1 | 5,00 % | Δε [1 kHz, 20 °C]: | -3,5 |
| CCY-3-O2 | 11,00 % | ε_{∥} [1 kHz, 20 °C]: | 3,7 |
| CCY-4-O2 | 3,00 % | ε_{⊥} [1 kHz, 20°C]: | 7,2 |
| CPY-2-O2 | 9,00 % | K₁ [pN, 20 °C]: | 13,4 |
| CPY-3-O2 | 11,00 % | K₃ [pN, 20 °C]: | 14,7 |
| PGIY-2-O4 | 4,50 % | γ₁ [mPa·s, 20 °C]: | 103 |
| B(S)-2-3 | 11,00 % | V₀ [20 °C, V]: | 2,17 |
| | | LTS [bulk, -20 °C]: | > 1000 h |

enthält zusätzlich 0,02 % ST-3a-1.

### Beispiel M258

Die flüssigkristalline Mischung

| | | | |
|---|---|---|---|
| B-2O-O5 | 4,00 % | Klärpunkt [°C]: | 74,3 |
| BCH-32 | 11,00 % | Δn [589 nm, 20 °C]: | 0,1108 |
| CC-3-V1 | 7,00 % | Δε [1 kHz, 20 °C]: | -3,5 |
| CCH-301 | 8,00 % | ε_{∥} [1 kHz, 20 °C]: | |
| CCH-34 | 10,00 % | ε_{⊥} [1 kHz, 20°C]: | 7,2 |
| CCH-35 | 4,50 % | K₁ [pN, 20 °C]: | 13,7 |
| CCY-4-O2 | 10,50 % | K₃ [pN, 20 °C]: | 13,4 |
| CLY-2-O4 | 1,00 % | γ₁ [mPa·s, 20 °C]: | 121 |
| CPY-2-O2 | 11,00 % | | |
| CPY-3-O2 | 6,00 % | | |
| CY-3-O2 | 9,50 % | | |
| PCH-301 | 6,00 % | | |
| PY-3-O2 | 3,00 % | | |
| PY-4-O2 | 8,50 % | | |

enthält zusätzlich 0,02 % ST-3a-1 und 0,01 % ST-8-1.

### Beispiel M259

Die flüssigkristalline Mischung

| | | | |
|---|---|---|---|
| B-2O-O5 | 4,00 % | Klärpunkt [°C]: | 74,6 |
| BCH-32 | 8,00 % | Δn [589 nm, 20 °C]: | 0,1090 |
| CC-3-V1 | 7,00 % | Δε [1 kHz, 20 °C]: | -3,1 |
| CCH-34 | 8,00 % | ε_{⊥} [1 kHz, 20°C]: | 6,7 |
| CCH-35 | 7,00 % | K₁ [pN, 20 °C]: | 14,2 |
| CCP-3-1 | 8,00 % | K₃ [pN, 20 °C]: | 16,5 |
| CCP-V2-1 | 5,00 % | γ₁ [mPa·s, 20 °C]: | 112 |
| CCY-3-O2 | 8,50 % | V₀ [20 °C, V]: | 2,42 |
| CCY-4-O2 | 1,50 % | | |
| CLY-3-O2 | 5,00 % | | |
| CY-3-O2 | 11,00 % | | |
| PCH-301 | 10,00 % | | |
| PY-3-O2 | 17,00 % | | |

enthält zusätzlich 0,01 % ST-3a-1.

### Beispiel M259a

Zur Herstellung einer PS (polymer stabilized)-Mischung, z.B. für PS-IPS-, PS-VA-, PS-FFS-Anwendungen, werden 99,65 % der Mischung gemäß Beispiel M259 mit 0,35 % der polymerisierbaren Verbindung der Formel 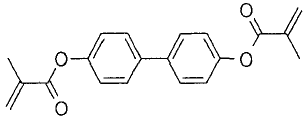 versetzt.

### Beispiel M260

Die flüssigkristalline Mischung

| | | | |
|---|---|---|---|
| CLY-3-O2 | 8,00 % | Klärpunkt [°C]: | 81,5 |
| CLY-5-O2 | 6,00 % | Δn [589 nm, 20 °C]: | 0,1017 |
| CPY-3-O2 | 10,00 % | Δε [1 kHz, 20 °C]: | -4,1 |
| B(S)-2O-O4 | 6,00 % | ε_{⊥} [1 kHz, 20°C]: | 7,7 |
| B(S)-2O-O5 | 6,00 % | K₁ [pN, 20 °C]: | 15,5 |
| CC-3-V | 36,00 % | K₃ [pN, 20 °C]: | 17,0 |
| CC-3-V1 | 9,00 % | γ₁ [mPa·s, 20 °C]: | 98 |
| CY-3-O2 | 13,00 % | V₀ [20 °C, V]: | 2,15 |
| PGIY-2-O4 | 1,00 % | | |
| CCY-3-O2 | 5,00 % | | |

enthält zusätzlich 0,03 % ST-3a-1.

### Beispiel M261

Die flüssigkristalline Mischung

| | | | |
|---|---|---|---|
| CC-3-V | 30,00 % | Klärpunkt [°C]: | 87,0 |
| CC-3-V1 | 10,00 % | Δn [589 nm, 20 °C]: | 0,1019 |
| CCH-34 | 2,50 % | Δε [1 kHz, 20 °C]: | -3,7 |
| CCP-V-1 | 1,50 % | ε_{⊥} [1 kHz, 20°C]: | 7,1 |
| PGIY-2-O4 | 4,00 % | K₁ [pN, 20 °C]: | 15,2 |
| CCY-3-O2 | 10,00 % | K₃ [pN, 20 °C]: | 18,0 |
| CCY-5-O2 | 2,00 % | γ₁ [mPa·s, 20 °C]: | 112 |
| CLY-3-O2 | 8,00 % | V₀ [20 °C, V]: | 2,35 |
| CPY-2-O2 | 6,00 % | | |
| CPY-3-O2 | 10,00 % | | |
| CY-3-O2 | 12,00 % | | |
| B-2O-O5 | 4,00 % | | |

enthält zusätzlich 0,15 % ST-12.

### Beispiel M262

Die flüssigkristalline Mischung

| | | | |
|---|---|---|---|
| CCY-3-O2 | 6,00 % | Klärpunkt [°C]: | 84,0 |
| CCY-5-O2 | 6,00 % | Δn [589 nm, 20 °C]: | 0,1018 |
| CLY-3-O2 | 8,00 % | Δε [1 kHz, 20 °C]: | -3,6 |
| CLY-3-O3 | 8,00 % | ε_{⊥} [1 kHz, 20°C]: | 7,0 |
| CPY-3-O2 | 10,00 % | K₁ [pN, 20 °C]: | 15,1 |
| PGIY-2-O4 | 2,00 % | K₃ [pN, 20 °C]: | 18,2 |
| B-2O-O5 | 4,00 % | γ₁ [mPa·s, 20 °C]: | 107 |
| CC-3-V | 29,50 % | V₀ [20 °C, V]: | 2,38 |
| CC-3-V1 | 10,00 % | | |
| CY-3-O2 | 12,00 % | | |
| PP-1-3 | 4,50 % | | |

enthält zusätzlich 0,03 % ST-3a-1.

### Beispiel M263

Die flüssigkristalline Mischung

| | | | |
|---|---|---|---|
| CY-3-O2 | 4,00 % | Klärpunkt [°C]: | 80,4 |
| CCY-3-O1 | 3,50 % | Δn [589 nm, 20 °C]: | 0,1007 |
| CCY-3-O2 | 6,00 % | Δε [1 kHz, 20 °C]: | -4,0 |
| CCY-4-O2 | 6,00 % | ε_{⊥} [1 kHz, 20°C]: | 7,8 |
| CPY-3-O2 | 10,00 % | K₁ [pN, 20 °C]: | 14,9 |
| PYP-2-3 | 1,00 % | K₃ [pN, 20 °C]: | 15,7 |
| CLY-3-O2 | 6,00 % | γ₁ [mPa·s, 20 °C]: | 101 |
| CLY-3-O3 | 6,00 % | V₀ [20 °C, V]: | 2,07 |
| Y-4O-O4 | 6,00 % | | |
| PGIY-2-O4 | 5,50 % | | |
| B-2O-O5 | 5,00 % | | |
| CC-3-V | 33,00 % | | |
| CC-3-V1 | 8,00 % | | |

enthält zusätzlich 0,015 % ST-9-1.

### Beispiel M264

Die flüssigkristalline Mischung

| | | | |
|---|---|---|---|
| CCY-3-O1 | 6,50 % | Klärpunkt [°C]: | 84,5 |
| CCY-3-O2 | 9,00 % | Δn [589 nm, 20 °C]: | 0,1106 |
| CCY-4-O2 | 4,00 % | Δε [1 kHz, 20 °C]: | -4,5 |
| CCY-5-O2 | 4,00 % | ε_{⊥} [1 kHz, 20°C]: | 8,3 |
| CLY-3-O2 | 8,00 % | K₁ [pN, 20 °C]: | 15,6 |
| CLY-3-O3 | 7,00 % | K₃ [pN, 20 °C]: | 16,2 |
| PGIY-2-O4 | 5,50 % | γ₁ [mPa·s, 20 °C]: | 127 |
| PGP-2-3 | 1,00 % | V₀ [20 °C, V]: | 2,01 |
| B-2O-O5 | 5,00 % | | |
| CC-3-V | 33,50 % | | |
| CC-3-V1 | 1,00 % | | |
| PY-2-O4 | 5,00 % | | |
| PY-3-O2 | 10,50 % | | |

enthält zusätzlich 0,02 % ST-3a-1.

### Beispiel M265

Die flüssigkristalline Mischung

| | | | |
|---|---|---|---|
| B-2O-O5 | 4,00 % | Klärpunkt [°C]: | 75 |
| BCH-32 | 3,00 % | Δn [589 nm, 20 °C]: | 0,1096 |
| CC-3-V1 | 9,00 % | Δε [1 kHz, 20 °C]: | -3,1 |
| CCH-301 | 2,00 % | ε_{⊥} [1 kHz, 20°C]: | 6,6 |
| CCH-34 | 8,00 % | K₁ [pN, 20 °C]: | 13,6 |
| CCH-35 | 8,00 % | K₃ [pN, 20 °C]: | 16,3 |
| CCP-V2-1 | 5,00 % | γ₁ [mPa·s, 20 °C]: | 109 |
| CCY-3-O2 | 1,50 % | V₀ [20 °C, V]: | 2,39 |
| CLY-3-O2 | 10,00 % | | |
| CPY-2-O2 | 8,00 % | | |
| CPY-3-O2 | 8,00 % | | |
| CY-3-O2 | 6,50 % | | |
| PCH-301 | 17,50 % | | |
| PY-3-O2 | 9,50 % | | |

enthält zusätzlich 0,02 % ST-3a-1 und 0,3 % der Verbindung der Formel

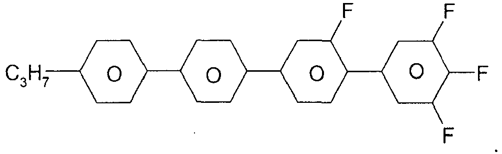

### Beispiel M265a

Zur Herstellung einer PS (polymer stabilized)-Mischung, z.B. für PS-IPS-, PS-VA-, PS-FFS-Anwendungen, werden 99,65 % der Mischung gemäß Beispiel M265 mit 0,35 % der polymerisierbaren Verbindung der Formel 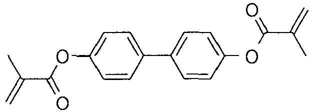 versetzt.

### Beispiel M266

Die flüssigkristalline Mischung

| | | | |
|---|---|---|---|
| B-2O-O5 | 4,00 % | Klärpunkt [°C]: | 74,4 |
| BCH-32 | 8,00 % | Δn [589 nm, 20 °C]: | 0,1087 |
| CC-3-V1 | 9,00 % | Δε [1 kHz, 20 °C]: | -3,1 |
| CCH-301 | 2,00 % | ε_{⊥} [1 kHz, 20°C]: | 6,6 |
| CCH-34 | 8,00 % | K₁ [pN, 20 °C]: | 14,3 |
| CCH-35 | 7,00 % | K₃ [pN, 20 °C]: | 16,5 |
| CCP-3-1 | 8,00 % | γ₁ [mPa·s, 20 °C]: | 107 |
| CCY-3-O2 | 4,00 % | V₀ [20 °C, V]: | 2,42 |
| CCY-4-O2 | 2,50 % | | |
| CLY-3-O2 | 10,00 % | | |
| CPY-3-O2 | 2,00 % | | |
| CY-3-O2 | 8,50 % | | |
| PCH-301 | 11,00 % | | |
| PY-3-O2 | 16,00 % | | |

enthält zusätzlich 0,02 % ST-3a-1.

### Beispiel M267

Die flüssigkristalline Mischung

| | | | |
|---|---|---|---|
| B-2O-O5 | 4,00 % | Klärpunkt [°C]: | 74,1 |
| BCH-32 | 3,00 % | Δn [589 nm, 20 °C]: | 0,1090 |
| CC-3-V1 | 9,00 % | Δε [1 kHz, 20 °C]: | -3,1 |
| CCH-301 | 2,00 % | ε_{⊥} [1 kHz, 20°C]: | 6,7 |
| CCH-34 | 8,00 % | K₁ [pN, 20 °C]: | 14,2 |
| CCH-35 | 8,00 % | K₃ [pN, 20 °C]: | 16,5 |
| CCP-3-1 | 5,00 % | γ₁ [mPa·s, 20 °C]: | 109 |
| CCY-3-O2 | 1,50 % | V₀ [20 °C, V]: | 2,43 |
| CPY-3-O2 | 10,00 % | | |
| CY-3-O2 | 8,00 % | | |
| PCH-301 | 8,00 % | | |
| PY-3-O2 | 6,50 % | | |

enthält zusätzlich 0,01 % ST-8-1.

### Beispiel M268

Die flüssigkristalline Mischung

| | | | |
|---|---|---|---|
| B-2O-O5 | 4,00 % | Klärpunkt [°C]: | 74,2 |
| BCH-32 | 8,00 % | Δn [589 nm, 20 °C]: | 0,1088 |
| CC-3-V1 | 9,00 % | Δε [1 kHz, 20 °C]: | -3,1 |
| CCH-301 | 2,00 % | ε_{⊥} [1 kHz, 20°C]: | 6,7 |
| CCH-34 | 9,00 % | K₁ [pN, 20 °C]: | 14,1 |
| CCH-35 | 7,00 % | K₃ [pN, 20 °C]: | 16,5 |
| CCP-3-1 | 8,50 % | γ₁ [mPa·s, 20 °C]: | 109 |
| CCY-3-O2 | 11,49 % | V₀ [20 °C, V]: | 2,43 |
| CLY-3-O2 | 0,01 % | | |
| CPY-3-O2 | 6,50 % | | |
| CY-3-O2 | 10,00 % | | |
| PCH-301 | 9,00 % | | |
| PY-3-O2 | 15,50 % | | |

enthält zusätzlich 0,01 % ST-3a-1.

### Beispiel M269

Die flüssigkristalline Mischung

| | | | |
|---|---|---|---|
| B-2O-O5 | 4,00 % | Klärpunkt [°C]: | 74,2 |
| BCH-32 | 8,00 % | Δn [589 nm, 20 °C]: | 0,1085 |
| CC-3-V1 | 9,00 % | Δε [1 kHz, 20 °C]: | -3,1 |
| CCH-301 | 2,00 % | ε_{⊥} [1 kHz, 20°C]: | 6,7 |
| CCH-34 | 9,00 % | K₁ [pN, 20 °C]: | 14,2 |
| CCH-35 | 7,00 % | K₃ [pN, 20 °C]: | 16,5 |
| CCP-3-1 | 8,50 % | γ₁ [mPa·s, 20 °C]: | 109 |
| CCY-3-O2 | 11,45 % | V₀ [20 °C, V]: | 2,42 |
| CLY-3-O2 | 0,05 % | | |
| CPY-3-O2 | 6,50 % | | |
| CY-3-O2 | 10,00 % | | |
| PCH-301 | 9,00 % | | |
| PY-3-O2 | 15,50 % | | |

enthält zusätzlich 0,03 % ST-3a-1.

### Beispiel M270

Die flüssigkristalline Mischung

| | | | |
|---|---|---|---|
| B-2O-O5 | 4,00 % | Klärpunkt [°C]: | 74,2 |
| BCH-32 | 8,00 % | Δₙ [589 nm, 20 °C]: | 0,1088 |
| CC-3-V1 | 9,00 % | Δ_{ε} [1 kHz, 20 °C]: | -3,1 |
| CCH-301 | 2,00 % | ε_{⊥} [1 kHz, 20°C]: | 6,7 |
| CCH-34 | 9,00 % | K₁ [pN, 20 °C]: | 14,2 |
| CCH-35 | 7,00 % | K₃ [pN, 20 °C]: | 16,5 |
| CCP-3-1 | 8,50 % | γ₁ [mPa·s, 20 °C]: | 109 |
| CCY-3-O2 | 11,40 % | V₀ [20 °C, V]: | 2,43 |
| CLY-3-O2 | 0,10 % | | |
| CPY-3-O2 | 6,50 % | | |
| CY-3-O2 | 10,00 % | | |
| PCH-301 | 9,00 % | | |
| PY-3-O2 | 15,50 % | | |

enthält zusätzlich 0,01 % ST-17.

### Beispiel M271

Die flüssigkristalline Mischung

| | | | |
|---|---|---|---|
| B-2O-O5 | 4,00 % | Klärpunkt [°C]: | 74,2 |
| BCH-32 | 8,00 % | Δₙ [589 nm, 20 °C]: | 0,1091 |
| CC-3-V1 | 9,00 % | Δ_{ε} [1 kHz, 20 °C]: | -3,1 |
| CCH-301 | 2,00 % | ε_{⊥} [1 kHz, 20°C]: | 6,7 |
| CCH-34 | 8,00 % | K₁ [pN, 20 °C]: | 14,5 |
| CCH-35 | 7,00 % | K₃ [pN, 20 °C]: | 16,5 |
| CCP-3-1 | 8,00 % | γ₁ [mPa·s, 20 °C]: | 108 |
| CCP-V2-1 | 5,00 % | V₀ [20°C, V]: | 2,41 |
| CCY-3-O2 | 10,50 % | | |
| CLY-3-O2 | 1,00 % | | |
| CPY-3-O2 | 2,50 % | | |
| CY-3-O2 | 11,50 % | | |
| PCH-301 | 5,50 % | | |
| PY-3-O2 | 18,00 % | | |

enthält zusätzlich 0,02 % ST-3a-1 und 0,3 % der Verbindung der Formel

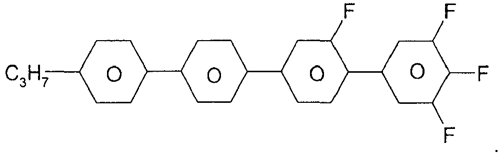

### Beispiel M271a

Zur Herstellung einer PS (polymer stabilized)-Mischung, z.B. für PS-IPS-, PS-VA-, PS-FFS-Anwendungen, werden 99,65 % der Mischung gemäß Beispiel M271 mit 0,35 % der polymerisierbaren Verbindung der Formel 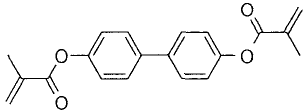 versetzt.

### Beispiel M272

Die flüssigkristalline Mischung

| | | | |
|---|---|---|---|
| B-2O-O5 | 2,00 % | Klärpunkt [°C]: | 100,0 |
| BCH-32 | 2,00 % | Δₙ [589 nm, 20 °C]: | 0,1166 |
| CC-3-V | 29,00 % | Δ_{ε} [1 kHz, 20 °C]: | -3,4 |
| CCP-3-1 | 7,50 % | ε_{⊥} [1 kHz, 20°C]: | 6,9 |
| CCY-3-O1 | 4,00% | K₁ [pN,20°C]; | 15,9 |
| CCY-3-O2 | 6,50 % | K₃ [pN, 20 °C]: | 17,4 |
| CCY-4-O2 | 6,00 % | γ₁ [mPa·s, 20 °C]: | 116 |
| CLY-3-O2 | 4,00 % | V₀ [20 °C, V]: | 2,41 |
| CPY-2-O2 | 7,50 % | | |
| CPY-3-O2 | 10,00 % | | |
| CY-3-O2 | 10,00 % | | |
| PGIY-2-O4 | 4,00 % | | |
| PYP-2-3 | 7,50 % | | |

enthält zusätzlich 0,02 % ST-3a-1.

### Beispiel M273

Die flüssigkristalline Mischung

| | | | |
|---|---|---|---|
| B-2O-O5 | 2,00 % | Klärpunkt [°C]: | 100,4 |
| BCH-32 | 4,00 % | Δn [589 nm, 20 °C]: | 0,1146 |
| CC-3-V | 22,00 % | Δε [1 kHz, 20 °C]: | -4,1 |
| CC-3V-1 | 4,00 % | ε_{⊥} [1 kHz, 20°C]: | 7,7 |
| CCP-V-1 | 4,00 % | K₁ [pN, 20 °C]: | 16,4 |
| CCY-3-O1 | 5,00 % | K₃ [pN, 20 °C]: | 18,4 |
| CCY-3-O2 | 9,00 % | γ₁ [mPa·s, 20 °C]: | 170 |
| CCY-4-O2 | 5,00 % | V₀ [20 °C, V]: | 2,23 |
| CCY-5-O2 | 4,50 % | | |
| CLY-2-O4 | 5,00 % | | |
| CPY-2-O2 | 8,00 % | | |
| CPY-3-O2 | 8,00 % | | |
| CY-3-O2 | 13,00 % | | |
| PGIY-2-O4 | 2,00 % | | |
| PYP-2-3 | 3,00 % | | |
| PYP-2-4 | 1,50 % | | |

enthält zusätzlich 0,03 % ST-3a-1.

### Beispiel M274

Die flüssigkristalline Mischung

| | | | |
|---|---|---|---|
| CLY-3-O2 | 7,00 % | Klärpunkt [°C]: | 71,1 |
| CLY-3-O3 | 5,00 % | Δn [589 nm, 20 °C]: | 0,1079 |
| CPY-3-O2 | 11,00 % | Δε [1 kHz, 20 °C]: | -2,6 |
| PGIY-2-O4 | 7,00 % | ε_{⊥} [1 kHz, 20°C]: | 6,1 |
| PYP-2-3 | 9,50 % | K₁ [pN, 20 °C]: | 13,1 |
| B-2O-O5 | 4,00 % | K₃ [pN, 20 °C]: | 13,7 |
| CC-3-V | 41,50 % | γ₁ [mPa·s, 20 °C]: | 70 |
| CC-3-V1 | 9,00 % | V₀ [20 °C, V]: | 2,41 |
| Y-4O-O4 | 6,00 % | | |

enthält zusätzlich 0,03 % ST-3a-1.

### Beispiel M274a

Zur Herstellung einer PS (polymer stabilized)-Mischung, z.B. für PS-IPS-, PS-VA-, PS-FFS-Anwendungen, werden 99,55 % der Mischung gemäß Beispiel M274 mit 0,25 % der polymerisierbaren Verbindung der Formel 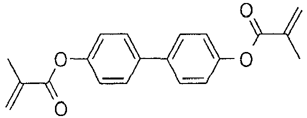 und mit 0,20 % der Verbindung der Formel 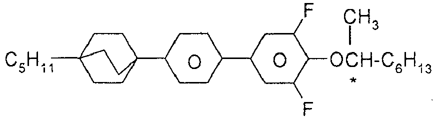 versetzt.

### Beispiel M275

Die flüssigkristalline Mischung

| | | | |
|---|---|---|---|
| CY-3-O2 | 8,00 % | Klärpunkt [°C]: | 89,5 |
| CY-3-O4 | 10,00 % | Δn [589 nm, 20 °C]: | 0,1050 |
| CCY-3-O1 | 4,00 % | Δε [1 kHz, 20 °C]: | -4,3 |
| CCY-3-O2 | 5,00 % | ε_{⊥} [1 kHz, 20°C]: | 8,0 |
| CCY-4-O2 | 4,00 % | K₁ [pN, 20 °C]: | 15,7 |
| CLY-3-O2 | 8,00 % | K₃ [pN, 20 °C]: | 17,0 |
| CLY-3-O3 | 8,00 % | γ₁ [mPa·s, 20 °C]: | 141 |
| CPY-3-O2 | 2,00 % | V₀ [20 °C, V]: | 2,11 |
| PYP-2-3 | 2,00 % | | |
| B-2O-O5 | 5,00 % | | |
| PGIY-2-O4 | 6,00 % | | |
| CC-3-V | 27,00 % | | |
| CCP-3-1 | 11,00 % | | |

enthält zusätzlich 0,03 % ST-3a-1.

### Beispiel M276

Die flüssigkristalline Mischung

| | | | |
|---|---|---|---|
| CCY-3-O2 | 6,00 % | Klärpunkt [°C]: | 75,0 |
| CLY-3-O2 | 8,00 % | Δn [589 nm, 20 °C]: | 0,1019 |
| CLY-3-O3 | 3,50 % | Δε [1 kHz, 20 °C]: | -3,6 |
| CPY-2-O2 | 10,00 % | ε_{⊥} [1 kHz, 20°C]: | 7,1 |
| CPY-3-O2 | 10,00 % | K₁ [pN, 20 °C]: | 14,1 |
| B-2O-O5 | 5,00 % | K₃ [pN, 20 °C]: | 15,2 |
| CC-3-V | 33,50 % | γ₁ [mPa·s, 20 °C]: | 97 |
| CC-3-V1 | 5,50 % | V₀ [20 °C, V]: | 2,17 |
| CY-3-O4 | 10,00 % | | |
| CY-5-O4 | 4,50 % | | |
| PP-1-3 | 4,00 % | | |

enthält zusätzlich 0,03 % ST-9-1.

### Beispiel M277

Die flüssigkristalline Mischung

| | | | |
|---|---|---|---|
| CC-3-V | 28,00 % | Klärpunkt [°C]: | 84,8 |
| CC-3-V1 | 6,50 % | Δn [589 nm, 20 °C]: | 0,1111 |
| CCY-3-O1 | 5,50 % | Δε [1 kHz, 20 °C]: | -4,0 |
| CCY-3-O2 | 7,00 % | ε_{⊥} [1 kHz, 20°C]: | 7,7 |
| CCY-4-O2 | 7,00 % | K₁ [pN, 20 °C]: | 14,4 |
| CPY-2-O2 | 8,00 % | K₃ [pN, 20 °C]: | 16,5 |
| CPY-3-O2 | 11,00 % | γ₁ [mPa·s, 20 °C]: | 124 |
| PYP-2-3 | 8,50 % | V₀ [20 °C, V]: | 2,15 |
| CY-3-O2 | 14,50 % | | |
| B-2O-O5 | 4,00 % | | |

enthält zusätzlich 0,015 % ST-9-1.

### Beispiel M278

Die flüssigkristalline Mischung

| | | | |
|---|---|---|---|
| CY-3-O2 | 8,00 % | Klärpunkt [°C]: | 89,6 |
| CY-3-O4 | 10,00 % | Δn [589 nm, 20 °C]: | 0,1030 |
| CCY-3-O2 | 3,00 % | Δε [1 kHz, 20 °C]: | -3,4 |
| CCY-4-O2 | 1,50 % | ε_{⊥} [1 kHz, 20°C]: | 7,0 |
| CLY-3-O2 | 8,00 % | K₁ [pN, 20 °C]: | 14,8 |
| CLY-3-O3 | 8,00 % | K₃ [pN, 20 °C]: | 16,7 |
| CPY-3-O2 | 4,00 % | γ₁ [mPa·s, 20 °C]: | 97 |
| B-2O-O5 | 5,00 % | V₀ [20 °C, V]: | 2,32 |
| PGIY-2-O4 | 6,00 % | | |
| CC-3-V | 22,00 % | | |
| CC-3-V1 | 6,00 % | | |
| CCP-V-1 | 14,00 % | | |
| CCP-V2-1 | 4,50 % | | |

enthält zusätzlich 0,01 % ST-8-1.

### Beispiel M279

Die flüssigkristalline Mischung

| | | | |
|---|---|---|---|
| CCY-3-O2 | 6,00 % | Klärpunkt [°C]: | 75,5 |
| CLY-3-O2 | 8,00 % | Δn [589 nm, 20 °C]: | 0,1014 |
| CLY-3-O3 | 4,00 % | Δε [1 kHz, 20 °C]: | -3,8 |
| CPY-2-O2 | 10,00 % | ε_{⊥} [1 kHz, 20°C]: | 7,4 |
| CPY-3-O2 | 10,00 % | K₁ [pN, 20 °C]: | 13,7 |
| PGIY-2-O4 | 1,00 % | K₃ [pN, 20 °C]: | 14,7 |
| B-2O-O5 | 5,00 % | γ₁ [mPa·s, 20 °C]: | 99 |
| CC-3-V | 38,50 % | V₀ [20 °C, V]: | 2,09 |
| CY-3-O4 | 10,00 % | | |
| CY-5-O4 | 5,00 % | | |
| PP-1-3 | 2,50 % | | |

enthält zusätzlich 0,03 % ST-3a-1.

### Beispiel M280

Die flüssigkristalline Mischung

| | | | |
|---|---|---|---|
| CCY-3-O2 | 8,00 % | Klärpunkt [°C]: | 84,5 |
| CLY-2-O4 | 3,50 % | Δn [589 nm, 20 °C]: | 0,1020 |
| CLY-3-O2 | 8,00 % | Δε [1 kHz, 20 °C]: | -3,8 |
| CLY-3-O3 | 5,00 % | ε_{⊥} [1 kHz, 20°C]: | 7,4 |
| CPY-3-O2 | 10,00 % | K₁ [pN, 20 °C]: | 15,7 |
| PGIY-2-O4 | 5,00 % | K₃ [pN, 20 °C]: | 17,2 |
| B-2O-O5 | 5,00 % | γ₁ [mPa·s, 20 °C]: | 109 |
| CC-3-V | 27,00 % | V₀ [20 °C, V]: | 2,24 |
| CC-3-V1 | 10,00 % | | |
| CCH-34 | 5,00 % | | |
| CY-3-O2 | 12,50 % | | |
| PP-1-3 | 1,00 % | | |

enthält zusätzlich 0,03 % ST-3a-1.

### Beispiel M281

Die flüssigkristalline Mischung

| | | | |
|---|---|---|---|
| CCY-3-O2 | 6,00 % | Klärpunkt [°C]: | 75,0 |
| CLY-3-O2 | 8,00 % | Δn [589 nm, 20 °C]: | 0,1019 |
| CLY-3-O3 | 3,50 % | Δε [1 kHz, 20 °C]: | -3,6 |
| CPY-2-O2 | 10,00 % | ε_{⊥} [1 kHz, 20°C]: | 7,1 |
| CPY-3-O2 | 10,00 % | K₁ [pN, 20 °C]: | 14,1 |
| B-2O-O5 | 5,00 % | K₃ [pN, 20 °C]: | 15,2 |
| CC-3-V | 33,50 % | γ₁ [mPa·s, 20 °C]: | 97 |
| CC-3-V1 | 5,50 % | V₀ [20 °C, V]: | 2,17 |
| CY-3-O4 | 10,00 % | | |
| CY-5-O4 | 4,50 % | | |
| PP-1-3 | 4,00 % | | |

enthält zusätzlich 0,03 % ST-3a-1.

### Beispiel M282

Die flüssigkristalline Mischung

| | | | |
|---|---|---|---|
| CY-3-O2 | 8,00 % | Klärpunkt [°C]: | 70,6 |
| CY-5-O2 | 6,00 % | Δn [589 nm, 20 °C]: | 0,1079 |
| PY-3-O2 | 12,00 % | Δε [1 kHz, 20 °C]: | -4,1 |
| CLY-3-O2 | 10,00 % | ε_{⊥} [1 kHz, 20°C]: | 8,0 |
| CPY-2-O2 | 10,00 % | K₁ [pN, 20 °C]: | 12,6 |
| CPY-3-O2 | 10,00 % | K₃ [pN, 20 °C]: | 14,1 |
| B-2O-O5 | 5,00 % | γ₁ [mPa·s, 20 °C]: | 80 |
| CCY-3-1 | 4,00 % | V₀ [20 °C, V]: | 1,94 |
| CC-3-V | 28,00 % | | |
| CC-3-V1 | 4,00 % | | |
| CCP-3-1 | 3,00 % | | |

enthält zusätzlich 0,02 % ST-9-1.

### Beispiel M283

Die flüssigkristalline Mischung

| | | | |
|---|---|---|---|
| CY-3-O2 | 10,00 % | Klärpunkt [°C]: | 70,3 |
| CY-5-O2 | 8,00 % | Δn [589 nm, 20 °C]: | 0,1105 |
| PY-3-O2 | 10,00 % | Δε [1 kHz, 20 °C]: | -4,4 |
| CLY-3-O2 | 10,00 % | ε_{⊥} [1 kHz, 20°C]: | 8,3 |
| CPY-2-O2 | 10,00 % | K₁ [pN, 20 °C]: | 13,4 |
| CPY-3-O2 | 10,00 % | K₃ [pN, 20 °C]: | 14,9 |
| B-2O-O5 | 5,00 % | γ₁ [mPa·s, 20 °C]: | 106 |
| CC-3-V | 26,00 % | V₀ [20 °C, V]: | 1,96 |
| CC-3-V1 | 5,00 % | | |
| CCP-3-1 | 4,00 % | | |
| BCH-32 | 2,00 % | | |

enthält zusätzlich 0,02 % ST-9-1.

### Beispiel M284

Die flüssigkristalline Mischung

| | | | |
|---|---|---|---|
| CY-3-O2 | 8,00 % | Klärpunkt [°C]: | 70,0 |
| CY-5-O2 | 8,00 % | Δn [589 nm, 20 °C]: | 0,1106 |
| PY-3-O2 | 12,00 % | Δε [1 kHz, 20 °C]: | -4,4 |
| CLY-3-O2 | 10,00 % | ε_{⊥} [1 kHz, 20°C]: | 8,3 |
| CPY-2-O2 | 10,00 % | K₁ [pN, 20 °C]: | 13,4 |
| CPY-3-O2 | 10,00 % | K₃ [pN, 20 °C]: | 15,0 |
| B-2O-O5 | 5,00 % | γ₁ [mPa·s, 20 °C]: | 106 |
| CC-3-V | 27,00 % | | |
| CC-3-V1 | 4,00 % | | |
| CCP-3-1 | 6,00 % | | |

enthält zusätzlich 0,03 % ST-3a-1 und 0,01 % ST-8-1.

### Beispiel M285

Die flüssigkristalline Mischung

| | | | |
|---|---|---|---|
| CCP-V-1 | 7,50 % | Klärpunkt [°C]: | 88,0 |
| CCY-3-O2 | 10,00 % | Δn [589 nm, 20 °C]: | 0,1020 |
| CCY-5-O2 | 3,50 % | Δε [1 kHz, 20 °C]: | -3,6 |
| CLY-3-O2 | 8,00 % | ε_{⊥} [1 kHz, 20°C]: | 7,2 |
| CPY-2-O2 | 3,50 % | K₁ [pN, 20 °C]: | 15,2 |
| CPY-3-O2 | 10,00 % | K₃ [pN, 20 °C]: | 18,1 |
| PGIY-2-O4 | 4,00 % | γ₁ [mPa·s, 20 °C]: | 112 |
| B-O2-O5 | 4,00 % | V₀ [20 °C, V]: | 2,36 |
| CC-3-V | 26,50 % | | |
| CC-3-V1 | 10,00 % | | |
| CCH-34 | 2,00 % | | |
| CY-3-O2 | 7,00 % | | |
| Y-4O-O4 | 4,00 % | | |

enthält zusätzlich 0,05 % ST-3b-1 und 0,15 % ST-12.

### Beispiel M286

| | |
|---|---|
| B(S)-2O-O4 | 4,00 % |
| B(S)-2O-O5 | 4,00 % |
| CC-3-V | 35,00 % |
| CCP-3-1 | 4,50 % |
| CCY-3-O2 | 7,00 % |
| CCY-4-O2 | 4,50 % |
| CLY-3-O2 | 6,00 % |
| CLY-3-O3 | 6,00 % |
| CPY-3-O2 | 10,00 % |
| CY-3-O2 | 13,00 % |
| PYP-2-4 | 6,00 % |

enthält zusätzlich 0,05 % ST-3b-1 und 0,15 % ST-12.

### Beispiel M287

Die flüssigkristalline Mischung

| | |
|---|---|
| B(S)-2O-O4 | 4,00 % |
| B(S)-2O-O5 | 4,00 % |
| BCH-32 | 5,50 % |
| CC-3-V | 35,00 % |
| CCP-3-1 | 6,00 % |
| CCY-3-O2 | 8,00 % |
| CLY-3-O2 | 6,00 % |
| CLY-3-O3 | 6,00 % |
| CPY-3-O2 | 10,00 % |
| CY-3-O2 | 13,00 % |
| PYP-2-4 | 2,50 % |

enthält zusätzlich 0,03 % ST-3a-1.

### Beispiel M288

Die flüssigkristalline Mischung

| | |
|---|---|
| B(S)-2O-O4 | 4,00 % |
| B(S)-2O-O5 | 4,00 % |
| CC-3-V | 36,50 % |
| CC-3-V1 | 4,00 % |
| CCP-3-1 | 3,00 % |
| CCY-3-O2 | 5,50 % |
| CLY-3-O2 | 6,00 % |
| CLY-3-O3 | 6,00 % |
| CPY-2-O2 | 8,00 % |
| CPY-3-O2 | 8,00 % |
| CY-3-O2 | 5,00 % |
| PGIY-2-O4 | 5,00 % |
| Y-4O-O4 | 5,00 % |

enthält zusätzlich 0,03 % ST-3a-1.

### Beispiel M289

Die flüssigkristalline Mischung

| | |
|---|---|
| B(S)-2O-O4 | 4,00 % |
| B(S)-2O-O5 | 4,00 % |
| BCH-32 | 6,00 % |
| CC-3-V | 35,50 % |
| CCP-3-1 | 4,50 % |
| CCY-3-O2 | 5,50 % |
| CLY-3-O2 | 6,00 % |
| CLY-3-O3 | 6,00 % |
| CPY-3-O2 | 9,00 % |
| CY-3-O2 | 13,00 % |
| CY-5-O2 | 2,50 % |
| PYP-2-O4 | 4,00 % |

enthält zusätzlich 0,03 % ST-3a-1.

### Beispiel M290

Die flüssigkristalline Mischung

| | | | |
|---|---|---|---|
| CCY-3-O1 | 2,00 % | Klärpunkt [°C]: | 80,0 |
| CCY-3-O2 | 5,00 % | Δn [589 nm, 20 °C]: | 0,1065 |
| CCY-4-O2 | 5,00 % | Δε [1 kHz, 20 °C]: | -3,8 |
| CLY-2-O4 | 5,00 % | ε_{⊥} [1 kHz, 20°C]: | 7,4 |
| CLY-3-O2 | 8,00 % | K₁ [pN, 20 °C]: | 15,5 |
| CLY-3-O3 | 5,00 % | K₃ [pN, 20 °C]: | 15,0 |
| PGIY-2-O4 | 6,00 % | γ₁ [mPa·s, 20 °C]: | 93 |
| B(S)-2O-O5 | 4,00 % | V₀ [20 °C, V]: | 2,08 |
| B(S)-2O-O4 | 4,00 % | | |
| CC-3-V | 39,50 % | | |
| CC-3-V1 | 4,00 % | | |
| PY-3-O2 | 12,50 % | | |

enthält zusätzlich 0,03 % ST-3a-1.

### Beispiel M291

Die flüssigkristalline Mischung

| | |
|---|---|
| CLY-2-O4 | 3,50 % |
| CLY-3-O2 | 8,00 % |
| CLY-3-O3 | 5,00 % |
| B(S)-2O-O5 | 4,00 % |
| B(S)-2O-O4 | 4,00 % |
| CC-3-V | 35,00 % |
| CC-3-V1 | 6,50 % |
| CY-3-O4 | 12,00 % |
| CY-5-O4 | 1,50 % |
| CPY-3-O2 | 8,00 % |
| CPY-2-O2 | 8,00 % |
| PYP-2-3 | 4,50 % |

enthält zusätzlich 0,03 % ST-3a-1.

### Beispiel M292

Die flüssigkristalline Mischung

| | | | |
|---|---|---|---|
| B(S)-2O-O4 | 4,50 % | Klärpunkt [°C]: | 74,6 |
| B(S)-2O-O5 | 4,00 % | Δn [589 nm, 20 °C]: | 0,1096 |
| BCH-32 | 7,00 % | Δε [1 kHz, 20 °C]: | -3,1 |
| CC-3-V1 | 6,00 % | ε_{⊥} [1 kHz, 20°C]: | 6,7 |
| CCH-301 | 2,00 % | K₁ [pN, 20 °C]: | 14,1 |
| CCH-34 | 8,00 % | K₃ [pN, 20 °C]: | 16,2 |
| CCH-35 | 7,50 % | γ₁ [mPa·s, 20 °C]: | 104 |
| CCP-3-1 | 8,00 % | V₀ [20 °C, V]: | 2,39 |
| CCP-V2-1 | 5,00 % | | |
| CCY-3-O2 | 11,00 % | | |
| CLY-3-O2 | 1,00 % | | |
| CY-3-O2 | 8,00 % | | |
| PCH-301 | 13,00 % | | |
| PY-3-O2 | 15,00 % | | |

enthält zusätzlich 0,02 % ST-3a-1.

### Beispiel M293

Die flüssigkristalline Mischung

| | | | |
|---|---|---|---|
| B(S)-2O-O4 | 4,50 % | Klärpunkt [°C]: | 75,0 |
| B(S)-2O-O5 | 4,00 % | Δn [589 nm, 20 °C]: | 0,1088 |
| BCH-32 | 6,50 % | Δε [1 kHz, 20 °C]: | -3,1 |
| CC-3-V1 | 6,00 % | ε_{⊥} [1 kHz, 20°C]: | 6,6 |
| CCH-301 | 2,00 % | K₁ [pN, 20 °C]: | 14,1 |
| CCH-34 | 8,00 % | K₃ [pN, 20 °C]: | 16,3 |
| CCH-35 | 8,00 % | γ₁ [mPa·s, 20 °C]: | 108 |
| CCP-3-1 | 8,00 % | V₀ [20 °C, V]: | 2,41 |
| CCP-3-3 | 3,00 % | | |
| CCY-3-O2 | 11,00 % | | |
| CLY-3-O2 | 1,00 % | | |
| CPY-3-O2 | 2,50 % | | |
| CY-3-O2 | 7,50 % | | |
| PCH-301 | 15,00 % | | |
| PY-3-O2 | 13,00 % | | |

enthält zusätzlich 0,02 % ST-3a-1.

### Beispiel M294

Die flüssigkristalline Mischung

| | | | |
|---|---|---|---|
| B(S)-2O-O4 | 4,00 % | Klärpunkt [°C]: | 74,5 |
| B(S)-2O-O5 | 4,00 % | Δn [589 nm, 20 °C]: | 0,1092 |
| BCH-32 | 2,50 % | Δε [1 kHz, 20 °C]: | -3,1 |
| CC-3-V1 | 6,00 % | ε_{∥} [1 kHz, 20 °C]: | |
| CCH-301 | 2,00 % | ε_{⊥} [1 kHz, 20°C]: | 6,7 |
| CCH-34 | 8,00 % | K₁ [pN, 20 °C]: | 14,0 |
| CCH-35 | 8,00 % | K₃ [pN, 20 °C]: | 16,1 |
| CCP-3-1 | 8,00 % | γ₁ [mPa·s, 20 °C]: | 106 |
| CCP-3-3 | 6,00 % | | |
| CCY-3-O2 | 11,00 % | | |
| CLY-3-O2 | 1,00 % | | |
| CPY-3-O2 | 4,50 % | | |
| CY-3-O2 | 3,00 % | | |
| PCH-301 | 15,00 % | | |
| PY-3-O2 | 8,00 % | | |
| PY-2-O2 | 9,00 % | | |

enthält zusätzlich 0,02 % ST-17.

### Beispiel M295

Die flüssigkristalline Mischung

| | | | |
|---|---|---|---|
| B(S)-2O-O4 | 4,00 % | Klärpunkt [°C]: | 74,4 |
| B(S)-2O-O5 | 4,00 % | Δn [589 nm, 20 °C]: | 0,1093 |
| BCH-32 | 3,00 % | Δε [1 kHz, 20 °C]: | -3,1 |
| CC-3-V1 | 6,00 % | ε_{⊥} [1 kHz, 20°C]: | 6,7 |
| CCH-301 | 2,00 % | K₁ [pN, 20 °C]: | 14,0 |
| CCH-34 | 8,00 % | K₃ [pN, 20 °C]: | 16,0 |
| CCH-35 | 8,00 % | γ₁ [mPa·s, 20 °C]: | 104 |
| CCP-3-1 | 8,00 % | V₀ [20 °C, V]: | 2,38 |
| CCP-3-3 | 6,00 % | | |
| CCY-3-O2 | 11,00 % | | |
| CLY-3-O2 | 1,00 % | | |
| CPY-3-O2 | 4,00 % | | |
| CY-3-O2 | 3,00 % | | |
| PCH-301 | 15,00 % | | |
| PY-3-O2 | 7,00 % | | |
| PY-2-O2 | 10,00 % | | |

enthält zusätzlich 0,02 % ST-3a-1.

### Beispiel M296

Die flüssigkristalline Mischung

| | | | |
|---|---|---|---|
| B(S)-2O-O4 | 4,50 % | Klärpunkt [°C]: | 74,3 |
| B(S)-2O-O5 | 4,00 % | Δn [589 nm, 20 °C]: | 0,1093 |
| BCH-32 | 3,50 % | Δε [1 kHz, 20 °C]: | -3,3 |
| CC-3-V1 | 6,00 % | ε_{⊥} [1 kHz, 20°C]: | 7,0 |
| CCH-301 | 2,00 % | K₁ [pN, 20 °C]: | 13,7 |
| CCH-34 | 8,00 % | K₃ [pN, 20 °C]: | 16,0 |
| CCH-35 | 8,00 % | γ₁ [mPa·s, 20 °C]: | 108 |
| CCP-3-1 | 8,00 % | V₀ [20 °C, V]: | 2,30 |
| CCP-3-3 | 3,00 % | | |
| CCY-3-O2 | 11,00 % | | |
| CLY-3-O2 | 1,00 % | | |
| CPY-3-O2 | 6,00 % | | |
| CY-3-O2 | 6,50 % | | |
| PCH-301 | 15,00 % | | |
| PY-3-O2 | 4,00 % | | |
| PY-2-O2 | 9,50 % | | |

enthält zusätzlich 0,02 % ST-3a-1.

### Beispiel M297

Die flüssigkristalline Mischung

| | | | |
|---|---|---|---|
| B(S)-2O-O4 | 4,00 % | Klärpunkt [°C]: | 74,3 |
| B(S)-2O-O5 | 4,00 % | Δn [589 nm, 20 °C]: | 0,1089 |
| BCH-32 | 1,50 % | Δε [1 kHz, 20 °C]: | -3,3 |
| CC-3-V1 | 6,00 % | ε_{⊥} [1 kHz, 20°C]: | 7,0 |
| CCH-301 | 2,00 % | K₁ [pN, 20 °C]: | 14,0 |
| CCH-34 | 8,00 % | K₃ [pN, 20 °C]: | 16,0 |
| CCH-35 | 8,00 % | γ₁ [mPa·s, 20 °C]: | 108 |
| CCP-3-1 | 8,00 % | V₀ [20 °C, V]: | 2,31 |
| CCP-3-3 | 5,00 % | | |
| CCY-3-O1 | 2,50 % | | |
| CCY-3-O2 | 11,00 % | | |
| CLY-3-O2 | 1,00 % | | |
| CPY-3-O2 | 4,00 % | | |
| CY-3-O2 | 3,00 % | | |
| PCH-301 | 14,50 % | | |
| PY-3-O2 | 7,50 % | | |
| PY-2-O2 | 10,00 % | | |

enthält zusätzlich 0,02 % ST-3a-1.

### Beispiel M298

Die flüssigkristalline Mischung

| | |
|---|---|
| CC-3-V | 30,00 % |
| CC-3-V1 | 8,00 % |
| CCP-V-1 | 10,00 % |
| CCY-3-O2 | 5,00 % |
| CLY-3-O2 | 8,00 % |
| CLY-4-O2 | 5,00 % |
| CLY-5-O2 | 6,00 % |
| CY-3-O2 | 12,00 % |
| CY-5-O2 | 2,50 % |
| PYP-2-3 | 3,50 % |
| B(S)-2O-O4 | 5,00 % |
| B(S)-2O-O5 | 5,00 % |

enthält zusätzlich 0,02 % ST-3a-1.

### Beispiel M299

Die flüssigkristalline Mischung

| | |
|---|---|
| CC-3-V | 30,00 % |
| CC-3-V1 | 8,50 % |
| CCP-V-1 | 10,00 % |
| CCY-3-O2 | 5,00 % |
| CCY-5-O2 | 4,00 % |
| CLY-3-O2 | 9,00 % |
| CPY-3-O2 | 8,00 % |
| CY-3-O2 | 8,50 % |
| CY-5-O2 | 5,50 % |
| PYP-2-3 | 1,50 % |
| B(S)-2O-O4 | 5,00 % |
| B(S)-2O-O5 | 5,00 % |

enthält zusätzlich 0,02 % ST-3a-1.

### Beispiel M300

Die flüssigkristalline Mischung

| | | | |
|---|---|---|---|
| CC-3-V | 30,00 % | Klärpunkt [°C]: | 93 |
| CC-3-V1 | 8,00 % | Δn [589 nm, 20 °C]: | 0,0993 |
| CCP-V2-1 | 3,50 % | Δε [1 kHz, 20 °C]: | -4,2 |
| CCY-3-O2 | 5,00 % | ε_{⊥} [1 kHz, 20°C]: | 7,7 |
| CCY-5-O2 | 6,00 % | K₁ [pN, 20 °C]: | 17,3 |
| CLY-3-O2 | 8,00 % | K₃ [pN, 20 °C]: | 18,6 |
| CLY-4-O2 | 8,00 % | γ₁ [mPa·s, 20 °C]: | 2,21 |
| CLY-5-O2 | 8,00 % | V₀ [20 °C, V]: | 118 |
| CY-3-O2 | 11,50 % | | |
| CPY-3-O2 | 1,50 % | | |
| B(S)-2O-O4 | 5,50 % | | |
| B(S)-2O-O5 | 5,00 % | | |

enthält zusätzlich 0,03 % ST-3a-1.

### Beispiel M301

Die flüssigkristalline Mischung

| | |
|---|---|
| CC-3-V | 40,00 % |
| CC-3-V1 | 7,50 % |
| CCP-V-1 | 1,50 % |
| PGIY-2-O4 | 2,00 % |
| CCY-3-O2 | 2,00 % |
| CLY-3-O2 | 8,00 % |
| CLY-4-O2 | 4,00 % |
| CLY-5-O2 | 7,00 % |
| CY-3-O2 | 8,00 % |
| CPY-3-O2 | 10,00 % |
| B(S)-2O-O4 | 5,00 % |
| B(S)-2O-O5 | 5,00 % |

enthält zusätzlich 0,03 % ST-3a-1.

### Beispiel M302

Die flüssigkristalline Mischung

| | |
|---|---|
| CC-3-V | 38,00 % |
| CC-3-V1 | 8,00 % |
| CCP-V-1 | 2,50 % |
| CCY-3-O2 | 5,00 % |
| CCY-5-O2 | 6,00 % |
| CLY-3-O2 | 8,00 % |
| CPY-3-O2 | 9,50 % |
| CY-3-O2 | 9,00 % |
| PGIY-2-O4 | 4,00 % |
| B(S)-2O-O4 | 5,00 % |
| B(S)-2O-O5 | 5,00 % |

enthält zusätzlich 0,03 % ST-3a-1.

### Beispiel M303

Die flüssigkristalline Mischung

| | |
|---|---|
| CC-3-V | 30,00 % |
| CC-3-V1 | 8,00 % |
| CCY-3-O2 | 6,00 % |
| CCY-5-O2 | 5,00 % |
| CLY-3-O2 | 9,00 % |
| CLY-4-O2 | 9,00 % |
| CLY-5-O2 | 9,50 % |
| CY-3-O2 | 10,00 % |
| CPY-3-O2 | 3,00 % |
| B(S)-2O-O4 | 5,00 % |
| B(S)-2O-O5 | 5,00 % |

enthält zusätzlich 0,03 % ST-3a-1.

### Beispiel M304

Die flüssigkristalline Mischung

| | | | |
|---|---|---|---|
| CLY-3-O2 | 8,00 % | Klärpunkt [°C]: | 82,0 |
| CLY-5-O2 | 6,50 % | Δn [589 nm, 20 °C]: | 10,19 |
| CPY-3-O2 | 10,00 % | Δε [1 kHz, 20 °C]: | -4,2 |
| B(S)-2O-O4 | 5,00 % | ε_{⊥} [1 kHz, 20°C]: | 7,8 |
| B(S)-2O-O5 | 5,00 % | K₁ [pN, 20 °C]: | 15,5 |
| CC-3-V | 35,00 % | K₃ [pN, 20 °C]: | 17,3 |
| CC-3-V1 | 8,00 % | γ₁ [mPa·s, 20 °C]: | 2,15 |
| CY-3-O2 | 14,50 % | V₀ [20 °C, V]: | 102 |
| PGIY-2-O2 | 2,00 % | | |
| CCY-3-O2 | 6,00 % | | |

enthält zusätzlich 0,03 % ST-3a-1.

### Beispiel M305

Die flüssigkristalline Mischung

| | |
|---|---|
| CLY-3-O2 | 8,00 % |
| CPY-3-O2 | 10,00 % |
| B(S)-2O-O4 | 5,00 % |
| B(S)-2O-O5 | 5,00 % |
| CC-3-V | 34,00 % |
| CC-3-V1 | 7,50 % |
| CCP-V-1 | 1,50 % |
| CY-3-O2 | 14,50 % |
| CCY-3-O2 | 6,00 % |
| CCY-5-O2 | 6,00 % |
| PGIY-2-O4 | 2,50 % |

enthält zusätzlich 0,03 % ST-3a-1.

### Beispiel M306

Die flüssigkristalline Mischung

| | |
|---|---|
| CLY-3-O2 | 8,00 % |
| CLY-4-O2 | 1,50 % |
| CLY-5-O2 | 5,00 % |
| CPY-3-O2 | 10,00 % |
| B(S)-2O-O4 | 5,00 % |
| B(S)-2O-O5 | 5,00 % |
| CC-3-V | 35,00 % |
| CC-3-V1 | 8,00 % |
| CY-3-O2 | 14,50 % |
| CCY-3-O2 | 6,00 % |
| PGIY-2-O4 | 2,00 % |

enthält zusätzlich 0,03 % ST-3a-1.

### Beispiel M307

Die flüssigkristalline Mischung

| | | | |
|---|---|---|---|
| CLY-3-O2 | 8,00 % | Klärpunkt [°C]: | 81,5 |
| CLY-5-O2 | 6,00 % | Δn [589 nm, 20 °C]: | 0,1015 |
| CPY-3-O2 | 10,00 % | Δε [1 kHz, 20 °C]: | -4,1 |
| B(S)-2O-O4 | 5,00 % | ε_{⊥} [1 kHz, 20°C]: | 7,7 |
| B(S)-2O-O5 | 5,00 % | K₁ [pN, 20 °C]: | 15,7 |
| B-2O-O5 | 2,00 % | K₃ [pN, 20 °C]: | 17,1 |
| CC-3-V | 37,00 % | γ₁ [mPa·s, 20 °C]: | 98 |
| CC-3-V1 | 8,00 % | V₀ [20 °C, V]: | 2,14 |
| CY-3-O2 | 12,00 % | | |
| CCY-3-O2 | 6,00 % | | |
| PGIY-2-O4 | 1,00 % | | |

enthält zusätzlich 0,02 % ST-8-1.

### Beispiel M308

Die flüssigkristalline Mischung

| | | | |
|---|---|---|---|
| CCY-3-O2 | 8,00 % | Klärpunkt [°C]: | 80,0 |
| CCY-5-O2 | 6,00 % | Δn [589 nm, 20 °C]: | 0,1071 |
| CLY-2-O4 | 10,00 % | Δε [1 kHz, 20 °C]: | -3,8 |
| CLY-3-O2 | 5,00 % | ε_{⊥} [1 kHz, 20°C]: | 7,4 |
| CLY-3-O3 | 5,00 % | K₁ [pN, 20 °C]: | 16,0 |
| PGIY-2-O4 | 2,00 % | K₃ [pN, 20 °C]: | 15,3 |
| B(S)-2O-O5 | 37,00 % | γ₁ [mPa·s, 20 °C]: | 90 |
| B(S)-2O-O4 | 8,00 % | V₀ [20 °C, V]: | 2,11 |
| CC-3-V | 12,00 % | | |
| CC-3-V1 | 6,00 % | | |
| PY-3-O2 | 1,00 % | | |

enthält zusätzlich 0,03 % ST-3a-1.

### Beispiel M309

Die flüssigkristalline Mischung

| | | | |
|---|---|---|---|
| CLY-3-O2 | 8,00 % | Klärpunkt [°C]: | 84,0 |
| CLY-4-O2 | 3,00 % | Δn [589 nm, 20 °C]: | 0,1016 |
| CLY-5-O2 | 5,00 % | Δε [1 kHz, 20 °C]: | -4,2 |
| CPY-3-O2 | 10,00 % | ε_{⊥} [1 kHz, 20°C]: | 7,7 |
| B(S)-2O-O4 | 5,00 % | K₁ [pN, 20 °C]: | 15,9 |
| B(S)-2O-O5 | 5,00 % | K₃ [pN, 20 °C]: | 17,5 |
| CC-3-V | 35,00 % | γ₁ [mPa·s, 20 °C]: | 104 |
| CC-3-V1 | 8,00 % | V₀ [20 °C, V]: | 2,16 |
| CY-3-O2 | 13,50 % | | |
| CCY-3-O2 | 6,00 % | | |
| PGIY-2-O4 | 1,50 % | | |

enthält zusätzlich 0,02 % ST-3b-1.

### Beispiel M309a

Zur Herstellung einer PS-VA-Mischung werden 99,7 % der Mischung gemäß Beispiel M309 mit 0,3 % der polymerisierbaren Verbindung der Formel 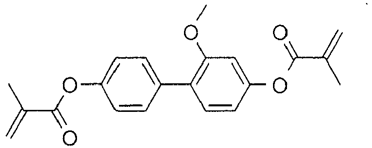 versetzt.

### Beispiel M310

Die flüssigkristalline Mischung

| | |
|---|---|
| CLY-3-O2 | 8,00 % |
| CLY-4-O2 | 1,50 % |
| CLY-5-O2 | 6,00 % |
| CPY-3-O2 | 10,00 % |
| B(S)-2O-O4 | 5,00 % |
| B(S)-2O-O5 | 5,00 % |
| B-2O-O5 | 2,50 % |
| CC-3-V | 37,00 % |
| CC-3-V1 | 8,00 % |
| CY-3-O2 | 11,00 % |
| CCY-3-O2 | 6,00 % |

enthält zusätzlich 0,03 % ST-3a-1.

### Beispiel M311

Die flüssigkristalline Mischung

| | | | |
|---|---|---|---|
| CLY-3-O2 | 8,00 % | Klärpunkt [°C]: | 83,0 |
| CLY-5-O2 | 6,50 % | Δn [589 nm, 20 °C]: | 0,1017 |
| CPY-3-O2 | 10,50 % | Δε [1 kHz, 20 °C]: | -4,1 |
| B(S)-2O-O4 | 6,00 % | ε_{⊥} [1 kHz, 20°C]: | 7,7 |
| B(S)-2O-O5 | 6,00 % | K₁ [pN, 20 °C]: | 15,6 |
| CC-3-V | 36,50 % | K₃ [pN, 20 °C]: | 17,5 |
| CC-3-V1 | 8,50 % | γ₁ [mPa·s, 20 °C]: | 2,18 |
| CY-3-O2 | 12,00 % | V₀ [20 °C, V]: | 100 |
| CCY-3-O2 | 5,50 % | | |
| PGIY-2-O4 | 0,50 % | | |

enthält zusätzlich 0,03 % ST-3a-1.

### Beispiel M312

Die flüssigkristalline Mischung

| | |
|---|---|
| CCY-3-O2 | 6,00 % |
| CPY-3-O2 | 5,50 % |
| CCY-4-O2 | 4,00 % |
| CLY-2-O4 | 5,00 % |
| CLY-3-O2 | 8,00 % |
| CLY-3-O3 | 5,00 % |
| PGIY-2-O4 | 5,00 % |
| B(S)-2O-O5 | 5,00 % |
| B(S)-2O-O4 | 5,00 % |
| CC-3-V | 30,00 % |
| CY-5-O2 | 6,50 % |
| CY-3-O2 | 15,00 % |

enthält zusätzlich 0,03 % ST-3a-1.

### Beispiel M313

Die flüssigkristalline Mischung

| | |
|---|---|
| CC-3-V | 6,00 % |
| B(S)-2O-O5 | 5,50 % |
| B(S)-2O-O4 | 4,00 % |
| CLY-2-O4 | 5,00 % |
| CLY-3-O2 | 8,00 % |
| CLY-3-O3 | 5,00 % |
| CY-3-O4 | 5,00 % |
| CY-5-O4 | 5,00 % |
| CPY-2-O2 | 5,00 % |
| CPY-3-O2 | 30,00 % |
| CCY-3-O1 | 6,50 % |

enthält zusätzlich 0,015 % ST-3a-1.

### Beispiel M314

Die flüssigkristalline Mischung

| | | | |
|---|---|---|---|
| CLY-3-O2 | 7,00 % | Klärpunkt [°C]: | 82,0 |
| CLY-5-O2 | 5,00 % | Δn [589 nm, 20 °C]: | 0,1016 |
| CLY-4-O2 | 4,00 % | Δε [1 kHz, 20 °C]: | -4,1 |
| CPY-3-O2 | 10,00 % | ε_{⊥} [1 kHz, 20°C]: | 7,7 |
| B(S)-2O-O4 | 5,00 % | K₁ [pN, 20 °C]: | 15,7 |
| B(S)-2O-O5 | 5,00 % | K₃ [pN, 20 °C]: | 17,2 |
| CC-3-V | 36,00 % | γ₁ [mPa·s, 20 °C]: | 101 |
| CC-3-V1 | 7,50 % | | |
| CY-3-O2 | 14,00 % | | |
| PGIY-2-O4 | 2,00 % | | |
| CCY-3-O2 | 4,50 % | | |

enthält zusätzlich 0,03 % ST-3a-1.

### Beispiel M315

Die flüssigkristalline Mischung

| | | | |
|---|---|---|---|
| CLY-3-O2 | 7,00 % | Klärpunkt [°C]: | 82,0 |
| CLY-4-O2 | 4,50 % | Δn [589 nm, 20 °C]: | 0,1016 |
| CLY-5-O2 | 5,00 % | Δε [1 kHz, 20 °C]: | -4,1 |
| CPY-3-O2 | 10,00 % | ε_{⊥} [1 kHz, 20°C]: | 7,7 |
| B(S)-2O-O4 | 5,00 % | K₁ [pN, 20 °C]: | 15,8 |
| B(S)-2O-O5 | 5,00 % | K₃ [pN, 20 °C]: | 17,2 |
| CC-3-V | 35,50 % | γ₁ [mPa·s, 20 °C]: | 102 |
| CC-3-V1 | 8,00 % | V₀ [20 °C, V]: | 2,16 |
| CY-3-O2 | 13,50 % | | |
| CCY-3-O2 | 5,00 % | | |
| PGIY-2-O4 | 1,50 % | | |

enthält zusätzlich 0,03 % ST-3a-1.

### Beispiel M316

Die flüssigkristalline Mischung

| | | | |
|---|---|---|---|
| CCY-3-O2 | 6,00 % | Klärpunkt [°C]: | 79,5 |
| CPY-3-O2 | 8,00 % | Δn [589 nm, 20 °C]: | 0,1066 |
| CPY-2-O2 | 6,00 % | Δε [1 kHz, 20 °C]: | -5,5 |
| CLY-2-O4 | 5,00 % | ε_{⊥} [1 kHz, 20°C]: | 9,5 |
| CLY-3-O2 | 8,00 % | K₁ [pN, 20 °C]: | 17,7 |
| CLY-3-O3 | 5,00 % | K₃ [pN, 20 °C]: | 15,5 |
| B(S)-2O-O5 | 5,00 % | γ₁ [mPa·s, 20 °C]: | 127 |
| B(S)-2O-O4 | 5,00 % | V₀ [20 °C, V]: | 1,76 |
| CC-3-V | 30,00 % | | |
| CY-5-O2 | 7,00 % | | |
| CY-3-O2 | 15,00 % | | |

enthält zusätzlich 0,03 % ST-3a-1.

### Beispiel M317

Die flüssigkristalline Mischung

| | |
|---|---|
| CCY-3-O2 | 6,00 % |
| CPY-2-O2 | 6,00 % |
| CPY-3-O2 | 8,00 % |
| CLY-2-O4 | 5,00 % |
| CLY-3-O2 | 8,00 % |
| CLY-3-O3 | 5,00 % |
| B(S)-2O-O5 | 5,00 % |
| B(S)-2O-O4 | 5,00 % |
| CC-3-V | 30,00 % |
| CY-5-O2 | 7,00 % |
| CY-3-O2 | 15,00 % |

enthält zusätzlich 0,03 % ST-3a-1.

### Beispiel M318

Die flüssigkristalline Mischung

| | | | |
|---|---|---|---|
| CCY-3-O2 | 6,00 % | Klärpunkt [°C]: | 79,0 |
| CCY-4-O2 | 5,50 % | Δn [589 nm, 20 °C]: | 10,65 |
| CPY-3-O2 | 8,00 % | Δε [1 kHz, 20 °C]: | -5,2 |
| CPY-2-O2 | 8,00 % | ε_{⊥} [1 kHz, 20°C]: | 9,1 |
| CLY-2-O4 | 5,00 % | K₁ [pN, 20 °C]: | 14,1 |
| CLY-3-O3 | 5,00 % | K₃ [pN, 20 °C]: | 14,8 |
| B(S)-2O-O5 | 5,00 % | γ₁ [mPa·s, 20 °C]: | 121 |
| B(S)-2O-O4 | 5,00 % | V₀ [20 °C, V]: | 1,78 |
| CC-3-V | 31,50 % | | |
| CY-5-O2 | 4,50 % | | |
| CY-3-O2 | 15,00 % | | |
| PYP-2-3 | 1,50 % | | |

enthält zusätzlich 0,03 % ST-3a-1.

### Beispiel M319

Die flüssigkristalline Mischung

| | |
|---|---|
| B(S)-2O-O4 | 4,00 % |
| BCH-32 | 8,00 % |
| CC-3-V1 | 9,00 % |
| CCH-301 | 2,00 % |
| CCH-34 | 8,00 % |
| CCH-35 | 7,00 % |
| CCP-3-1 | 8,00 % |
| CCP-V2-1 | 5,00 % |
| CCY-3-O2 | 10,50 % |
| CLY-3-O2 | 1,00 % |
| CPY-3-O2 | 2,50 % |
| CY-3-O2 | 11,50 % |
| PCH-301 | 5,00 % |
| PY-3-O2 | 18,00 % |

enthält zusätzlich 0,015 % ST-3a-1.

### Beispiel M320

Die flüssigkristalline Mischung

| | |
|---|---|
| B(S)-2O-O4 | 2,00 % |
| B(S)-2O-O5 | 2,00 % |
| BCH-32 | 8,00 % |
| CC-3-V1 | 9,00 % |
| CCH-301 | 2,00 % |
| CCH-34 | 8,00 % |
| CCH-35 | 7,00 % |
| CCP-3-1 | 8,00 % |
| CCP-V2-1 | 5,00 % |
| CCY-3-O2 | 10,50 % |
| CLY-3-O2 | 1,00 % |
| CPY-3-O2 | 2,50 % |
| CY-3-O2 | 11,50 % |
| PCH-301 | 5,50 % |
| PY-3-O2 | 18,00 % |

enthält zusätzlich 0,03 % ST-3a-1.

### Beispiel M321

Die flüssigkristalline Mischung

| | | | |
|---|---|---|---|
| B(S)-2O-O4 | 4,00 % | Klärpunkt [°C]: | 74,2 |
| B(S)-2O-O5 | 4,00 % | Δn [589 nm, 20 °C]: | 0,1096 |
| BCH-32 | 2,50 % | Δε [1 kHz, 20 °C]: | -3,1 |
| CC-3-V1 | 6,00 % | ε_{⊥} [1 kHz, 20°C]: | 6,6 |
| CCH-301 | 2,00 % | K₁ [pN, 20 °C]: | 14,2 |
| CCH-34 | 8,00 % | K₃ [pN, 20 °C]: | 16,5 |
| CCH-35 | 8,00 % | γ₁ [mPa·s, 20 °C]: | 105 |
| CCP-3-1 | 8,00 % | V₀ [20 °C, V]: | 2,43 |
| CCP-3-3 | 1,50 % | | |
| CCP-V2-1 | 5,00 % | | |
| CCY-3-O2 | 11,00 % | | |
| CLY-3-O2 | 1,00 % | | |
| CPY-3-O2 | 2,50 % | | |
| CY-3-O2 | 3,00 % | | |
| PCH-301 | 15,50 % | | |
| PY-3-O2 | 18,00 % | | |

enthält zusätzlich 0,03 % ST-3a-1.

### Beispiel M322

Die flüssigkristalline Mischung

| | | | |
|---|---|---|---|
| B(S)-2O-O4 | 5,00 % | Klärpunkt [°C]: | 74,8 |
| B(S)-2O-O5 | 3,00 % | Δn [589 nm, 20 °C]: | 0,1092 |
| BCH-32 | 4,50 % | Δε [1 kHz, 20 °C]: | -3,0 |
| CC-3-V1 | 6,00 % | ε_{⊥} [1 kHz, 20°C]: | 6,6 |
| CCH-301 | 2,00 % | K₁ [pN, 20 °C]: | 13,7 |
| CCH-34 | 8,00 % | K₃ [pN, 20 °C]: | 15,8 |
| CCH-35 | 8,00 % | γ₁ [mPa·s, 20 °C]: | 101 |
| CCP-3-1 | 8,00 % | V₀ [20 °C, V]: | 2,42 |
| CCP-3-3 | 6,00 % | | |
| CCY-3-O2 | 11,00 % | | |
| CLY-3-O2 | 1,00 % | | |
| CPY-3-O2 | 3,00 % | | |
| CY-3-O2 | 3,00 % | | |
| PCH-301 | 15,00 % | | |
| PY-3-O2 | 4,00 % | | |
| PY-2-O2 | 12,50 % | | |

enthält zusätzlich 0,015 % ST-3a-1.

### Beispiel M323

Die flüssigkristalline Mischung

| | | | |
|---|---|---|---|
| B(S)-2O-O4 | 4,00 % | Klärpunkt [°C]: | 74,7 |
| B(S)-2O-O5 | 4,00 % | Δn [589 nm, 20 °C]: | 0,1095 |
| BCH-32 | 5,00 % | Δε [1 kHz, 20 °C]: | -3,5 |
| CC-3-V1 | 6,00 % | ε_{⊥} [1 kHz, 20°C]: | 7,1 |
| CCH-34 | 9,00 % | K₁ [pN, 20 °C]: | 14,1 |
| CCH-35 | 7,00 % | K₃ [pN, 20 °C]: | 16,0 |
| CCP-3-1 | 8,00 % | γ₁ [mPa·s, 20 °C]: | 111 |
| CCP-3-3 | 3,50 % | V₀ [20 °C, V]: | 2,26 |
| CCY-3-O2 | 10,50 % | | |
| CLY-3-O2 | 1,00 % | | |
| CPY-3-O2 | 5,50 % | | |
| CY-3-O2 | 11,50 % | | |
| PCH-301 | 13,00 % | | |
| PY-3-O2 | 2,00 % | | |
| PY-2-O2 | 10,00 % | | |

enthält zusätzlich 0,015 % ST-3a-1.

### Beispiel M324

Die flüssigkristalline Mischung

| | |
|---|---|
| CCY-3-O2 | 6,00 % |
| CCY-3-O1 | 7,00 % |
| CCY-4-O2 | 6,00 % |
| CLY-2-O4 | 5,00 % |
| CLY-3-O2 | 8,00 % |
| CLY-3-O3 | 5,00 % |
| PGIY-2-O4 | 3,50 % |
| B(S)-2O-O5 | 4,00 % |
| B(S)-2O-O4 | 4,00 % |
| CC-3-V | 28,00 % |
| PY-3-O2 | 8,50 % |
| CY-3-O2 | 15,00 % |

enthält zusätzlich 0,03 % ST-3a-1.

### Beispiel M325

Die flüssigkristalline Mischung

| | | | |
|---|---|---|---|
| B(S)-2O-O4 | 5,00 % | Klärpunkt [°C]: | 74,2 |
| B(S)-2O-O5 | 3,00 % | Δn [589 nm, 20 °C]: | 0,1090 |
| BCH-32 | 6,00 % | Δε [1 kHz, 20 °C]: | -3,1 |
| CC-3-V1 | 6,00 % | ε_{⊥} [1 kHz, 20°C]: | 6,7 |
| CCH-301 | 2,00 % | K₁ [pN, 20 °C]: | 14,4 |
| CCH-34 | 8,00 % | K₃ [pN, 20°C]: | 16,3 |
| CCH-35 | 8,50 % | γ₁ [mPa·s, 20 °C]: | 104 |
| CCP-3-1 | 7,50 % | V₀ [20 °C, V]: | 2,40 |
| CCP-V2-1 | 5,00 % | | |
| CCY-3-O2 | 12,00 % | | |
| CLY-3-O2 | 1,00 % | | |
| CY-3-O2 | 6,50 % | | |
| PCH-301 | 13,00 % | | |
| PY-3-O2 | 16,50 % | | |

enthält zusätzlich 0,015 % ST-3a-1.

### Beispiel M326

Die flüssigkristalline Mischung

| | | | |
|---|---|---|---|
| B(S)-2O-O4 | 3,50 % | Klärpunkt [°C]: | 75,2 |
| B(S)-2O-O5 | 4,00 % | Δn [589 nm, 20 °C]: | 0,1101 |
| CC-3-V1 | 6,00 % | Δε [1 kHz, 20 °C]: | -3,1 |
| CCH-34 | 9,00 % | ε_{⊥} [1 kHz, 20°C]: | 6,7 |
| CCH-35 | 8,50 % | K₁ [pN, 20°C]: | 14,0 |
| CCP-3-1 | 8,00 % | K₃ [pN, 20 °C]: | 16,5 |
| CCP-3-3 | 6,00 % | γ₁ [mPa·s, 20 °C]: | 107 |
| CCY-3-O2 | 11,50 % | V₀ [20 °C, V]: | 2,42 |
| CLY-3-O2 | 1,00 % | | |
| CPY-3-O2 | 6,50 % | | |
| PCH-301 | 17,50 % | | |
| PY-3-O2 | 8,50 % | | |
| PY-2-O2 | 10,00 % | | |

enthält zusätzlich 0,015 % ST-3a-1.

### Beispiel M327

Die flüssigkristalline Mischung

| | | | |
|---|---|---|---|
| B(S)-2O-O4 | 3,50 % | Klärpunkt [°C]: | 75,0 |
| B(S)-2O-O5 | 5,00 % | Δn [589 nm, 20 °C]: | 0,1094 |
| CC-3-V1 | 6,00 % | Δε [1 kHz, 20 °C]: | -3,4 |
| CCH-301 | 3,00 % | ε_{⊥} [1 kHz, 20°C]: | 7,0 |
| CCH-34 | 9,00 % | K₁ [pN, 20 °C]: | 13,9 |
| CCH-35 | 8,00 % | K₃ [pN, 20 °C]: | 16,4 |
| CCP-3-1 | 8,50 % | γ₁ [mPa·s, 20 °C]: | 108 |
| CCY-3-O2 | 11,50 % | V₀ [20 °C, V]: | 2,32 |
| CLY-3-O2 | 1,00 % | | |
| CPY-3-O2 | 11,50 % | | |
| CY-3-O2 | 1,50 % | | |
| PCH-301 | 18,50 % | | |
| PY-3-O2 | 4,00 % | | |
| PY-2-O2 | 9,50 % | | |

enthält zusätzlich 0,015 % ST-3a-1.

### Beispiel M328

Die flüssigkristalline Mischung

| | | | |
|---|---|---|---|
| B(S)-2O-O4 | 5,00 % | Klärpunkt [°C]: | 74,4 |
| B(S)-2O-O5 | 5,00 % | Δn [589 nm, 20 °C]: | 0,1089 |
| BCH-32 | 1,00 % | Δε [1 kHz, 20 °C]: | -3,4 |
| CC-3-V1 | 6,00 % | ε_{⊥} [1 kHz, 20°C]: | 7,0 |
| CCH-301 | 3,00 % | K₁ [pN, 20 °C]: | 14,3 |
| CCH-34 | 9,00 % | K₃ [pN, 20 °C]: | 16,5 |
| CCH-35 | 8,00 % | γ₁ [mPa·s, 20 °C]: | 109 |
| CCP-3-1 | 7,00 % | V₀ [20 °C, V]: | 2,31 |
| CCP-3-3 | 2,50 % | | |
| CCY-3-O2 | 12,00 % | | |
| CLY-3-O2 | 1,00 % | | |
| CPY-3-O2 | 6,50 % | | |
| CY-3-O2 | 3,00 % | | |
| PCH-301 | 17,50 % | | |
| PY-3-O2 | 13,50 % | | |

enthält zusätzlich 0,015 % ST-3a-1.

### Beispiel M329

Die flüssigkristalline Mischung

| | |
|---|---|
| CY-3-O2 | 15,00 % |
| PY-3-O2 | 5,50 % |
| CCY-3-O1 | 7,50 % |
| CCY-3-O2 | 11,00 % |
| CCY-4-O2 | 6,00 % |
| CPY-3-O2 | 11,00 % |
| CC-3-V | 34,00 % |
| B(S)-2O-O5 | 3,00 % |
| B(S)-2O-O4 | 3,00 % |
| B-2O-O5 | 4,00 % |

enthält zusätzlich 0,03 % ST-3a-1.

### Beispiel M330

Die flüssigkristalline Mischung

| | | | |
|---|---|---|---|
| CY-3-O2 | 10,00 % | Klärpunkt [°C]: | 75,5 |
| CCY-3-O1 | 7,50 % | Δn [589 nm, 20 °C]: | 0,1019 |
| CCY-3-O2 | 11,00 % | Δε [1 kHz, 20 °C]: | -5,1 |
| CCY-4-O2 | 5,00 % | ε_{⊥} [1 kHz, 20°C]: | 9,3 |
| CPY-3-O2 | 11,50 % | K₁ [pN, 20 °C]: | 14,0 |
| CC-3-V | 36,00 % | K₃ [pN, 20 °C]: | 14,7 |
| B(S)-2O-O5 | 3,00 % | γ₁ [mPa·s, 20 °C]: | 103 |
| B(S)-2O-O4 | 3,00 % | V₀ (20 °C, V]: | 1,79 |
| B-2O-O5 | 4,00 % | LTS [bulk, -20 °C]: | > 1000 h |
| PGIY-2O-O4 | 4,50 % | | |
| Y-4O-O4 | 4,50 % | | |

enthält zusätzlich 0,03 % ST-3a-1.

### Beispiel M331

Die flüssigkristalline Mischung

| | |
|---|---|
| B(S)-2O-O4 | 5,00 % |
| B(S)-2O-O5 | 5,00 % |
| B-2O-O5 | 3,50 % |
| BCH-52 | 12,00 % |
| CCY-5-O2 | 12,00 % |
| CCH-301 | 6,50 % |
| CCH-34 | 23,00 % |
| PCH-302 | 12,00 % |
| PCH-53 | 13,00 % |
| PGIY-2-O4 | 8,00 % |
| PCH-301 | 17,50 % |
| PY-3-O2 | 13,50 % |

enthält zusätzlich 0,03 % ST-3a-1.

### Beispiel M332

Die flüssigkristalline Mischung

| | | | |
|---|---|---|---|
| CCY-3-O1 | 1,00 % | Klärpunkt [°C]: | 96,5 |
| CLY-4-O2 | 5,50 % | Δn [589 nm, 20 °C]: | 0,1039 |
| CLY-3-O2 | 9,00 % | Δε [1 kHz, 20 °C]: | -3,9 |
| CLY-3-O3 | 5,50 % | ε_{⊥} [1 kHz, 20°C]: | 7,4 |
| CPY-3-O2 | 10,00 % | K₁ [pN, 20 °C]: | 17,7 |
| CLY-5-O2 | 10,00 % | K₃ [pN, 20 °C]: | 18,8 |
| CC-3-V | 35,00 % | γ₁ [mPa·s, 20 °C]: | 122 |
| CC-3-V1 | 7,00 % | V₀ [20 °C, V]: | 2,31 |
| CY-3-O2 | 8,00 % | | |
| B(S)-2O-O4 | 3,00 % | | |
| B(S)-2O-O5 | 4,00 % | | |
| PGIY-2-O4 | 2,00 | | |

enthält zusätzlich 0,03 % ST-3a-1.

### Beispiel M333

Die flüssigkristalline Mischung

| | | | |
|---|---|---|---|
| CC-3-V | 42,50 % | Klärpunkt [°C]: | 80,0 |
| B(S)-2O-O5 | 4,00 % | Δn [589 nm, 20 °C]: | 0,1078 |
| B(S)-2O-O4 | 4,00 % | Δε [1 kHz, 20 °C]: | -3,9 |
| CY-3-O2 | 2,00 % | ε_{⊥} [1 kHz, 20°C]: | 7,5 |
| CCY-3-O2 | 7,00 % | K₁ [pN, 20 °C]: | 15,1 |
| CLY-2-O4 | 4,00 % | K₃ [pN, 20 °C]: | 15,0 |
| CLY-3-O2 | 6,00 % | γ₁ [mPa·s, 20 °C]: | 92 |
| CLY-3-O3 | 5,00 % | V₀ [20 °C, V]: | 2,08 |
| CLY-4-O2 | 4,00 % | LTS [bulk, -20 °C]: | > 1000 h |
| CLY-5-O2 | 4,00 % | | |
| PGIY-2-O4 | 5,00 % | | |
| PYP-2-3 | 2,00 % | | |
| PY-3-O2 | 10,50 % | | |

enthält zusätzlich 0,03 % ST-3a-1.

### Beispiel M334

Die flüssigkristalline Mischung

| | | | |
|---|---|---|---|
| CC-3-V | 40,50 % | Klärpunkt [°C]: | 80,0 |
| CCP-V-1 | 7,00 % | Δn [589 nm, 20 °C]: | 0,1020 |
| CLY-2-O4 | 4,00 % | Δε [1 kHz, 20 °C]: | -3,6 |
| CLY-3-O2 | 6,00 % | ε_{⊥} [1 kHz, 20°C]: | 7,3 |
| CLY-3-O3 | 5,00 % | K₁ [pN, 20 °C]: | 14,1 |
| CLY-4-O2 | 4,00 % | K₃ [pN, 20 °C]: | 14,8 |
| CLY-5-O2 | 4,00 % | γ₁ [mPa·s, 20 °C]: | 79 |
| CPY-3-O2 | 3,50 % | V₀ [20 °C, V]: | 2,14 |
| CY-3-O2 | 6,00 % | | |
| PY-3-O2 | 4,00 % | | |
| PY-1-O2 | 8,00 % | | |
| B(S)-2O-O5 | 4,00 % | | |
| B(S)-2O-O4 | 4,00 % | | |

enthält zusätzlich 0,03 % ST-3a-1.

### Beispiel M335

Die flüssigkristalline Mischung

| | | | |
|---|---|---|---|
| B-2O-O5 | 4,50 % | Klärpunkt [°C]: | 75,5 |
| CC-3-V | 34,50 % | Δn [589 nm, 20 °C]: | 0,1014 |
| CCP-3-1 | 3,00 % | Δε [1 kHz, 20 °C]: | -5,1 |
| CLY-3-O2 | 8,00 % | ε_{⊥} [1 kHz, 20°C]: | 9,2 |
| CLY-3-O3 | 6,00 % | K₁ [pN, 20 °C]: | 14,2 |
| CLY-5-O2 | 6,00 % | K₃ [pN, 20 °C]: | 14,8 |
| CLY-4-O2 | 6,00 % | γ₁ [mPa·s, 20 °C]: | 100 |
| CPY-3-O2 | 8,50 % | V₀ [20 °C, V]: | 1,80 |
| Y-4O-O4 | 5,00 % | | |
| CY-3-O2 | 12,00 % | | |
| B(S)-2O-O5 | 4,00 % | | |
| B(S)-2O-O4 | 3,00 % | | |

enthält zusätzlich 0,03 % ST-3a-1.

### Beispiel M336

Die flüssigkristalline Mischung

| | | | |
|---|---|---|---|
| CC-3-V | 40,00 % | Klärpunkt [°C]: | 76,0 |
| CCP-V-1 | 6,50 % | Δn [589 nm, 20 °C]: | 0,1017 |
| CLY-2-O4 | 4,00 % | Δε [1 kHz, 20 °C]: | -3,6 |
| CLY-3-O2 | 6,00 % | ε_{⊥} [1 kHz, 20°C]: | 7,3 |
| CLY-3-O3 | 5,00 % | K₁ [pN, 20 °C]: | 14,2 |
| CLY-4-O2 | 4,00 % | K₃ [pN, 20 °C]: | 14,7 |
| CLY-5-O2 | 4,00 % | γ₁ [mPa·s, 20 °C]: | 83 |
| CPY-3-O2 | 4,50 % | V₀ [20 °C, V]: | 2,12 |
| CY-3-O2 | 7,00 % | | |
| PY-3-O2 | 11,00 % | | |
| B(S)-2O-O5 | 4,00 % | | |
| B(S)-2O-O4 | 4,00 % | | |

enthält zusätzlich 0,03 % ST-3a-1.

### Beispiel M337

Die flüssigkristalline Mischung

| | | | |
|---|---|---|---|
| CC-3-V | 39,00 % | Klärpunkt [°C]: | 75,5 |
| CCP-V-1 | 8,50 % | Δn [589 nm, 20 °C]: | 0,1011 |
| CLY-2-O4 | 4,00 % | Δε [1 kHz, 20 °C]: | -3,6 |
| CLY-3-O2 | 6,00 % | ε_{⊥} [1 kHz, 20°C]: | 7,2 |
| CLY-3-O3 | 5,00 % | K₁ [pN, 20 °C]: | 13,8 |
| CLY-4-O2 | 4,00 % | K₃ [pN, 20 °C]: | 14,4 |
| CLY-5-O2 | 4,00 % | γ₁ [mPa·s, 20 °C]: | 79 |
| CPY-3-O2 | 3,50 % | V₀ [20 °C, V]: | 2,12 |
| CY-3-O2 | 6,50 % | LTS [bulk, -20 °C]: | > 1000 h |
| PY-3-O2 | 3,50 % | | |
| PY-2-O2 | 8,00 % | | |
| B(S)-2O-O5 | 4,00 % | | |
| B(S)-2O-O4 | 4,00 % | | |

enthält zusätzlich 0,03 % ST-3a-1.

### Beispiel M338

Die flüssigkristalline Mischung

| | | | |
|---|---|---|---|
| CCY-3-O1 | 0,50 % | Klärpunkt [°C]: | 96,5 |
| CLY-4-O2 | 5,50 % | Δn [589 nm, 20 °C]: | 0,1041 |
| CLY-3-O2 | 9,00 % | Δε [1 kHz, 20 °C]: | -4,0 |
| CLY-3-O3 | 5,50 % | ε_{⊥} [1 kHz, 20°C]: | 7,4 |
| CLY-5-O2 | 10,00 % | K₁ [pN, 20 °C]: | 17,7 |
| CPY-3-O2 | 10,50 % | K₃ [pN, 20 °C]: | 18,9 |
| CC-3-V | 35,50 % | γ₁ [mPa·s, 20 °C]: | 119 |
| CC-3-V1 | 7,00 % | V₀ [20 °C, V]: | 2,31 |
| CY-3-O2 | 7,50 % | LTS [bulk, -20 °C]: | > 1000 h |
| B(S)-2O-O5 | 4,00 % | | |
| B(S)-2O-O4 | 4,00 % | | |
| PGIY-2-O4 | 1,00 % | | |

enthält zusätzlich 0,02 % ST-3a-1.

### Beispiel M339

Die flüssigkristalline Mischung

| | | | |
|---|---|---|---|
| CLY-4-O2 | 5,50 % | Klärpunkt [°C]: | 96,5 |
| CLY-3-O2 | 9,00 % | Δn [589 nm, 20 °C]: | 0,1039 |
| CLY-3-O3 | 5,50 % | Δε [1 kHz, 20 °C]: | -4,0 |
| CLY-5-O2 | 10,00 % | ε_{⊥} [1 kHz, 20°C]: | 7,4 |
| CPY-2-O2 | 2,00 % | K₁ [pN, 20 °C]: | 17,5 |
| CPY-3-O2 | 10,00 % | K₃ [pN, 20 °C]: | 18,7 |
| CC-3-V | 35,50 % | γ₁ [mPa-s, 20 °C]: | 119 |
| CC-3-V1 | 7,00 % | V₀ [20 °C, V]: | 2,30 |
| CY-3-O2 | 7,50 % | | |
| B(S)-2O-O5 | 4,00 % | | |
| B(S)-2O-O4 | 4,00 % | | |

enthält zusätzlich 0,03 % ST-3a-1 und 0,01 % ST-8-1.

### Beispiel M340

Die flüssigkristalline Mischung

| | | | |
|---|---|---|---|
| CLY-4-O2 | 5,00 % | Klärpunkt [°C]: | 93,5 |
| CLY-3-O2 | 9,00 % | Δn [589 nm, 20 °C]: | 0,1041 |
| CLY-3-O3 | 5,50 % | Δε [1 kHz, 20 °C]: | -3,9 |
| CLY-5-O2 | 10,00 % | ε_{⊥} [1 kHz, 20°C]: | 7,4 |
| CPY-3-O2 | 8,50 % | K₁ [pN, 20 °C]: | 17,2 |
| CC-3-V | 36,00 % | K₃ [pN, 20 °C]: | 18,3 |
| CC-3-V1 | 7,00 % | γ₁ [mPa·s, 20 °C]: | 113 |
| CY-3-O2 | 8,50 % | V₀ [20 °C, V]: | 2,28 |
| B(S)-2O-O4 | 4,00 % | | |
| B(S)-2O-O5 | 4,00 % | | |
| PGIY-2-O4 | 2,50 % | | |

enthält zusätzlich 0,02 % ST-8-1.

### Beispiel M341

Die flüssigkristalline Mischung

| | |
|---|---|
| CC-3-V | 18,50 % |
| CC-3-V1 | 7,00 % |
| CCP-3-1 | 11,00 % |
| CCY-3-O1 | 5,00 % |
| CCY-3-O2 | 8,00 % |
| CCY-4-O2 | 2,50 % |
| CLY-2-O4 | 4,50 % |
| CLY-3-O2 | 7,50 % |
| CLY-3-O3 | 6,50 % |
| CPY-3-O2 | 8,00 % |
| CY-3-O2 | 11,50 % |
| PGIY-2-O4 | 3,00 % |
| B(S)-2O-O4 | 4,00 % |
| B(S)-2O-O5 | 3,00 % |

enthält zusätzlich 0,02 % ST-3a-1.

### Beispiel M342

Die flüssigkristalline Mischung

| | |
|---|---|
| CC-3-V | 35,50 % |
| CCP-3-1 | 2,50 % |
| CCY-3-O2 | 9,50 % |
| CLY-3-O2 | 8,00 % |
| CPY-2-O2 | 4,50 % |
| CPY-3-O2 | 10,50 % |
| CY-3-O2 | 14,50 % |
| PGIY-2-O4 | 6,00 % |
| PYP-2-3 | 2,00 % |
| B(S)-2O-O4 | 4,00 % |
| B(S)-2O-O5 | 3,00 % |

enthält zusätzlich 0,03 % ST-3a-1.

### Beispiel M343

Die flüssigkristalline Mischung

| | | | |
|---|---|---|---|
| B(S)-2O-O5 | 4,00 % | Klärpunkt [°C]: | 74,5 |
| B(S)-2O-O4 | 3,00 % | Δn [589 nm, 20 °C]: | 0,1091 |
| BCH-32 | 8,00 % | Δε [1 kHz, 20 °C]: | -3,1 |
| CC-3-V1 | 9,00 % | ε_{⊥} [1 kHz, 20°C]: | 6,7 |
| CCH-301 | 2,00 % | K₁ [pN, 20 °C]: | 15,2 |
| CCH-34 | 8,00 % | K₃ [pN, 20 °C]: | 16,2 |
| CCH-35 | 7,00 % | γ₁ [mPa·s, 20 °C]: | 100 |
| CCP-3-1 | 11,00 % | V₀ [20 °C, V]: | 2,41 |
| CCP-V2-1 | 5,00 % | LTS [bulk, -20 °C]: | > 1000 h |
| CCY-3-O2 | 7,00 % | | |
| CLY-3-O2 | 1,00 % | | |
| CY-3-O2 | 13,00 % | | |
| PCH-301 | 5,50 % | | |
| PY-3-O2 | 16,50 % | | |

enthält zusätzlich 0,015 % ST-3a-1.

### Beispiel M344

Die flüssigkristalline Mischung

| | | | |
|---|---|---|---|
| CY-3-O2 | 7,50 % | Klärpunkt [°C]: | 74,5 |
| CCY-3-O1 | 6,00 % | Δn [589 nm, 20 °C]: | 0,1031 |
| CCY-3-O2 | 11,00 % | Δε [1 kHz, 20 °C]: | -5,0 |
| CCY-4-O2 | 4,50 % | ε_{⊥} [1 kHz, 20°C]: | 9,1 |
| CPY-3-O2 | 10,50 % | K₁ [pN, 20 °C]: | 13,5 |
| CC-3-V | 39,00 % | K₃ [pN, 20 °C]: | 14,4 |
| B(S)-2O-O5 | 4,00 % | γ₁ [mPa.s, 20 °C]: | 95 |
| B(S)-2O-O4 | 4,00 % | V₀ [20 °C, V]: | 1,79 |
| B-2O-O5 | 5,00 % | | |
| PGIY-2-O4 | 4,50 % | | |
| Y-4O-O4 | 4,00 % | | |

enthält zusätzlich 0,025 % ST-3a-1.

### Beispiel M345

Die flüssigkristalline Mischung

| | | | |
|---|---|---|---|
| CY-3-O2 | 2,50 % | Klärpunkt [°C]: | 80,1 |
| CCY-3-O2 | 6,00 % | Δn [589 nm, 20 °C]: | 0,1104 |
| CCY-4-O2 | 1,50 % | Δε [1 kHz, 20 °C]: | -4,0 |
| CPY-2-O2 | 8,00 % | ε_{⊥} [1 kHz, 20°C]: | 7,8 |
| CPY-3-O2 | 10,00 % | K₁ [pN, 20 °C]: | 14,5 |
| PYP-2-3 | 3,00 % | K₃ [pN, 20 °C]: | 15,3 |
| CLY-3-O2 | 6,00 % | γ₁ [mPa·s, 20 °C]: | 102 |
| CLY-3-O3 | 6,00 % | V₀ [20 °C, V]: | 2,05 |
| Y-4O-O4 | 6,00 % | | |
| PGIY-2-O4 | 6,00 % | | |
| B-2O-O5 | 5,00 % | | |
| CC-3-V | 32,00 % | | |
| CC-3-V1 | 8,00 % | | |

enthält zusätzlich 0,015 % ST-9-1.

### Beispiel M346

Die flüssigkristalline Mischung

| | | | |
|---|---|---|---|
| B-2O-O5 | 5,00 % | Klärpunkt [°C]: | 75,5 |
| CC-3-V | 39,00 % | Δn [589 nm, 20 °C]: | 0,1047 |
| CCY-3-O2 | 11,00 % | Δε [1 kHz, 20 °C]: | -5,9 |
| CCY-3-O1 | 6,00 % | ε_{⊥} [1 kHz, 20°C]: | 10,2 |
| CCY-4-O2 | 4,50 % | K₁ [pN, 20 °C]: | 14,8 |
| CLY-3-O2 | 3,00 % | K₃ [pN, 20 °C]: | 14,4 |
| CPY-3-O2 | 7,50 % | γ₁ [mPa·s, 20 °C]: | 96 |
| Y-4O-O4 | 5,00 % | V₀ [20 °C, V]: | 1,65 |
| B(S)-2O-O5 | 8,00 % | | |
| B(S)-2O-O4 | 8,00 % | | |
| CY-3-O2 | 3,00 % | | |

enthält zusätzlich 0,03 % ST-3a-1.

### Beispiel M347

Die flüssigkristalline Mischung

| | |
|---|---|
| B(S)-2O-O5 | 4,00 % |
| B(S)-2O-O4 | 3,00 % |
| BCH-32 | 8,00 % |
| CC-3-V | 15,00 % |
| CC-3-V1 | 9,00 % |
| CCP-3-1 | 8,00 % |
| CCY-3-O1 | 7,00 % |
| CCY-3-O2 | 11,50 % |
| CLY-3-O2 | 1,00 % |
| CY-3-O2 | 15,00 % |
| PCH-301 | 5,00 % |
| PY-3-O2 | 13,50 % |

enthält zusätzlich 0,025 % ST-3a-1.

### Beispiel M348

Die flüssigkristalline Mischung

| | |
|---|---|
| B(S)-2O-O5 | 4,00 % |
| B(S)-2O-O4 | 3,00 % |
| BCH-32 | 8,00 % |
| CC-3-V | 15,00 % |
| CC-3-V1 | 9,00 % |
| CCP-3-1 | 7,00 % |
| CCY-3-O1 | 7,00 % |
| CCY-3-O2 | 11,00 % |
| CCY-4-O2 | 2,50 % |
| CLY-3-O2 | 1,00 % |
| CY-3-O2 | 14,00 % |
| PCH-301 | 5,00 % |
| PY-1-O2 | 6,50 % |
| PY-2-O2 | 7,00 % |

### Beispiel M349

Die flüssigkristalline Mischung

| | | | |
|---|---|---|---|
| B(S)-2O-O5 | 4,00 % | Klärpunkt [°C]: | 74,0 |
| B(S)-2O-O4 | 3,00 % | Δn [589 nm, 20 °C]: | 0,1094 |
| BCH-32 | 8,00 % | Δε [1 kHz, 20 °C]: | -3,7 |
| CC-3-V1 | 9,00 % | ε_{⊥} [1 kHz, 20°C]: | 7,4 |
| CCH-301 | 2,00 % | K₁ [pN, 20 °C]: | 14,6 |
| CCH-34 | 8,00 % | K₃ [pN, 20 °C]: | 16,0 |
| CCH-35 | 7,00 % | γ₁ [mPa·s, 20 °C]: | 107 |
| CCP-3-1 | 9,50 % | V₀ [20 °C, V]: | 2,20 |
| CCY-3-O1 | 3,50 % | | |
| CCY-3-O2 | 11,00 % | | |
| CLY-3-O2 | 1,00 % | | |
| CY-3-O2 | 12,50 % | | |
| PCH-301 | 5,50 % | | |
| PY-1-O2 | 8,00 % | | |
| PY-2-O2 | 8,00 % | | |

enthält zusätzlich 0,02 % ST-3a-1.

### Beispiel M350

Die flüssigkristalline Mischung

| | |
|---|---|
| B(S)-2O-O5 | 4,00 % |
| B(S)-2O-O4 | 4,00 % |
| BCH-32 | 16,00 % |
| CCH-23 | 19,00 % |
| CCH-301 | 6,50 % |
| CCH-34 | 5,00 % |
| CCH-35 | 5,00 % |
| CCP-3-1 | 11,50 % |
| CLY-3-O2 | 8,00 % |
| PY-3-O2 | 10,00 % |
| PYP-2-3 | 4,00 % |
| Y-4O-O4 | 7,00 % |

enthält zusätzlich 0,025 % ST-2a-1.

### Beispiel M351

Die flüssigkristalline Mischung

| | |
|---|---|
| CC-3-V | 47,00 % |
| CC-3-V1 | 6,50 % |
| CC-3-2V1 | 1,00 % |
| CCP-V-1 | 6,50 % |
| PGP-2-2V | 13,00 % |
| PGP-3-2V | 3,50 % |
| PGU-2-F | 6,00 % |
| PGUQU-3-F | 4,50 % |
| CLP-3-T | 5,00 % |
| B(S)-2O-O5 | 3,50 % |
| B(S)-2O-O4 | 3,50 % |

enthält zusätzlich 0,025 % ST-2a-1.

### Beispiel M352

Die flüssigkristalline Mischung

| | |
|---|---|
| B(S)-2O-O5 | 4,00 % |
| B(S)-2O-O4 | 4,00 % |
| BCH-32 | 16,00 % |
| CCH-23 | 19,50 % |
| CCH-301 | 7,00 % |
| CCH-34 | 5,00 % |
| CCH-35 | 5,00 % |
| CCP-3-1 | 11,00 % |
| CLY-3-O2 | 8,00 % |
| PYP-3-O2 | 5,50 % |
| Y-4O-O4 | 7,00 % |
| PY-1-O2 | 4,00 % |
| PY-2-O2 | 4,00 % |

enthält zusätzlich 0,025 % ST-3b-1.

### Beispiel M353

Die flüssigkristalline Mischung

| | |
|---|---|
| B(S)-2O-O5 | 4,00 % |
| B(S)-2O-O4 | 4,00 % |
| BCH-32 | 16,00 % |
| CCH-23 | 18,00 % |
| CCH-301 | 3,00 % |
| CCH-34 | 4,00 % |
| CCH-35 | 4,00 % |
| CCP-3-1 | 13,50 % |
| CCP-3-3 | 4,00 % |
| CLY-3-O2 | 8,00 % |
| CPY-3-O2 | 1,50 % |
| PY-3-O2 | 2,00 % |
| PYP-2-3 | 5,50 % |
| Y-4O-O4 | 12,50 % |

enthält zusätzlich 0,025 % ST-3b-1.

### Beispiel M354

Die flüssigkristalline Mischung

| | |
|---|---|
| B(S)-2O-O5 | 4,00 % |
| B(S)-2O-O4 | 4,00 % |
| BCH-32 | 14,00 % |
| CCH-23 | 18,00 % |
| CCH-301 | 2,00 % |
| CCH-34 | 4,50 % |
| CCH-35 | 3,00 % |
| CCP-3-1 | 15,50 % |
| CCP-3-3 | 6,00 % |
| CLY-3-O2 | 8,00 % |
| PY-1-O2 | 4,00 % |
| PY-2-O2 | 4,00 % |
| PYP-2-3 | 3,00 % |
| Y-4O-O4 | 10,00 % |

enthält zusätzlich 0,025 % ST-3b-1.

### Beispiel M355

Die flüssigkristalline Mischung

| | | | |
|---|---|---|---|
| CCY-3-O1 | 7,00 % | Klärpunkt [°C]: | 92,5 |
| CCY-3-O2 | 11,00 % | Δn [589 nm, 20 °C]: | 0,0992 |
| CCY-4-O2 | 5,00 % | Δε [1 kHz, 20 °C]: | -4,5 |
| CLY-3-O2 | 5,00 % | ε_{⊥} [1 kHz, 20°C]: | 8,1 |
| CLY-3-O3 | 5,00 % | K₁ [pN, 20 °C]: | 16,0 |
| CLY-5-O2 | 5,00 % | K₃ [pN, 20 °C]: | 17,8 |
| CPY-3-O2 | 2,50 % | γ₁ [mPa·s, 20 °C]: | 124 |
| PGIY-2-O4 | 4,00 % | V₀ [20 °C, V]: | 2,10 |
| CC-3-V | 37,00 % | | |
| CY-3-O2 | 11,50 % | | |
| B(S)-2O-O5 | 4,00 % | | |
| B(S)-2O-O4 | 3,00 % | | |

enthält zusätzlich 0,03 % ST-3a-1.

### Beispiel M356

Die flüssigkristalline Mischung

| | | | |
|---|---|---|---|
| CCY-3-O1 | 6,50 % | Klärpunkt [°C]: | 91,5 |
| CCY-3-O2 | 11,00 % | Δn [589 nm, 20 °C]: | 0,0995 |
| CLY-3-O2 | 5,00 % | Δε [1 kHz, 20 °C]: | -4,5 |
| CLY-3-O3 | 5,00 % | ε_{⊥} [1 kHz, 20°C]: | 8,1 |
| CLY-4-O2 | 5,00 % | K₁ [pN, 20 °C]: | 16,1 |
| CLY-5-O2 | 5,00 % | K₃ [pN, 20 °C]: | 17,5 |
| CPY-3-O2 | 2,00 % | γ₁ [mPa·s, 20 °C]: | 120 |
| PGIY-2-O4 | 4,00 % | V₀ [20 °C, V]: | 2,09 |
| CC-3-V | 37,50 % | | |
| CY-3-O2 | 12,00 % | | |
| B(S)-2O-O5 | 4,00 % | | |
| B(S)-2O-O4 | 3,00 % | | |

enthält zusätzlich 0,03 % ST-3a-1.

### Beispiel M357

Die flüssigkristalline Mischung

| | | | |
|---|---|---|---|
| B(S)-2O-O5 | 4,00 % | Klärpunkt [°C]: | 74,5 |
| B(S)-2O-O4 | 3,00 % | Δn [589 nm, 20 °C]: | 0,1094 |
| BCH-32 | 8,00 % | Δε [1 kHz, 20 °C]: | -3,4 |
| CC-3-V1 | 9,00 % | ε_{⊥} [1 kHz, 20°C]: | 7,1 |
| CCH-301 | 2,00 % | K₁ [pN, 20 °C]: | 15,4 |
| CCH-34 | 8,00 % | K₃ [pN, 20 °C]: | 16,4 |
| CCH-35 | 7,00 % | γ₁ [mPa·s, 20 °C]: | 104 |
| CCP-3-1 | 12,00 % | V₀ [20 °C, V]: | 2,31 |
| CCY-3-O2 | 11,00 % | | |
| CLY-3-O2 | 1,00 % | | |
| CY-3-O2 | 13,00 % | | |
| PCH-301 | 5,50 % | | |
| PY-2-3 | 16,50 % | | |

enthält zusätzlich 0,02 % ST-3a-1.

### Beispiel M358

Die flüssigkristalline Mischung

| | | | |
|---|---|---|---|
| CC-3-V | 45,50 % | Klärpunkt [°C]: | 76,0 |
| CCY-3-O2 | 1,00 % | Δn [589 nm, 20 °C]: | 0,1036 |
| CLY-3-O2 | 7,00 % | Δε [1 kHz, 20 °C]: | -3,5 |
| CLY-3-O3 | 7,00 % | ε_{⊥} [1 kHz, 20°C]: | 7,1 |
| CPY-3-O2 | 11,00 % | K₁ [pN, 20 °C]: | 13,5 |
| CY-3-O2 | 13,00 % | K₃ [pN, 20 °C]: | 14,6 |
| B(S)-2O-O4 | 3,00 % | γ₁ [mPa·s, 20 °C]: | 80 |
| B(S)-2O-O5 | 4,00 % | V₀ [20 °C, V]: | 2,16 |
| PGIY-2-O4 | 7,50 % | | |
| PYP-2-3 | 1,50 % | | |

enthält zusätzlich 0,03 % ST-3a-1.

### Beispiel M359

Die flüssigkristalline Mischung

| | | | |
|---|---|---|---|
| CC-3-V | 44,00 % | Klärpunkt [°C]: | 75,0 |
| CCY-3-O2 | 7,50 % | Δn [589 nm, 20 °C]: | 0,1035 |
| CLY-3-O2 | 7,00 % | Δε [1 kHz, 20 °C]: | -3,7 |
| CPY-3-O2 | 11,00 % | ε_{⊥} [1 kHz, 20°C]: | 7,3 |
| CY-3-O2 | 15,00 % | K₁ [pN, 20 °C]: | 13,4 |
| B(S)-2O-O4 | 3,00 % | K₃ [pN, 20 °C]: | 14,9 |
| B(S)-2O-O5 | 4,00 % | γ₁ [mPa·s, 20 °C]: | 82 |
| PGIY-2-O4 | 7,00 % | V₀ [20 °C, V]: | 2,13 |
| PYP-2-3 | 1,50 % | | |

enthält zusätzlich 0,03 % ST-3a-1.

### Beispiel M360

Die flüssigkristalline Mischung

| | | | |
|---|---|---|---|
| CC-3-V | 41,00 % | Klärpunkt [°C]: | 74 |
| CCY-3-O1 | 3,00 % | Δn [589 nm, 20 °C]: | 0,1007 |
| CCY-3-O2 | 10,00 % | Δε [1 kHz, 20 °C]: | -3,8 |
| CPY-2-O2 | 10,50 % | ε_{⊥} [1 kHz, 20°C]: | 7,5 |
| CPY-3-O2 | 11,00 % | K₁ [pN, 20 °C]: | 12,7 |
| CY-3-O2 | 16,00 % | K₃ [pN, 20 °C]: | 14,6 |
| PGIY-2-O4 | 4,50 % | γ₁ [mPa·s, 20 °C]: | 90 |
| B-2O-O5 | 4,00 % | V₀ [20 °C, V]: | 2,07 |

enthält zusätzlich 0,03 % ST-3a-1.

### Beispiel M361

Die flüssigkristalline Mischung

| | | | |
|---|---|---|---|
| B-2O-O5 | 4,00 % | Klärpunkt [°C]: | 109,8 |
| BCH-32 | 2,00 % | Δn [589 nm, 20 °C]: | 0,1059 |
| CC-3-V | 25,00 % | Δε [1 kHz, 20 °C]: | -4,1 |
| CC-3-V1 | 4,00 % | ε_{⊥} [1 kHz, 20°C]: | 7,6 |
| CCP-3-1 | 4,00 % | K₁ [pN, 20 °C]: | 19,0 |
| CCY-3-O1 | 5,00 % | K₃ [pN, 20 °C]: | 18,9 |
| CCY-3-O2 | 6,00 % | γ₁ [mPa·s, 20 °C]: | 145 |
| CCY-4-O2 | 6,00 % | V₀ [20 °C, V]: | 2,28 |
| CCY-5-O2 | 6,00 % | | |
| CLY-3-O2 | 6,00 % | | |
| CLY-3-O3 | 6,00 % | | |
| CPY-2-O2 | 9,00 % | | |
| CPY-3-O2 | 9,00 % | | |
| CY-5-O4 | 8,00 % | | |

enthält zusätzlich 0,04 % ST-3b-1.

### Beispiel M362

Die flüssigkristalline Mischung

| | | |
|---|---|---|
| B-2O-O5 | 4,00 % | Klärpunkt [°C]: |
| CC-3-V | 37,00 % | Δn [589 nm, 20 °C] |
| CCP-3-1 | 4,00 % | Δε [1 kHz, 20 °C]: |
| CCY-3-O2 | 8,00 % | ε_{⊥} [1 kHz, 20°C]: |
| CCY-4-O2 | 3,00 % | K₁ [pN, 20 °C]: |
| CLY-3-O2 | 6,00 % | K₃ [pN, 20 °C]: |
| CLY-3-O3 | 6,00 % | γ₁ [mPa·s, 20 °C]: |
| CPY-3-O2 | 9,50 % | V₀ [20 °C, V]: |
| CY-3-O2 | 13,00 % | |
| PGIY-2-O4 | 2,00 % | |
| PYP-2-3 | 4,00 % | |
| PYP-2-4 | 3,50 % | |

enthält zusätzlich 0,03 % ST-3a-1.

### Beispiel M363

Die flüssigkristalline Mischung

| | | | |
|---|---|---|---|
| B-2O-O5 | 4,00 % | Klärpunkt [°C]: | 104 |
| CC-3-V | 14,00 % | Δn [589 nm, 20 °C]: | 0,1059 |
| CC-3-V1 | 5,00 % | Δε [1 kHz, 20 °C]: | -5,2 |
| CCP-3-1 | 7,00 % | ε_{⊥} [1 kHz, 20°C]: | 9,0 |
| CCY-3-O1 | 6,00% | K₁ [pN, 20 °C]: | 17,5 |
| CCY-3-O2 | 7,50 % | K₃ [pN, 20 °C]: | 19,0 |
| CCY-4-O2 | 7,00 % | γ₁ [mPa·s, 20 °C]: | 171 |
| CCY-5-O2 | 4,00 % | V₀ [20 °C, V]: | 2,02 |
| CLY-2-O4 | 4,00 % | | |
| CLY-3-O2 | 6,00 % | | |
| CLY-3-O3 | 6,00 % | | |
| CPY-3-O2 | 8,00 % | | |
| CY-3-O2 | 12,00 % | | |
| CY-5-O4 | 7,50 % | | |
| PGIY-2-O4 | 2,00 % | | |

enthält zusätzlich 0,04 % ST-3b-1.

### Beispiel M364

Die flüssigkristalline Mischung

| | | | |
|---|---|---|---|
| B-2O-O5 | 3,00 % | Klärpunkt [°C]: | 75,4 |
| CC-3-V | 39,00 % | Δn [589 nm, 20 °C]: | 0,1074 |
| CC-3-V1 | 8,00 % | Δε [1 kHz, 20 °C]: | -2,7 |
| CCP-V-1 | 4,50 % | ε_{⊥} [1 kHz, 20°C]: | 6,2 |
| CLY-3-O2 | 8,00 % | K₁ [pN, 20 °C]: | 13,7 |
| CPY-2-O2 | 10,00 % | K₃ [pN, 20 °C]: | 14,3 |
| CPY-3-O2 | 10,00 % | γ₁ [mPa·s, 20 °C]: | 77 |
| PGIY-2-O4 | 6,00 % | V₀ [20 °C, V]: | 2,44 |
| PYP-2-3 | 3,50 % | | |
| PYP-2-4 | 2,00 % | | |
| Y-4O-O4 | 6,00 % | | |

enthält zusätzlich 0,03 % ST-3a-1.

### Beispiel M365

Die flüssigkristalline Mischung

| | | | |
|---|---|---|---|
| B-2O-O5 | 4,00 % | Klärpunkt [°C]: | 70,6 |
| CC-3-V | 40,00 % | Δn [589 nm, 20 °C]: | 0,1072 |
| CC-3-V1 | 1,50 % | Δε [1 kHz, 20 °C]: | -2,5 |
| CC-4-V | 10,50 % | ε_{⊥} [1 kHz, 20°C]: | 5,9 |
| CLY-3-O2 | 8,00 % | K₁ [pN, 20 °C]: | 13,1 |
| CPY-2-O2 | 6,50 % | K₃ [pN, 20 °C]: | 13,1 |
| CPY-3-O2 | 10,00 % | γ₁ [mPa·s, 20 °C]: | 70 |
| PGIY-2-O4 | 6,00 % | V₀ [20 °C, V]: | 2,40 |
| PY-3-O2 | 9,50 % | | |
| PYP-2-3 | 4,00 % | | |

enthält zusätzlich 0,03 % ST-3a-1.

### Beispiel M366

Die flüssigkristalline Mischung

| | | | |
|---|---|---|---|
| B-2O-O5 | 4,00 % | Klärpunkt [°C]: | 75,5 |
| CC-3-V | 40,00 % | Δn [589 nm, 20 °C]: | 0,1083 |
| CC-3-V1 | 3,00 % | Δε [1 kHz, 20 °C]: | -2,7 |
| CC-4-V | 6,50 % | ε_{⊥} [1 kHz, 20°C]: | 6,1 |
| CCP-V-1 | 2,50 % | K₁ [pN, 20 °C]: | 13,7 |
| CLY-3-O2 | 8,00 % | K₃ [pN, 20 °C]: | 14,2 |
| CPY-2-O2 | 10,00 % | γ₁ [mPa·s, 20 °C]: | 76 |
| CPY-3-O2 | 10,00 % | V₀ [20 °C, V]: | 2,42 |
| PGIY-2-O4 | 6,00 % | | |
| PY-3-O2 | 9,00 % | | |
| PYP-2-3 | 1,00 % | | |

enthält zusätzlich 0,02 % ST-2a-1.

### Beispiel M367

Die flüssigkristalline Mischung

| | | | |
|---|---|---|---|
| B-2O-O5 | 4,00 % | Klärpunkt [°C]: | 70,2 |
| CC-3-V | 40,00 % | Δn [589 nm, 20 °C]: | 0,1066 |
| CC-3-V1 | 6,00 % | Δε [1 kHz, 20 °C]: | -2,5 |
| CC-4-V | 3,50 % | ε_{⊥} [1 kHz, 20°C]: | 6,0 |
| CCP-V-1 | 3,00 % | K₁ [pN, 20 °C]: | 12,8 |
| CLY-3-O2 | 8,00 % | K₃ [pN, 20 °C]: | 13,2 |
| CPY-2-O2 | 4,50 % | γ₁ [mPa·s, 20 °C]: | 69 |
| CPY-3-O2 | 10,00 % | V₀ [20 °C, V]: | 2,43 |
| PGIY-2-O4 | 6,00 % | | |
| PYP-2-3 | 9,00 % | | |
| Y-4O-O4 | 6,00 % | | |

enthält zusätzlich 0,03 % ST-3a-1.

### Beispiel M368

Die flüssigkristalline Mischung

| | | | |
|---|---|---|---|
| CY-3-O2 | 12,00 % | Klärpunkt [°C]: | 74,8 |
| CY-5-O2 | 12,00 % | Δn [589 nm, 20 °C]: | 0,1026 |
| CCY-3-O2 | 3,50 % | Δε [1 kHz, 20 °C]: | -4,0 |
| CLY-3-O2 | 10,00 % | ε_{⊥} [1 kHz, 20°C]: | 7,9 |
| CPY-2-O21 | 10,00 % | K₁ [pN, 20 °C]: | 12,8 |
| CPY-3-O2 | 10,00 % | K₃ [pN, 20 °C]: | 14,2 |
| B-2O-O5 | 5,00 % | γ₁ [mPa·s, 20 °C]: | 83 |
| CC-3-V | 32,00 % | V₀ [20 °C, V]: | 1,98 |
| BCH-32 | 5,50 % | | |

enthält zusätzlich 0,03 % ST-3a-1.

### Beispiel M369

Die flüssigkristalline Mischung

| | | | |
|---|---|---|---|
| B-2O-O5 | 4,00 % | Klärpunkt [°C]: | 74,2 |
| BCH-32 | 8,00 % | Δn [589 nm, 20 °C]: | 0,1089 |
| CC-3-V1 | 9,00 % | Δε [1 kHz, 20 °C]: | -3,1 |
| CCH-301 | 2,00 % | ε_{⊥} [1 kHz, 20°C]: | 6,7 |
| CCH-34 | 9,00 % | K₁ [pN, 20 °C]: | 14,1 |
| CCH-35 | 7,00 % | K₃ [pN, 20 °C]: | 16,5 |
| CCP-3-1 | 8,50 % | γ₁ [mPa·s, 20 °C]: | 109 |
| CCY-3-O2 | 11,00 % | V₀ [20 °C, V]: | 2,43 |
| CLY-3-O2 | 0,50 % | | |
| CPY-3-O2 | 6,50 % | | |
| CY-3-O2 | 10,00 % | | |
| PCH-301 | 9,00 % | | |
| PY-3-O2 | 15,50 % | | |

enthält zusätzlich 0,015 % ST-3a-1.

### Beispiel M370

Die flüssigkristalline Mischung

| | | | |
|---|---|---|---|
| B-2O-O5 | 4,00 % | Klärpunkt [°C]: | 74,2 |
| BCH-32 | 8,00 % | Δn [589 nm, 20 °C]: | 0,1094 |
| CC-3-V1 | 9,00 % | Δε [1 kHz, 20 °C]: | -3,1 |
| CCH-301 | 2,00 % | ε_{⊥} [1 kHz, 20°C]: | 6,7 |
| CCH-34 | 9,00 % | K₁ [pN, 20 °C]: | 14,2 |
| CCH-35 | 7,00 % | K₃ [pN, 20 °C]: | 16,5 |
| CCP-3-1 | 8,50 % | γ₁ [mPa·s, 20 °C]: | 108 |
| CCY-3-O2 | 10,00 % | V₀ [20 °C, V]: | 2,43 |
| CLY-3-O2 | 1,50 % | | |
| CPY-3-O2 | 6,50 % | | |
| CY-3-O2 | 10,00 % | | |
| PCH-301 | 9,00 % | | |
| PY-3-O2 | 15,50 % | | |

enthält zusätzlich 0,015 % ST-3a-1.

### Beispiel M371

Die flüssigkristalline Mischung

| | | | |
|---|---|---|---|
| CC-3-V | 44,50 % | Klärpunkt [°C]: | 74,0 |
| CCY-3-O2 | 11,00 % | Δn [589 nm, 20°C]: | 0,1010 |
| CPY-2-O2 | 9,50 % | Δε [1 kHz, 20°C]: | -3,7 |
| CPY-3-O2 | 11,00 % | ε_{∥} [1 kHz, 20°C]: | 3,7 |
| CY-3-O2 | 13,00 % | ε_{⊥} [1 kHz, 20°C]: | 7,4 |
| PGIY-2-O4 | 4,00 % | K₁ [pN, 20°C]: | 13,0 |
| B-2O-O5 | 4,00 % | K₃ [pN, 20°C]: | 14,5 |
| B(S)-2O-O4 | 3,00 % | γ₁ [mPa·s, 20°C]: | 83 |
| | | V₀ [20°C, V]: | 2,09 |

enthält zusätzlich 0,02 % ST-8-1.

Die Mischungen der Beispiele M1 bis M371 enthaltend ein oder mehrere Stabilisatoren zeichnen sich durch eine sehr gute Reliability aus.

## Patentansprüche

1. Flüssigkristallines Medium, **dadurch gekennzeichnet, dass** das Medium mindestens eine Verbindung der Formeln I-1 bis I-20, 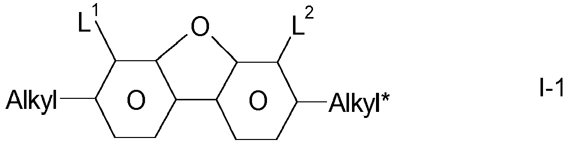 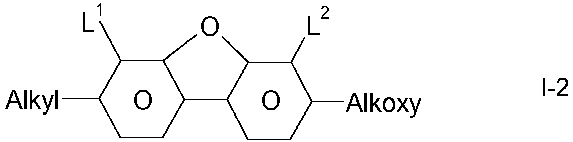 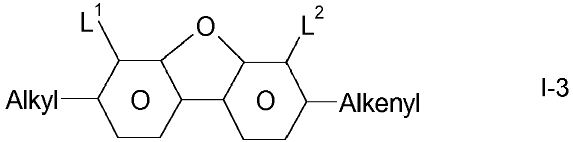 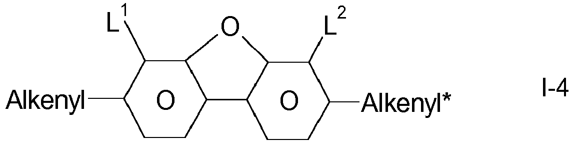 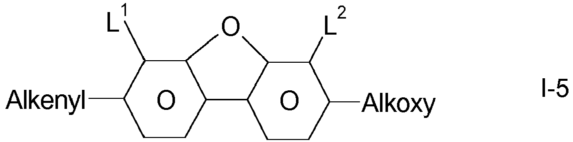 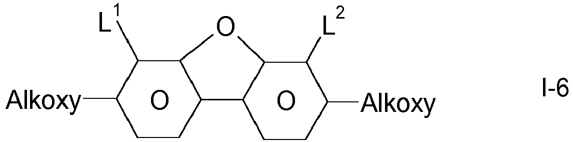 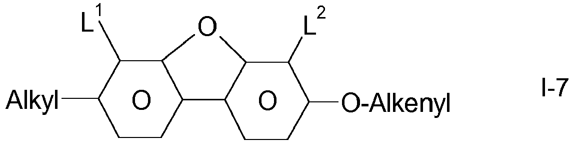 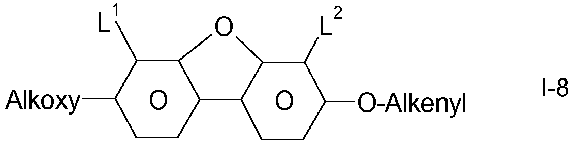 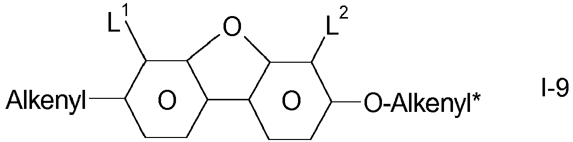 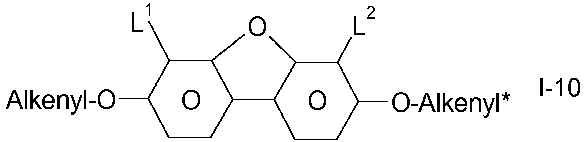 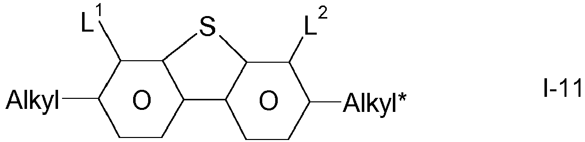 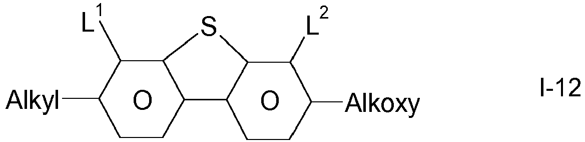 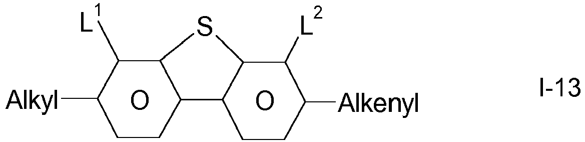 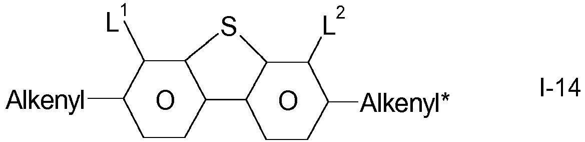 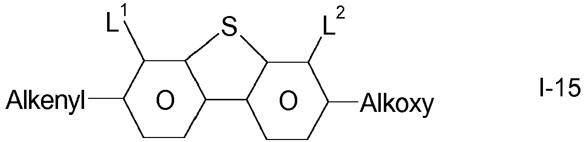 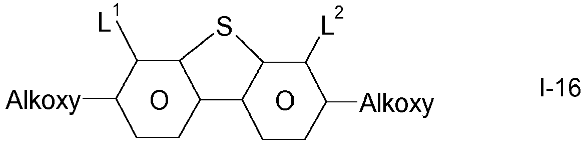 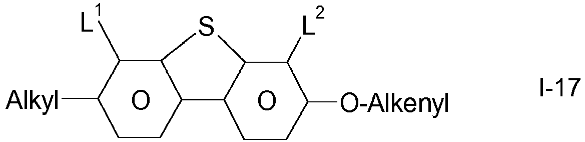 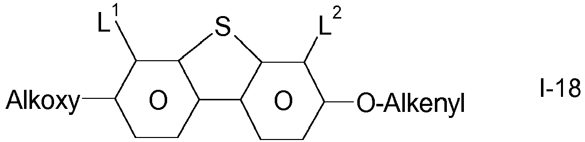 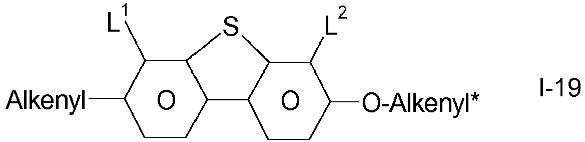 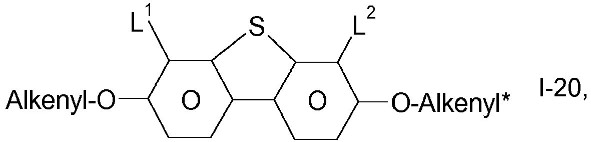 worin
Alkyl und Alkyl* jeweils unabhängig voneinander einen geradkettigen Alkylrest mit 1-6 C-Atomen,
Alkenyl und Alkenyl* jeweils unabhängig voneinander einen geradkettigen Alkenylrest mit 2-6 C-Atomen,
Alkoxy und Alkoxy* jeweils unabhängig voneinander einen geradkettigen Alkoxyrest mit 1-6 C-Atomen, und
L¹ und L² jeweils unabhängig voneinander F, Cl, CF₃ oder CHF₂,
bedeuten,
enthält,
und mindestens eine Verbindung ausgewählt aus der Gruppe der Verbindungen der Formeln ST 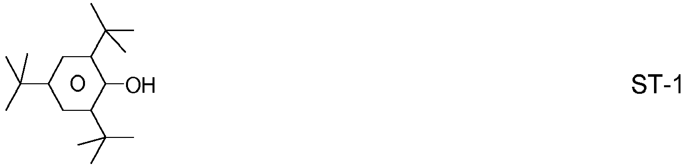 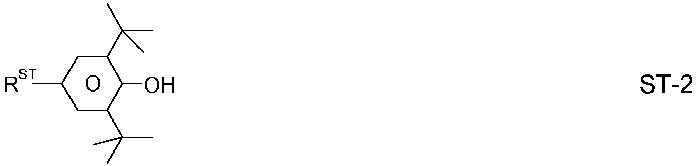 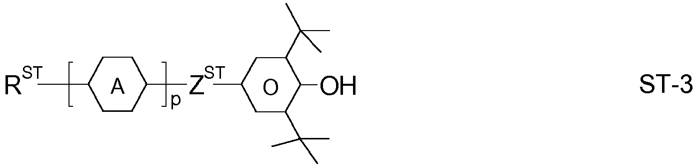 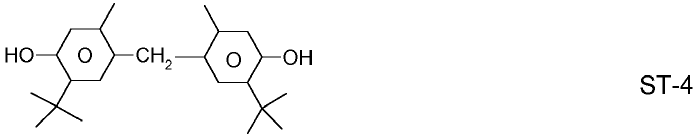 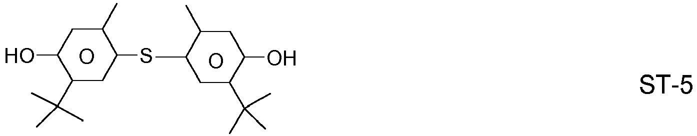 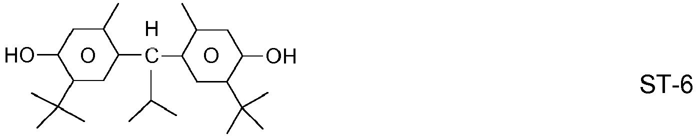 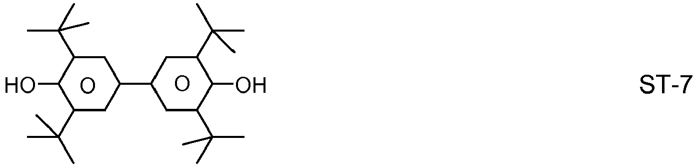 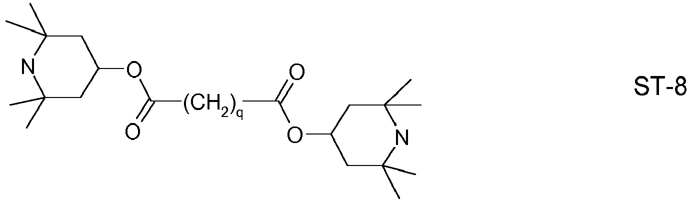 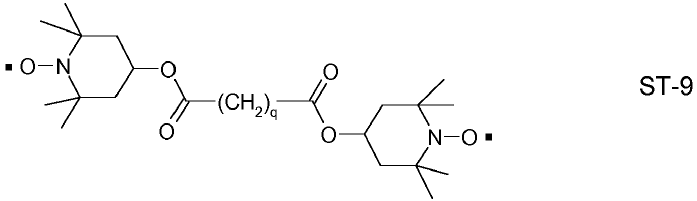 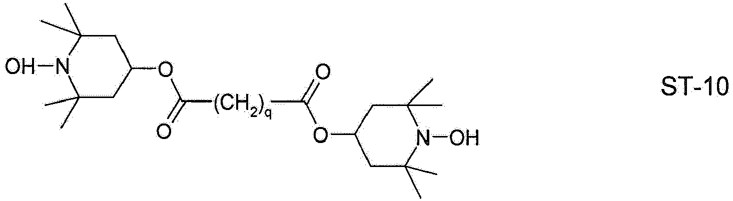 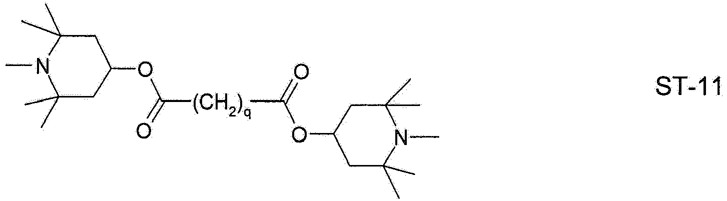 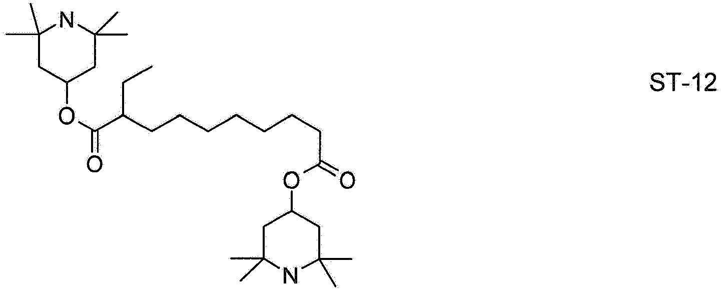 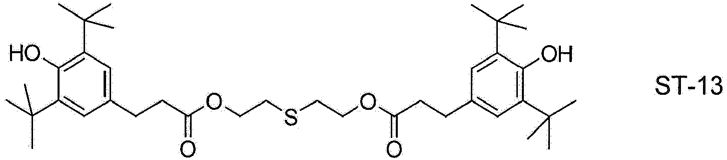 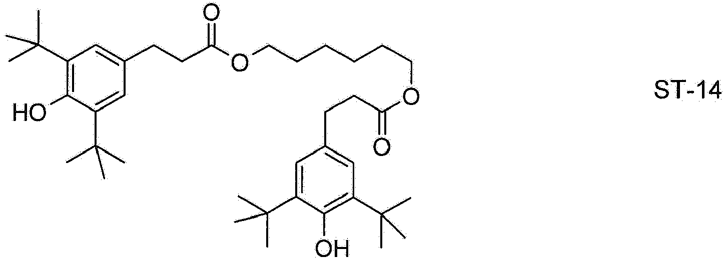 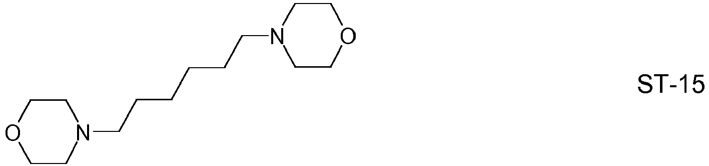 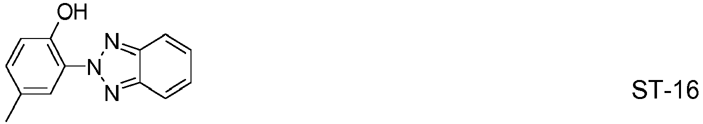 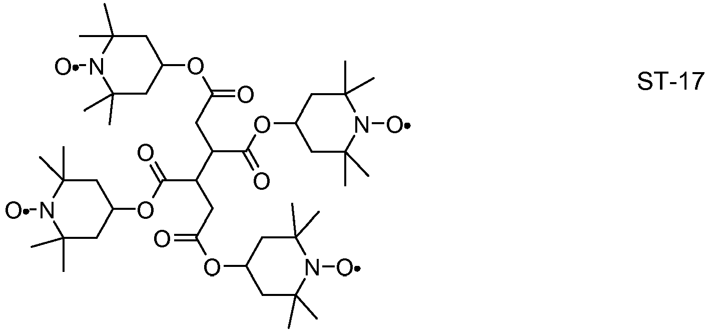 worin
R^{ST} H, einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -OCF₂-, -CH=CH-, 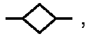 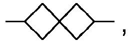 -O-, -CO-O-, -O-CO- so ersetzt sein können, dass O-Atome nicht direkt miteinander verknüpft sind, und worin auch ein oder mehrere H-Atome durch Halogen ersetzt sein können, 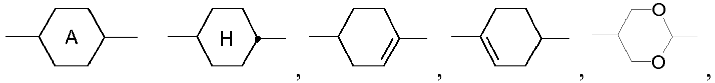 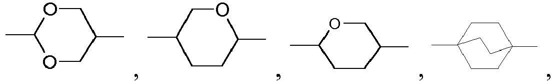 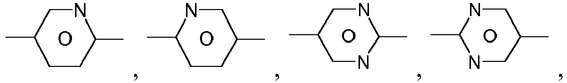 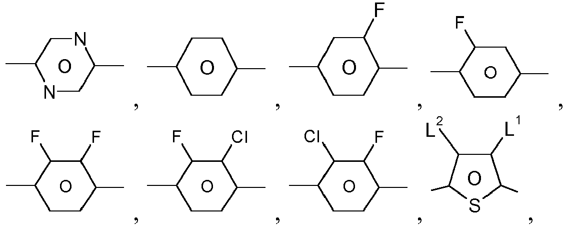 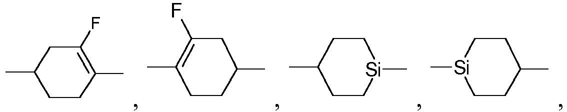 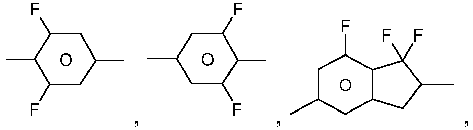 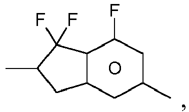 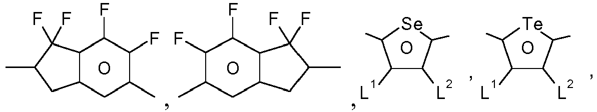 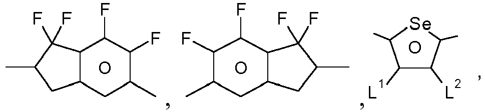 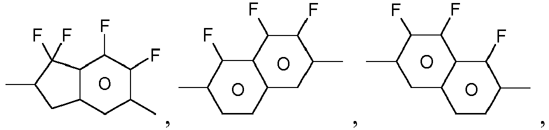 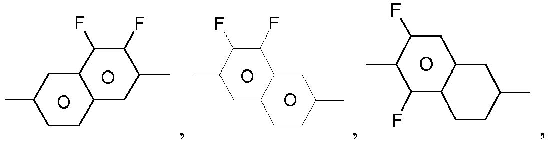 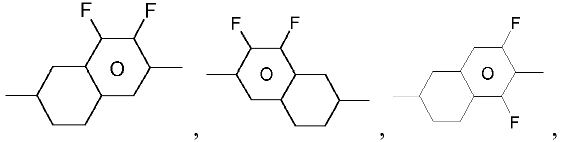 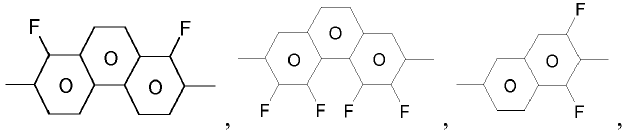 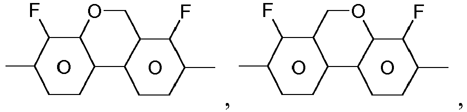 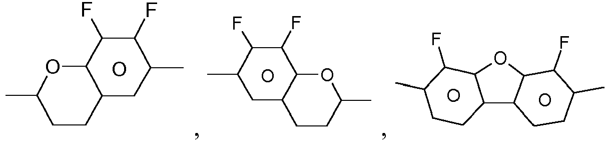
Z^{ST} jeweils unabhängig voneinander -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF= CH-, -CH=CH-, -C≡C- oder eine Einfachbindung,
L¹ und L² jeweils unabhängig voneinander F, Cl, CF₃ oder CHF₂,
p 1 oder 2,
q 1, 2, 3, 4, 5, 6, 7, 8 ,8 oder 10
bedeuten,
enthält,
und das Medium zusätzlich eine oder mehrere Verbindungen der L-1 bis L-11, 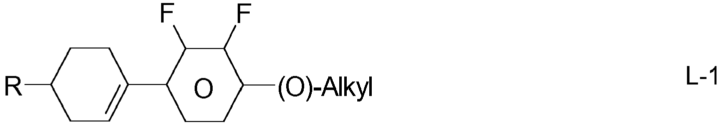 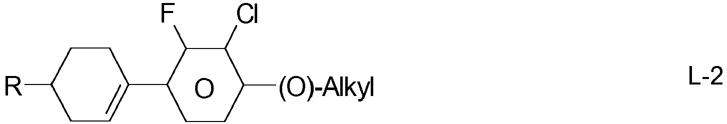 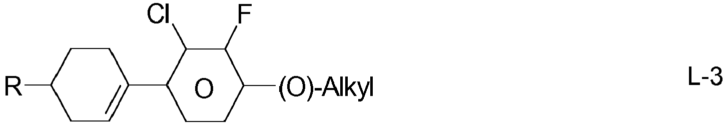 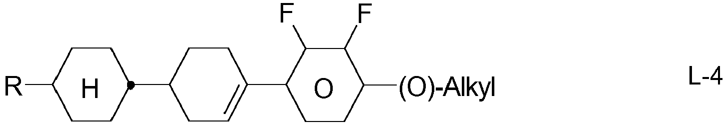 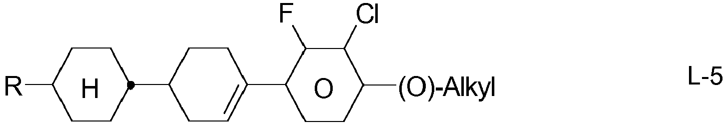 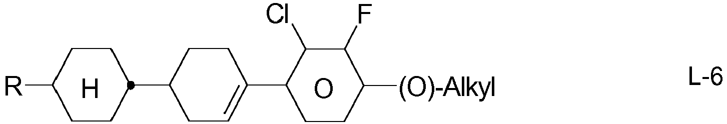 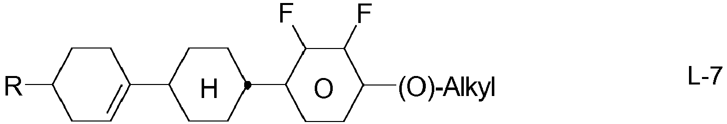 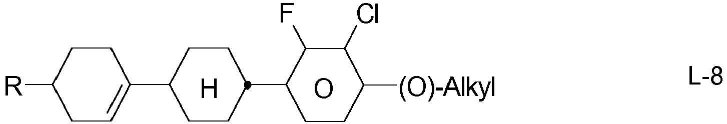 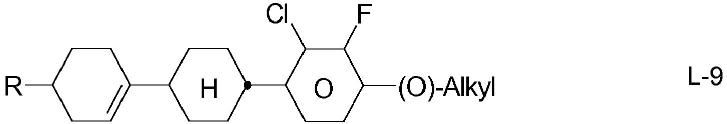 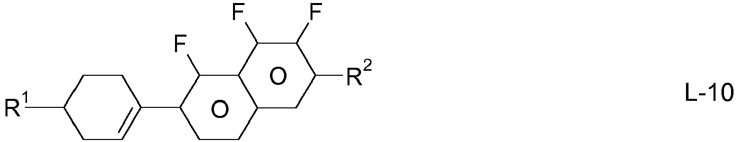 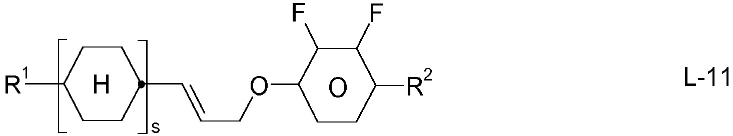 worin
R, R¹ und R² jeweils unabhängig voneinander die für R^{2A} in Anspruch 4 angegebenen Bedeutungen haben und Alkyl ein Alkylrest mit 1-6 C-Atomen, und
s 1 oder 2
bedeuten,
enthält.

2. Flüssigkristallines Medium nach Anspruch 1, **dadurch gekennzeichnet, dass** in der Formeln I-1 bis I-20 L¹ und L² jeweils F bedeuten.

3. Flüssigkristallines Medium nach Anspruch 1 oder 2, **dadurch gekennzeichnet, dass** es eine oder mehrere Verbindungen ausgewählt aus der Gruppe der Verbindungen der Formeln ST-1, ST-2a, ST-3a, ST-3b, ST-8-1, ST-9-1, ST-12, ST-15, ST-16 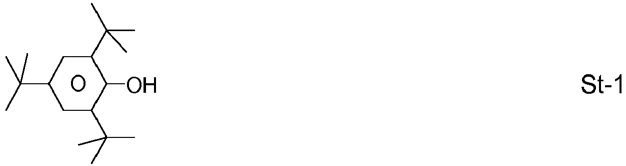 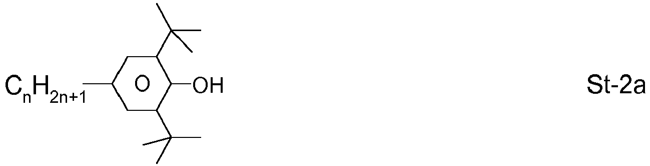 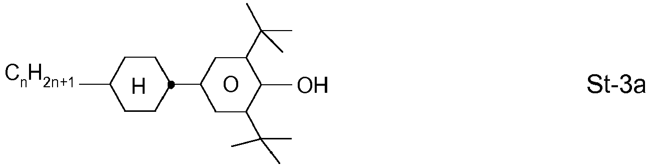 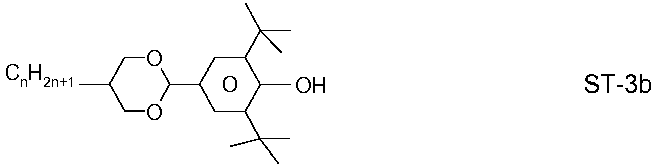 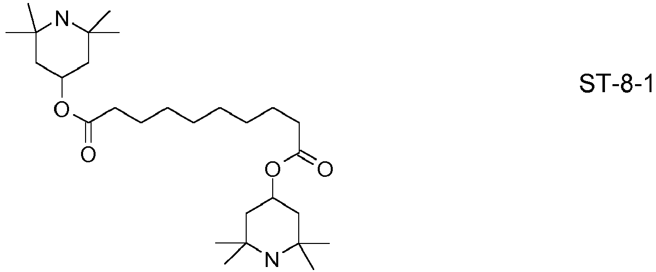 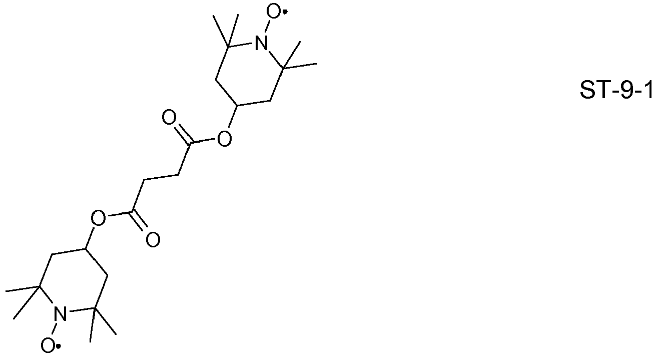 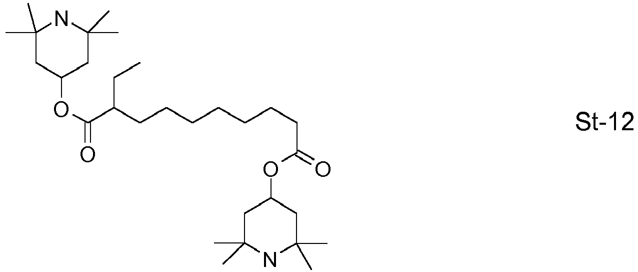 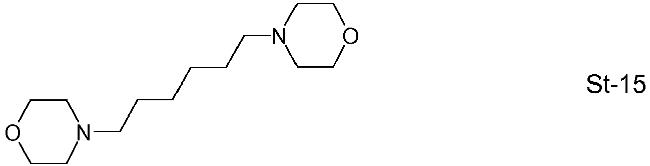 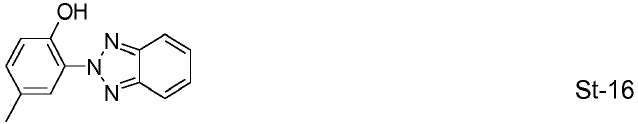 wobei n = 1, 2, 3, 4, 5, 6, oder 7 bedeutet,
enthält.

4. Flüssigkristallines Medium nach einem oder mehreren der Ansprüche 1 bis 3, **dadurch gekennzeichnet, dass** es zusätzlich eine oder mehrere Verbindungen ausgewählt aus der Gruppe der Verbindungen der Formeln IIA, IIB und IIC, 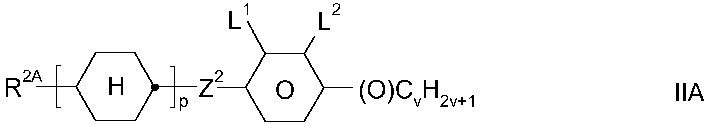 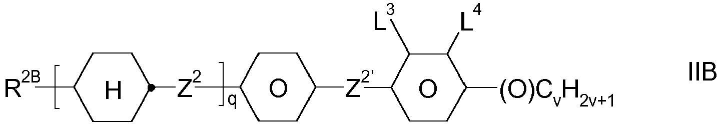 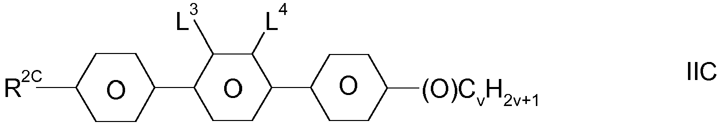 worin
R^{2A}, R^{2B} und R^{2C} jeweils unabhängig voneinander H, einen unsubstituierten, einen einfach durch CN oder CF₃ oder mindestens einfach durch Halogen substituierten Alkyl- oder Alkenlyrest mit bis zu 15 C-Atomen, wobei in diesen Resten auch eine oder mehrere CH₂-Gruppen durch -O-, -S-, 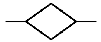 , -C≡C-, -CF₂O-, -OCF₂-, -OC-O- oder-O-CO- so ersetzt sein können, dass O-Atome nicht direkt miteinander verknüpft sind,
L¹⁻⁴ jeweils unabhängig voneinander F oder Cl,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p 0, 1 oder 2,
q 0 oder 1, und
v 1 bis 6
bedeuten,
enthält.

5. Flüssigkristallines Medium nach einem oder mehreren der Ansprüche 1 bis 4, **dadurch gekennzeichnet, dass** das Medium zusätzlich eine oder mehrere Verbindungen der Formel III, 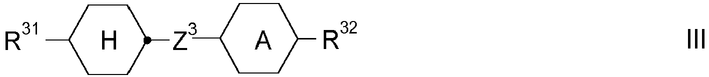 worin
R³¹ und R³² jeweils unabhängig voneinander einen geradkettigen Alkyl-, Alkoxyalkyl- oder Alkoxyrest mit bis zu 12 C-Atomen, und 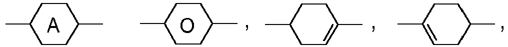 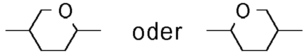
Z³ Einfachbindung, -CH₂CH₂-, -CH=CH-, -CF₂O-, -OCF₂-, - CH₂O-, -OCH₂-, -COO-, -OCO-, -C₂F₄-, -C₄H₉-, -CF=CF-
bedeuten,
enthält.

6. Flüssigkristallines Medium nach einem oder mehreren der Ansprüche 1 bis 5, **dadurch kennzeichnet, dass** das Medium zusätzlich eine oder mehrere Terphenyle der Formeln T-1 bis T-21, 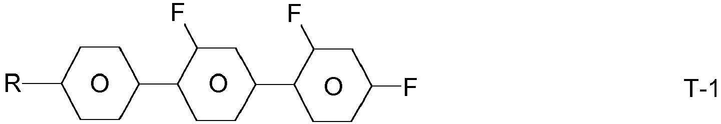 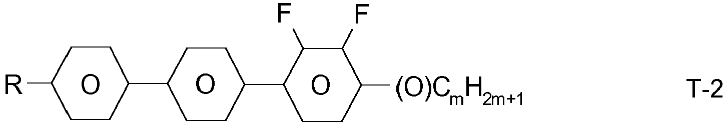 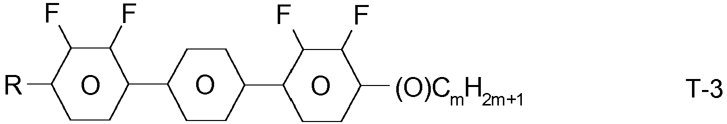 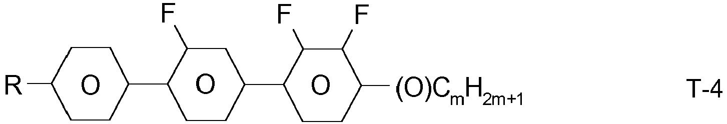 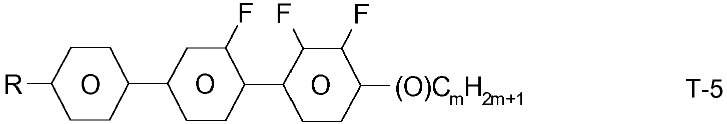 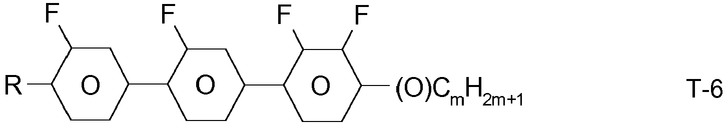 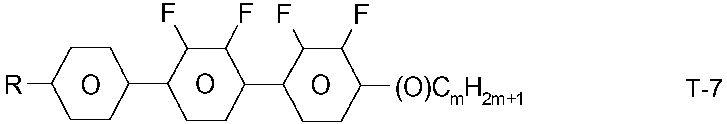 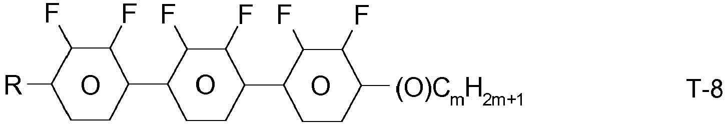 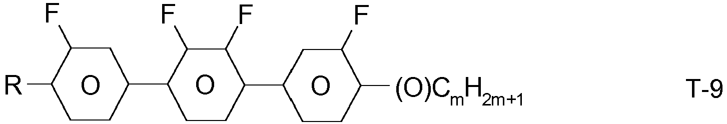 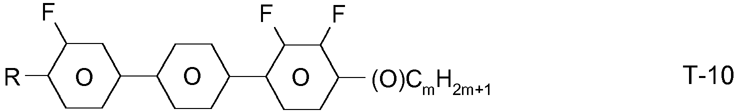 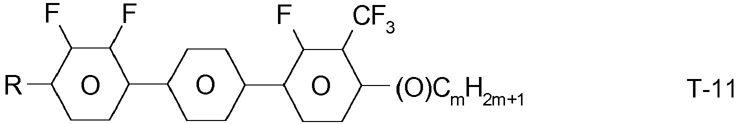 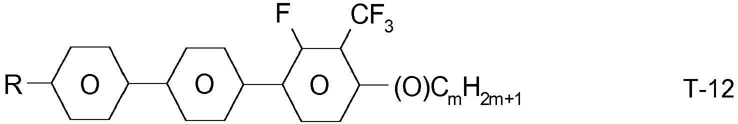 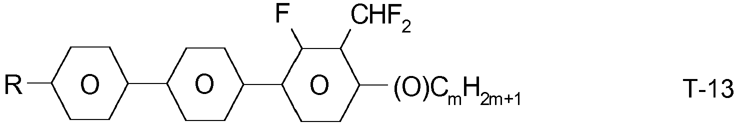 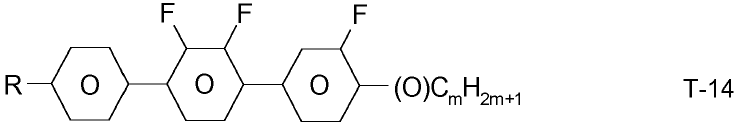 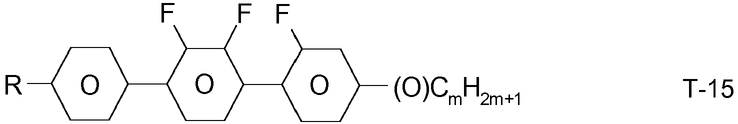 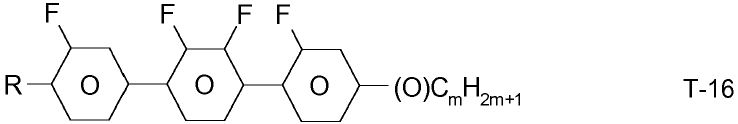 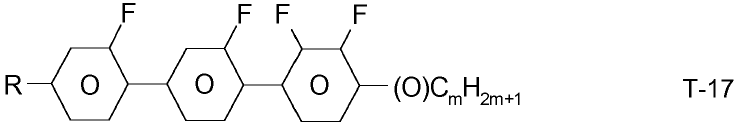 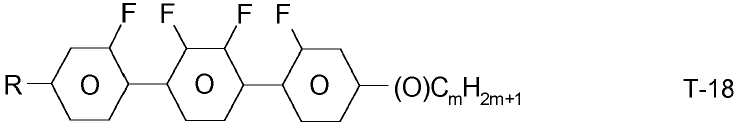 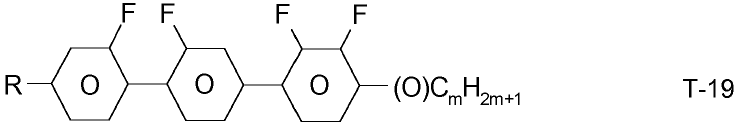 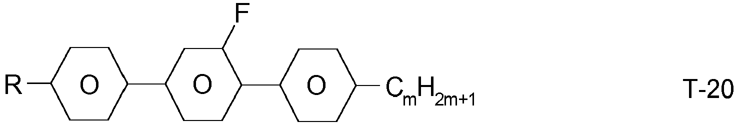 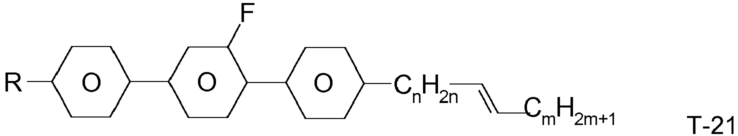 worin
R geradkettiger Alkyl- oder Alkoxyrest mit 1-6 C-Atomen bedeutet, und
m 1-6
bedeuten,
enthält.

7. Flüssigkristallines Medium nach einem oder mehreren der Ansprüche 1 bis 6, **dadurch gekennzeichnet, dass** das Medium zusätzlich eine oder mehrere Verbindungen der Formeln O-1 bis O-18, 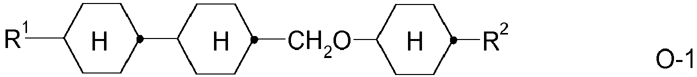 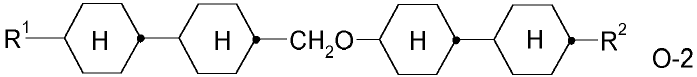 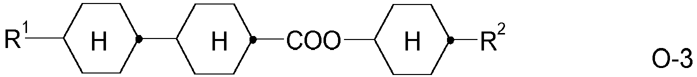 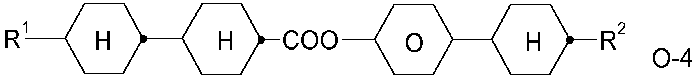 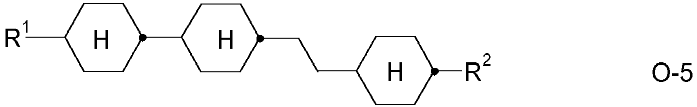 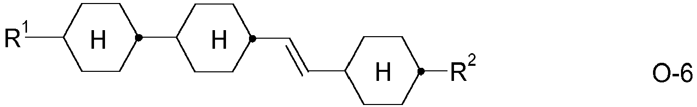 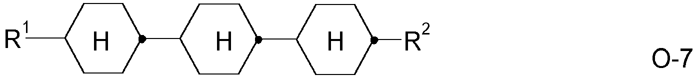 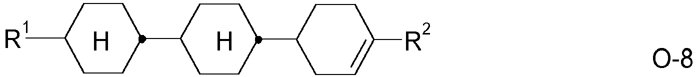 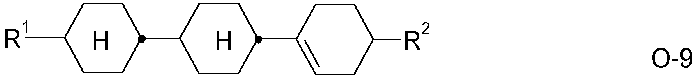 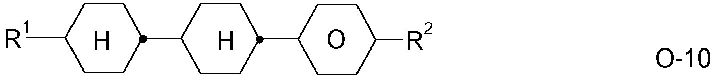 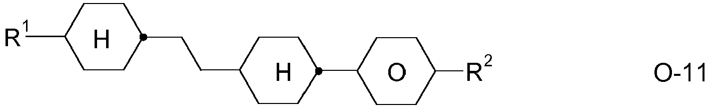 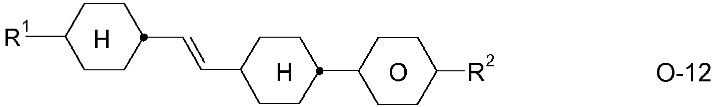 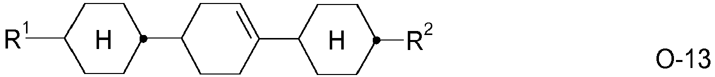 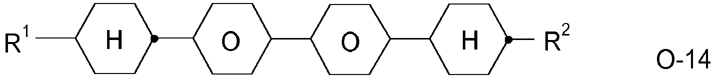 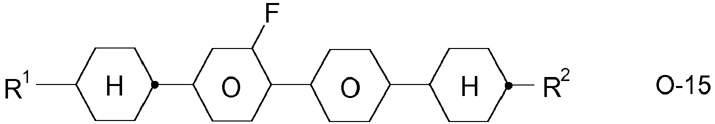 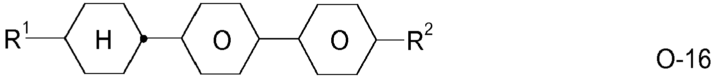 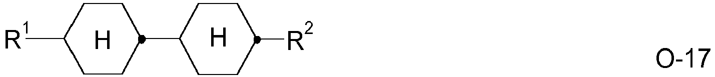 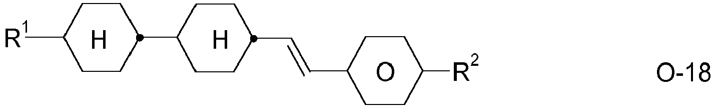 worin
R¹ und R² jeweils unabhängig voneinander die für R^{2A} in Anspruch 4 angegebenen Bedeutungen haben,
enthält.

8. Flüssigkristallines Medium nach einem oder mehreren der Ansprüche 1 bis 7, **dadurch gekennzeichnet, dass** das Medium zusätzlich eine oder mehrere Verbindungen ausgewählt aus der Gruppe der Verbindungen der Formeln O-6, O-7 und O-17, 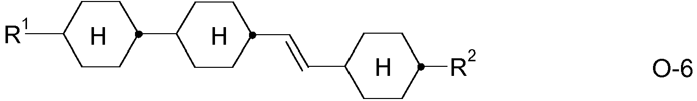 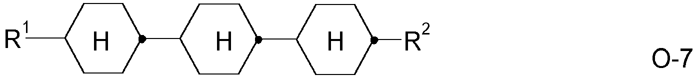 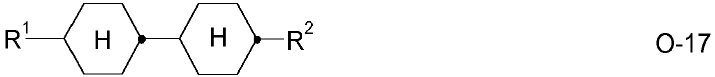 worin
R¹ Alkyl oder Alkenyl mit 1-6 bzw. 2-6 C-Atomen und R² Alkenyl mit 2-6 C-Atomen bedeuten,
enthält.

9. Flüssigkristallines Medium nach einem oder mehreren der Ansprüche 1 bis 8, **dadurch gekennzeichnet, dass** das Medium zusätzlich eine oder mehrere Indan-Verbindungen der Formel In, 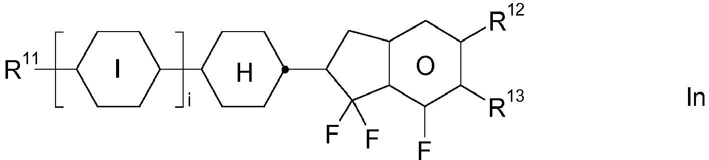 worin
R¹¹, R¹², R¹³ ein geradkettiger Alkyl-, oder Alkoxy-, Alkoxyalkyl-, Alkenylrest und 1-5 C-Atomen,
R¹² und R¹³ zusätzlich auch Halogen, 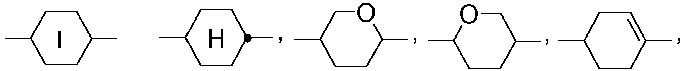 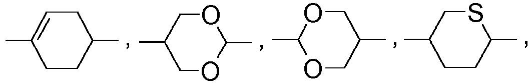 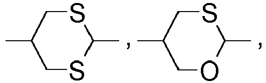
i 0, 1 oder 2
bedeuten,
enthält.

10. Flüssigkristallines Medium nach einem oder mehreren der Ansprüche 1 bis 9, **dadurch gekennzeichnet, dass** das Medium zusätzlich eine oder mehrere Verbindungen der Formeln BF1 und BF-2, 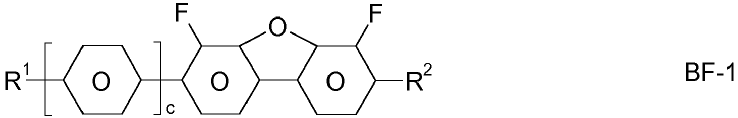 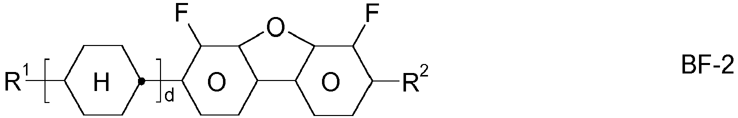 worin
R¹, und R² jeweils unabhängig voneinander die Bedeutung von R^{2A} aufweisen,
c 0, 1 oder 2 und
d 1 oder 2
bedeuten,
enthält.

11. Flüssigkristallines Medium nach einem oder mehreren der Ansprüche 1 bis 10, **dadurch gekennzeichnet, dass** der Anteil an Verbindungen der Formel I im Gesamtgemisch 1 - 40 Gew.% beträgt.

12. Flüssigkristallines Medium nach einem oder mehreren der Ansprüche 1 bis 11, **dadurch gekennzeichnet, dass** das Medium mindestens eine polymerisierbare Verbindung enthält.

13. Flüssigkristallines Medium nach einem oder mehreren der Ansprüche 1 bis 12, **dadurch gekennzeichnet, dass** das Medium ein oder mehrere Additive enthält.

14. Flüssigkristallines Medium nach einem oder mehreren der Ansprüche 1 bis 13, **dadurch gekennzeichnet, dass** das Additiv ausgewählt ist aus der Gruppe Radikalfänger, Antioxidans und/oder UV-Stabilisator.

15. Verfahren zur Herstellung eines flüssigkristallinen Mediums nach einem oder mehreren der Ansprüche 1 bis 14, **dadurch gekennzeichnet, dass** man mindestens eine Verbindung der Formel I mit mindestens einer weiteren flüssigkristallinen Verbindung mischt und gegebenenfalls ein oder mehrere Additive und gegebenfalls mindestens eine polymerisierbare Verbindung zusetzt.

16. Verwendung des flüssigkristallinen Mediums nach einem oder mehreren der Ansprüche 1 bis 14 in elektrooptischen Anzeigen.

17. Elektrooptische Anzeige mit einer Aktivmatrix-Addressierung, **dadurch gekennzeichnet, dass** sie als Dielektrikum ein flüssigkristallines Medium nach einem oder mehreren der Ansprüche 1 bis 14 enthält.

18. Elektrooptische Anzeige nach Anspruch 17, **dadurch gekennzeichnet, dass** es sich um eine VA-, PSA-, PA-VA-, SS-VA-, SA-VA-, PS-VA-, PALC-, IPS-, PS-IPS-, FFS-, UB-FFS-, U-IPS-, PS-FFS-Anzeige handelt.

## Claims

1. Liquid-crystalline medium, **characterised in that** the medium comprises at least one compound of the formulae I-1 to I-20, 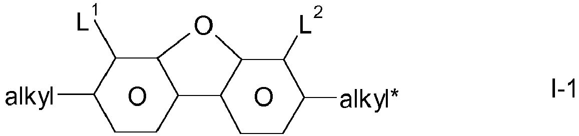 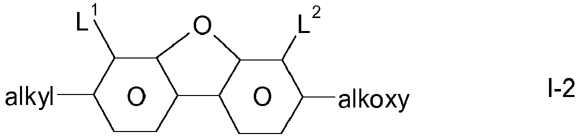 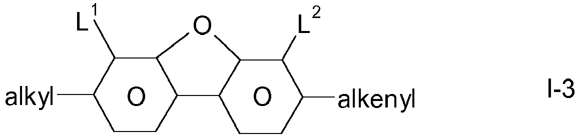 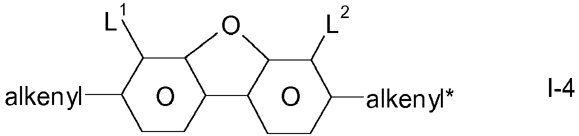 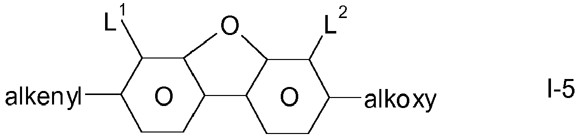 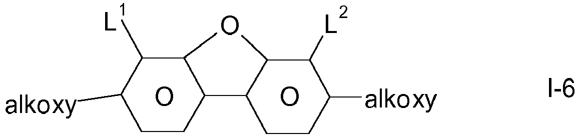 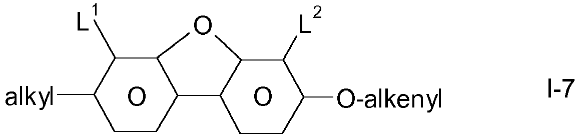 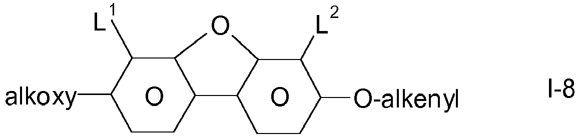 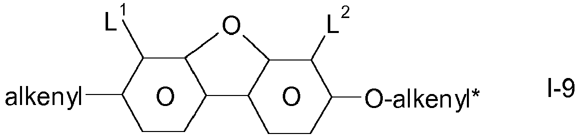 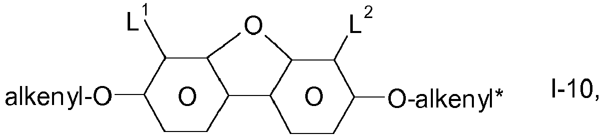 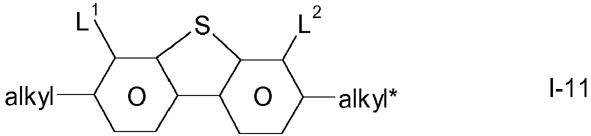 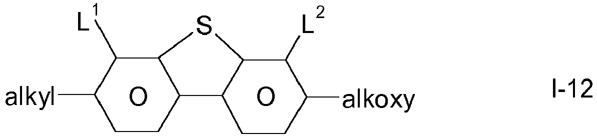 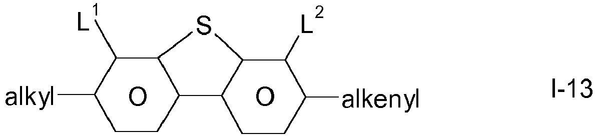 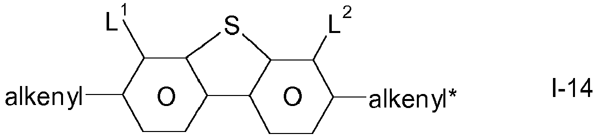 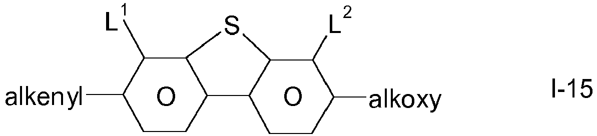 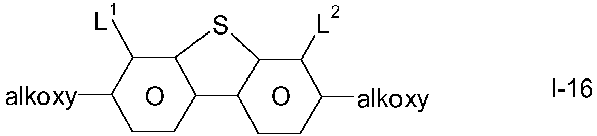 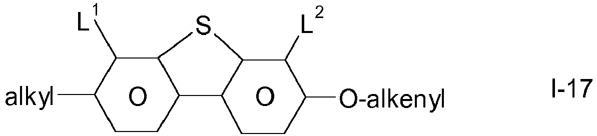 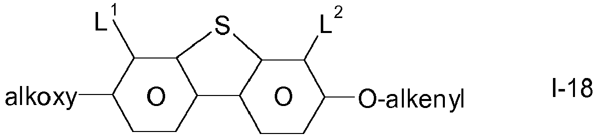 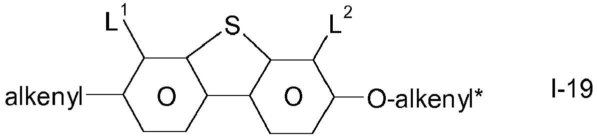 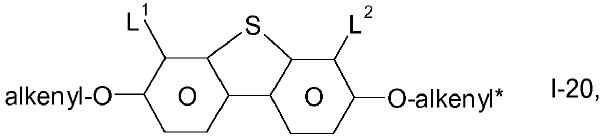 in which
alkyl and alkyl* in each case, independently of one another, denote a straight-chain alkyl radical having 1-6 C atoms,
alkenyl and alkenyl* in each case, independently of one another, denote a straight-chain alkenyl radical having 2-6 C atoms,
alkoxy and alkoxy* in each case, independently of one another, denote a straight-chain alkoxy radical having 1-6 C atoms, and
L¹ and L² in each case, independently of one another, denote F, Cl, CF₃ or CHF₂,
and at least one compound selected from the group of the compounds of the formulae ST 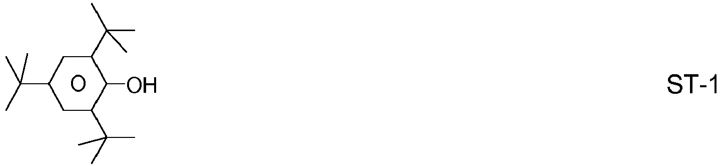 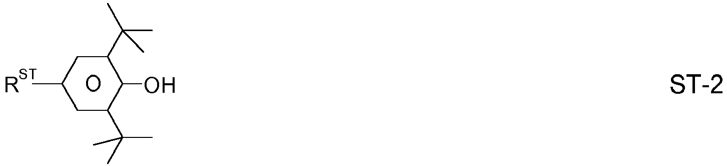 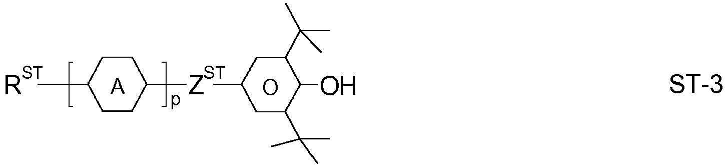 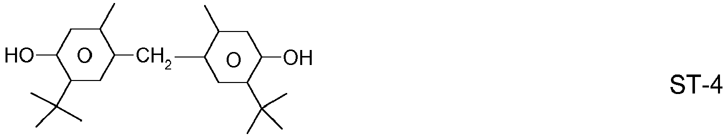 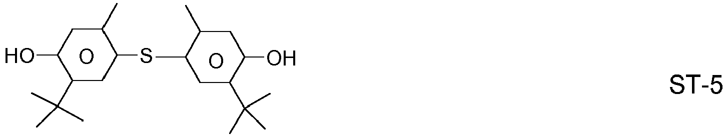 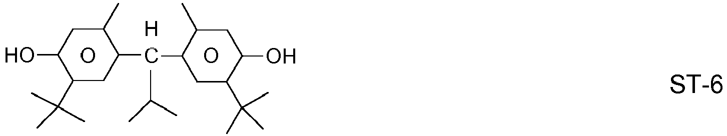 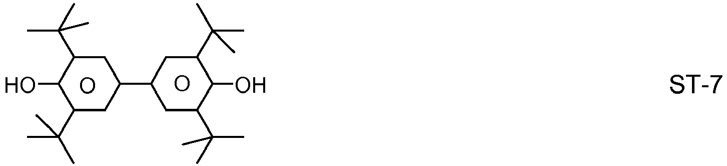 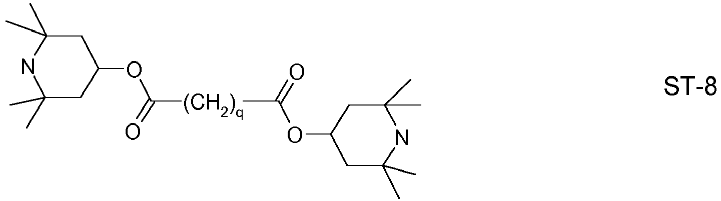 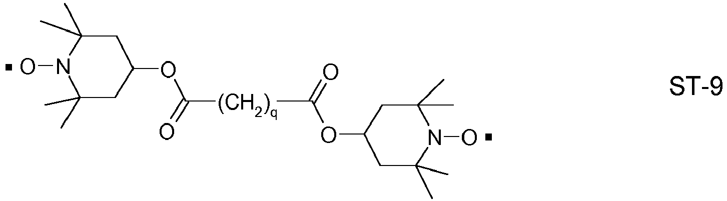 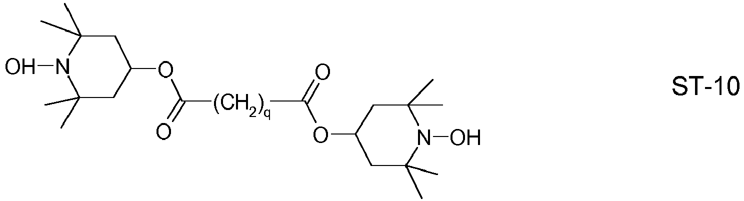 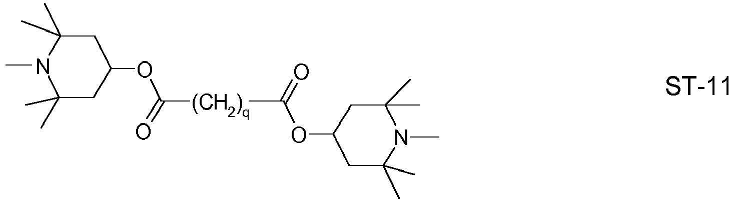 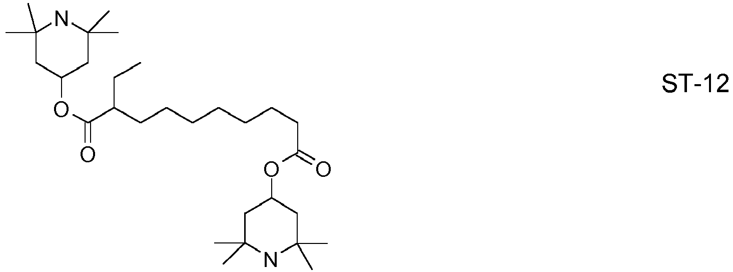 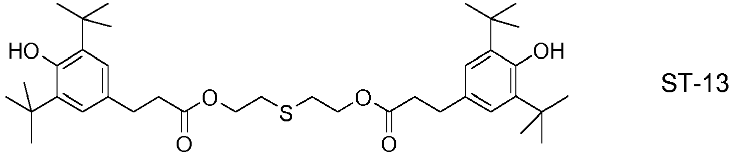 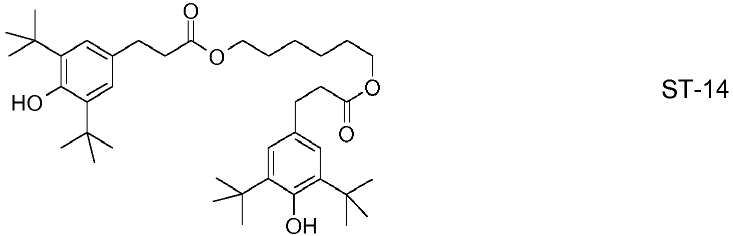 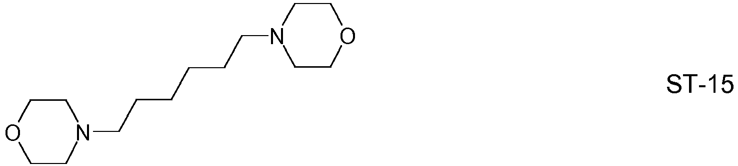 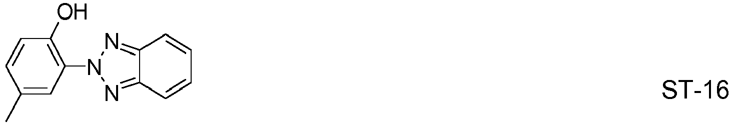 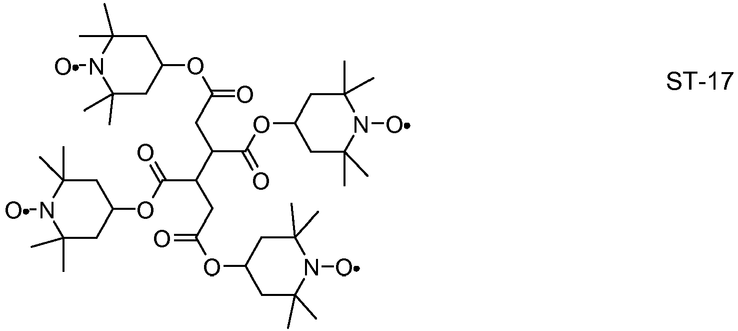 in which
R^{ST} denotes H, an alkyl or alkoxy radical having 1 to 15 C atoms, where, in addition, one or more CH₂ groups in these radicals may each be replaced, independently of one another, by -C≡C-, -CF₂O-, -OCF₂-, -CH=CH-, 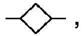 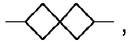 -O-, -CO-O-, -O-CO- in such a way that O atoms are not linked directly to one another, and in which, in addition, one or more H atoms may be replaced by halogen, 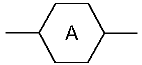 denotes 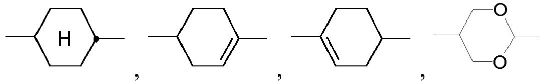 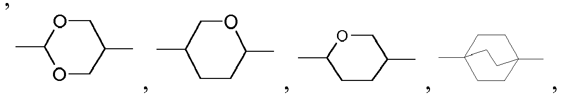 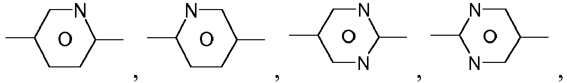 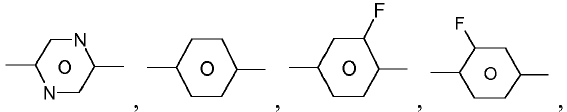 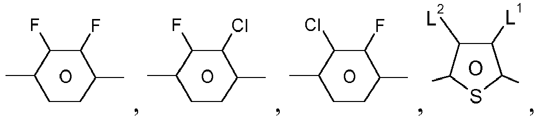 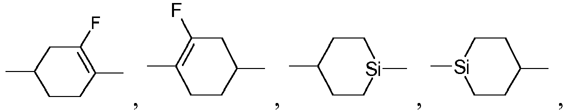 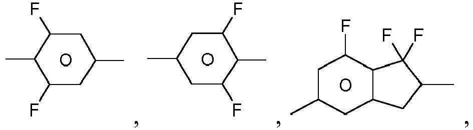 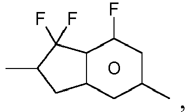 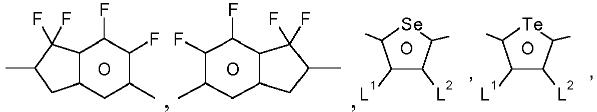 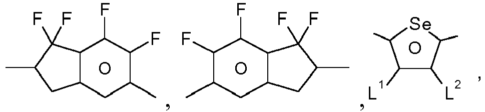 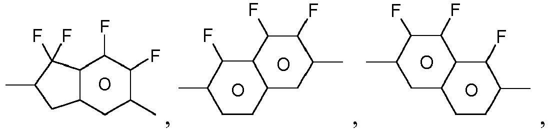 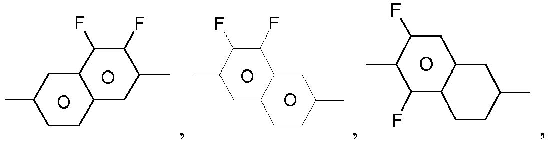 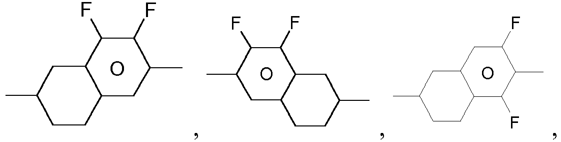 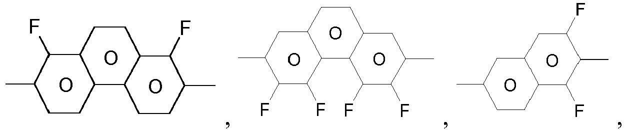 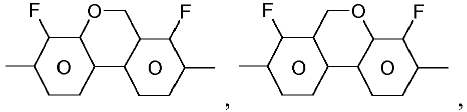 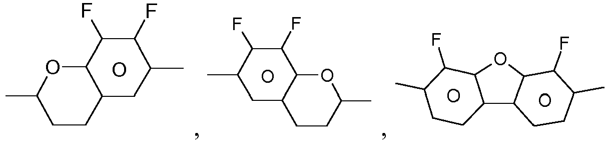
Z^{ST} in each case, independently of one another, denotes -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- or a single bond,
L¹ and L² in each case, independently of one another, denote F, Cl, CF₃ or CHF₂,
p denotes 1 or 2,
q denotes 1, 2, 3, 4, 5, 6, 7, 8, 9 or 10,
and the medium additionally comprises one or more compounds of the formulae L-1 to L-11, 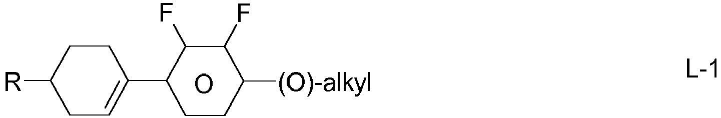 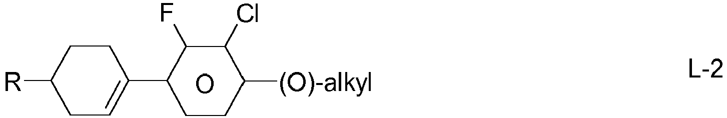 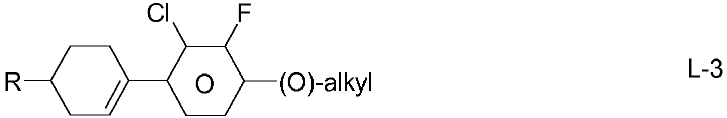 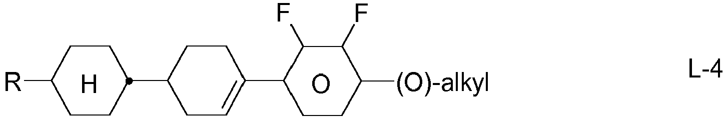 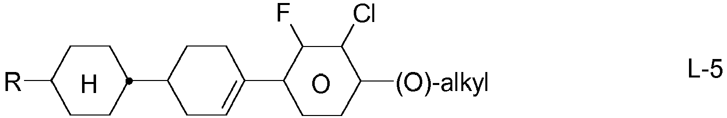 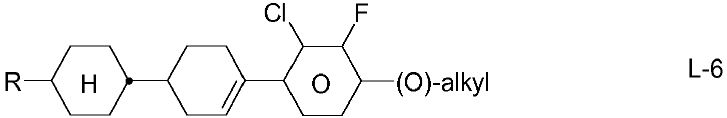 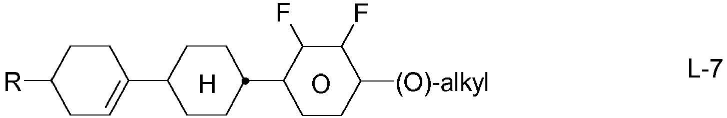 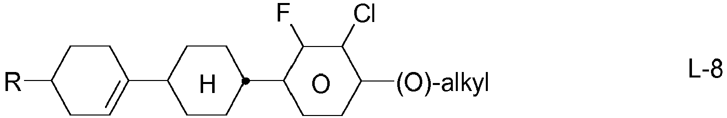 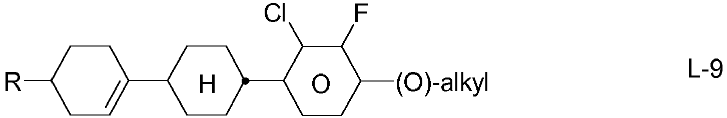 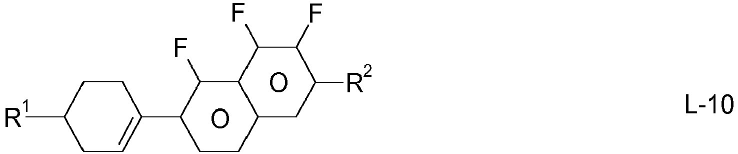 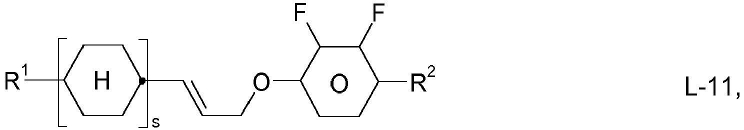 in which
R, R¹ and R² in each case, independently of one another, have the meanings indicated for R^{2A} in Claim 4 and alkyl denotes an alkyl radical having 1-6 C atoms, and
s denotes 1 or 2.

2. Liquid-crystalline medium according to Claim 1, **characterised in that** L¹ and L² in the formulae I-1 to I-20 in each case denote F.

3. Liquid-crystalline medium according to Claim 1 or 2, **characterised in that** it comprises one or more compounds selected from the group of the compounds of the formulae ST-1, ST-2a, ST-3a, ST-3b, ST-8-1, ST-9-1, ST-12, ST-15, ST-16 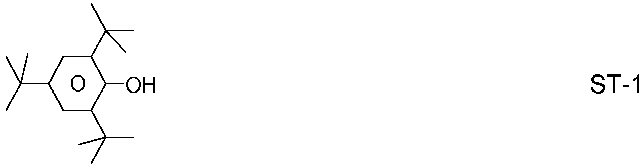 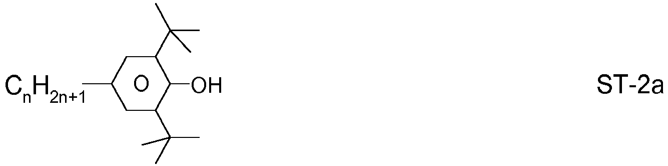 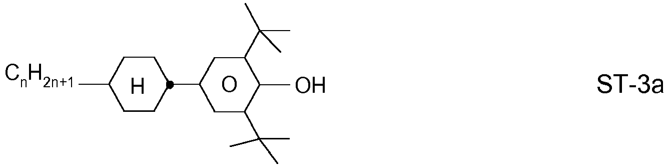 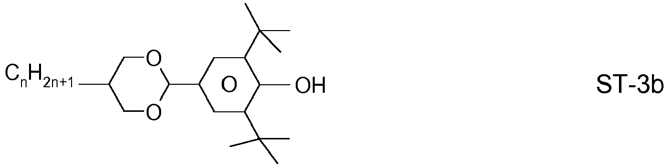 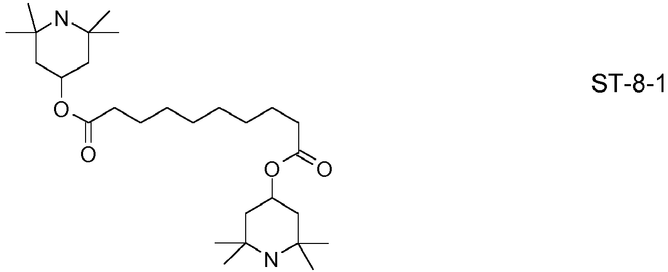 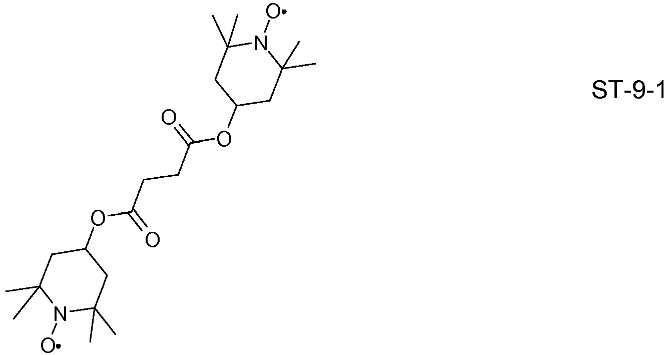 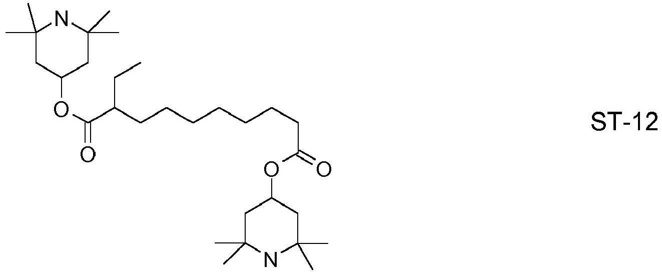 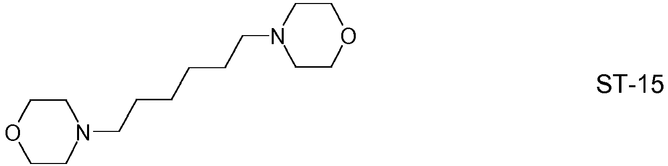 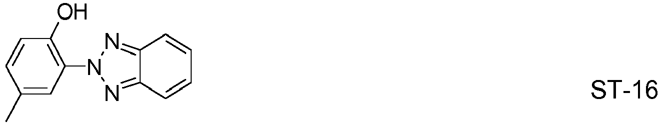 where n = 1, 2, 3, 4, 5, 6 or 7.

4. Liquid-crystalline medium according to one or more of Claims 1 to 3, **characterised in that** it additionally comprises one or more compounds selected from the group of the compounds of the formulae IIA, IIB and IIC, 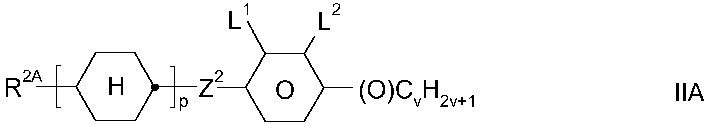 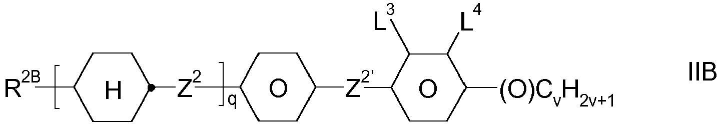 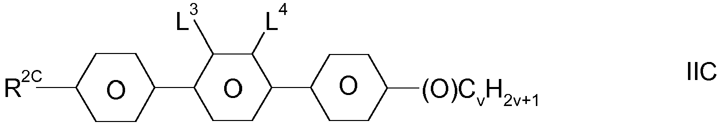 in which
R^{2A}, R^{2B} and R^{2C} in each case, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 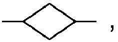 -C≡C-, -CF₂O-, -OCF₂-, -OC-O- or -O-CO- in such a way that O atoms are not linked directly to one another,
L¹⁻⁴ in each case, independently of one another, denote F or Cl,
Z² and Z^{2'} in each case, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p denotes 0, 1 or 2,
q denotes 0 or 1, and
v denotes 1 to 6.

5. Liquid-crystalline medium according to one or more of Claims 1 to 4, **characterised in that** the medium additionally comprises one or more compounds of the formula III, 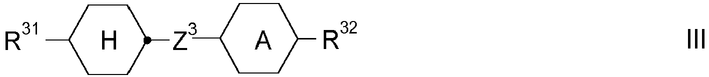 in which
R³¹ and R³² in each case, independently of one another, denote a straight-chain alkyl, alkoxyalkyl or alkoxy radical having up to 12 C atoms, and 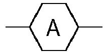 denotes 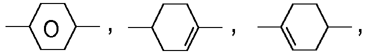 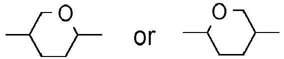
Z³ denotes a single bond, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

6. Liquid-crystalline medium according to one or more of Claims 1 to 5, **characterised in that** the medium additionally comprises one or more terphenyls of the formulae T-1 to T-21, 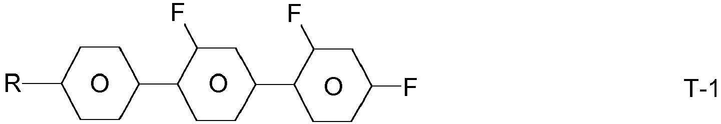 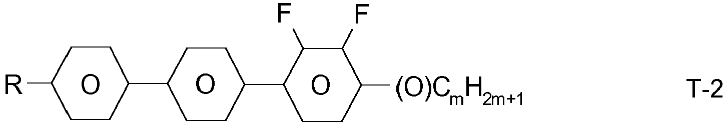 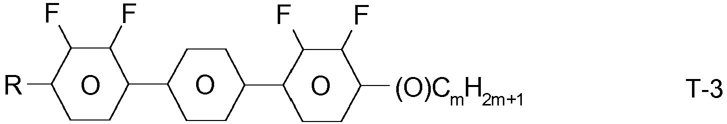 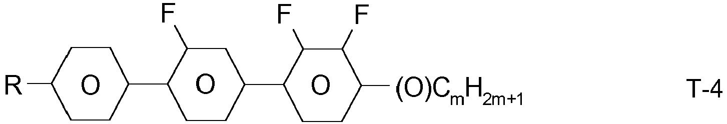 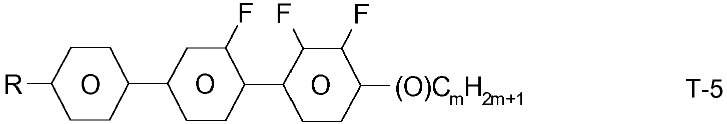 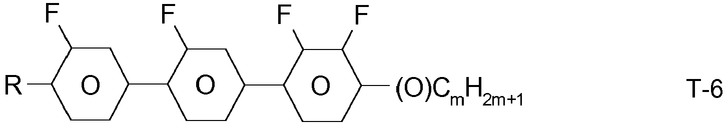 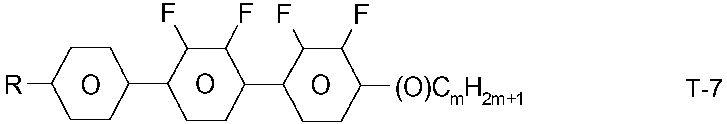 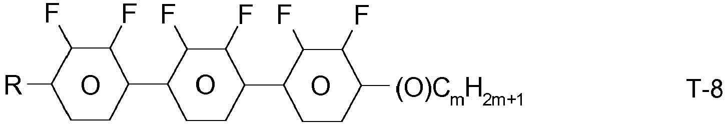 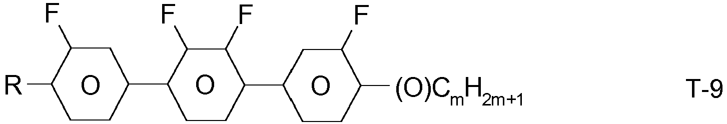 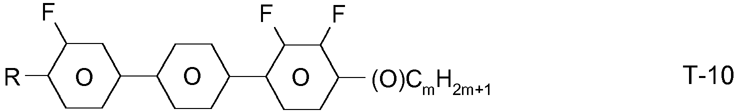 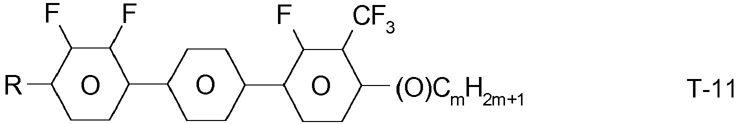 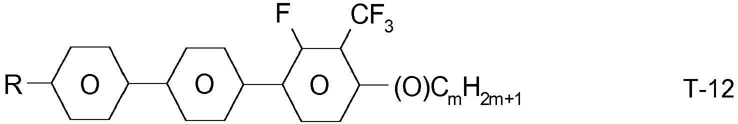 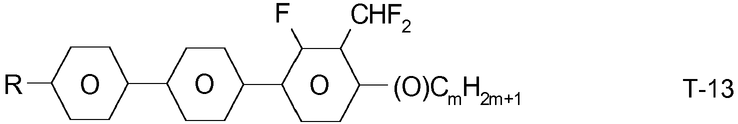 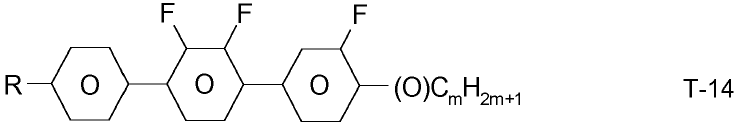 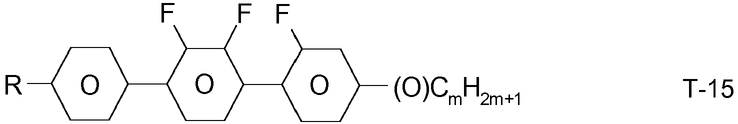 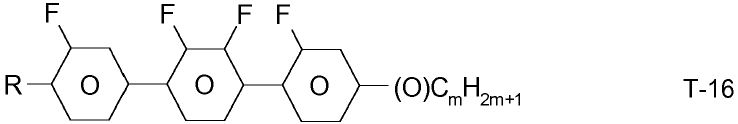 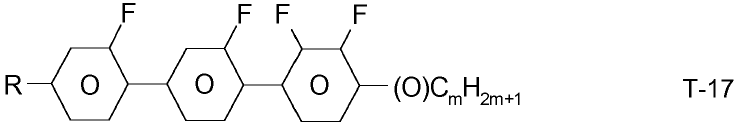 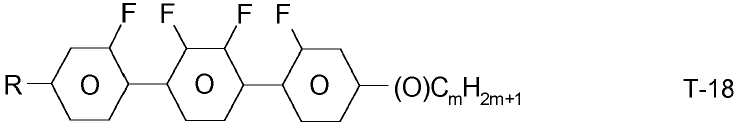 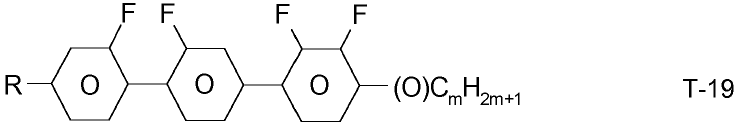 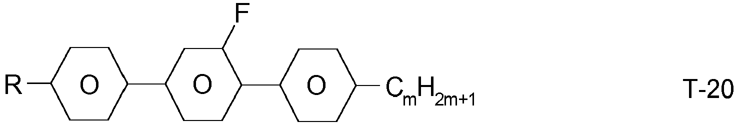 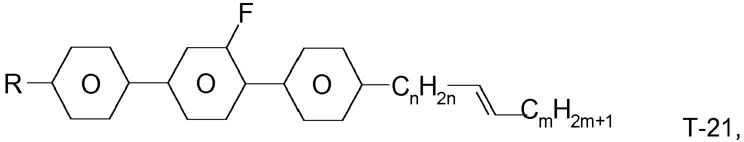 in which
R denotes a straight-chain alkyl or alkoxy radical having 1-6 C atoms, and
m denotes 1-6.

7. Liquid-crystalline medium according to one or more of Claims 1 to 6, **characterised in that** the medium additionally comprises one or more compounds of the formulae 0-1 to 0-18, 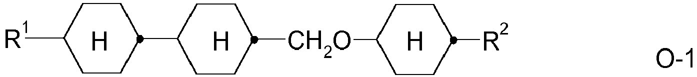 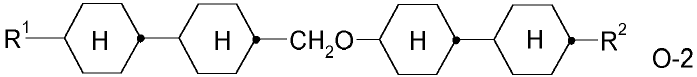 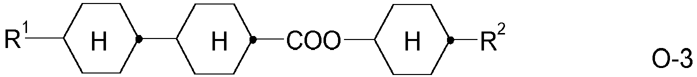 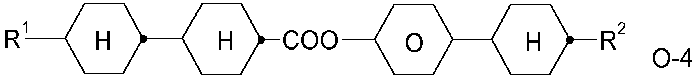 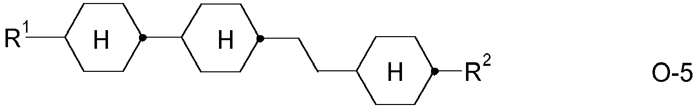 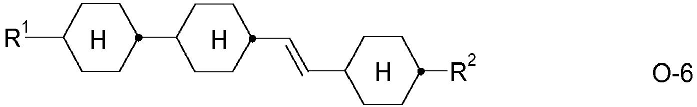 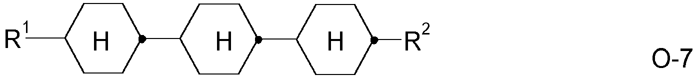 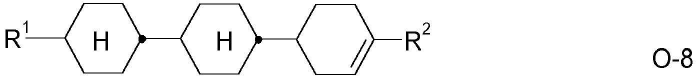 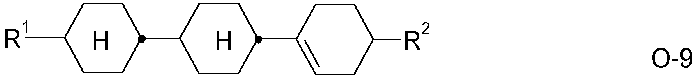 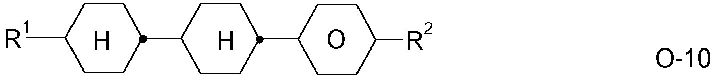 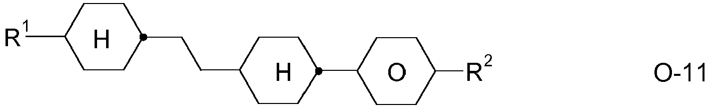 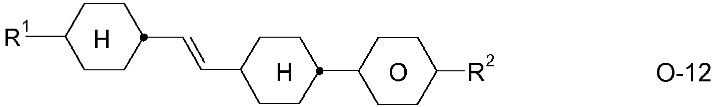 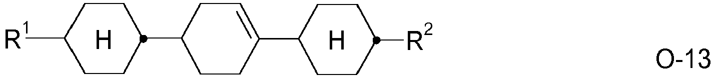 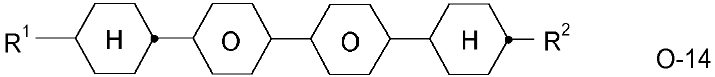 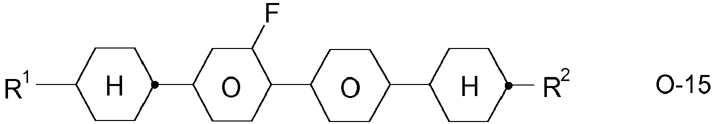 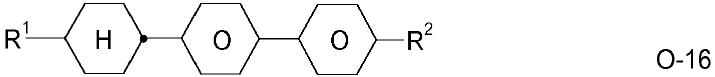 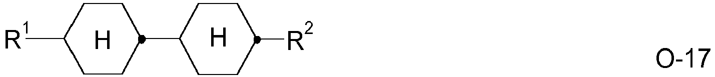 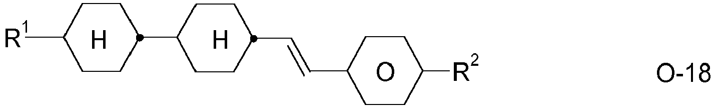 in which
R¹ and R² in each case, independently of one another, have the meanings indicated for R^{2A} in Claim 4.

8. Liquid-crystalline medium according to one or more of Claims 1 to 7, **characterised in that** the medium additionally comprises one or more compounds selected from the group of the compounds of the formulae O-6, O-7 and O-17, 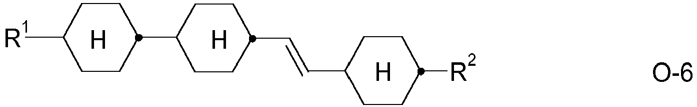 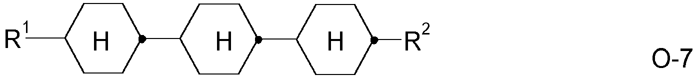 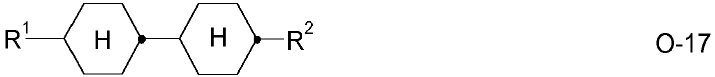 in which
R¹ denotes alkyl or alkenyl having 1-6 or 2-6 C atoms respectively and R² denotes alkenyl having 2-6 C atoms.

9. Liquid-crystalline medium according to one or more of Claims 1 to 8, **characterised in that** the medium additionally comprises one or more indane compounds of the formula In, 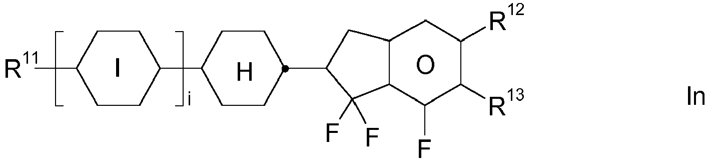 in which
R¹¹, R¹², R¹³ denote a straight-chain alkyl, alkoxy, alkoxyalkyl or alkenyl radical having 1-5 C atoms,
R¹² and R¹³ additionally also denote halogen, 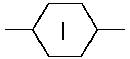 denotes 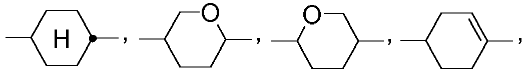 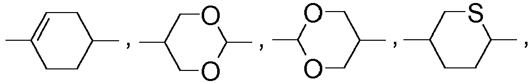 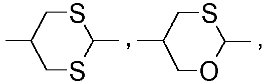
i denotes 0, 1 or 2.

10. Liquid-crystalline medium according to one or more of Claims 1 to 9, **characterised in that** the medium additionally comprises one or more compounds of the formulae BF-1 and BF-2, 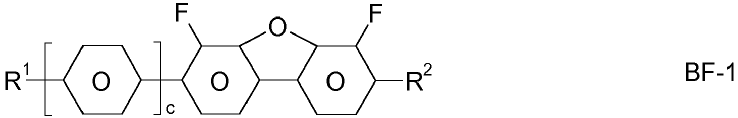 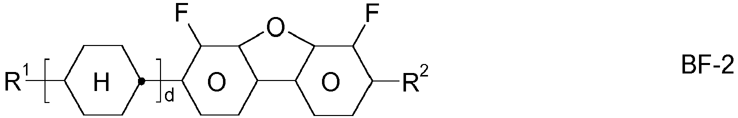 in which
R¹ and R² in each case, independently of one another, have the meaning of R^{2A},
c denotes 0, 1 or 2 and
d denotes 1 or 2.

11. Liquid-crystalline medium according to one or more of Claims 1 to 10, **characterised in that** the proportion of compounds of the formula I in the mixture as a whole is 1 - 40% by weight.

12. Liquid-crystalline medium according to one or more of Claims 1 to 11, **characterised in that** the medium comprises at least one polymerisable compound.

13. Liquid-crystalline medium according to one or more of Claims 1 to 12, **characterised in that** the medium comprises one or more additives.

14. Liquid-crystalline medium according to one or more of Claims 1 to 13, **characterised in that** the additive is selected from the group free-radical scavenger, antioxidant and/or UV stabiliser.

15. Process for the preparation of a liquid-crystalline medium according to one or more of Claims 1 to 14, **characterised in that** at least one compound of the formula I is mixed with at least one further liquid-crystalline compound,
and optionally one or more additives and optionally at least one polymerisable compound are added.

16. Use of the liquid-crystalline medium according to one or more of Claims 1 to 14 in electro-optical displays.

17. Electro-optical display having active-matrix addressing, **characterised in that** it contains, as dielectric, a liquid-crystalline medium according to one or more of Claims 1 to 14.

18. Electro-optical display according to Claim 17, **characterised in that** it is a VA, PSA, PA-VA, SS-VA, SA-VA, PS-VA, PALC, IPS, PS-IPS, FFS, UB-FFS, U-IPS or PS-FFS display.

## Revendications

1. Milieu cristallin liquide, **caractérisé en ce que** le milieu comprend au moins un composé des formules I-1 à I-20, 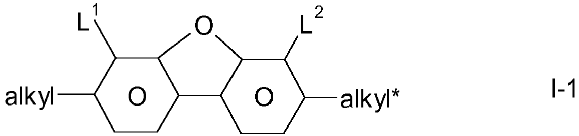 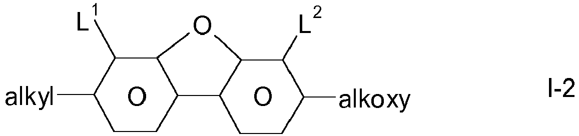 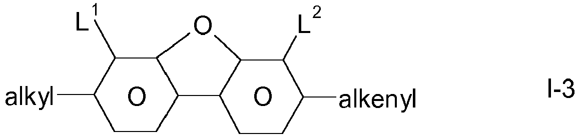 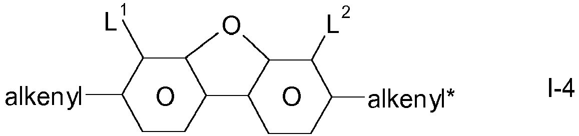 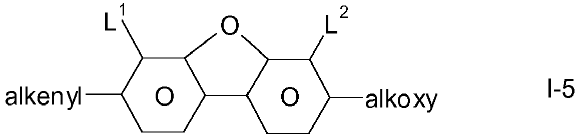 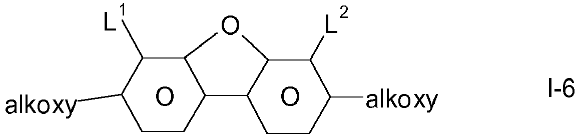 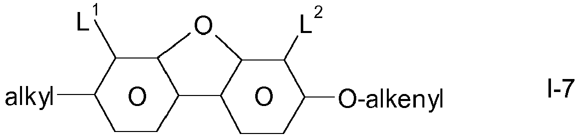 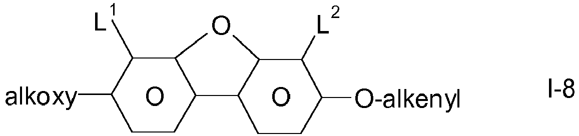 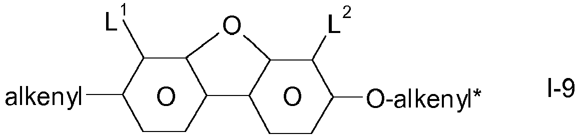 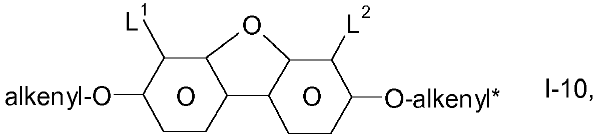 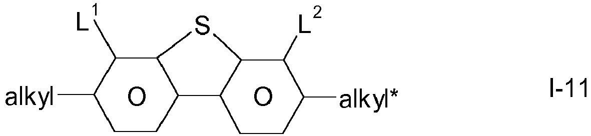 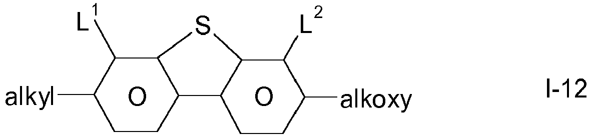 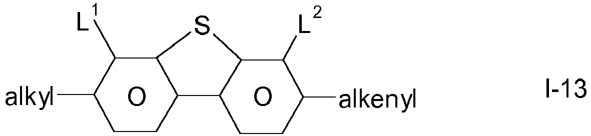 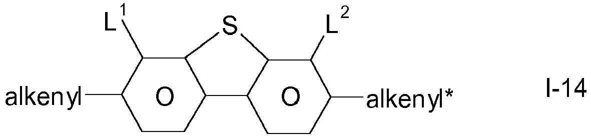 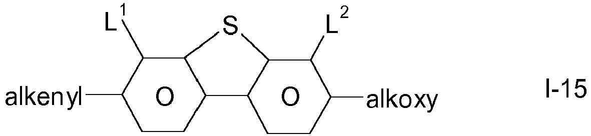 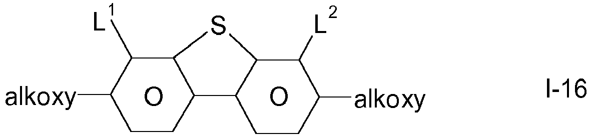 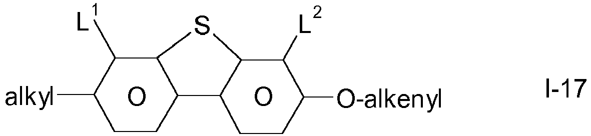 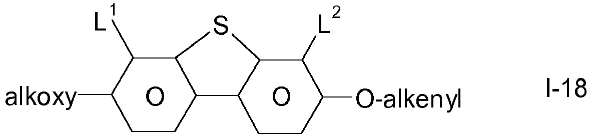 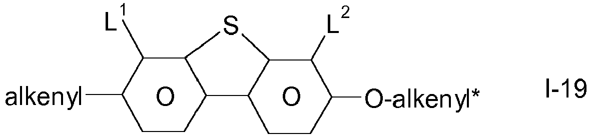 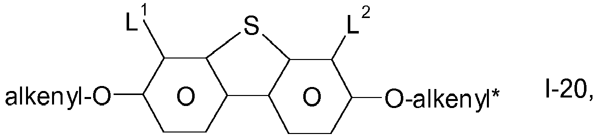 dans lesquelles
alkyl et alkyl* représentent dans chaque cas, de manière indépendante l'un de l'autre, un radical alkyle en chaîne droite qui comporte 1-6 atome(s) de C,
alkenyl et alkenyl* représentent dans chaque cas, de manière indépendante l'un de l'autre, un radical alkényle en chaîne droite qui comporte 2-6 atomes de C,
alkoxy et alkoxy* représentent dans chaque cas, de manière indépendante l'un de l'autre, un radical alcoxy en chaîne droite qui comporte 1-6 atome(s) de C, et
L¹ et L² représentent dans chaque cas, de manière indépendante l'un de l'autre, F, Cl, CF₃ ou CHF₂,
et au moins un composé qui est sélectionné parmi le groupe des composés des formules ST 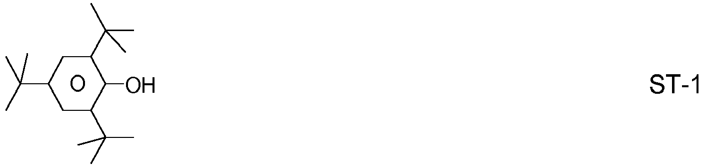 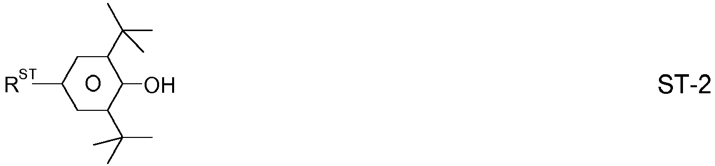 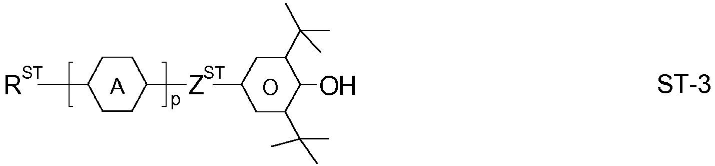 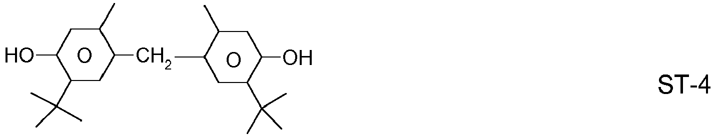 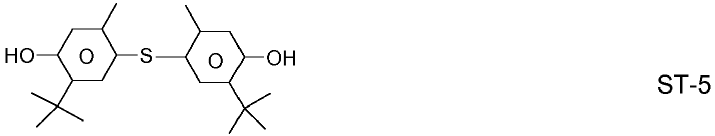 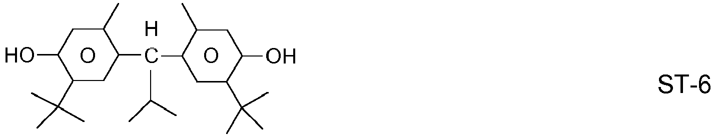 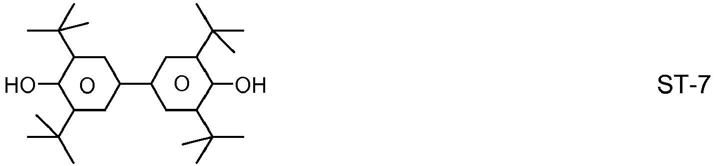 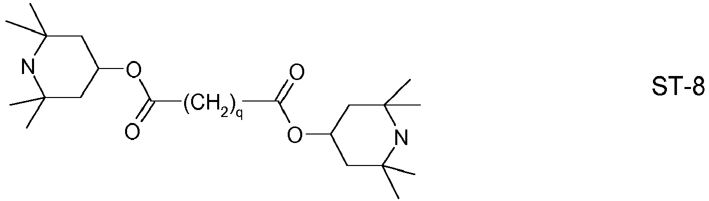 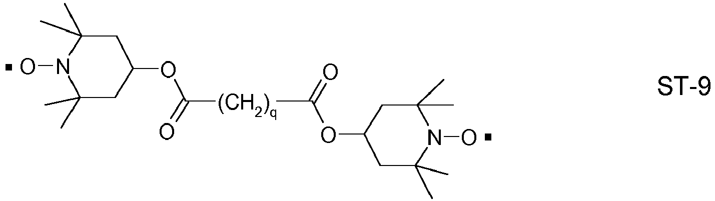 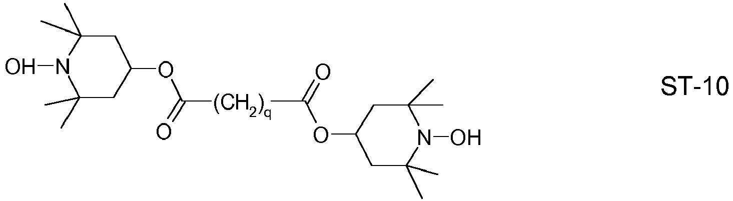 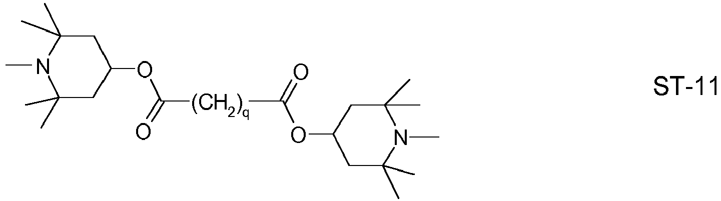 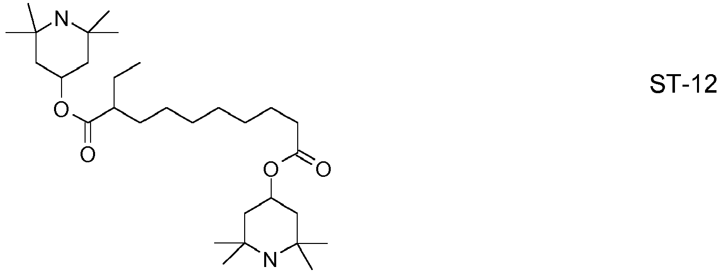 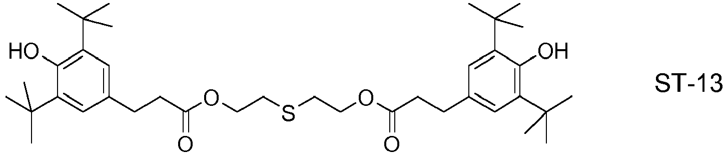 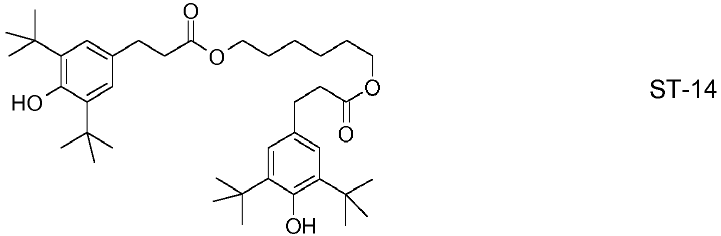 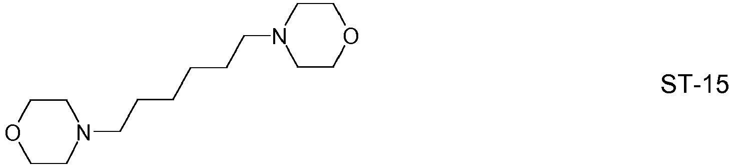 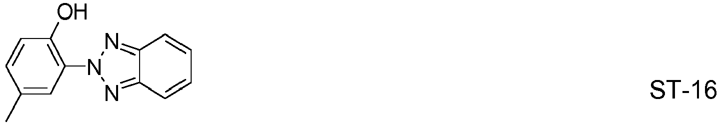 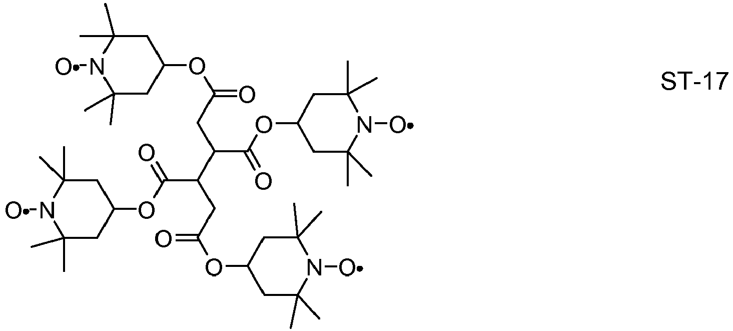 dans lesquelles
R^{ST} représente H, un radical alkyle ou alcoxy qui comporte de 1 à 15 atome(s) de C, où, en outre, un ou plusieurs groupe(s) CH₂ dans ces radicaux peut/peuvent chacun être remplacé(s), de manière indépendante les uns des autres, par -C≡C-, -CF₂O-, -OCF₂-, -CH=CH-, 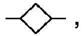 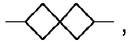 -O-, -CO-O-, -O-CO- de telle sorte que des atomes de O ne soient pas liés directement les uns aux autres, et où, en outre, un ou plusieurs atome(s) de H peut/peuvent être remplacé(s) par halogène, 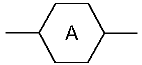 représente 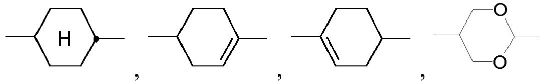 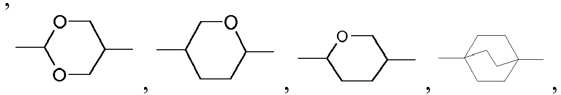 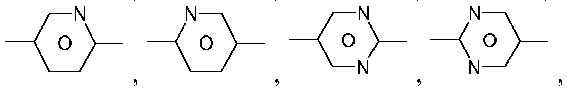 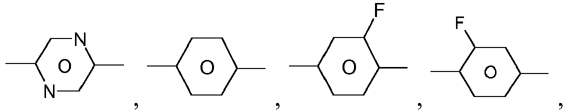 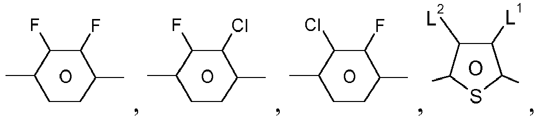 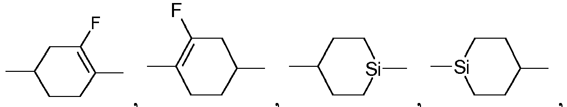 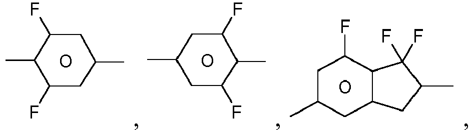 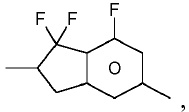 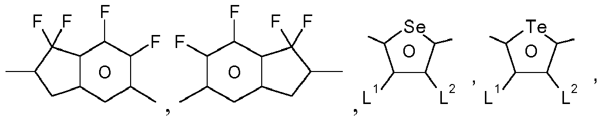 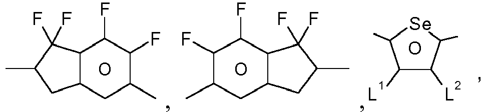 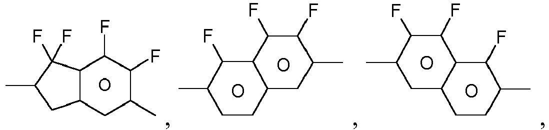 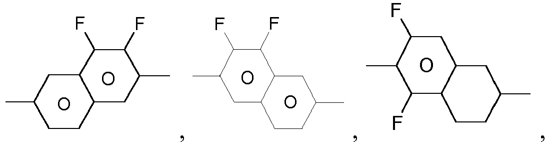 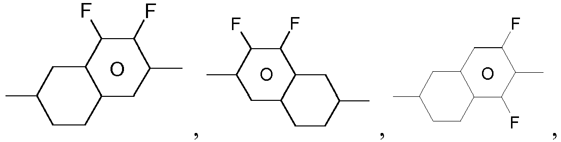 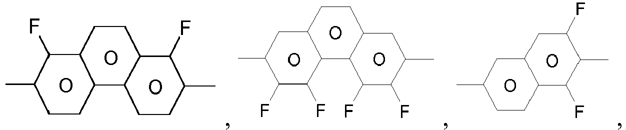 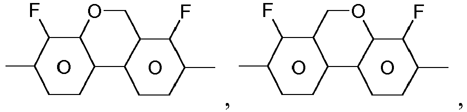 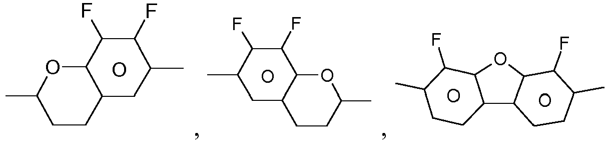
Z^{ST} représente dans chaque cas, de manière indépendante, -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- ou une liaison simple,
L¹ et L² représentent dans chaque cas, de manière indépendante l'un de l'autre, F, Cl, CF₃ ou CHF₂,
p représente 1 ou 2,
q représente 1, 2, 3, 4, 5, 6, 7, 8, 9 ou 10,
et le milieu comprend de façon additionnelle un ou plusieurs composé(s) des formules L-1 à L-11, 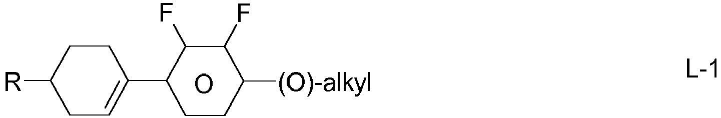 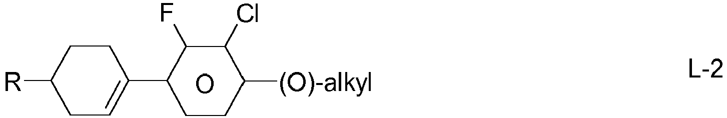 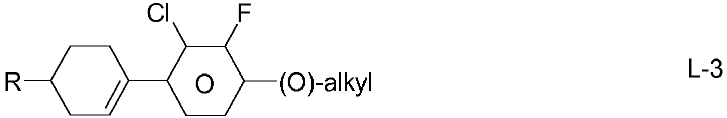 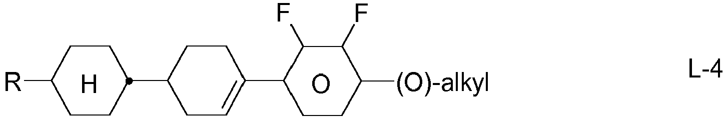 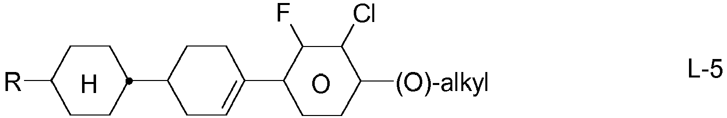 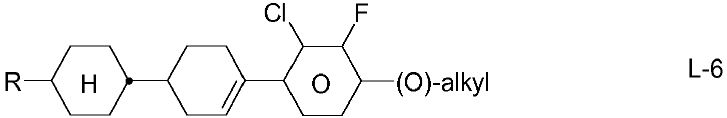 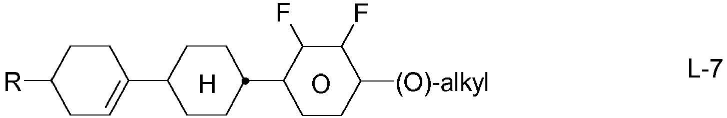 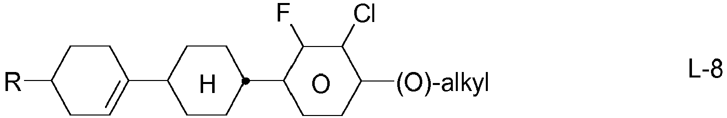 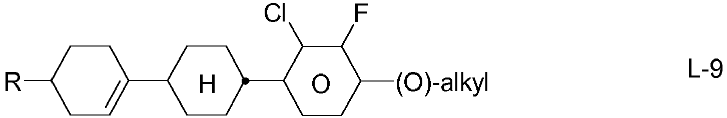 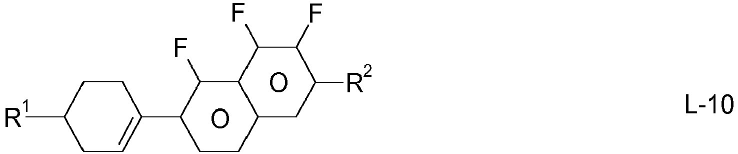 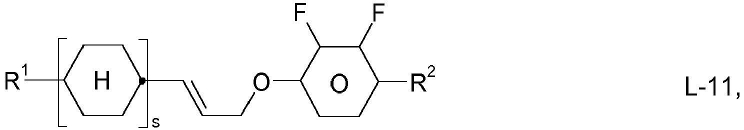 dans lesquelles
R, R¹ et R² présentent dans chaque cas, de manière indépendante les uns des autres, les significations qui ont été indiquées pour R^{2A} selon la revendication 4 et alkyl représente un radical alkyle qui comporte 1-6 atome(s) de C, et
s représente 1 ou 2.

2. Milieu cristallin liquide selon la revendication 1, **caractérisé en ce que** L¹ et L² dans les formules I-1 à I-20 représentent dans chaque cas F.

3. Milieu cristallin liquide selon la revendication 1 ou 2, **caractérisé en ce qu'**il comprend un ou plusieurs composé(s) qui est/sont sélectionné(s) parmi le groupe des composés des formules ST-1, ST-2a, ST-3a, ST-3b, ST-8-1, ST-9-1, ST-12, ST-15, ST-16 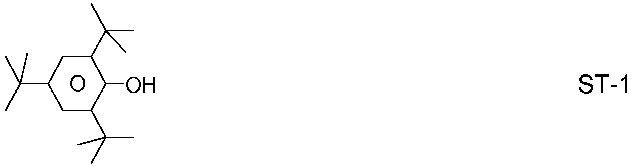 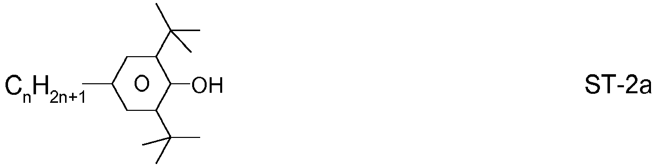 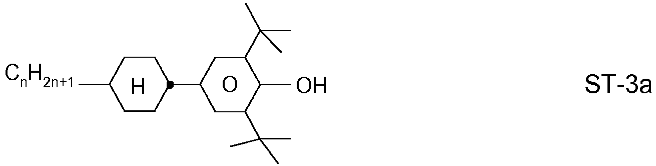 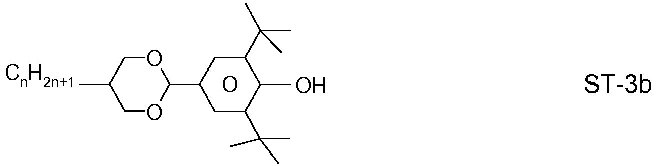 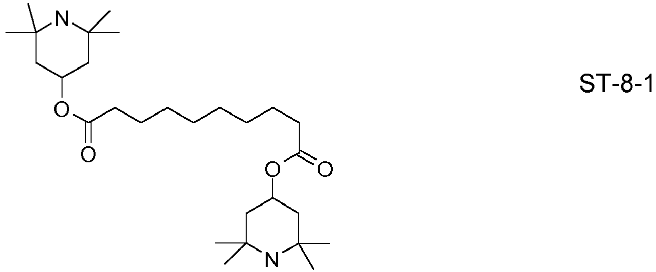 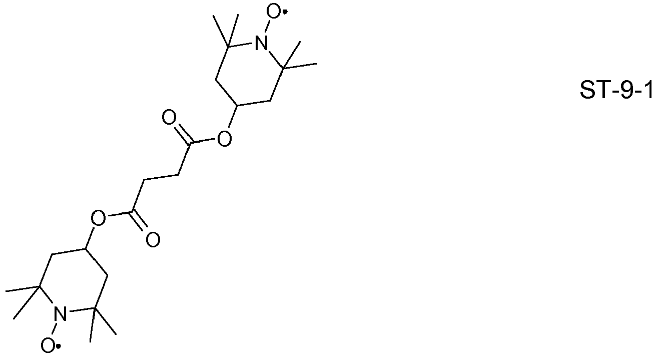 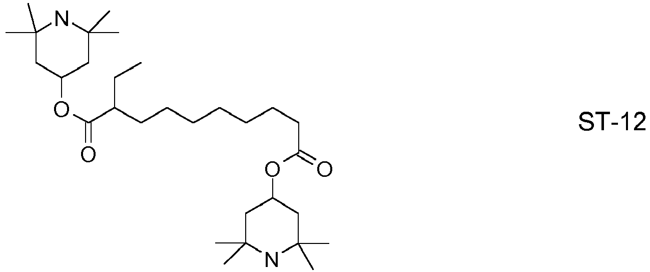 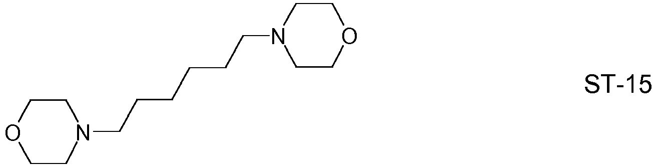 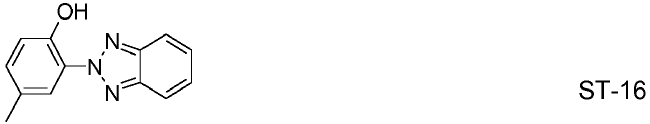 dans lesquelles n = 1, 2, 3, 4, 5, 6 ou 7.

4. Milieu cristallin liquide selon une ou plusieurs des revendications 1 à 3, **caractérisé en ce qu'**il comprend de façon additionnelle un ou plusieurs composé(s) qui est/sont sélectionné(s) parmi le groupe des composés des formules IIA, IIB et IIC, 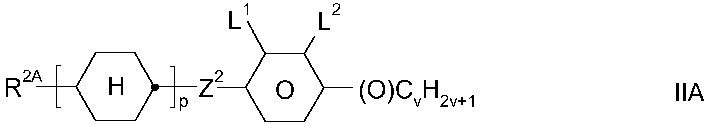 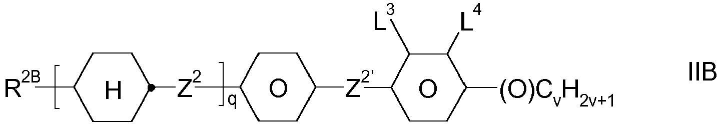 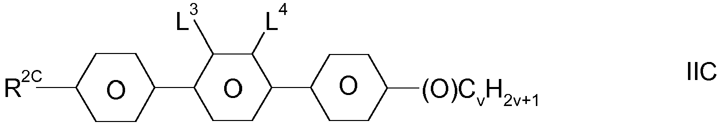 dans lesquelles
R^{2A}, R^{2B} et R^{2C} représentent dans chaque cas, de manière indépendante les uns des autres, H, un radical alkyle ou alkényle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 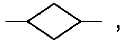 -C≡C-, -CF₂O-, -OCF₂-, -OC-O- ou -O-CO- de telle sorte que des atomes de O ne soient pas liés directement les uns aux autres,
L¹⁻⁴ représentent dans chaque cas, de manière indépendante les uns des autres, F ou Cl,
Z² et Z^{2'} représentent dans chaque cas, de manière indépendante l'un de l'autre, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p représente 0, 1 ou 2,
q représente 0 ou 1, et
v représente 1 à 6.

5. Milieu cristallin liquide selon une ou plusieurs des revendications 1 à 4, **caractérisé en ce que** le milieu comprend de façon additionnelle un ou plusieurs composé(s) de la formule III, 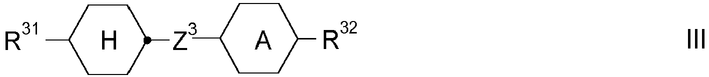 dans laquelle
R³¹ et R³² représentent dans chaque cas, de manière indépendante l'un de l'autre, un radical alkyle, alcoxyalkyle ou alcoxy en chaîne droite qui comporte jusqu'à 12 atomes de C, et 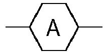 représente 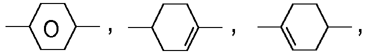 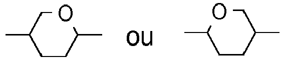
Z³ représente une liaison simple, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

6. Milieu cristallin liquide selon une ou plusieurs des revendications 1 à 5, **caractérisé en ce que** le milieu comprend de façon additionnelle un ou plusieurs terphényle(s) des formules T-1 à T-21, 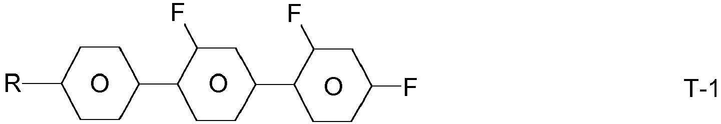 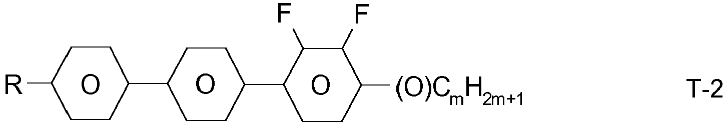 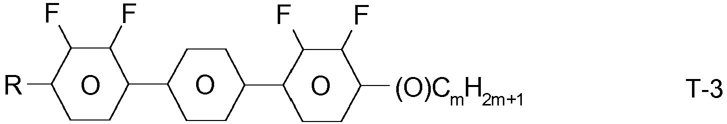 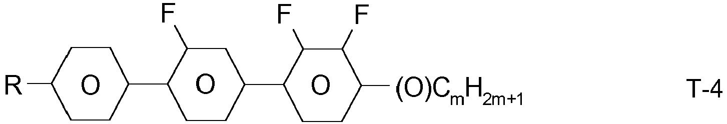 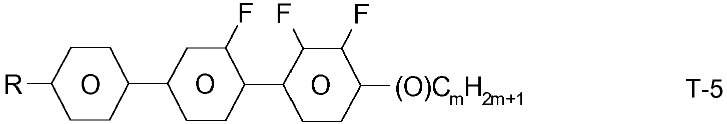 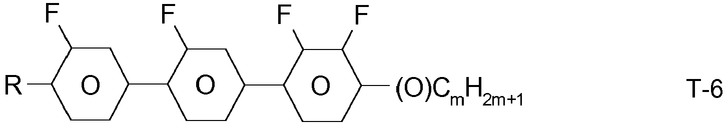 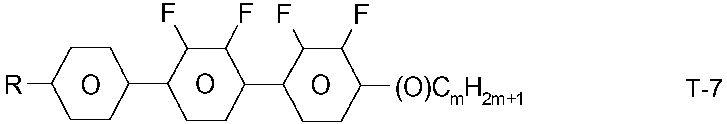 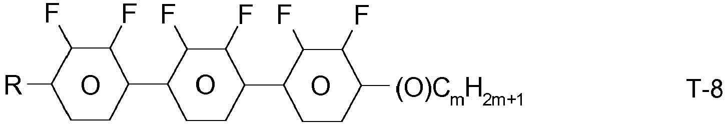 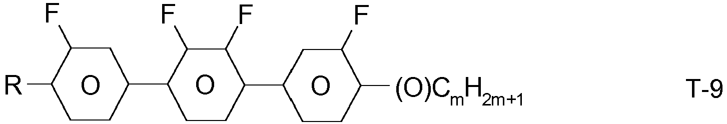 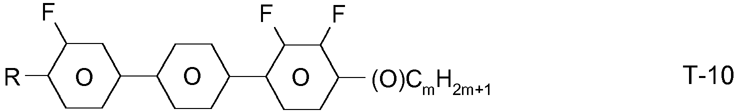 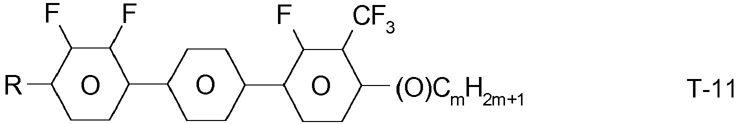 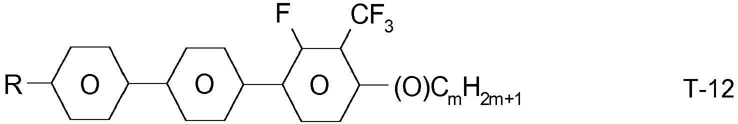 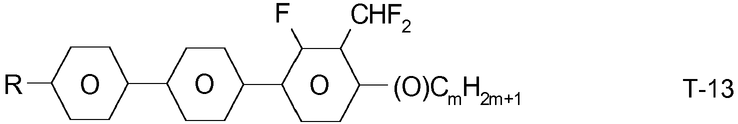 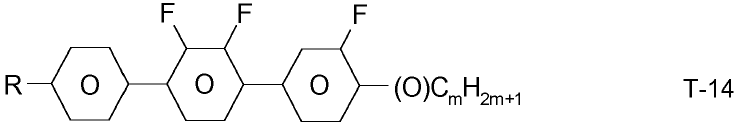 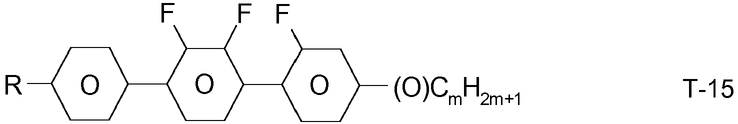 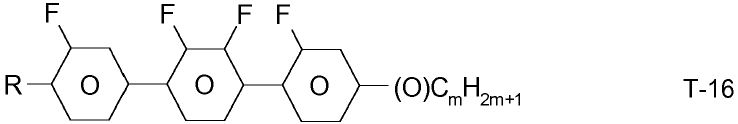 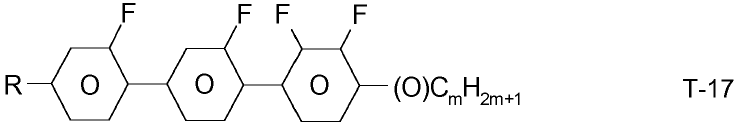 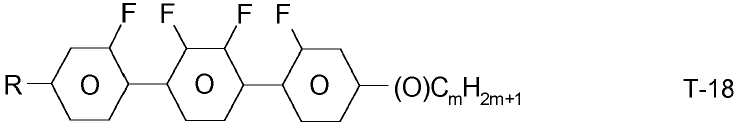 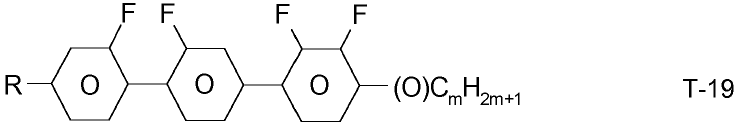 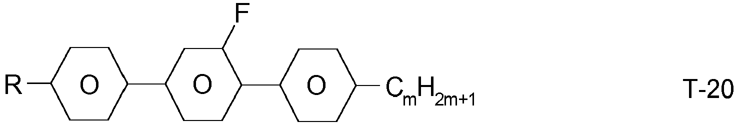 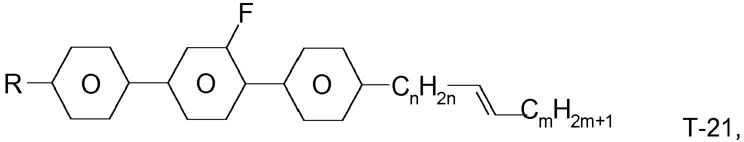 dans lesquelles
R représente un radical alkyle ou alcoxy en chaîne droite qui comporte 1-6 atome(s) de C, et
m représente 1-6.

7. Milieu cristallin liquide selon une ou plusieurs des revendications 1 à 6, **caractérisé en ce que** le milieu comprend de façon additionnelle un ou plusieurs composé(s) des formules 0-1 à 0-18, 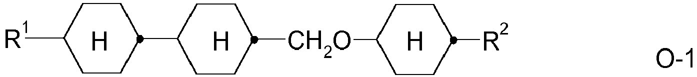 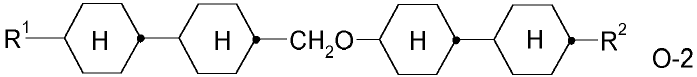 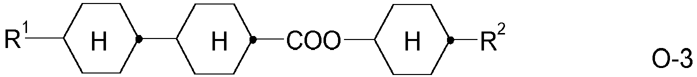 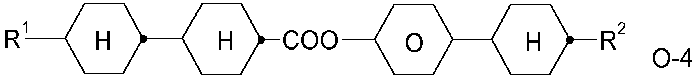 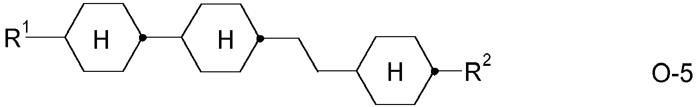 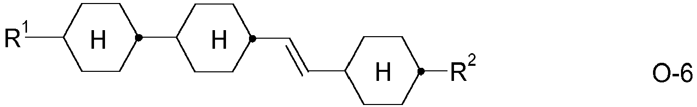 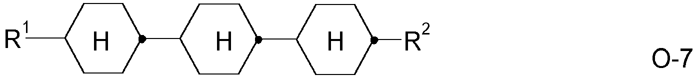 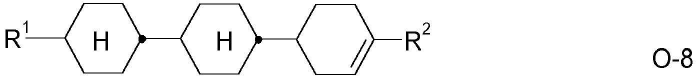 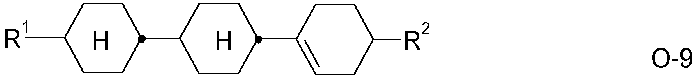 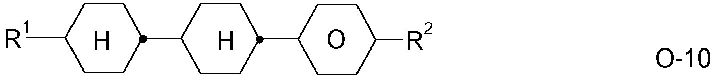 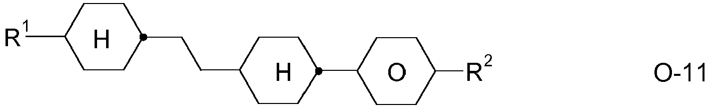 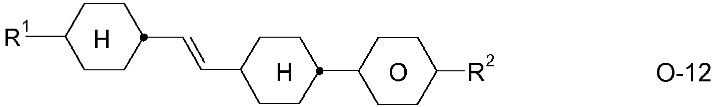 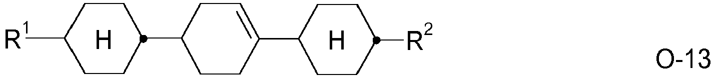 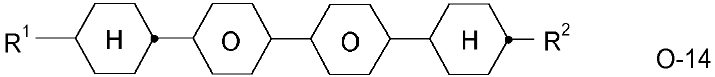 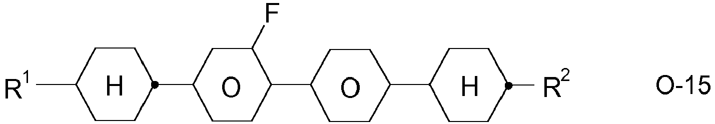 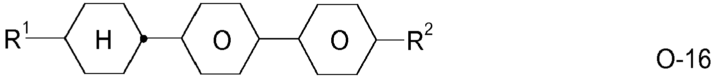 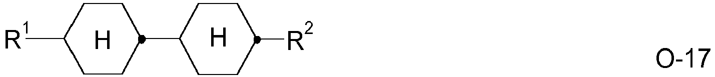 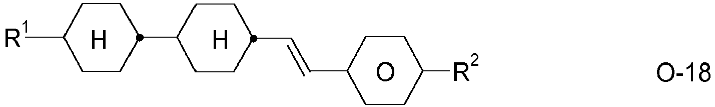 dans lesquelles R¹ et R² présentent dans chaque cas, de manière indépendante l'un de l'autre, les significations qui ont été indiquées pour R^{2A} selon la revendication 4.

8. Milieu cristallin liquide selon une ou plusieurs des revendications 1 à 7, **caractérisé en ce que** le milieu comprend de façon additionnelle un ou plusieurs composé(s) qui est/sont sélectionné(s) parmi le groupe des composé(s) des formules 0-6, 0-7 et 0-17, 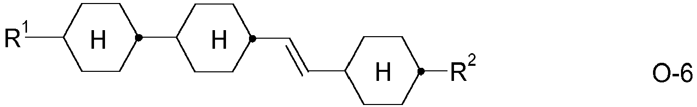 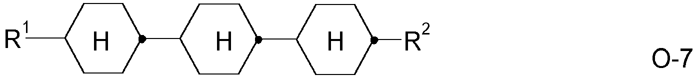 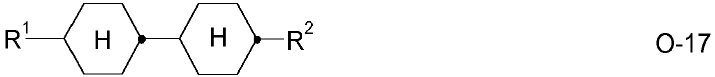 dans lesquelles
R¹ représente alkyle ou alkényle qui comporte respectivement 1-6 ou 2-6 atome(s) de C et R² représente alkényle qui comporte 2-6 atomes de C.

9. Milieu cristallin liquide selon une ou plusieurs des revendications 1 à 8, **caractérisé en ce que** le milieu comprend de façon additionnelle un ou plusieurs composé(s) indane de la formule In, 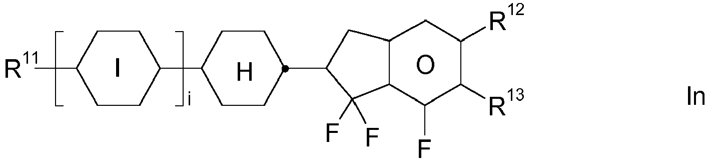 dans laquelle
R¹¹, R¹², R¹³ représentent un radical alkyle, alcoxy, alcoxyalkyle ou alkényle en chaîne droite qui comporte 1-5 atome(s) de C,
R¹² et R¹³ représentent également de façon additionnelle halogène, 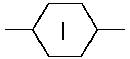 représente 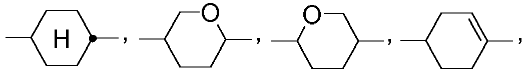 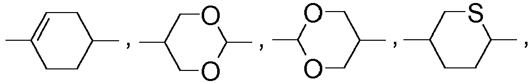 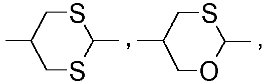
i représente 0, 1 ou 2.

10. Milieu cristallin liquide selon une ou plusieurs des revendications 1 à 9, **caractérisé en ce que** le milieu comprend de façon additionnelle un ou plusieurs composé(s) des formules BF-1 et BF-2, 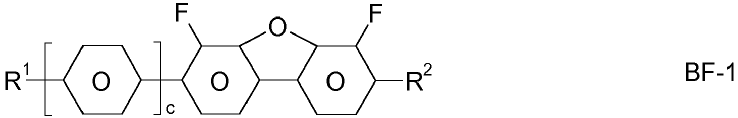 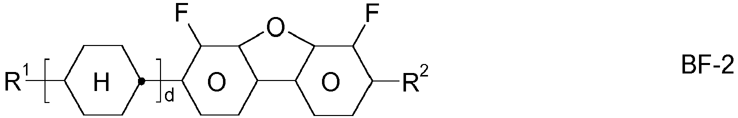 dans lesquelles
R¹ et R² présentent dans chaque cas, de manière indépendante l'un de l'autre, la signification de R^{2A},
c représente 0, 1 ou 2 et
d représente 1 ou 2.

11. Milieu cristallin liquide selon une ou plusieurs des revendications 1 à 10, **caractérisé en ce que** la proportion de composés de la formule I dans le mélange pris dans sa globalité est 1 - 40% en poids.

12. Milieu cristallin liquide selon une ou plusieurs des revendications 1 à 11, **caractérisé en ce que** le milieu comprend au moins un composé polymérisable.

13. Milieu cristallin liquide selon une ou plusieurs des revendications 1 à 12, **caractérisé en ce que** le milieu comprend un ou plusieurs additif(s).

14. Milieu cristallin liquide selon une ou plusieurs des revendications 1 à 13, **caractérisé en ce que** l'additif est sélectionné parmi le groupe qui est constitué par les épurateurs de radicaux libres, les antioxydants et/ou les stabiliseurs UV.

15. Procédé pour la préparation d'un milieu cristallin liquide selon une ou plusieurs des revendications 1 à 14, **caractérisé en ce qu'**au moins un composé de la formule I est mélangé avec au moins un autre composé cristallin liquide,
et en option, un ou plusieurs additif(s) et en option, au moins un composé polymérisable sont ajoutés.

16. Utilisation du milieu cristallin liquide selon une ou plusieurs des revendications 1 à 14 dans les affichages électro-optiques.

17. Affichage électro-optique présentant un adressage par matrice active, **caractérisé en ce qu'**il contient, en tant que diélectrique, un milieu cristallin liquide selon une ou plusieurs des revendications 1 à 14.

18. Affichage électro-optique selon la revendication 17, **caractérisé en ce qu'**il s'agit d'un affichage VA, PSA, PA-VA, SS-VA, SA-VA, PS-VA, PALC, IPS, PS-IPS, FFS, UB-FFS, U-IPS ou PS-FFS.
